Europäisches Patentamt

European Patent Office

Office européen des brevets

(19)

(11) **EP 1 637 836 A1**

(12) **EUROPEAN PATENT APPLICATION**
published in accordance with Art. 158(3) EPC

(43) Date of publication:
**22.03.2006 Bulletin 2006/12**

(51) Int Cl.:
*G01C 3/06* (1968.09)    *G01B 11/00* (1968.09)
*G06T 1/00* (1995.01)    *B60R 21/00* (1968.09)

(21) Application number: **04734940.2**

(22) Date of filing: **26.05.2004**

(86) International application number:
**PCT/JP2004/007557**

(87) International publication number:
**WO 2004/106856 (09.12.2004 Gazette 2004/50)**

(84) Designated Contracting States:
**DE FR GB**

(30) Priority: **29.05.2003 JP 2003152977**
**29.05.2003 JP 2003153450**
**29.05.2003 JP 2003153451**

(71) Applicant: **Olympus Corporation**
**Tokyo 151-0072 (JP)**

(72) Inventors:
• **KOSAKA, Akio**
**Tokio (JP)**

• **MIYOSHI, Takashi**
**Kanagawa-ken (JP)**
• **IWAKI, Hidekazu**
**Sandacho,**
**Hachioji-shi,**
**Tokyo (JP)**
• **ARAI, Kazuhiko**
**Tokyo (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **DEVICE AND METHOD OF SUPPORTING STEREO CAMERA, DEVICE AND METHOD OF DETECTING CALIBRATION, AND STEREO CAMERA SYSTEM**

(57)    A stereo camera supporting apparatus of the present invention comprises a joining member constituted in such a manner as to support a stereo camera on a vehicle, and a control device which controls posture or position of the stereo camera supported on the vehicle by the joining member. The control device controls the posture or position of the stereo camera with respect to video obtained by the stereo camera in such a manner that a contour portion present in the highest level position in a contour of a noted subject in the video is positioned in a frame upper end of the video or its vicinity irrespective of a change of the posture or position of the vehicle.

FIG.1

**Description**

Technical Field

The present invention relates to a stereo camera supporting apparatus for supporting a stereo camera constituted in such a manner as to obtain a plurality of images having parallax errors by a plurality of visual points detached from one another, a method of supporting this type of stereo camera, and a stereo camera system to which these apparatus and method are applied, particularly to a technique for imparting a specific tendency to a position occupied by a specific subject reflected in an imaging view field of a stereo camera in a video frame.

Moreover, the present invention relates to a calibration displacement detection apparatus which detects a calibration displacement between an external apparatus defining a reference of a position and a photographing apparatus for taking a stereo image, a calibration correction apparatus of a photographing apparatus, a stereo camera comprising the apparatus, and a stereo camera system.

Background Art

In recent years, for example, a system has been put to practical use in which a stereo camera is mounted on a vehicle, and various information for safety is presented to a driver based on a video signal output obtained by the camera, or an automatic control relating to driving of the vehicle is performed to thereby support the driving. As to a mechanism for handing environmental stresses such as sunlight, heat, temperature, and vibration in a case where a car mounted type stereo camera is attached to a vehicle, a concrete technique has been described, for example, in Jpn. Pat. No. 3148749.

Moreover, an obstruction detection apparatus for detecting obstructions existing on a road flat surface at a high speed even when there is vibration or tilt of a road itself during the driving is also described, for example, in Jpn. Pat. Appln. KOKAI Publication No. 2001-76128. In the apparatus, troubles of calibration relating to an applied camera are reduced, and a geometric relation between a road flat surface and each camera is obtained only from movement on images of two white lines of opposite road ends during driving in order to realize high-speed and high-precision detection of obstructions existing on the road surface using a car-mounted stereo camera even under situations under which the stereo camera is not calibrated, and there are changes of vibrations during the driving and tilts of the road surface.

Furthermore, for example, in Jpn. Pat. No. 3354450, a technique in a vehicle distance measurement apparatus utilizing a car-mounted stereo camera is described. In the technique, it is evaluated by distance evaluation means whether a calculated distance is valid or invalid immediately after the start of the calculation of the distance calculation means using a reference distance set to be shorter than a distance to a point in which a view field lowermost end portion determined from attached positions and upper/lower view field angles of both optical systems of a stereo camera crosses a road surface. In a state in which the distance to an object is securely calculated, a distance calculated by distance calculation means is set to be effective. It is simply judged whether or not a distance measurement value immediately after the start of the distance measurement is effective, and distance measurement precision is enhanced.

However, in these conventional proposals, recognition of a technical problem to be solved by adjusting posture of an applied stereo camera is not described. The posture is adjusted in order to efficiently acquire information focused on the subject, such as a distance of the subject itself, irrespective of background and other surrounding portions in such a manner that a position occupied by a specific subject reflected in an imaging view field of the stereo camera in a video frame exhibits a specific tendency. Furthermore, means for solving the technique problem is not described.

On the other hand, with regard to calibration concerning an image photographing apparatus which has heretofore been used, there are roughly the following calibrations:

①  calibration concerning an apparatus itself which takes a stereo image; and
②  calibration concerning position/posture between the photographing apparatus and the external apparatus.

The calibration concerning the above ① is generally known as calibration of a so-called stereo camera. This is the calibration concerning parameters relating to photographing characteristics of the stereo camera: camera parameters represented by focal distance, expansion ratio, image center, and lens distortion; and position/posture parameters which define a position/posture relation between at least two cameras constituting the stereo camera. These parameters are referred to as internal calibration parameters of the stereo photographing apparatus.

Moreover, the calibration concerning the above ② corresponds to calibration concerning the parameters relating to the position/posture between the stereo photographing apparatus and the external apparatus. More concretely, for example, in a case where the stereo photographing apparatus is disposed in a certain environment, the position/posture parameters in an environment in which the stereo camera is disposed are parameters to be defined by the calibration.

When the stereo photographing apparatus is attached to a vehicle, and a positional relation of obstructions before the vehicle is measured by the stereo camera, the position/posture parameter defining a place where the stereo photographing apparatus is attached is a parameter to be defined by the calibration. This parameter is referred to as an external calibration parameter between the photographing apparatus and the external apparatus.

Next, the calibration displacement will be described.

The calibration displacement attributable to an inner calibration parameter of the stereo photographing apparatus of the above ① will be considered. For example, the displacement can be divided into the following two in an apparatus which photographs a stereo image from two cameras. That is, there are (①-1) calibration displacement based on displacement of a camera parameter concerning photographing of each camera, and (①-2) calibration displacement based on the displacement of the parameter which defines the position/posture between two cameras.

For example, as causes for the calibration displacement concerning the above (①-1), deformation of an optical lens system constituting the camera, positional displacement between the optical lens system and an imaging element (CCD, CMOS, etc.), displacement of focus position of an optical lens, displacement of control system of a zoom lens among the optical lenses and the like are considered.

Moreover, a cause for which calibration displacement concerning the above (①-2) occurs is a positional displacement of a mechanism for fixing two cameras. For example, in a case where two cameras are fixed by a mechanical shaft, deformation of the shaft with an elapse of time or the like corresponds to this example. When two cameras are attached to the shaft by screws, positional displacement by screw looseness or the like is a cause.

On the other hand, as a cause for which the calibration displacement of the above ② occurs, deformation of a mechanical element for fixing the stereo photographing apparatus and the external apparatus, deformation of an attaching jig or the like is considered. For example, a case where a stereo photographing apparatus is utilized in a car-mounted camera will be considered. The photographing apparatus is attached to a vehicle which is an external apparatus using an attaching jig between a front window and a rearview mirror. In this case, when a reference position of the vehicle is defined as a vehicle tip, calibration displacement can be considered accompanying various mechanical deformations such as deformation of an attaching jig itself of a stereo photographing apparatus, deformation by looseness or the like of a "screw" which is an attaching member, deformation of a vehicle itself with an elapse of time, and mechanical deformation of the vehicle or the attaching jig caused by seasonal fluctuation during use in a cold district or the like.

Considering a conventional example of detection or correction of the calibration displacement, the following techniques have been proposed.

For example, in a method described in Jpn. Pat. Appln. KOKAI Publication No. 11-325890, an optical positional displacement of a photographed image of the stereo camera is corrected. There is provided a method of correcting the calibration displacement concerning the calibration of the above ② concerning the position/posture between the photographing apparatus and the external apparatus. More concretely, in this method, initial positions of reference markers set in view fields of two cameras in the respective photographed images are stored, and the positional displacement is corrected from a positional displacement in the actually photographed image.

Moreover, for example, in a document titled "Three-dimensional CG prepared from Photograph", Kindai Kagakusha, 2001 by Gang XU, a method is described in which a relative positional relation concerning two cameras is calculated utilizing natural characteristic points (characteristic points optionally selected from the photographed image) photographed by two cameras. In this calculation, basic matrix is mathematically calculated. Basically, an estimated value concerning a distance between the cameras is calculated by relative estimation. It is also assumed that lens distortion of the camera can be ignored.

Furthermore, in J. Weng, et al., "Camera calibration with distortion models and accuracy evaluation", IEEE Transactions on Pattern Analysis and Machine Intelligence, Vol. 14, No. 10, October 1992, pp. 965 to 980, a general camera calibration method and application to the stereo camera will be described. Concretely, this is a method in which a large number of known characteristic points (known markers) are arranged in a reference coordinate system, positions of the characteristic points in an image are calculated, and various parameters concerning the camera (stereo camera) are calculated. Therefore, by this method, all calibration parameters can be calculated again.

However, in the conventional example of the Jpn. Pat. Appln. KOKAI Publication No. 11-325890, a method is only provided in which the positional displacement between the photographing apparatus and the external apparatus is detected and corrected. That is, this method has a problem that the detection or correction of the calibration displacement concerning the calibration parameter in the photographing apparatus cannot be achieved.

Moreover, in a method described in "3-dimensional CG prepared from Photographs" by Gang XU, in which the basic matrix is calculated to thereby perform camera calibration, it is impossible to calculate a position/posture relation as an absolute distance between the cameras. Therefore, there is a problem in using the stereo photographing apparatus as a three-dimensional measurement apparatus.

Furthermore, in the conventional example described in J. Weng, et al., "Camera calibration with distortion models and accuracy evaluation", there is provided a general method of camera calibration, and calibration displacement is not an original purpose. Additionally, to execute the calibration, there has been a problem that a plurality of known markers are disposed to thereby perform a process.

Disclosure of Invention

Therefore, an object of the present invention is to provide a stereo camera supporting apparatus for adjusting posture of a stereo camera in such a manner that information focused on a subject, such as distance of the subject itself, can be efficiently acquired irrespective of peripheral portions such as background in a case where a subject whose relative relation with a stereo camera changes is included in an imaging view field and photographed using the stereo camera to be mounted on a car as an example, a method of supporting a stereo camera, and a stereo camera system to which the apparatus and method are applied.

Moreover, an object of the present invention is to provide a calibration displacement detection apparatus in which calibration displacement can be easily and quantitatively detected by analyzing a stereo image even by mechanical displacements such as a change with an elapse of time and impact vibration in the calibration of a photographing apparatus for photographing the stereo image to perform three-dimensional measurement or the like, a stereo camera comprising the apparatus, and a stereo camera system.

Furthermore, an object of the present invention is to provide a calibration displacement correction apparatus capable of simply and quantitatively correcting calibration displacement as an absolute value by analyzing a stereo image even by mechanical displacements such as a change with an elapse of time and impact vibration in the calibration of a photographing apparatus for photographing the stereo image to perform three-dimensional measurement or the like, a stereo camera comprising the apparatus, and a stereo camera system.

As a first characteristic of the present invention, there is provided a stereo camera supporting apparatus which supports a stereo camera constituted in such a manner as to obtain a plurality of images having parallax errors by a plurality of visual points detached from one another, the apparatus comprising:

a joining member constituted by joining a support member disposed on a vehicle side on which the stereo camera is provided, to a member to be supported disposed in a predetermined portion of the stereo camera in such a manner that a relation between both the members is variable in a predetermined range to thereby support the stereo camera on the vehicle; and

a control unit which controls posture or position of the stereo camera supported on the vehicle by the joining member, the control unit being constituted to be capable of controlling the posture or position of the stereo camera with respect to video obtained by the stereo camera in such a manner that a contour portion present in the highest level position in a contour of a noted subject in the video is positioned in a frame upper end of the video or its vicinity irrespective of a change of the posture or position of the vehicle.

As a second characteristic of the present invention, the apparatus comprises:

a calibration data holding unit which holds calibration data relating to a photographing apparatus photographing a stereo image;

a characteristic extraction unit which extracts characteristics from the stereo image photographed by the photographing apparatus; and

a calibration displacement judgment unit which judges calibration displacement concerning the calibration data held by the calibration data holding unit based on information indicating the characteristic extracted by the characteristic extraction unit.

Furthermore, as a third characteristic of the present invention, the apparatus comprises:

a calibration data holding unit which holds calibration data relating to a photographing apparatus photographing a stereo image;

a characteristic extraction unit which extracts characteristics from the stereo image photographed by the photographing apparatus; and

a calibration data correction unit which corrects calibration displacement concerning the calibration data held by the calibration data holding unit based on information indicating the characteristic extracted by the characteristic extraction unit.

Brief Description of Drawings

FIG. 1 is a diagram showing a constitution of a stereo camera system to which a stereo camera supporting apparatus is applied;

FIG. 2 is a diagram showing a constitution of a stereo adaptor;

FIGS. 3A to 3D are diagrams showing attachment of a stereo camera to a vehicle;

FIGS. 4A and 4B are diagrams showing a three-dimensional distance image obtained by a process apparatus;

FIG. 5 is a diagram showing display of an image extracted by performing a process such as three-dimensional re-constitution;

FIG. 6 is a diagram showing a constitution of a stereo camera joining device of a stereo camera supporting apparatus;

FIGS. 7A and 7B are diagrams showing an imaging direction of the stereo camera mounted on the vehicle;

FIG. 8 is a flowchart showing a schematic procedure of a control operation in the stereo camera supporting apparatus;

FIGS. 9A and 9B are diagrams showing the imaging direction of the stereo camera by tilt of a backward/forward direction of a vehicle;

FIG. 10 is a flowchart showing a schematic procedure of the control operation in the stereo camera supporting apparatus;

FIGS. 11A and 11B are diagrams showing a posture of the stereo camera by the tilt of the vehicle in a right/left direction;

FIG. 12 is a flowchart showing a schematic procedure of the control operation in the stereo camera supporting apparatus;

FIGS. 13A and 13B are diagrams showing the tilt of a road surface, and an imaging direction of the stereo camera;

FIG. 14 is a flowchart showing the schematic operation of the control operation in the stereo camera supporting apparatus;

FIG. 15 is a flowchart showing the schematic operation of the control operation in the stereo camera supporting apparatus;

FIGS. 16A to 16C are explanatory views of a method of displaying video to a driver;

FIG. 17 is a block diagram showing a basic constitution example of a calibration displacement detection apparatus in a sixth embodiment of the present invention;

FIG. 18 is an explanatory view of a camera coordinate of a photographing apparatus which photographs a stereo image;

FIGS. 19A is a diagram showing a view field of a stereo adaptor, and FIG. 19B is a developed diagram of the stereo adaptor of FIG. 19A;

FIG. 20 is an explanatory view of an epipolar line restriction in the stereo image;

FIGS. 21A and 21B show a rectification process, FIG. 21A is a diagram showing an image before rectification, and FIG. 21B is a diagram showing an image after the rectification;

FIG. 22 is an explanatory view of the rectification process;

FIG. 23 is a flowchart showing a detailed operation of a calibration displacement detection apparatus in the sixth embodiment of the present invention;

FIGS. 24A and 24B show right/left original image, FIG. 24A is a diagram showing a left original image photographed by a left camera, and FIG. 24B is a diagram showing a right original image photographed by a right camera;

FIGS. 25A and 25B show rectified right/left images, FIG. 25A is a diagram showing a left image, and FIG. 25B is a diagram showing a right image;

FIG. 26 is a block diagram showing a constitution example of a characteristic extraction apparatus 118 of FIG. 17;

FIG. 27 is a diagram showing a rectified left image by a divided small block;

FIG. 28 is a diagram showing an example of a characteristic point registered in the left image;

FIGS. 29A and 29B are explanatory views of setting of a searching range;

FIG. 30 is a diagram showing an example of a corresponding characteristic point extracted from the right image;

FIGS. 31A and 31B are explanatory views showing a calibration displacement judgment method;

FIG. 32 is a diagram showing one example of a displacement result presenting apparatus 122 of FIG. 17;

FIG. 33 is a block diagram showing a basic constitution example of the calibration displacement detection apparatus in a seventh embodiment of the present invention;

FIG. 34 is a flowchart showing an operation of the calibration displacement detection apparatus in the seventh embodiment of the present invention;

FIGS. 35A and 35B are explanatory views of setting of the searching range;

FIG. 36 is a block diagram showing a basic constitution example of the calibration displacement detection apparatus in an eighth embodiment of the present invention;

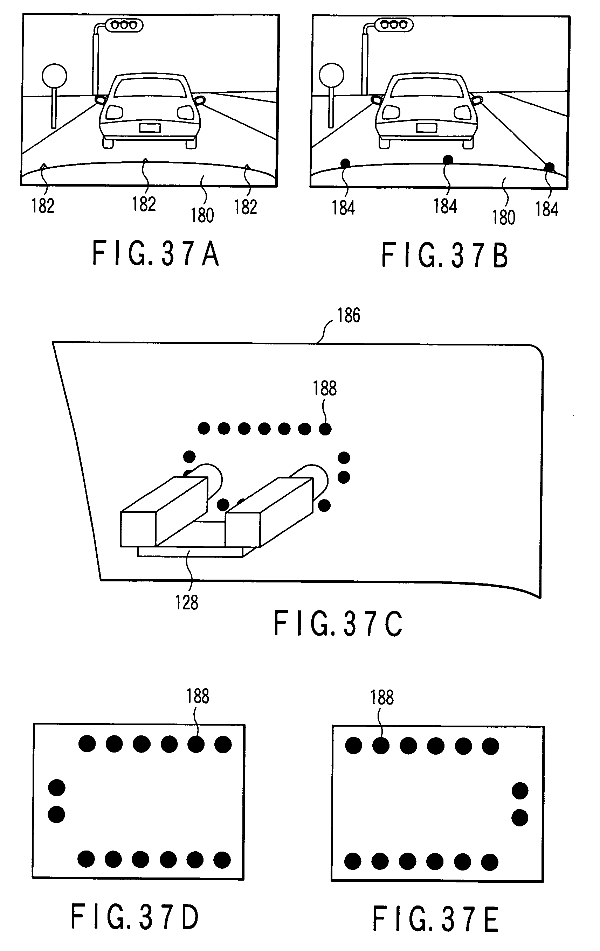

FIGS. 37A to 37E show examples of an arrangement including a known characteristic concerning a shape of a part of a photographed vehicle, FIG. 37A is a diagram showing an example of the photographed left image, FIG. 37B is a diagram of characteristics selected as known characteristics and shown by black circles 184, FIG. 37C is a diagram showing an example of a state in which known markers of black circles are disposed as known characteristics in a part of the windshield, FIG. 37D is a diagram showing an example of a left image showing a marker group, and FIG. 37E is a diagram showing an example of the right image indicating the marker group;

FIG. 38 is a flowchart showing an operation of the calibration displacement detection apparatus in an eighth embodiment of the present invention;

FIGS. 39A and 39B are diagrams showing examples of sets A and B of the extracted characteristics;

FIG. 40 is a block diagram showing a basic constitution example of the calibration displacement detection apparatus in a tenth embodiment of the present invention;

FIG. 41 is a block diagram showing a constitution of a stereo camera to which the calibration displacement detection apparatus according to a twelfth embodiment of the present invention is applied;

FIG. 42 is a block diagram showing a first basic constitution example of a calibration displacement correction apparatus in the present invention;

FIG. 43 is a block diagram showing a second basic constitution example of the calibration displacement correction apparatus in the present invention;

FIG. 44 is an explanatory view showing a camera coordinate of the photographing apparatus which photographs a stereo image;

FIG. 45A is a diagram showing a view field of a stereo adaptor, and FIG. 45B is a developed diagram of the stereo adaptor of FIG. 45A;

FIG. 46 is an explanatory view of epipolar line restriction in the stereo image;

FIGS. 47A and 47B show a rectification process, FIG. 47A is a diagram showing an image before rectification, and FIG. 47B is a diagram showing an image after the rectification;

FIG. 48 is an explanatory view of a rectification process;

FIG. 49 is a flowchart showing a detailed operation of the calibration displacement correction apparatus in a thirteenth embodiment of the present invention;

FIGS. 50A to 50E are diagrams showing examples of known characteristics in a vehicle;

FIGS. 51A and 51B show right/left original images, FIG. 51A is a diagram showing a left original image photographed by a left camera, and FIG. 51B is a diagram showing a right original image photographed by a right camera;

FIGS. 52A and 52B show rectified right/left images, FIG. 52A is a diagram showing a left image, and FIG. 52B is a diagram showing a right image;

FIG. 53 is a block diagram showing a constitution example of a characteristic extraction apparatus 266;

FIG. 54 is a diagram showing one example of an extraction result;

FIG. 55 is a diagram showing a rectified left image by a divided small block;

FIG. 56 is a diagram showing an example of the characteristic point registered by the left image;

FIGS. 57A and 57B are explanatory views of setting of a searching range;

FIG. 58 is a diagram showing an example of the corresponding characteristic point extracted by the right image;

FIG. 59 is a diagram showing one example of a correction result presenting apparatus 270;

FIG. 60 is a flowchart showing another operation example in a thirteenth embodiment of the present invention;

FIG. 61 is a flowchart showing still another operation example in the thirteenth embodiment of the present invention;

FIG. 62 is a block diagram showing a basic constitution of the calibration displacement correction apparatus in a fourteenth embodiment of the present invention;

FIG. 63 is a flowchart showing a detailed operation of the calibration displacement correction apparatus in the fourteenth embodiment of the present invention;

FIG. 64 is a block diagram showing a basic constitution example of the calibration displacement correction apparatus in a fifteenth embodiment of the present invention;

FIG. 65 is a flowchart showing an operation of the calibration displacement correction apparatus in the fifteenth embodiment of the present invention;

FIG. 66 is a block diagram showing a basic constitution example of the calibration displacement correction apparatus in a sixteenth embodiment of the present invention;

FIG. 67 is a flowchart showing an operation of the calibration displacement correction apparatus in the sixteenth embodiment of the present invention;

FIGS. 68A and 68B are explanatory views of a displacement di from an epipolar line;

FIG. 69 is a block diagram showing a basic constitution example of the calibration displacement correction apparatus in a seventeenth embodiment of the present invention;

FIG. 70 is a diagram showing an example of a calibration pattern photographed by the stereo photographing apparatus;

FIG. 71 is a diagram showing another example of the calibration pattern photographed by the stereo photographing apparatus;

FIGS. 72A and 72B show states of stereo images by the calibration displacement correction apparatus of an eighteenth embodiment of the present invention, FIG. 72A is a diagram showing an example of the left image at time 1, and FIG. 72B is a diagram showing an example of the left image at time 2 different from the time 1;

FIG. 73 is a flowchart showing a process operation of the calibration displacement correction apparatus in the seventeenth embodiment of the present invention; and

FIG. 74 is a flowchart showing another process operation of the calibration displacement correction apparatus in the seventeenth embodiment of the present invention.

Best Mode for Carrying Out the Invention

Embodiments of the present invention will be described hereinafter with reference to the drawings.

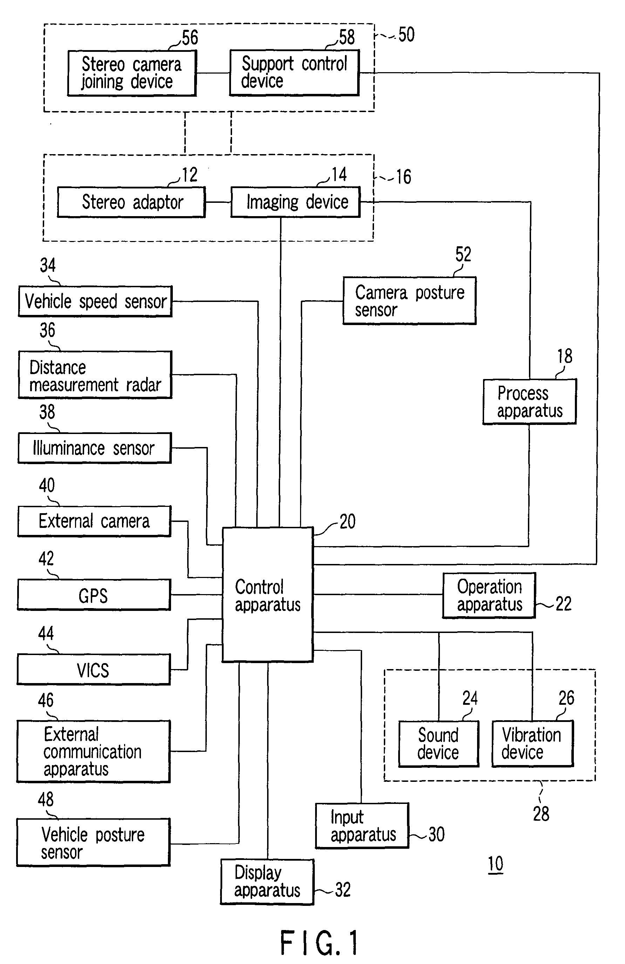

FIG. 1 is a diagram showing constitutions of a stereo camera supporting apparatus, and a stereo camera system to which the apparatus is applied according to the present invention.

The present stereo camera system 10 comprises: a stereo camera 16 comprising a stereo adaptor 12 and a photographing apparatus 14 described later; a process apparatus 18; a control apparatus 20; an operation apparatus 22; a warning apparatus 28 comprising a sound device 24, a vibration device 26 and the like; an input apparatus 30; a display apparatus 32; a vehicle speed sensor 34; a distance measurement radar 36; an illuminance sensor 38; an external camera 40; a global positioning system (GPS) 42; a vehicle information and communication system (VICS) 44; an external communication apparatus 46; a stereo camera supporting apparatus 50; a camera posture sensor 52; and a vehicle posture sensor 54.

Moreover, in the stereo camera supporting apparatus 50, a stereo camera joining device 56 and a support control device 58 are disposed.

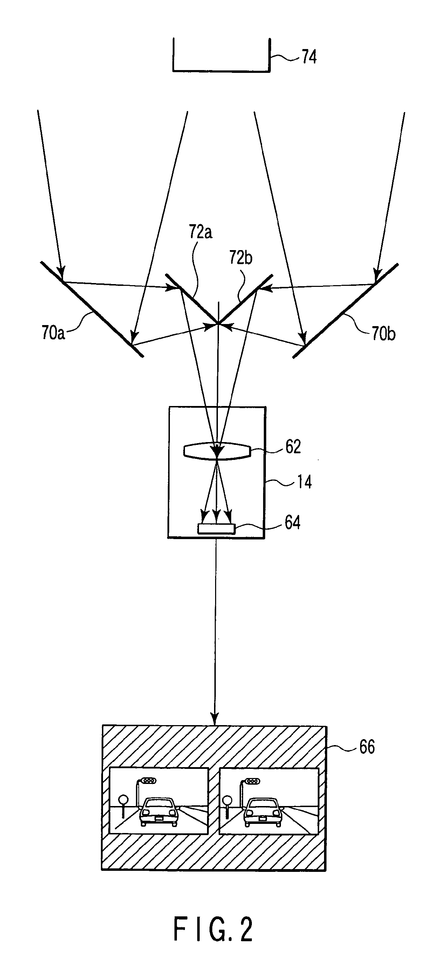

Here, as shown in FIG. 2, the stereo adaptor 12 is attached before an imaging optical system 62 existing in the photographing apparatus 14 including a camera and the like, and comprises two light receiving portions (mirrors 70a, 70b), and an optical system (mirrors 72a, 72b). The stereo adaptor 12 is used for forming a parallax error image 66 in an imaging element 64. In FIG. 2, light from the same subject 74 is received by two light receiving portions (mirrors 70a, 70b) detached by a predetermined distance. Moreover, each received light is reflected by the optical system (mirrors 72a, 72b), and guided to the imaging optical system 64 of the imaging apparatus 14.

The stereo camera 16 comprising the stereo adaptor 12 and the imaging apparatus 14 (alternatively or additionally the process apparatus 18) is constituted in such a manner that images of various directions are photographed by the stereo camera supporting apparatus 50.

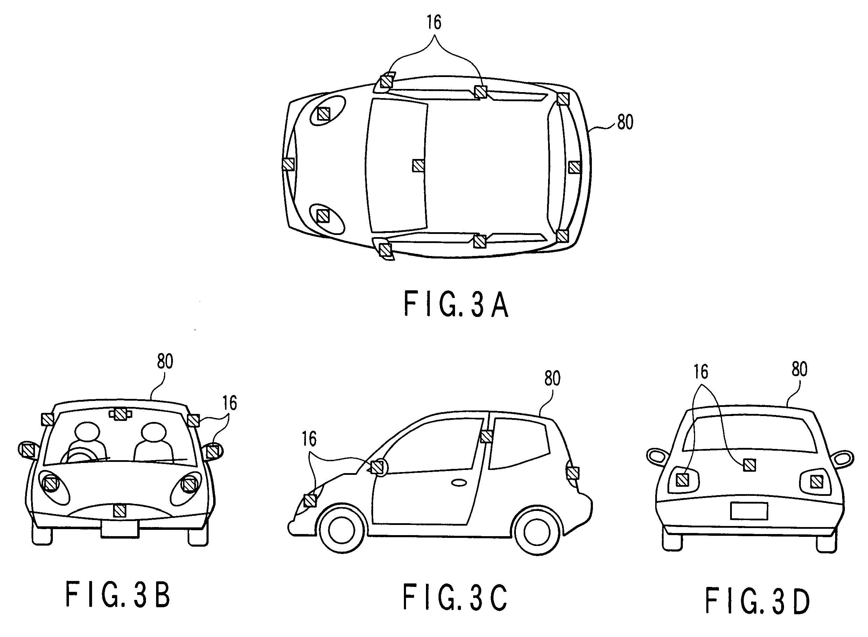

As shown in FIGS. 3A, 3B, 3C, 3D, the stereo cameras 16 can be attached to optional positions (hatched and shown positions) inside and outside a vehicle 80. When the cameras are attached to the outside of the vehicle 80, the cameras can be attached to vehicle hood, pillar, headlight and the like, and scenery outside the vehicle can be photographed from various directions. When the cameras are attached to the inside of the vehicle 80, the cameras can be attached to a dashboard, room mirror and the like.

The process apparatus 18 performs a process such as three-dimensional re-constitution from the image photographed by the imaging apparatus 14 through the stereo adaptor 12, and prepares a three-dimensional distance image or the like. A control apparatus 204 has a function of generally controlling image information and vehicle information. For example, a result processed by the process apparatus 18 is displayed in the display apparatus 32, distance information and information of the vehicle speed sensor 34 or the like obtained by the process apparatus 18 are analyzed, warning is generated in the warning apparatus 28, and the operation apparatus 22 can be controlled to thereby advise safe driving to a driver. For example, the input apparatus 30 gives an instruction to the control apparatus 20 using an input apparatus such as a remote controller, and a mode or the like can be switched.

As understood from the above description, the process apparatus 18 and the control apparatus 20 constitute information process means in the present system, and can be constituted in such a manner as to cover both apparatus functions by a computer mounted on the vehicle comprising the system.

Furthermore, as described above, the warning apparatus 28 comprises, the sound device 24, the vibration device 26 and the like. For example, the sound device 24 issues a warning to a driver by sound from a speaker or the like, and the vibration device 26 issues the warning by vibration of a driver seat.

Here, the stereo camera joining device 56 which is a constituting element of the stereo camera supporting apparatus 50 joins the stereo camera 16 to the vehicle 80 to thereby support the camera. The support control device 58 which is a constituting element of the stereo camera supporting apparatus 50 outputs a signal to the stereo camera joining device 56, and controls an imaging direction of the stereo camera 16.

Moreover, the vehicle posture sensor 54 is detection means for detecting the posture or position of the vehicle, and detects the tilt of the vehicle with respect to a road. Furthermore, the support control device 58 controls an imaging range of the stereo camera 16, that is, a position where the imaging view field is fixed based on a detected value of the vehicle posture sensor 54, image information processed by the process apparatus 18, information of the GPS 42 and the like.

That is, in a case where the vehicle tilts, and accordingly the imaging view field shifts from an appropriate state, a control signal is output to the stereo camera joining device 56 in order to have an original imaging view field. In this case, the support control device 58 grasps an existing state of the camera based on a detected output value of the camera posture sensor 52 which is a sensor for detecting the posture or position of the camera, and generates a control signal. Moreover, the stereo camera joining device 56 drives an adjustment mechanism disposed inside the device based on the control signal, and sets the stereo camera 16 in a desired direction.

It is to be noted that the above-described vehicle posture sensor 54 is capable of functioning as tilt detection means for detecting a relative angle with respect to a vertical or horizontal direction, and is further capable of functioning as height detection means for detecting a relative position with respect to a ground contact face of the vehicle.

It is to be noted that various information and detection signals required for the control are input into the support control device 58 via the control apparatus 20. Additionally, the present invention is not limited to this mode, and the support control device 58 may be constituted in such a manner as to receive various information and detection signals required for direct control. The control apparatus 20 and the support control device 58 may be constituted in such a manner as to appropriately share a function and receive various information and detection signals required for the control.

Next, a function of preparing a three-dimensional distance image or the like, disposed in the process apparatus 18, will be generally described. It is to be noted that the present applicant has already proposed a constitution example of the process apparatus 18 and applicable image processing theory in Jpn. Pat. Appln. KOKAI Publication No. 2003-048323.

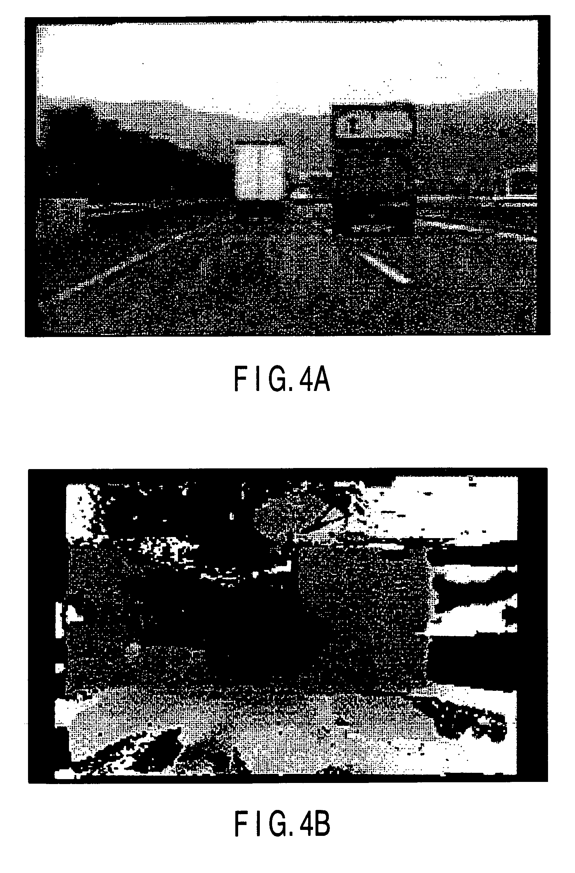

FIGS. 4A and 4B show three-dimensional distance images obtained by the process apparatus 18.

FIG. 4A is a diagram showing a photographed image, and FIG. 4B is a diagram showing a calculated result of a distance from the image. The distance from the camera to the subject can be calculated as three-dimensional information in this manner. It is to be noted that FIG. 4B shows that the higher the luminance is, the shorter the distance is.

Moreover, the process apparatus 18 can discriminate a road region and a non-road region based on the three-dimensional distance image, and can further recognize and extract an object existing in a road surface, and an obstruction in the non-road region.

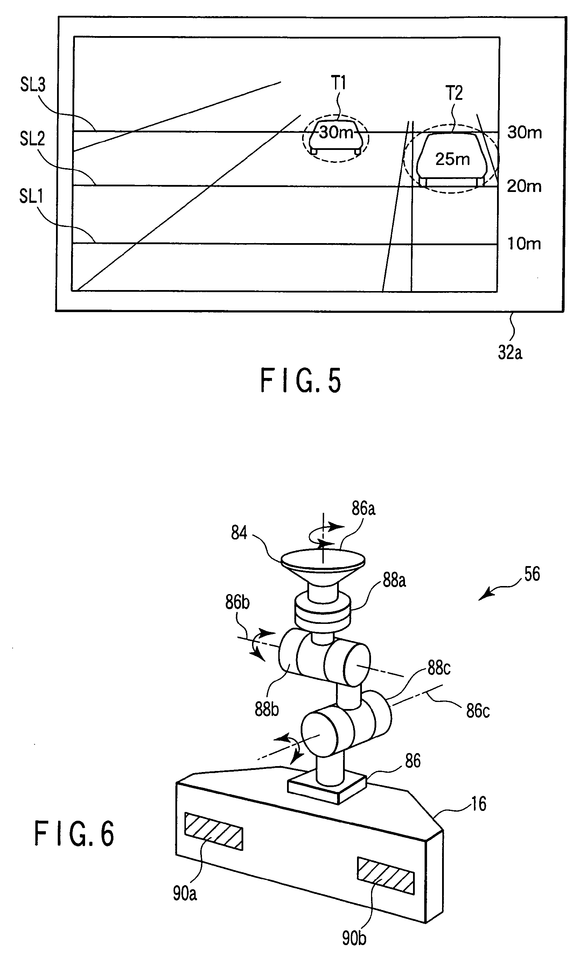

Therefore, as shown in FIG. 5, a flat-face or curved-face shape of the road extracted by performing a process such as three-dimensional re-constitution can be displayed on a display unit 32a of the display apparatus 32. Furthermore, at this time, a group of points on the road surface distant from the vehicle 80 at equal intervals is superimposed/displayed by straight lines or curved lines SL1, SL2, SL3. Furthermore, the display apparatus 32 recognizes vehicles T1, T2 and the like driving ahead on the road, displays the vehicle driving ahead by an ellipse, rectangle or the like enclosing the vehicle, and can display distances to the vehicles T1, T2 driving ahead by the process apparatus 18.

When the present stereo camera system is used in this manner, various information concerning the road and subject can be obtained.

[First Embodiment]

FIG. 6 is a diagram showing a constitution example of the stereo camera joining device 56 of the stereo camera supporting apparatus 50 of the first embodiment according to the present invention.

The stereo camera joining device 56 is a joining member for attaching the stereo camera 16 to the vehicle 80, and is constituted in such a manner that the stereo camera 16 can be changed in a desired position, and posture. A support member 84 fixed to an appropriate portion of a vehicle body and accordingly joined to the vehicle body, and a supported member 86 for joining the device to the stereo camera 16 are disposed on opposite ends of the stereo camera joining device 56.

Moreover, a mechanism for freely directing the stereo camera 16 joined to the vehicle body in this manner in a predetermined range is disposed. That is, this mechanism is a posture control mechanism comprising a yaw rotary motor 88a, a pitch rotary motor 88b, and a roll rotary motor 88c constituted in such a manner as to be rotatable around three axes including a yaw rotation axis 86a, a pitch rotation axis 86b, and a roll rotation axis 86c.

Furthermore, in FIG. 6, reference numerals 90a and 90b denote a view field mask opening (L) and a view field mask opening (R) disposed in the stereo adapter 16.

The support control device 58 outputs control signals for the respective motors to the stereo camera joining device 56 having the present constitution, so that the stereo adaptor 12 can be controlled in a desired direction. It is to be noted that although not shown in FIG. 6, the camera posture sensor 52 (FIG. 1) for detecting the posture or position of the camera is disposed in the stereo camera joining device 56. The camera posture sensor 52 may detect, for example, rotation angles of the respective motors.

It is to be noted that the stereo camera joining device 56 is not limited to a system comprising a three-axis control mechanism shown in FIG. 6, and, for example, a known gimbal mechanism of an electromotive type can be applied. A mechanism may be applied in conformity to a mirror frame support mechanism of Jpn. Pat. No. 3306128 proposed by the present applicant.

It is to be noted that the stereo camera joining device 56 is not a system for automatically controlling three axes shown in FIG. 6. For example, a yaw angle may be manually adjusted. For example, the manual adjustment mechanism may adopt a constitution in which a rotatable or lockable universal joint, or a supported member suspended like a free camera platform is directed at a desired attachment angle by loosening a lock screw, and thereafter the direction is adjusted by fixing a tightening angle of the lock screw.

Next, an operation of the stereo camera supporting apparatus 50 according to the first embodiment of the present invention will be described.

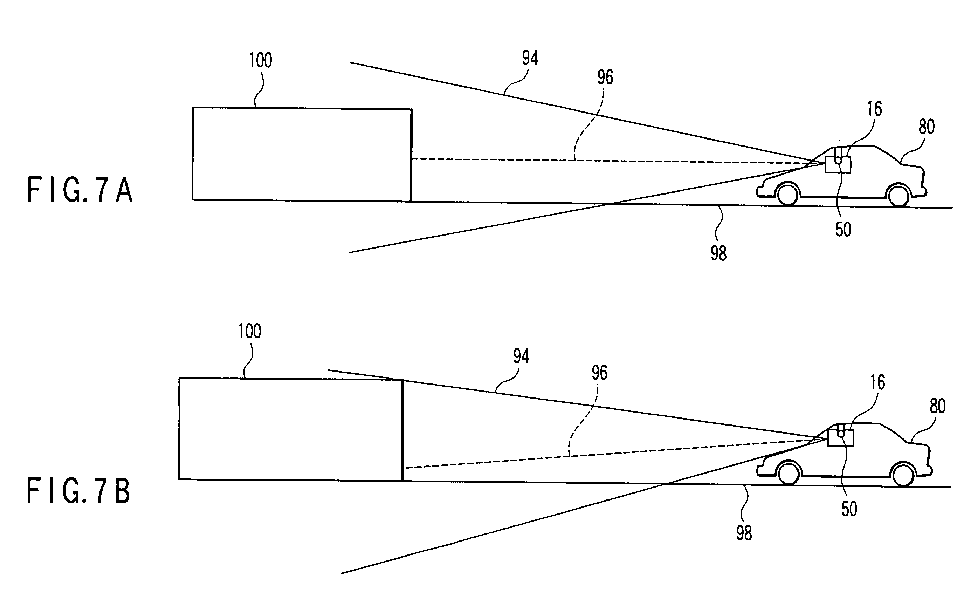

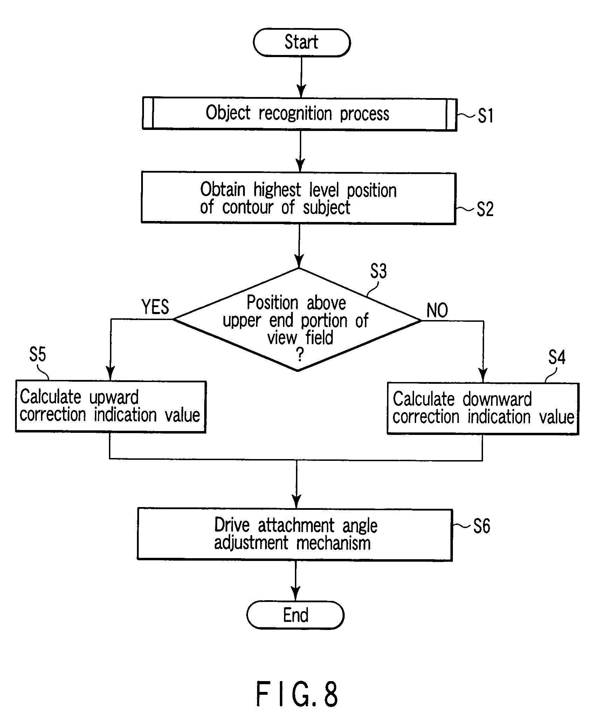

FIGS. 7A and 7B are diagrams showing an imaging direction of the stereo camera mounted on the vehicle 80, and FIG. 8 is a flowchart showing a schematic procedure of control in the stereo camera supporting apparatus 50.

In FIG. 7A, the stereo camera 16 is suspended in an appropriate place (on the dashboard, in the vicinity of a middle position above the windshield, etc.) inside the vehicle 80 via the stereo camera joining device 56. Moreover, a center line 96 of a view field 94 of the stereo camera 16 is set to be parallel to a road surface 98. However, sky which is an unnecessary background region in processing the image concerning the subject constituting a target is photographed in an upper region of a photographed frame in this state. Therefore, the image has an insufficient originally required ratio occupied by an imaging region of a subject 100 such as a vehicle driving ahead, the road surface 98 or the like.

Therefore, as shown in FIG. 7B, an imaging posture of the stereo camera 16 is adjusted by control by the stereo camera joining device 56. In this case, the posture is adjusted in such a manner that an upper end portion (contour portion in the highest level position in the contour of the subject) of the subject 100 in front is positioned in an upper end portion (therefore, a frame upper end of the photographed video) of the view field 94. Accordingly, a photographing region of the road surface 98 spreads, an unnecessary background region such as sky decreases, and the view field can be effectively utilized.

Here, the control operation of the above-described stereo camera supporting apparatus 50 will be described with reference to a flowchart of FIG. 8.

First, in step S1, the support control device 58 accepts an object recognition process result executed by the process apparatus 18 in the support control device 58. That is, in the process apparatus 18, the road region and non-road region are discriminated based on a three-dimensional distance image (including information indicating the corresponding pixel and information indicating a distance), and the subject 100 existing in the road region is recognized and extracted. In this case, the process apparatus 18 may extract the only driving vehicle from the recognized subject 100 based on characteristics.

Next, in step S2, in the support control device 58, the highest level position of the contour portion with respect to the subject 100 existing in the imaging view field is obtained. Moreover, it is checked in step S3 whether or not the highest level position exists above the upper end portion (therefore, a frame upper end of video, this also applies to the following) of the view field 94.

Here, when a plurality of subjects 100 exist in the imaging view field, the highest level position of the contour portion in the subjects is obtained. When the highest level position exists under the upper end portion of the view field 94 (No in step S3), the stereo camera 16 tilts rearwards with respect to a desired posture position. Then, the process shifts to step S4, and tilt of the camera is taken from a detected output of the camera posture sensor 52 by the support control device 58. Moreover, a control signal which adjusts the posture of the stereo adaptor 12 is output to the support control device 58 in such a manner that the highest level position of the subject 100 is positioned in the upper end portion of the view field 94.

On the other hand, when the highest level position exists above the upper end portion of the view field 94 (Yes in step S3), the stereo camera 16 tilts forwards with respect to a desired posture/position. Then, the process shifts to step S5, and the tilt of the camera is taken from the detection output of the camera posture sensor 52 by the support control device 58. Moreover, the control signal to adjust the camera posture is output to the stereo camera joining device 56 from the support control device 58 in such a manner that the highest level position of the subject 100 is positioned in the upper end portion of the view field 94.

In step S6, the mechanism which is disposed inside and which adjusts the posture of the camera is driven, and the view field 94 of the stereo camera 16 is adjusted in a desired position by the stereo camera joining device 56 which has received the control signal.

In the above description, as to the posture of the stereo camera 16 to be taken at an initial time when the stereo camera supporting apparatus 50 starts, for example, when a vehicle power key is turned on, several modes can be taken.

That is, in one mode, a horizontal posture (center line of the view field at a time when the photographing is performed in view of the imaging view field of the stereo camera 16 from a visual point set in the imaging optical system of the stereo camera or in the vicinity of the system, i.e., a posture in which the known center line 96 has a horizontal direction in FIGS. 7A, 7B) is uniformly taken at a starting time (i.e., at an initial operation time of the present system). Thereafter, the posture of the stereo camera is controlled to be gradually adjusted as described above based on the above-described information of the three-dimensional distance image with the driving of the vehicle.

An appropriate control is executable with respect to an optimum posture from a neutral position in any posture in accordance with development of the view field by the subsequent driving of the stereo camera, for example, even in a situation in which a garage wall surface is imaged in an initial operation state. Therefore, in an initial operation stage which is not adjusted to the control in the system, useless information process or control is performed, and accordingly a possibility that speeding-up of a process having a relatively high priority is inhibited is avoided.

Moreover, as another mode, a last state set in the previous control may be maintained at the initial operation time. In this case, a probability that the vehicle starts driving again from the last state set in the previous control is high, and therefore a possibility that the posture of the stereo camera can be matched with a targeted posture at a comparatively early time from when starting the driving is high.

In still another mode, at the initial operation time, a mode to control and set the posture of the stereo camera to a relatively downward direction may be taken (i.e., the above-described center line 96 takes a posture directed below the horizontal direction, or the direction controlled at a time other than the initial operation time). In this case, a possibility that existences of surrounding obstructions, infants, and animals such as a pet to which special attentions have to be paid at the initial operation time are missed can be reduced.

A system may be constituted, for example, in such a manner that the above-described various modes of the posture control of the stereo camera at the initial operation time can be set in such a manner as to be selectable as a plurality of control modes arbitrarily by an operator beforehand.

Various control modes concerning the posture of the stereo camera at the initial operation time have been described above, and a mode to select the tendency of the posture control of the stereo camera may be adopted in accordance with a driving state of the vehicle comprising the system of the present invention. That is, the posture of the stereo camera is controlled to be directed relatively downwards (substantially in the same meaning as described above) at a high-speed driving time, and directed relatively upwards at a low-speed driving time.

According to this mode, a road portion is stably extracted•discriminated from the video obtained by the imaging, and a distant vehicle can be accurately recognized at the high-speed driving time. A comparatively high object to which driver's attention becomes dim can be securely recognized at a low-speed driving time. A high-performance system is realized in this respect.

It is to be noted that the posture of the stereo camera may be controlled to be automatically directed upwards, when it is detected by the corresponding sensor or the like that the highest level position of the contour of the subject to be noted approaches or meets a high subject departing further upwards from the upper end of the frame of the video. Auxiliary means for operating the posture of the stereo camera upwards by an artificial operation based on operator's recognition may be disposed.

It is to be noted that to set the posture of the stereo camera to a predetermined posture during an assembly process of the vehicle comprising the stereo camera, or before shipping from a plant can be considered as one technical method.

It is to be noted that a control operation for moving the camera may be a feedback control, a feedforward control, or a compromise system regardless of whether the operation is based on so-called modern control theory or classical control theory, and various known control methods such as PIC control, H infinity control, adaptive model control, fuzzy control, and neural net can be applied.

For example, in a case where feedback controls such as general PID are used, the support control device 58 produces a control signal corresponding to a deviation amount between the highest level position and the upper end of the view field 94 in the control loop, and outputs the signal to the stereo camera joining device 56. The operation is repeated until the deviation amount reaches "0", and accordingly the camera can be controlled to a desired posture.

As understood from the above description, in the embodiment, a joining member is constituted in such a manner as to support the stereo camera on the vehicle, when the support member 84 disposed on the vehicle side on which the stereo camera 16 is provided is joined to the supported member 86 disposed in the predetermined portion of the stereo camera 16 in such a manner that the relative position between the both members is variable in a predetermined range. This joining member, and control means for controlling the posture or position of the stereo camera 16 supported on the vehicle by the joining member are embodied by the corresponding function portions of the stereo camera joining device 56 and the support control device 58.

Moreover, in the system including the support control device 58, control means controls the posture of the stereo camera using a detection output of the detection means for detecting the posture or position of the vehicle, and the control means may have a mode to perform a control operation using the detection output as one state variable of the control system in the control.

Furthermore, a control calculation function unit of the support control device 58 may be constituted to perform this function integrally with the corresponding function unit of the control apparatus 20 by a common computer mounted on the vehicle without constituting a separate circuit.

[Second Embodiment]

Next, a stereo camera supporting apparatus 50 of a second embodiment according to the present invention will be described.

The stereo camera supporting apparatus 50 of the second embodiment is incorporated in a stereo camera system shown in FIG. 1, and applied in the same manner as in the stereo camera supporting apparatus 50 of the above-described first embodiment. Moreover, a constitution of a stereo camera joining device 56 of the second embodiment is similar to that of the stereo camera joining device 56 of the first embodiment shown in FIG. 6. Therefore, the same portions as those of the first embodiment are denoted with the same reference numerals, and detailed description thereof is omitted.

Next, an operation of the stereo camera supporting apparatus 50 according to the second embodiment of the present invention will be described. In the present embodiment, the stereo camera supporting apparatus 50 corrects a change of the view field by tilt of the backward/forward direction of the vehicle 80.

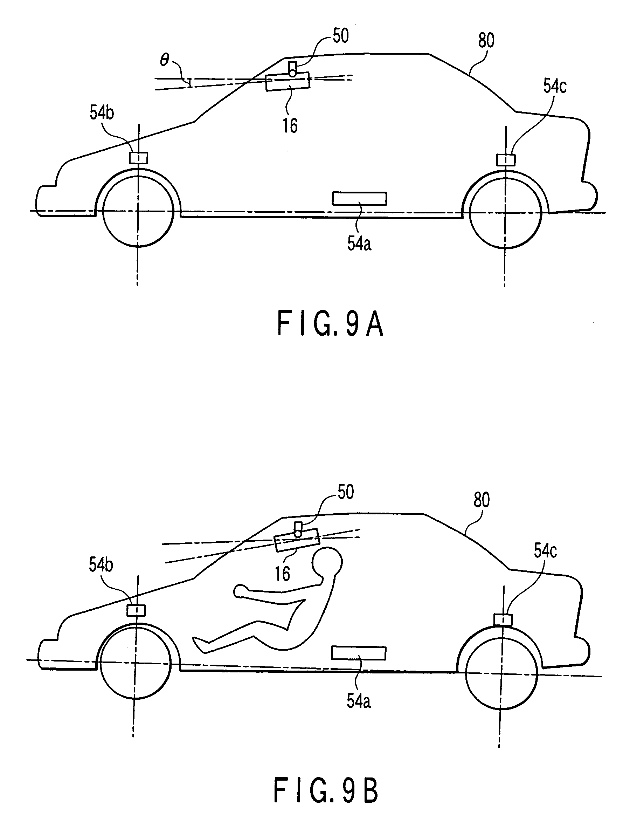

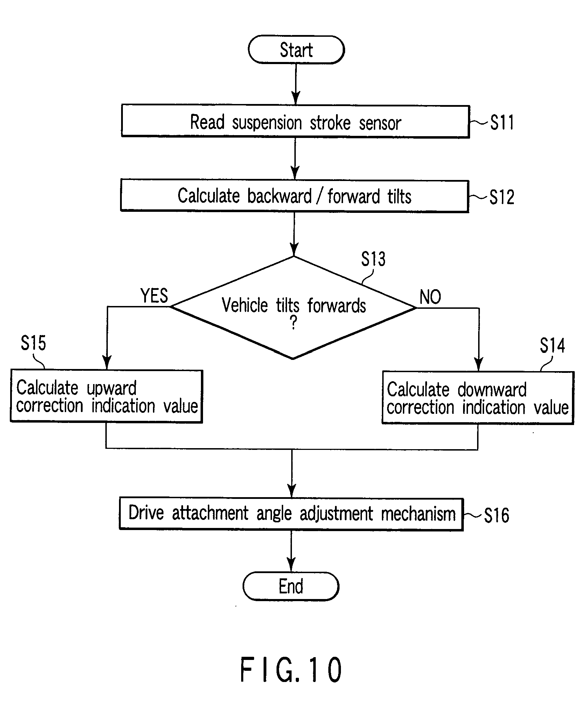

FIGS. 9A and 9B are diagrams showing an imaging direction of the stereo camera by the tilt of the backward/forward direction of the vehicle, and FIG. 10 is a flowchart showing a schematic procedure of the control operation in the stereo camera supporting apparatus 50.

As shown in FIG. 9A, a stereo camera 16 is suspended in a vehicle 80 in such a manner as to observe a portion having a predetermined downward tilt angle θ with respect to a horizontal plane via the stereo camera joining device 56. Moreover, the vehicle 80 is provided with a tilt sensor 54a for detecting a backward/forward tilt of a vehicle body, or suspension stroke sensors 54b, 54c for measuring distances to suspensions of front and rear wheel portions.

Additionally, in a case where the number of people who get in the vehicle 80, and boarding positions change, or a weight of luggage mounted on a luggage carrier of a car changes, the backward/forward tilt angle of the vehicle 80 accordingly changes. Furthermore, the backward/forward tilt angles of the vehicle 80 change at a deceleration or acceleration time. As a result, the view field of the stereo camera also deviates from an appropriate state.

Therefore, as shown in FIG. 9B, the imaging direction of the stereo camera 16 is controlled in such a manner that a camera view field has a desired state based on the tilt angle of the vehicle body detected by the tilt sensor 54a, or the tilt angle of the vehicle body calculated from a stroke detected by the suspension stroke sensors 54b, 54c.

It is to be noted that a mode may be taken in which the tilt sensor 54a, suspension stroke sensors 54b, 54c and the like are included as conversion units of a plurality of detection ends, and the above-described vehicle posture sensor 54 is constituted.

Next, a control operation of the above-described stereo camera supporting apparatus 50 will be described with reference to the flowchart of FIG. 10.

First, in step S11, in the support control device 58, detection outputs of the suspension stroke sensors 54b, 54c attached to the front and rear wheel portions of the vehicle 80 are read. Moreover, in the subsequent step S12, a difference of the stroke sensor is calculated to thereby calculate the backward/forward tilt of the vehicle 80. Moreover, it is checked in step S13 whether or not the vehicle tilts forwards as compared with a reference state.

Here, in a case where the vehicle tilts rearwards as compared with the reference state (No in step S13), the stereo camera 16 images a portion above a desired posture/position. Then, the process shifts to step S14, the tilt of the camera is taken from the detection output of the camera posture sensor 52 in the support control device 58, and a control signal for adjusting the posture of the camera is output to the stereo camera joining device 56 in such a manner that the view field direction of the stereo camera 16 is a downward direction.

On the other hand, in a case where the vehicle tilts forwards as compared with the reference state (Yes in step S13), the stereo camera 16 images a portion below the desired posture/position. Then, the process shifts to step S15, the tilt of the camera is taken from the detection output of the camera posture sensor 52 by the support control device 58, and a control signal for adjusting the posture of the camera is output to the stereo camera joining device 56 in such a manner that the view field direction of the stereo camera 16 is an upward direction.

Moreover, in step S16, in the stereo camera joining device 56 which has received the control signal, a mechanism for adjusting the posture of the camera disposed inside is driven, and the view field 94 of the stereo camera 16 is adjusted into a desired position.

It is to be noted that the tilt of the vehicle 80 may be detected using the detection output of the tilt sensor 54a, and the detection outputs of the suspension stroke sensors 54b, 54c may be combined with the detection output of the tilt sensor 54a to thereby calculate the tilt angle.

Moreover, a control operation for moving the camera may be a feedback control, a feedforward control, or a compromise system regardless of whether the operation depends on so-called modern control theory or classical control theory, and various known control methods such as PID control, H infinity control, adaptive model control, fuzzy control, and neural net can be applied. For example, in a case where a feedback control such as general PID is used, in the support control device 58, a control signal corresponding to a deviation amount between a target value and an actual achievement value of the camera posture sensor 52 is produced in a control loop, and output to the stereo camera joining device 56. The operation is repeated until the deviation amount reaches "0", and accordingly the camera can be controlled into a desired posture.

Furthermore, the control operation of the stereo camera supporting apparatus 50 according to the second embodiment may be performed in combination with the control operation of the stereo camera supporting apparatus 50 according to the first embodiment, or may be performed alone.

[Third Embodiment]

Next, a stereo camera supporting apparatus 50 of a third embodiment according to the present invention will be described.

The stereo camera supporting apparatus 50 of the third embodiment is incorporated in a stereo camera system shown in FIG. 1, and applied in the same manner as in the stereo camera supporting apparatus 50 of the above-described first embodiment. Moreover, a constitution of a stereo camera joining device 56 of the third embodiment is similar to that of the stereo camera joining device 56 of the first embodiment shown in FIG. 6. Therefore, the same portions as those of the first embodiment are denoted with the same reference numerals, and detailed description thereof is omitted.

Next, an operation of the stereo camera supporting apparatus 50 according to the third embodiment of the present invention will be described. In the present embodiment, the stereo camera supporting apparatus 50 corrects a change of the view field by tilt of a right/left direction of the vehicle.

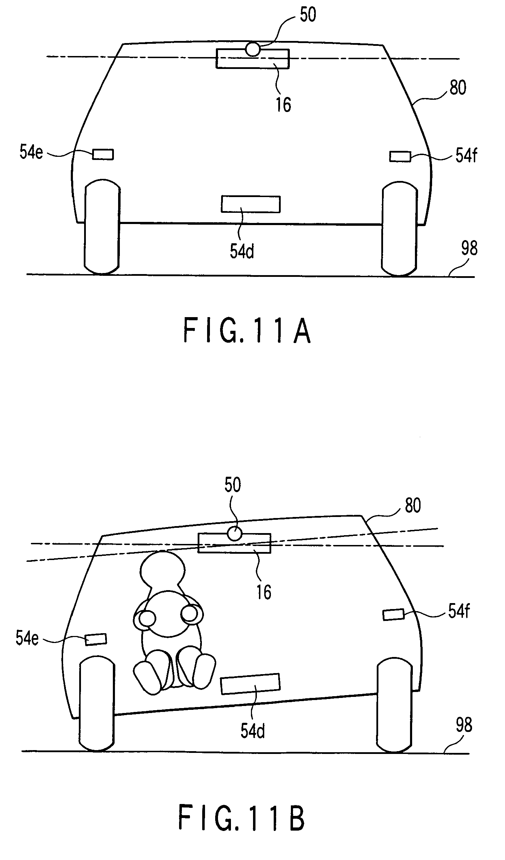

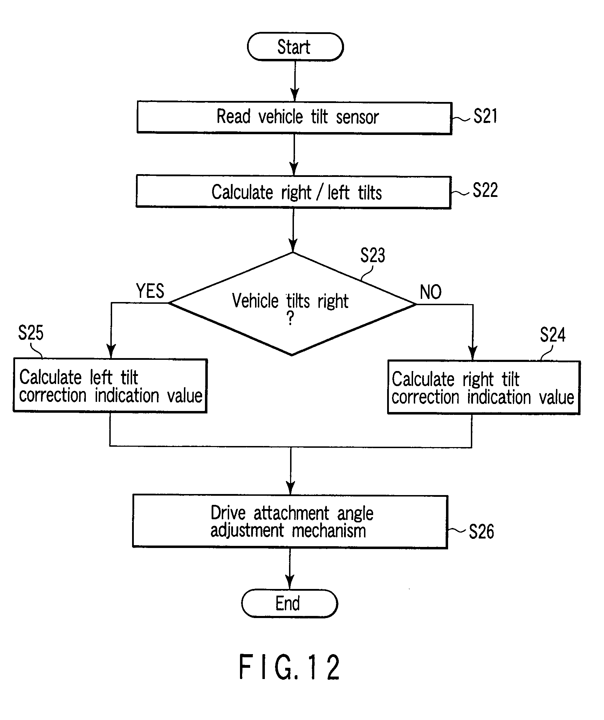

FIGS. 11A and 11B are diagrams showing a posture of the stereo camera in a case where a vehicle 80 tilts in the right/left direction, and FIG. 12 is a flowchart showing a schematic procedure of the control operation in the stereo camera supporting apparatus 50.

As shown in FIG. 11A, a stereo camera 16 is suspended in parallel with a road surface 98 in the vehicle 80 via the stereo camera joining device 56. Moreover, the vehicle 80 is provided with a tilt sensor 54d for detecting a right/left tilt of a vehicle body, or suspension stroke sensors 54e, 54f for measuring distances to suspensions of right and left wheel portions.

Additionally, in a case where the number of people who get in the vehicle 80, and boarding positions change, or a weight of a luggage mounted on a luggage carrier of a car changes, the right/left tilt angle of the vehicle 80 accordingly changes. Furthermore, the right/left tilt angles of the vehicle 80 also change at a time when the vehicle turns to the right/left. As a result, the view field (direction including the field) of the stereo camera also deviates from an appropriate state.

Therefore, as shown in FIG. 11B, the imaging direction of the stereo camera 16 is controlled in such a manner that a camera view field has a desired state based on the tilt angle of the vehicle body detected by the tilt sensor 54a, or the tilt angle of the vehicle body calculated from a stroke detected by the suspension stroke sensors 54e, 54f.

Next, a control operation of the above-described stereo camera supporting apparatus 50 will be described with reference to the flowchart of FIG. 12.

First, in step S21, detection outputs of the suspension stroke sensors 54e, 54f attached to the right/left of the vehicle 80 are read by the support control device 58. Moreover, in step S22, a difference between output values of the stroke sensors is calculated to thereby calculate the right/left tilt of the vehicle 80. Next, it is checked in step S23 whether or not the vehicle tilts to the right as compared with a reference state.

Here, in a case where the vehicle tilts to the left as compared with the reference state (No in step S23), the stereo camera 16 tilts to the left with respect to a desired posture/position and picks up the image. Then, the process shifts to step S24, the tilt of the camera is taken from the detection output of the camera posture sensor 52 by the support control device 58, and a control signal for adjusting the direction of the stereo camera 16 into a right tilt direction is output to the stereo camera joining device 56.

On the other hand, in a case where the vehicle tilts to the right as compared with the reference state (Yes in step S23), the stereo camera 16 tilts to the right with respect to the desired posture/position, and picks up the image. Then, the process shifts to step S25, the tilt of the camera is taken from the detection output of the camera posture sensor 52 by the support control device 58, and a control signal for adjusting the direction of the stereo camera 16 into a left tilt direction is output to the stereo camera joining device 56.

Thereafter, in step S26, in the stereo camera joining device 56 which has received the control signal, a mechanism for adjusting the posture of the camera disposed inside is driven, and the view field of the stereo camera 16 is adjusted into a desired position.

It is to be noted that the tilt of the vehicle 80 may be detected using the detection output of the tilt sensor 54a, or the detection outputs of the suspension stroke sensors 54e, 54f may be combined with the detection output of the tilt sensor 54d to thereby calculate the tilt angle.

Moreover, a control operation for moving the camera may be a feedback control, a feedforward control, or a compromise system regardless of whether the operation depends on so-called modern control theory or classical control theory, and various known control methods such as PID control, H infinity control, adaptive model control, fuzzy control, and neural net can be applied. For example, in a case where a feedback control such as general PID is used, in the support control device 58, a control signal corresponding to a deviation amount between a target value and an actual achievement value of the camera posture sensor 52 is produced in a control loop, and output to the stereo camera joining device 56. The operation is repeated until the deviation amount reaches "0", and accordingly the camera can be controlled into a desired posture.

Furthermore, the control operation of the stereo camera supporting apparatus 50 according to the third embodiment may be performed in combination with the control operation of the stereo camera supporting apparatus 50 according to the first embodiment, or may be performed alone.

[Fourth Embodiment]

Next, a stereo camera supporting apparatus 50 of a fourth embodiment according to the present invention will be described.

The stereo camera supporting apparatus 50 of the fourth embodiment is incorporated in a stereo camera system shown in FIG. 1, and applied in the same manner as in the stereo camera supporting apparatus 50 of the above-described first embodiment. Moreover, a constitution of a stereo camera joining device 56 of the fourth embodiment is similar to that of the stereo camera joining device 56 of the first embodiment shown in FIG. 6. Therefore, the same portions as those of the first embodiment are denoted with the same reference numerals, and detailed description thereof is omitted.

Next, an operation of the stereo camera supporting apparatus 50 according to the fourth embodiment of the present invention will be described. In the present embodiment, the stereo camera supporting apparatus 50 detects the tilt of a road surface 98, and corrects a change of the view field.

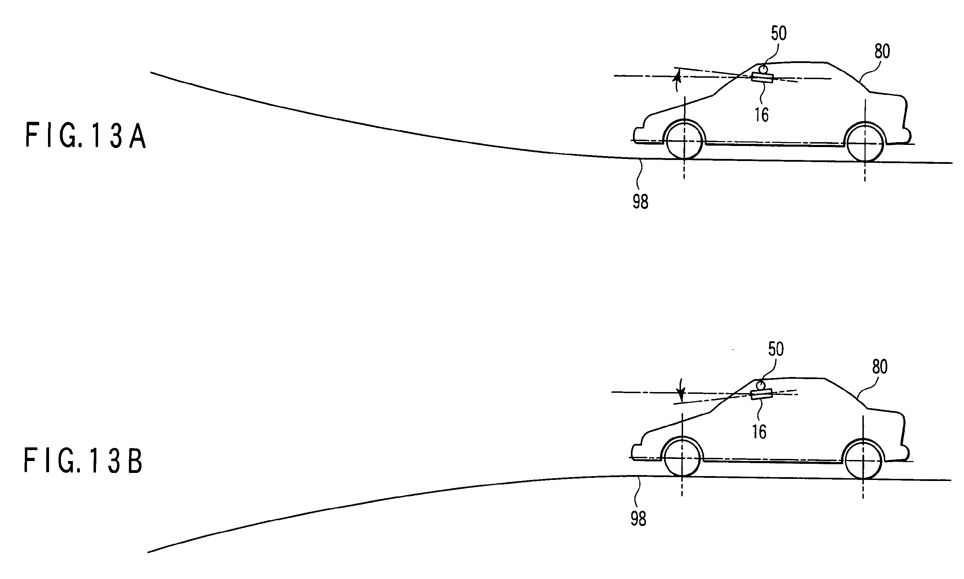

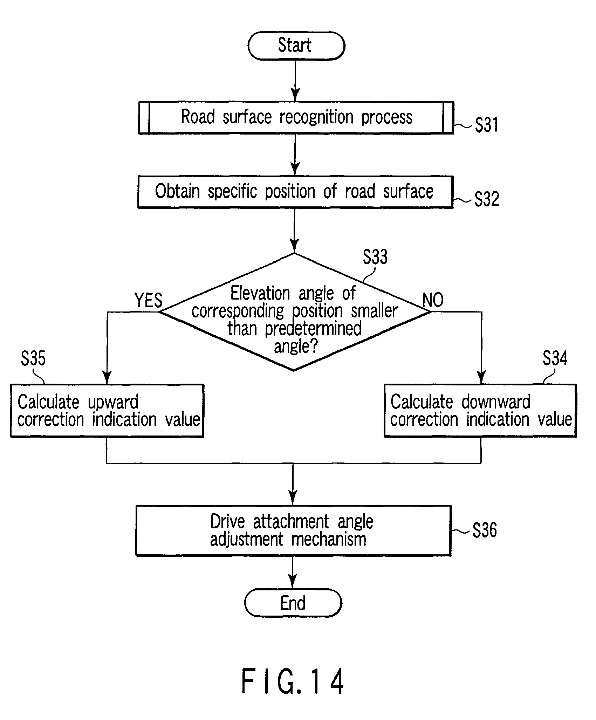

FIGS. 13A and 13B are diagrams showing the tilt of the road surface and the imaging direction of the stereo camera, and FIG. 14 is a flowchart showing a schematic procedure of the control operation in the stereo camera supporting apparatus 50.

As shown in FIGS. 13A and 13B, in a case where the road surface 98 in front of a traveling direction of the vehicle 80 tilts, the view field of the stereo camera deviates from an appropriate state. For example, as shown in FIG. 13A, when the road surface 98 ascends, the region of the road surface increases in the imaging frame, but information on a subject 100 (see FIG. 7) decreases. As shown in FIG. 13B, when the road surface 98 descends, information on the subject 100 (see FIG. 7) increases in the imaging frame, but the region of the road surface decreases.

Then, the tilt of the road surface 98 in front of the traveling direction is detected, and the imaging direction of the stereo camera 16 is adjusted in such a manner that the view field of the camera has a desired state based on the tilt.

Next, a control operation of the above-described stereo camera supporting apparatus 50 will be described with reference to the flowchart of FIG. 14.

First, in step S31, a result of a road surface recognition executed by a process apparatus 18 is received by a support control device 58. That is, in the process apparatus 18, a road region and a non-road region of the traveling direction are discriminated based on a three-dimensional distance image (including information indicating corresponding pixel and information indicating a distance), and the road surface is recognized and extracted.

Next, in step S32, a specific position is obtained based on extracted road surface information in the support control device 58. As this specific position, so-called vanishing point can be obtained in which, for example, extension lines of opposite sides of a road cross each other on an image frame. Moreover, it is checked in step S33 whether or not the obtained specific position is below a predetermined position in an image frame. That is, it is checked whether or not an elevation angle anticipating the specific position is smaller than a predetermined elevation angle.

Here, when the elevation angle anticipating the specific position is larger than the predetermined elevation angle (No in step S33), the stereo camera 16 turns upwards with respect to a desired posture/position. Then, the process shifts to step S34, the tilt of the camera is taken from the detection output of the camera posture sensor 52 by the support control device 58, and a control signal for adjusting the imaging direction of the stereo camera 16 is output to the stereo camera joining device 56 in such a manner that the angle anticipating the specific position indicates a predetermined angle.

On the other hand, in a case where the elevation angle anticipating the specific position is smaller than a predetermined elevation angle (Yes in step S35), the stereo camera 16 turns downwards with respect to the desired posture/position. Then, the process shifts to step S35, the tilt of the camera is taken from the detection value of the camera posture sensor 52 by the support control device 58, and a control signal for moving the imaging direction of the stereo camera 16 is output to the stereo camera joining device 56 in such a manner that the angle anticipating the specific position indicates the predetermined angle.

Thereafter, in step S36, in the stereo camera joining device 56 which has received the control signal, a mechanism for adjusting the posture of the camera disposed inside is driven, and the view field of the stereo camera 16 is adjusted into a desired position.

It is to be noted that a control operation for moving the camera may be a feedback control, a feedforward control, or a compromise system regardless of whether the operation depends on so-called modern control theory or classical control theory, and various known control methods such as PID control, H infinity control, adaptive model control, fuzzy control, and neural net can be applied.

For example, the support control device 58 produces a control signal of an operation amount corresponding to control deviation between a target value and a control amount of the camera posture sensor 52 in the road surface 98 in front of the traveling direction in a control loop. Furthermore, in brief, the support control device 58 produces a compensation operation signal for removing control deviation which cannot be compensated only by the feedback control in accordance with an existing value of acceleration/deceleration, operation angle of a steering wheel and the like depending on a vehicle movement model prepared beforehand, and adds compensation by the feedforward control. Accordingly, robust control can be realized without any offset.

That is, when control by compromise of the feedback control and feedforward control is applied, an ideal camera posture control having a high follow-up property can be realized even in a situation in which the vehicle posture fluctuates hard, and it is expected to be difficult to sufficiently reduce control deviations only by the feedback control.

Moreover, the control operation of the stereo camera supporting apparatus 50 according to the fourth embodiment may be performed in combination with the control operation of the stereo camera supporting apparatus 50 according to the first embodiment, or may be performed alone.

[Fifth Embodiment]

Next, a stereo camera supporting apparatus 50 of a fifth embodiment according to the present invention will be described.

The stereo camera supporting apparatus 50 of the fifth embodiment is incorporated in a stereo camera system shown in FIG. 1, and applied in the same manner as in the stereo camera supporting apparatus 50 of the above-described first embodiment. Moreover, a constitution of a stereo camera joining device 56 of the fifth embodiment is similar to that of the stereo camera joining device 56 of the first embodiment shown in FIG. 6. Therefore, the same portions as those of the first embodiment are denoted with the same reference numerals, and detailed description thereof is omitted.

Next, an operation of the stereo camera supporting apparatus 50 according to the fifth embodiment of the present invention will be described. In the present embodiment, the stereo camera supporting apparatus 50 detects the tilt of a road surface 98, and corrects a change of the view field as shown in FIGS. 13A and 13B of the fourth embodiment. Additionally, the fifth embodiment is different from the fourth embodiment in that the tilt of the road surface is grasped based on the information from the GPS 42.

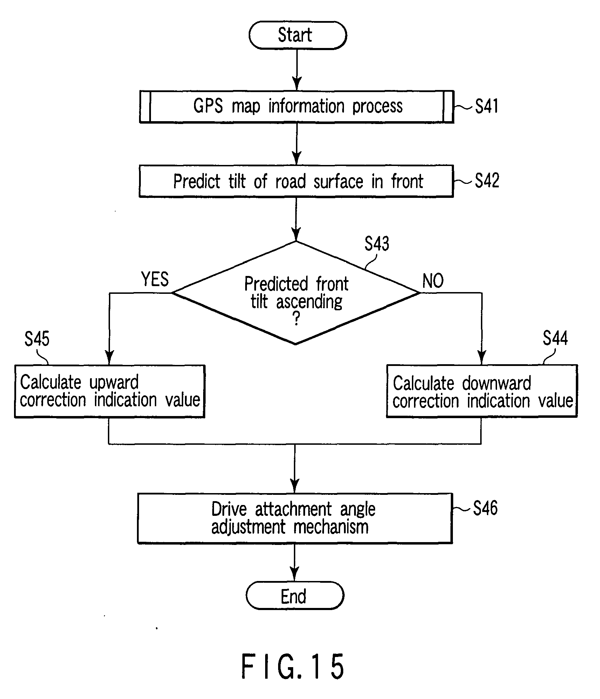

FIG. 15 is a flowchart showing a schematic procedure of the control operation in the stereo camera supporting apparatus 50.

First, in step S41, in a support control device 58, existing position of a vehicle 80 and topographical information of a road in front of a travel direction are received based on map information from a GPS 42 (see FIG. 1). Moreover, in step S42, the tilt of the road surface 98 in front is predicted by the support control device 58, and it is checked in the following step S43 whether or not the predicted tilt ascends.

Here, when the tilt of the road in front descends (No in step S43), an imaging direction of a stereo camera 16 is judged to be upward with respect to an appropriate posture/position. Therefore, the process shifts to step S44, and data of tilt of the camera is taken from a detection output of a camera posture sensor 52 by the support control device 58. Moreover, a downward correction amount corresponding to the angle is calculated, and a control signal for moving the camera is output to the stereo camera joining device 56 from the support control device 58.

On the other hand, when the tilt of the road in front ascends (Yes in step S43), the imaging direction of the stereo camera 16 is judged to be downward with respect to the appropriate posture/position. Therefore, the process shifts to step S45, and the data of the tilt of the camera is taken from the detection output of the camera posture sensor 52 by the support control device 58. Moreover, an upward correction amount corresponding to the angle is calculated, and a control signal for adjusting the posture of the camera is output to the stereo camera joining device 56 from the support control device 58.

Thereafter, the process shifts to step S46, a mechanism for adjusting the posture of the camera disposed inside is driven in the stereo camera joining device 56 which has received the control signal, and the view field of the stereo camera 16 is adjusted to meet a desired position.

It is to be noted that a control operation for moving the camera may be a feedback control, a feedforward control, or a compromise system regardless of whether the operation depends on so-called modern control theory or classical control theory, and various known control methods such as PIC control, H infinity control, adaptive model control, fuzzy control, and neural net can be applied.

For example, the support control device 58 produces a control signal of an operation amount in accordance with control deviation between a target value and a control amount of the camera posture sensor 52 in the road surface 98 in front of the traveling direction in a control loop. Furthermore, in brief, the support control device 58 produces a compensation operation signal for removing control deviation which cannot be compensated only by the feedback control in accordance with an existing value of acceleration/deceleration, operation angle of a steering wheel and the like depending on a vehicle movement model prepared beforehand, and adds compensation by the feedforward control. Accordingly, robust control can be realized without any offset.

That is, when control by compromise of the feedback control and feedforward control is applied, an ideal camera posture control having a high follow-up property can be realized even in a situation in which the vehicle posture fluctuates hard, and it is expected to be difficult to sufficiently reduce control deviations only by the feedback control.

Moreover, the control operation of the stereo camera supporting apparatus 50 according to the fifth embodiment may be performed in combination with the control operation of the stereo camera supporting apparatus 50 according to the first embodiment, or may be performed alone.

When the stereo camera supporting apparatus 50 of each embodiment according to the present invention is used as described above, the shape of the vehicle driving ahead on the road, the distance from the vehicle driving ahead, the driving state of the vehicle on which the stereo camera is mounted, the backward/forward/right/left tilt of the vehicle body depending on a road state, and an appropriate imaging view field which is not influenced by the tilt or the like of the road surface in front can be secured.

[Embodiment of Video Display Method]

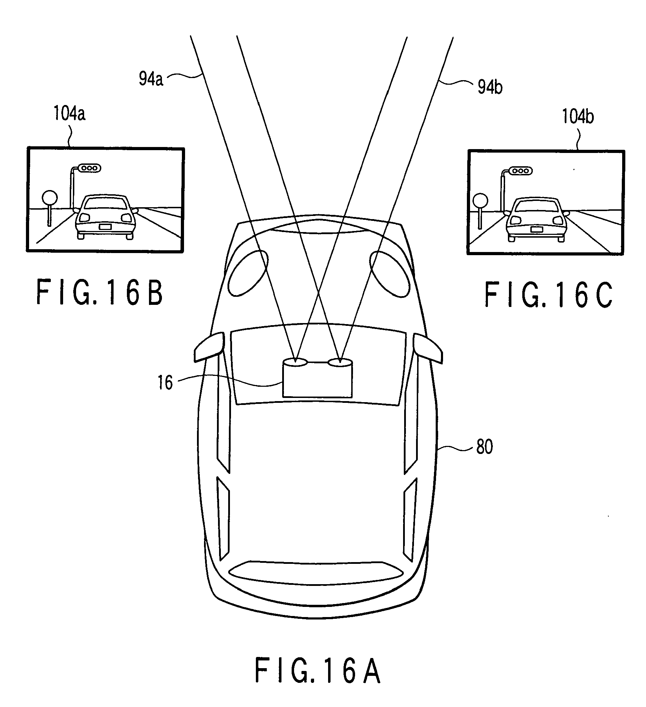

Next, a method of displaying video to a driver will be described using a stereo camera system to which a stereo camera supporting apparatus 50 according to the present invention is applied with reference to FIGS. 16A to 16C. In general, the stereo camera 16 can comprise a plurality of visual points, and a constitution comprising two visual points is shown for the sake of simplicity in FIGS. 16A to 16C.

An image 104a (see FIG. 16B) by a view field 94a on the left side, and an image 104b by a view field 94b on the right side are obtained from a stereo camera 16 shown in FIG. 16A. Then, a control apparatus 20 switches the images 104a, 104b, and displays the image in a display apparatus 32 in accordance with a driver's driving position.

For example, when a driver's seat is on the left side, the image 104a on the left side is displayed in the display apparatus 32. When the driver's seat is on the right side, the image 104b on the right side is displayed in the display apparatus 32. Accordingly, the deviation between the driver's visual point and the visual point of the video can be set to be as small as possible, and an effect that the vehicle is seen more naturally is produced.

It is to be noted that in the above-described embodiment, the stereo camera supporting apparatus is mounted on a car, but the present invention is not limited to this mode. That is, the present invention can be applied to general stereo cameras which are eyes of distance measurement in a mobile member. Therefore, the present invention can also be mounted on mobile members such as a car, boat, airplane, and robot.

Moreover, the above-described embodiments of the system of the present invention are not necessarily limited to a case where the system is mounted as the distance measurement eyes on mobile members such as a vehicle and a robot. For example, the present invention is remarkably effect even when carried out in such a mode that the camera itself is fixed in a position on a horizontal plane like a monitoring camera and provided in such a manner as to measure the distance from an object relatively moving toward or far away from itself.

Next, a sixth embodiment of the present invention will be described.

It is to be noted that units constituting the present invention can also be considered as apparatuses for realizing the functions of the respective units. Therefore, these units will be hereinafter referred to as the apparatuses in the following description of embodiments. It is to be noted that a calibration data holding unit is realized as a calibration data storage apparatus which stores and holds data relating to calibration.

[Sixth Embodiment]

Calibration displacement detection inside a photographing apparatus will be described as a sixth embodiment of the present invention.

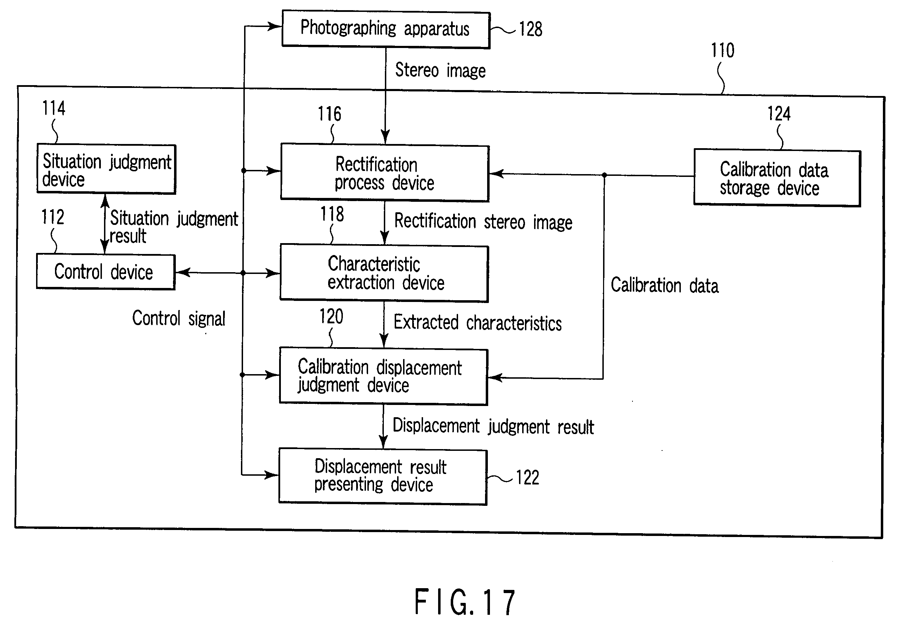

FIG. 17 is a block diagram showing a basic constitution example of a calibration displacement detection apparatus in the sixth embodiment of the present invention.

In FIG. 17, this calibration displacement detection apparatus 110 comprises: a control device 112 which sends a control signal to a device of each unit or which controls whole sequence; a situation judgment device 114; a rectification process device 116; a characteristic extraction device 118; a calibration displacement judgment device 120; a displacement result presenting device 122; and a calibration data storage device 124.

The calibration displacement detection apparatus 110 is an apparatus for detecting whether or not there is calibration displacement with respect to a photographing apparatus 128 which photographs a stereo image and in which the calibration displacement is to be detected.

The situation judgment device 114 judges whether or not to perform calibration displacement detection. The calibration data storage device 124 stores calibration data of the photographing apparatus 128 beforehand.

Moreover, the rectification process device 116 rectifies the stereo image photographed by the photographing apparatus 128. The characteristic extraction device 118 extracts a corresponding characteristic in the stereo image from the stereo image rectified by the rectification process device 116.

The calibration displacement judgment device 120 judges whether or not there is calibration displacement utilizing the characteristic extracted by the characteristic extraction device 118, and calibration data stored in the calibration data storage device 124. The displacement result presenting device 122 reports a displacement result by displacement judgment result.

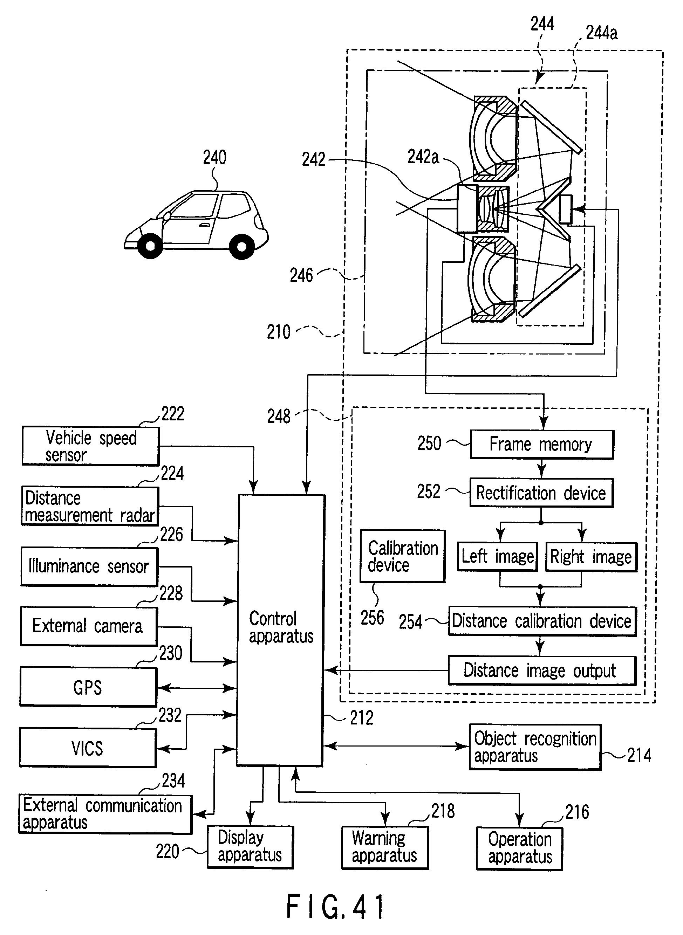

The displacement result presenting device 122 forms a displacement result presenting unit which is a constituting element of the present invention. This displacement result presenting unit may adopt a mode to hold a display device 220 described later based on FIG. 41 as a display unit which is its constituting element. In more general, the displacement result presenting unit is not limited to the mode to hold even the display unit as its portion, and there can be a case where a mode to produce an output signal or data for presenting the displacement result based on a signal indicating a judgment result by the calibration displacement judgment device 120 is adopted.

It is to be noted that each device in the calibration displacement detection apparatus 110 may comprise hardware or circuit, or may be processed by software of a computer or a data processing device.

Here, prior to concrete description of the sixth embodiment, outlines of technique contents concerning stereo photographing which is important in the present invention will be described.

[Mathematical Preparation and Camera Model]

First, when an image is photographed by an imaging apparatus utilizing a stereo image, the image is formed as an image of an imaging element (e.g., semiconductor elements such as CCD and CMOS) in the imaging apparatus, and also constitutes an image signal. This image signal is an analog or digital signal, and constitutes digital image data in the calibration displacement detection apparatus. The digital data can be represented as a two-dimensional array, but may be, needless to say, a two-dimensional array of a honeycomb structure such as hexagonal close packing.

When the photographing apparatus transmits an analog image, a frame memory is prepared inside or outside the calibration displacement detection apparatus, and the image is converted into a digital image. With respect to an image defined in the calibration displacement detection apparatus, it is assumed that a pixel can be defined in a square or rectangular lattice shape.

Now it is assumed that coordinate of the image is represented by a two-dimensional coordinate such as $(u, v)$.

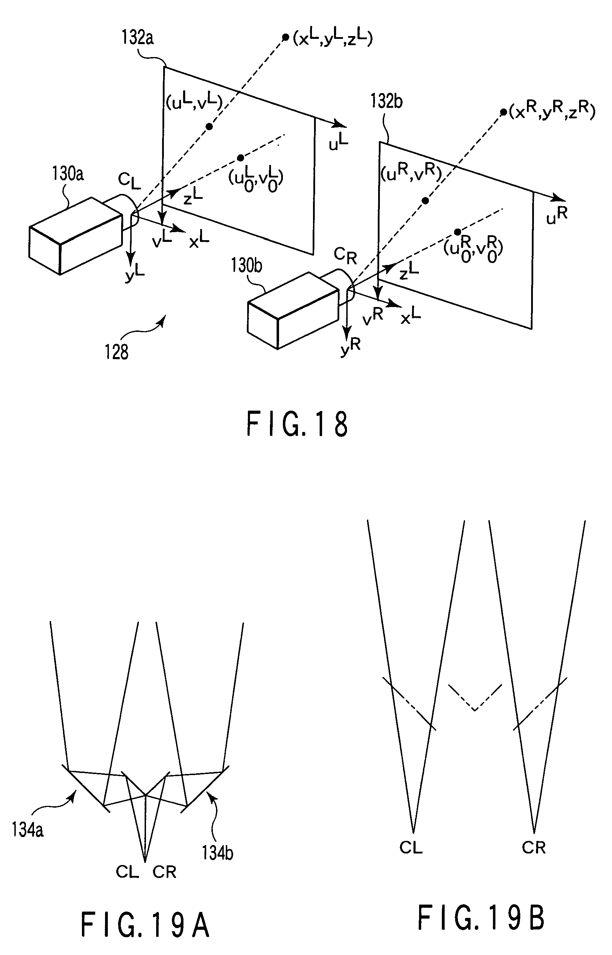

First, as shown in FIG. 18, it is assumed that the photographing apparatus 128 for photographing the stereo image comprises two left/right cameras 130a, 130b. Moreover, a coordinate system which defines the camera 130a for photographing a left image is assumed as a left camera coordinate system L, and a coordinate system for photographing a right image is a right camera coordinate system R. Moreover, it is assumed that an image coordinate in the left camera is represented by $(u^L, v^L)$, and an image coordinate value in the right camera is represented by $(u^R, v^R)$ as the stereo image. It is to be noted that reference numerals 132a, 132b denote a left camera image plane, and a right camera image plane.

Moreover, it is possible to define a reference coordinate system defined by the whole photographing apparatus 128. It is assumed that this reference coordinate system is, for example, W. Needless to say, it is apparent that one camera coordinate system L or R may be adopted as a reference coordinate system.

As a photographing apparatus, an apparatus has heretofore been considered which produces a stereo image by stereo photographing by two cameras, but additionally there is a method of producing the stereo image. For example, in the method, a stereo adaptor is attached before one camera, and right/left images are simultaneously photographed in imaging elements such as one CCD and CMOS (e.g., see Jpn. Pat. Appln. KOKAI Publication No. 8-171151 by the present applicant).

In this stereo adaptor, as shown in FIG. 19A, an image photographed by the stereo adaptor having a left mirror group 134a and a right mirror group 134b can be developed in a usual stereo camera by two imaging apparatuses as if two frame memories existed as shown as right/left virtual camera positions in FIG. 19B. As a modification of the stereo adaptor, as described in the Jpn. Pat. Appln. KOKAI Publication No. 8-171151, an optical deformation element may be disposed in such a manner that right/left stereo images are vertically divided on a CCD plane.

In the stereo photographing in the present invention, a stereo image may be photographed by two or more cameras in this manner. Alternatively, a stereo image may be photographed utilizing the stereo adaptor.

In the present invention, as an optical system of the apparatus for photographing the stereo image, an apparatus may be constituted in such a manner as to be possible even in a case where there is lens distortion in an optical lens system. Additionally, first to simplify description, mathematical modeling concerning the imaging in a case where there is not any lens distortion in the optical system is performed. Subsequently, handling in a case where more generalized lens distortion is included is performed.

Therefore, it is first considered that optical characteristics of the imaging apparatus and the frame memory are modeled by a pinhole camera.

That is, it is assumed that a coordinate system of a pinhole camera model related to a left image is a left camera coordinate system L, and a coordinate system of a pinhole camera model related to a right image is a right camera coordinate system R. Assuming that a point in the left camera coordinate system L is $(x^L, y^L, z^L)$, an image correspondence point is $(u^L, v^L)$, a point in the right camera coordinate system R is $(x^R, y^R, z^R)$, and an image correspondence point is $(u^R, v^R)$, the model is obtained as in the following equation while considering camera positions $C_L$, $C_R$ shown in FIG. 18:

$$
\begin{cases} u^L = \alpha_u^L \dfrac{x^L}{z^L} + u_0^L \\[2mm] v^L = \alpha_v^L \dfrac{y^L}{z^L} + v_0^L \end{cases},
\qquad
\begin{cases} u^R = \alpha_u^R \dfrac{x^R}{z^R} + u_0^R \\[2mm] v^R = \alpha_v^R \dfrac{y^R}{z^R} + v_0^R \end{cases}
\qquad \cdots \ (1),
$$

where $\left(\alpha_u^L, \alpha_v^L\right)$ denotes image expansion ratios of vertical and transverse directions of the left camera system, $\left(\mu_0^L, v_0^L\right)$ denotes an image center, $\left(\alpha_u^R, \alpha_v^R\right)$ denotes image expansion ratios of vertical and transverse directions of the right camera system, and $\left(\mu_0^R, v_0^R\right)$ denotes an image center. Considering that they are represented by a matrix, the following can be represented using $w^L, w^R$ as intermediate parameters:

$$
w^L \begin{bmatrix} u^L \\ u^L \\ 1 \end{bmatrix} = \begin{bmatrix} \alpha_u^L & 0 & u_0^L \\ 0 & \alpha_v^L & v_0^L \\ 0 & 0 & 1 \end{bmatrix} \begin{bmatrix} x^L \\ y^L \\ z^L \end{bmatrix},
$$

$$
w^R \begin{bmatrix} u^R \\ u^R \\ 1 \end{bmatrix} = \begin{bmatrix} \alpha_u^R & 0 & u_0^R \\ 0 & \alpha_v^R & v_0^R \\ 0 & 0 & 1 \end{bmatrix} \begin{bmatrix} x^R \\ y^R \\ z^R \end{bmatrix}
\qquad \cdots \ (2)
$$

Here, in the present mathematical model, parameters concerning a camera focal distance are modeled with image expansion ratios of the transverse and vertical directions of the camera, and, needless to say, these parameters can be described only by the parameters concerning the focal distance of the camera.

Assuming that the position of a point P $(x, y, z)$ defined by a reference coordinate system W in the left image is $(u^L, v^L)$, and the position in the right image is $(u^R, v^R)$, a position $C_L$ (origin of the left camera coordinate system) in the reference coordinate system of the left camera 130a corresponding to the imaging apparatus and frame memory assumed by the left image, and a position $C_R$ (origin of the right camera coordinate system) in the reference coordinate system of the right camera 130b corresponding to the imaging apparatus and frame memory assumed by the right image can be considered. At this time, a conversion equation projected to the left $(u^L, v^L)$ from the point P $(x, y, z)$ of the reference coordinate system W, and a conversion equation projected to the right $(u^R, v^R)$ from the same point can be represented as follows:

$$
\begin{cases} u^L = \alpha_u^L \dfrac{r_{11}^L x + r_{12}^L y + r_{13}^L z + t_x^L}{r_{31}^L x + r_{32}^L y + r_{33}^L z + t_z^L} + u_0^L \\[4mm] v^L = \alpha_v^L \dfrac{r_{21}^L x + r_{22}^L y + r_{23}^L z + t_y^L}{r_{31}^L x + r_{32}^L y + r_{33}^L z + t_z^L} + v_0^L \end{cases}
\qquad \cdots \ (3);
$$

and

$$\begin{cases} u^R = \alpha_u^R \dfrac{r_{11}^R x + r_{12}^R y + r_{13}^R z + t_x^R}{r_{31}^R x + r_{32}^R y + r_{33}^R z + t_z^R} + u_0^R \\[4mm] v^R = \alpha_v^R \dfrac{r_{21}^R x + r_{22}^R y + r_{23}^R z + t_y^R}{r_{31}^R x + r_{32}^R y + r_{33}^R z + t_z^R} + v_0^R \end{cases} \qquad \cdots \ (4),$$

where $R^L = (r_{ij}^L), T^L = [t_x^L, t_y^L, t_z^L]^t$ are $3\times3$ rotary matrix and translational vector constituting coordinate conversion from the reference coordinate system to the left camera coordinate system L. Moreover, $R^R = (r_{ij}^R), T^R = [t_x^R, t_y^R, t_z^R]^t$ are 3x3 rotary matrix and translational vector constituting coordinate conversion from the reference coordinate system to the right camera coordinate system R.

On the other hand, for example, when the left camera coordinate system is adopted as the reference coordinate system, the following equation is obtained:

$$R^L = \begin{bmatrix} 1 & 0 & 0 \\ 0 & 1 & 0 \\ 0 & 0 & 1 \end{bmatrix}, \quad T^L = \begin{bmatrix} 0 \\ 0 \\ 0 \end{bmatrix} \qquad \cdots \ (5)$$

[Distortion Correction]

On the other hand, when lens distortion of an optical lens or the like of an imaging apparatus cannot be ignored with respect to precision required in three-dimensional measurement, an optical system including the lens distortion needs to be considered. In this case, the above equations (3), (4) can be represented by the following equations (7), (8). In this equation, radial distortion and tangential distortion are represented in order to represent the lens distortion, and, needless to say, another distortion representation may be used.

Here, assuming the following parameter concerning the lens distortions of the right/left cameras,

$$\begin{cases} \mathbf{d}^L = \left( k_1^L, g_1^L, g_2^L, g_3^L, g_4^L \right) \\ \mathbf{d}^R = \left( k_1^R, g_1^R, g_2^R, g_3^R, g_4^R \right) \end{cases} \qquad \cdots \ (6),$$

the following results:

$$\text{(Left)} \begin{cases} \begin{cases} \widetilde{u}_p^L = \dfrac{x^L}{z^L} = \dfrac{r_{11}^L x + r_{12}^L y + r_{13}^L z + t_x^L}{r_{31}^L x + r_{32}^L y + r_{33}^L z + t_z^L} \\[4mm] \widetilde{v}_p^L = \dfrac{y^L}{z^L} = \dfrac{r_{21}^L x + r_{22}^L y + r_{23}^L z + t_y^L}{r_{31}^L x + r_{32}^L y + r_{33}^L z + t_z^L} \end{cases} \\[10mm] \begin{cases} \widetilde{u}_d^L = \widetilde{u}_p^L + \left(g_1^L + g_3^L\right)\left(\widetilde{u}_p^L\right)^2 + g_4^L \widetilde{u}_p^L \widetilde{v}_p^L + g_1^L \left(\widetilde{v}_p^L\right)^2 + k_1^L \widetilde{u}_p^L \left(\left(\widetilde{u}_p^L\right)^2 + \left(\widetilde{v}_p^L\right)^2\right) \\[2mm] \widetilde{v}_d^L = \widetilde{v}_p^L + g_2^L \left(\widetilde{u}_p^L\right)^2 + g_3^L \widetilde{u}_p^L \widetilde{v}_p^L + \left(g_2^L + g_4^L\right)\left(\widetilde{v}_p^L\right)^2 + k_1^L \widetilde{v}_p^L \left(\left(\widetilde{u}_p^L\right)^2 + \left(\widetilde{v}_p^L\right)^2\right) \end{cases} \\[6mm] \begin{cases} u^L = \alpha_u^L \widetilde{u}_d^L + u_0^L \\[2mm] v^L = \alpha_v^L \widetilde{v}_d^L + v_0^L \end{cases} \end{cases}$$

$$\cdots \quad (7);$$

and

$$\text{(Right)} \begin{cases} \begin{cases} \widetilde{u}_p^R = \dfrac{x^R}{z^R} = \dfrac{r_{11}^R x + r_{12}^R y + r_{13}^R z + t_x^R}{r_{31}^R x + r_{32}^R y + r_{33}^R z + t_z^R} \\[4mm] \widetilde{v}_p^R = \dfrac{y^R}{z^R} = \dfrac{r_{21}^R x + r_{22}^R y + r_{23}^R z + t_y^R}{r_{31}^R x + r_{32}^R y + r_{33}^R z + t_z^R} \end{cases} \\[10mm] \begin{cases} \widetilde{u}_d^R = \widetilde{u}_p^R + \left(g_1^R + g_3^R\right)\left(\widetilde{u}_p^R\right)^2 + g_4^R \widetilde{u}_p^R v_p^R + g_1^R \left(\widetilde{v}_p^R\right)^2 + k_1^R \widetilde{u}_p^R \left(\left(\widetilde{u}_p^R\right)^2 + \left(\widetilde{v}_p^R\right)^2\right) \\[2mm] \widetilde{v}_d^R = \widetilde{v}_p^R + g_2^R \left(\widetilde{u}_p^R\right)^2 + g_3^R \widetilde{u}_p^R \widetilde{v}_p^R + \left(g_2^R + g_4^R\right)\left(\widetilde{v}_p^R\right)^2 + k_1^R \widetilde{v}_p^R \left(\left(\widetilde{u}_p^R\right)^2 + \left(\widetilde{v}_p^R\right)^2\right) \end{cases} \\[6mm] \begin{cases} u^R = \alpha_u^R \widetilde{u}_d^R + u_0^R \\[2mm] v^R = \alpha_v^R \widetilde{v}_d^R + v_0^R \end{cases} \end{cases}$$

$$\cdots \quad (8),$$

where $\left(\widetilde{u}_{p}^L, \widetilde{v}_P^L\right)$, $\left(\widetilde{u}_d^L, \widetilde{v}_d^L\right)$ and $\left(\widetilde{u}_{P}^R, \widetilde{v}_P^R\right)$, $\left(\widetilde{u}_d^R, \widetilde{v}_d^R\right)$ denote intermediate parameters for representing the lens distortion, and coordinates normalized in the right and left camera image coordinates, p denotes a suffix indicating the normalized image coordinate after removing the distortion, and d denotes a suffix indicating a normalized image coordinate before removing the distortion (including a distortion element).

Moreover, a step of removing the distortion or correcting the distortion means the following production of an image.

(Distortion Correction of Left Image)

1) The normalized image coordinate is calculated with respect to each image array $\left(u_p^L, v_p^L\right)$ after the distortion correction.

$$\widetilde{u}_p^L = \frac{u_p^L - u_0^L}{\alpha_u^L}, \quad \widetilde{v}_p^L = \frac{v_p^L - v_0^L}{\alpha_v^L} \qquad \cdots \quad (9)$$

2)

$$\begin{cases} \widetilde{u}_d^L = \widetilde{u}_p^L + \left(g_1^L + g_3^L\right)\left(\widetilde{u}_p^L\right)^2 + g_4^L\,\widetilde{u}_p^L\,\widetilde{v}_p^L + g_1^L\left(\widetilde{v}_p^L\right)^2 + k_1^L\,\widetilde{u}_p^L\left(\left(\widetilde{u}_p^L\right)^2 + \left(\widetilde{v}_p^L\right)^2\right) \\ \widetilde{v}_d^L = \widetilde{v}_p^L + g_2^L\left(\widetilde{u}_p^L\right)^2 + g_3^L\,\widetilde{u}_p^L\,\widetilde{v}_p^L + \left(g_2^L + g_4^L\right)\left(\widetilde{v}_p^L\right)^2 + k_1^L\,\widetilde{v}_p^L\left(\left(\widetilde{u}_p^L\right)^2 + \left(\widetilde{v}_p^L\right)^2\right) \end{cases}$$

$$\ldots \ (10)$$

By the above equation, the normalized image coordinate before the distortion correction is calculated.

3) By $u^L = a_u^L \widetilde{u}_d^L + u_0^L$, $\quad v^L = a_v^L \widetilde{v}_d^L + v_0^L$, an image coordinate corresponding to a left original image before the distortion correction is calculated, and a pixel value with respect to $(u_p^L, v_p^L)$ is calculated utilizing a pixel value of a pixel in the vicinity or the like.

(Distortion Correction of Right Image)

1) The normalized image coordinate is calculated with respect to each image array $(u_p^R, v_p^R)$ after the distortion correction.

$$\widetilde{u}_p^R = \frac{u_p^R - u_0^R}{\alpha_u^R}, \quad \widetilde{v}_p^R = \frac{v_p^R - v_0^R}{\alpha_v^R} \qquad \ldots \ (11)$$

2)

$$\begin{cases} \widetilde{u}_d^R = \widetilde{u}_p^R + \left(g_1^R + g_3^R\right)\left(\widetilde{u}_p^R\right)^2 + g_4^R\,\widetilde{u}_p^R\,v_p^R + g_1^R\left(\widetilde{v}_p^R\right)^2 + k_1^R\,\widetilde{u}_p^R\left(\left(\widetilde{u}_p^R\right)^2 + \left(\widetilde{v}_p^R\right)^2\right) \\ \widetilde{v}_d^R = \widetilde{v}_p^R + g_2^R\left(\widetilde{u}_p^R\right)^2 + g_3^R\,\widetilde{u}_p^R\,\widetilde{v}_p^R + \left(g_2^R + g_4^R\right)\left(\widetilde{v}_p^R\right)^2 + k_1^R\,\widetilde{v}_p^R\left(\left(\widetilde{u}_p^R\right)^2 + \left(\widetilde{v}_p^R\right)^2\right) \end{cases}$$

$$\ldots \ (12)$$

By the above equation, the normalized image coordinate before the distortion correction is calculated.

3) By $u^R = a_u^R \widetilde{u}_d^R + u_0^R$, $\quad v^R = a_v^R \widetilde{v}_d^R + v_0^R$, an image coordinate corresponding to a left original image before the distortion correction is calculated, and a pixel value with respect to $(u_p^R, v_p^R)$ is calculated utilizing a pixel value of a pixel in the vicinity or the like.

[Definition of Inner Calibration Parameter and Calibration Displacement Problem]

Assuming that a coordinate system of a left camera of a photographing apparatus comprising two cameras to photograph a stereo image is L, and a coordinate system of a right camera is R, a positional relation of the cameras is considered. A relation of coordinate values between the coordinate systems L and R can be represented as follows utilizing coordinate conversion (rotary matrix and translational vector).

$$\begin{bmatrix} x^L \\ y^L \\ z^L \end{bmatrix} = {}_L R_R \begin{bmatrix} x^R \\ y^R \\ z^R \end{bmatrix} + {}_L T_R \qquad \cdots \ (13),$$

where the following can be represented:

$${}_L R_R = Rot(\phi_z) Rot(\phi_y) Rot(\phi_x)$$

$$= \begin{bmatrix} \cos\phi_z & -\sin\phi_z & 0 \\ \sin\phi_z & \cos\phi_z & 0 \\ 0 & 0 & 1 \end{bmatrix} \begin{bmatrix} \cos\phi_y & 0 & \sin\phi_y \\ 0 & 1 & 0 \\ -\sin\phi_y & 0 & \cos\phi_y \end{bmatrix} \begin{bmatrix} 1 & 0 & 0 \\ 0 & \cos\phi_x & -\sin\phi_x \\ 0 & \sin\phi_x & \cos\phi_x \end{bmatrix}$$

$$\cdots \ (14);$$

and

$${}_L T_R = \begin{bmatrix} t_x, t_y, t_z \end{bmatrix} \qquad \cdots \ (15),$$

and six parameters $e=(\phi_x,\phi_y,\phi_z,t_x,t_y,t_z)$ can be represented as outer parameters.

Moreover, as described above, inner parameters individually representing right/left cameras, respectively, are represented as follows:

$$\begin{cases} \mathbf{c}^L = \left( \alpha_u^L, \alpha_v^L, u_0^L, v_0^L, \mathbf{d}^L \right) \\ \mathbf{c}^R = \left( \alpha_u^R, \alpha_v^R, u_0^R, v_0^R, \mathbf{d}^R \right) \end{cases} \qquad \cdots \ (16).$$

In general, as to camera parameters in the photographing apparatus comprising two cameras, the following can be utilized as an inner calibration parameter of the photographing apparatus:

$$\mathbf{p} = \left( \mathbf{c}^L, \mathbf{c}^R, \mathbf{e} \right) \qquad \cdots \ (17).$$

In the present invention, an inner calibration parameter p or the like of the photographing apparatus is stored as a calibration parameter in a calibration data storage device. It is assumed that at least a camera calibration parameter p is included as calibration data.

Additionally, in a case where the lens distortion of the photographing apparatus can be ignored, a portion ($\mathbf{d}^L, \mathbf{d}^R$) of a distortion parameter may be ignored or zeroed.

Moreover, the inner calibration of the photographing apparatus can be defined as a problem to estimate $\mathbf{p}=(\mathbf{c}^L, \mathbf{c}^R, \mathbf{e})$ which is a set of inner and outer parameters of the above-described photographing apparatus.

Furthermore, detection of the calibration displacement indicates that it is detected whether or not a value of the calibration parameter set in this manner changes.

[Definition of Outer Calibration Parameter and Calibration Displacement Problem]

As described above, calibration between a photographing apparatus and an external apparatus needs to be considered.

In this case, for example, the left camera coordinate system L is taken as a reference coordinate system of the photographing apparatus, and to define a position/posture relation between the left camera coordinate system and the external apparatus corresponds to calibration. For example, assuming that the coordinate system of the external apparatus is O, a coordinate conversion parameter from an external apparatus coordinate system O to the left camera coordinate system L is set as in equation (18), and the position/posture relation can be described by six parameters represented by equation (19):

$$_{L}R_{O} = \begin{bmatrix} r'_{11} & r'_{12} & r'_{13} \\ r'_{21} & r'_{22} & r'_{23} \\ r'_{31} & r'_{32} & r'_{33} \end{bmatrix}, \quad _{L}T_{O} = \begin{bmatrix} t'_{x} \\ t'_{y} \\ t'_{z} \end{bmatrix} \qquad \ldots (18),$$

then, by six parameters:

$$\mathbf{e}' = \left( \phi'_{x}, \phi'_{y}, \phi'_{z}, t'_{x}, t'_{y}, t'_{z} \right) \qquad \ldots (19),$$

the position/posture relation can be described. Here, $\phi'_{x}, \phi'_{y}, \phi'$ are three rotation component parameters concerning $_{L}R_{0}$.

[Epipolar Line Restriction in Stereo Image]

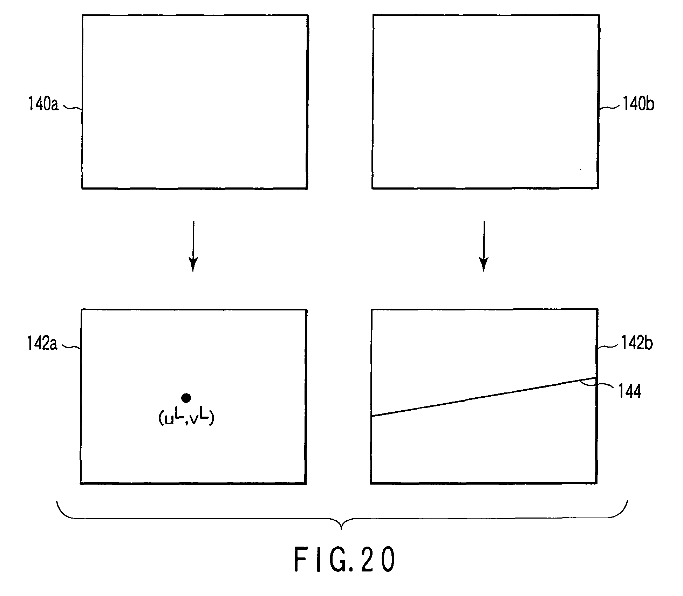

When image measurement is performed using a stereo image, as described later, it is important to search for a correspondence point in right/left images. A concept of so-called epipolar line restriction is important concerning the searching of the correspondence point. This will be described with reference to FIG. 20.

That is, when an exact calibration parameter p=(c$^L$,c$^R$,e) is given concerning left and right images 142a, 142b subjected to distortion correction with respect to left and right original images 140a, 140b, a characteristic point (u$^R$, v$^R$) in the right image corresponding to a characteristic point (u$^L$, v$^L$) in the left image has to be present on a certain straight line shown by 144, and this is a restriction condition. This straight line is referred to as an epipolar line.

It is important here that distortion correction or removal has to be performed beforehand, when the distortion is remarkable in the image. The epipolar line restriction is similarly established even in a normalized image subjected to the distortion correction. Therefore, an epipolar line considered in the present invention will be defined hereinafter in an image plane first subjected to the distortion correction and normalization.

It is assumed that a position of a characteristic point subjected to the distortion correction in a normalized image appearing in the middle of equation (7) with respect to the characteristic point (u$^L$,v$^L$) obtained in the left original image is $(\tilde{u}^{L}, \tilde{v}^{L})$. Assuming that a three-dimensional point (x, y, z) defined in the left camera coordinate system is projected in (u$^L$,v$^L$) in the left camera image, and converted into the above-described $(\tilde{u}^{L}, \tilde{v}^{L})$, the following is established:

$$\tilde{u}^{L} = \frac{x}{z}, \quad \tilde{v}^{L} = \frac{y}{z} \qquad \ldots (20).$$

On the other hand, assuming that (x, y, z) is projected in (u$^R$,v$^R$) in the right camera image, and an image coordinate subjected to distortion correction in a normalized camera image is $(\tilde{u}^{R}, \tilde{v}^{R})$, the following is established:

$$\tilde{u}^{R} = \frac{r_{11}x + r_{12}y + r_{13}z + t_{x}}{r_{31}x + r_{32}y + r_{33}z + t_{z}}, \quad \tilde{v}^{R} = \frac{r_{21}x + r_{22}y + r_{23}z + t_{y}}{r_{31}x + r_{32}y + r_{33}z + t_{z}} \qquad \ldots (21),$$

where rij and tx, ty, tz are elements of a rotary matrix and a translational vector indicating coordinate conversion from a right camera coordinate system R to a left camera coordinate system L, and are represented by the following:

$$_L R_R = \left( r_{ij} \right)_{3 \times 3}, \quad _L T_R = \left[ t_x, t_y, t_z \right]^t \qquad \ldots \ (22).$$

When equation (20) is substituted into equation (21), and z is deleted, the following equation is established:

$$\tilde{u}^R \left\{ \left( r_{31} \tilde{u}^L + r_{32} \tilde{v}^L + r_{33} \right) t_y - \left( r_{21} \tilde{u}^L + r_{22} \tilde{v}^L + r_{23} \right) t_z \right\}$$
$$+ \tilde{v}^R \left\{ \left( r_{11} \tilde{u}^L + r_{12} \tilde{v}^L + r_{13} \right) t_z - \left( r_{31} \tilde{u}^L + r_{32} \tilde{v}^L + r_{33} \right) t_x \right\} \qquad \ldots \ (23),$$
$$+ \left( r_{21} \tilde{u}^L + r_{22} \tilde{v}^L + r_{23} \right) t_x - \left( r_{11} \tilde{u}^L + r_{12} \tilde{v}^L + r_{13} \right) t_y = 0$$

where assuming the following:

$$\begin{cases} \tilde{a} = \left( r_{31} \tilde{u}^L + r_{32} \tilde{v}^L + r_{33} \right) t_y - \left( r_{21} \tilde{u}^L + r_{22} \tilde{v}^L + r_{23} \right) t_z \\ \tilde{b} = \left( r_{11} \tilde{u}^L + r_{12} \tilde{v}^L + r_{13} \right) t_z - \left( r_{31} \tilde{u}^L + r_{32} \tilde{v}^L + r_{33} \right) t_x \qquad \ldots \ (24), \\ \tilde{c} = \left( r_{21} \tilde{u}^L + r_{22} \tilde{v}^L + r_{23} \right) t_x - \left( r_{11} \tilde{u}^L + r_{12} \tilde{v}^L + r_{13} \right) t_y \end{cases}$$

the following straight line is obtained:

$$\tilde{a} \, \tilde{u}^R + \tilde{b} \, \tilde{v}^R + \tilde{c} = 0 \qquad \ldots \ (25).$$

This indicates an epipolar line in the normalized image plane.

The normalized image plane has heretofore been considered, and an equation of an epipolar line can be similarly derived even in the image plane subjected to the distortion correction.

Concretely, the followings are solved with respect to coordinate values $\left( u_p^L, v_p^L \right)$, $\left( u_p^R, v_p^R \right)$ of correspondence points of left and right images subjected to the distortion correction:

$$u_p^L = \alpha_u^L \frac{x}{z} + u_0^L, \quad v_p^L = \alpha_v^L \frac{y}{z} + v_0^L \qquad \ldots \ (26);$$

and

$$u_p^L = \alpha_u^R \frac{r_{11}x + r_{12}y + r_{13}z + t_x}{r_{31}x + r_{32}y + r_{33}z + t_z} + u_0^L, \quad v_p^R = \alpha_v^R \frac{r_{21}x + r_{22}y + r_{23}z + t_y}{r_{31}x + r_{32}y + r_{33}z + t_z} + v_0^R$$
$$\ldots \ (27).$$

Then, the following equation of the epipolar line can be derived in the same manner as in the above equation (9):

$$a\, u_p^R + b\, v_p^R + c = 0 \qquad\qquad \dots (28).$$

[Rectification Process]

The epipolar line restriction has been considered as the characteristic points in the right/left images, and as another method, a rectification process is often used in stereo image processing.

Rectification in the present invention will be described hereinafter.

When the rectification process is performed, it is possible to derive restriction that the corresponding characteristic points in the right/left images are on the same horizontal straight line. In other words, in the image after the rectification process, as a characteristic point group on the same straight line of the left image, the same straight line on the right image can be defined as the epipolar line.

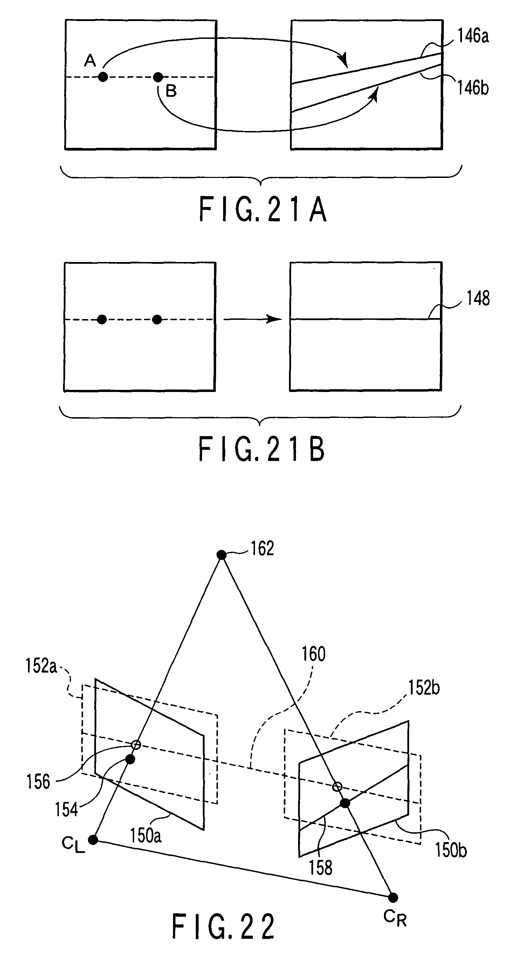

FIGS. 21A and 21B show this condition. FIG. 21A shows an image before the rectification, and FIG. 21B shows an image after the rectification. In the drawings, 146a, 146b denote straight lines on which correspondence points of points A and B exist, and 148 denotes an epipolar line on which the correspondence points are disposed on the same straight line.

To realize the rectification, as shown in FIG. 22, right/left camera original images are converted in such a manner as to be horizontal with each other. In this case, an axis only of a camera coordinate system is changed without moving origins $C_L$, $C_R$ of a left camera coordinate system L and a right camera coordinate system R, and accordingly new right/left image planes are produced.

It is to be noted that in FIG. 22, 150a denotes a left image plane before the rectification, 150b denotes a right image plane before the rectification, 152a denotes a left image plane after the rectification, 152b denotes a right image plane before the rectification, 154 denotes an image coordinate ($u^R$, $v^R$) before the rectification, 156 denotes an image coordinate ($u^R$, $v^R$) after the rectification, 158 denotes an epipolar line before the rectification, 160 denotes the epipolar line after the rectification, and 162 denotes a three-dimensional point.

The coordinate systems after the rectification of the left camera coordinate system L and right camera coordinate system R are LRect, RRect. As described above, origins of L and LRect, R and RRect agree with each other.

Coordinate conversion between two coordinate systems will be described hereinafter, and a reference coordinate system is assumed as the left camera coordinate system L. (This also applies to another reference coordinate system.)

At this time the left camera coordinate system LRect and right camera coordinate system RRect after the rectification are defined as follows.

First, a vector from the origin of the left camera coordinate system L to that of the right camera coordinate system R will be considered. Needless to say, this is measured on the basis of the reference coordinate system.

At this time, the vector is assumed as follows.

$$T = [tx,\ ty,\ tz] \qquad\qquad \dots (29).$$

A magnitude is $\|T\| = \sqrt{t_x^2 + t_y^2 + t_z^2}$ . At this time, the following three direction vectors $\{\mathbf{e}_1, \mathbf{e}_2, \mathbf{e}_3\}$ are defined:

$$\mathbf{e}_1 = \frac{T}{\|T\|}, \quad \mathbf{e}_2 = \frac{\lfloor -t_y, t_x, 0 \rfloor}{\sqrt{t_x^2 + t_y^2}}, \quad \mathbf{e}_3 = \mathbf{e}_1 \times \mathbf{e}_2 \qquad\qquad \dots (30)$$

At this time, $\mathbf{e}_1, \mathbf{e}_2, \mathbf{e}_3$ are taken as direction vectors of x, y, z axes of the left camera coordinate system LRect and right camera coordinate system RRect after left and right rectification processes. That is, the following results:

$$_L R_{L\,Rect} = {}_L R_{R\,Rect} = \left[\mathbf{e}_1, \mathbf{e}_2, \mathbf{e}_3\right] \qquad\qquad \dots (31).$$

Further from a way to take the respective origins, the following is established:

$$_L T_{L\,Rect} = 0, \quad _R T_{R\,Rect} = 0 \qquad\qquad \ldots \ (32).$$

When this is set, as shown in FIG. 21A, 21B, or 22, it is apparent that right/left correspondence points are disposed on one straight line (epipolar line) in a normalized image space.

Next, correspondence between a point $(\widetilde{u}^L, \widetilde{v}^L)$ in the normalized camera image of the camera, and a conversion point $(\widetilde{u}^{L\,Rect}, \widetilde{v}^{L\,Rect})$ in the normalized camera image after the rectification will be considered. Therefore, it is assumed that the same three-dimensional point is represented by $(x^L, y^L, z^L)$ in the left camera coordinate system L, and represented by $(x^{LRect}, y^{LRect}, z^{LRect})$ in the left camera coordinate system after the rectification. Moreover, considering the position $(\widetilde{u}^{L\,Rect}, \widetilde{v}^{L\,Rect})$ in the normalized image plane of $(x^L, y^L, z^L)$ and position $(\widetilde{u}^{L\,Rect}, \widetilde{v}^{L\,Rect})$ in the normalized image plane of $(x^{LRect}, y^{LRect}, z^{LRect})$, the following equation is established utilizing parameters $\widetilde{w}^L$, $\widetilde{w}^{L\,Rect}$ :

$$\widetilde{w}^L \begin{bmatrix} \widetilde{u}^L \\ \widetilde{v}^L \\ 1 \end{bmatrix} = \begin{bmatrix} x^L \\ y^L \\ z^L \end{bmatrix}, \qquad \widetilde{w}^{L\,Rect} \begin{bmatrix} \widetilde{u}^{L\,Rect} \\ \widetilde{v}^{L\,Rect} \\ 1 \end{bmatrix} = \begin{bmatrix} x^{L\,Rect} \\ y^{L\,Rect} \\ z^{l,Rect} \end{bmatrix} \qquad \ldots \ (33).$$

At this time, since the following is established:

$$\widetilde{w}^L \begin{bmatrix} \widetilde{u}^L \\ \widetilde{v}^L \\ 1 \end{bmatrix} = \begin{bmatrix} x^L \\ y^L \\ z^L \end{bmatrix} = {}_L R_{L\,Rect} \begin{bmatrix} x^{L\,Rect} \\ y^{L\,Rect} \\ z^{L\,Rect} \end{bmatrix} = {}_L R_{L\,Rect}\, \widetilde{w}^{L\,Rect} \begin{bmatrix} \widetilde{u}^{L\,Rect} \\ \widetilde{v}^{L\,Rect} \\ 1 \end{bmatrix} \qquad \ldots \ (34),$$

the following equation is established:

$$\widetilde{w}^L_* \begin{bmatrix} \widetilde{u}^L \\ \widetilde{v}^L \\ 1 \end{bmatrix} = {}_L R_{L\,Rect} \begin{bmatrix} \widetilde{u}^{L\,Rect} \\ \widetilde{v}^{L\,Rect} \\ 1 \end{bmatrix} \qquad \ldots \ (35).$$

Similarly, with respect to the right camera image, between a point $(\widetilde{u}^R, \widetilde{v}^R)$ in the normalized camera image, and a conversion point $(\widetilde{u}^{R\,Rect}, \widetilde{v}^{R\,Rect})$ in the normalized camera image after the rectification, the following equation is established:

$$\widetilde{w}^R_* \begin{bmatrix} \widetilde{u}^R \\ \widetilde{v}^R \\ 1 \end{bmatrix} = {}_R R_L \ {}_L R_{R\,Rect} \begin{bmatrix} \widetilde{u}^{R\,Rect} \\ \widetilde{v}^{R\,Rect} \\ 1 \end{bmatrix} = {}_R R_{R\,Rect} \begin{bmatrix} \widetilde{u}^{R\,Rect} \\ \widetilde{v}^{R\,Rect} \\ 1 \end{bmatrix} \qquad \ldots \ (36).$$

Therefore, assuming that an element of $_LR_{LRect}$ is ($r_{ij}$), in the left camera system, a normalized in-image position $(\widetilde{u}^L, \widetilde{v}^L)$ before the rectification corresponding to $(\widetilde{u}^{L\,Rect}, \widetilde{v}^{L\,Rect})$ in the normalized image plane after the rectification is as follows:

$$\begin{cases} \widetilde{u}^L = \dfrac{r_{11}\widetilde{u}^{L\,Rect} + r_{12}\widetilde{v}^{L\,Rect} + r_{13}}{r_{31}\widetilde{u}^{L\,Rect} + r_{32}\widetilde{v}^{L\,Rect} + r_{33}} \\[2em] \widetilde{v}^L = \dfrac{r_{21}\widetilde{u}^{L\,Rect} + r_{22}\widetilde{v}^{L\,Rect} + r_{23}}{r_{31}\widetilde{u}^{L\,Rect} + r_{32}\widetilde{v}^{L\,Rect} + r_{33}} \end{cases} \qquad \ldots \; (37).$$

This also applies to the right camera system.

A camera system which does not include distortion correction has been described, and the following method may be used in an actual case including the distortion correction.

It is to be noted that u and v-direction expansion ratios $a_u^{Rect}$, $a_v^{Rect}$ and image centers $u_0^{Rect}$, $v_0^{Rect}$ of the image after the rectification in the following step may be appropriately set based on a magnitude of the rectified image.

[Rectification Steps (RecL and RecR Steps) including Distortion Removal]

First, as step RecL1, parameters such as $a_u^{Rect}$, $a_v^{Rect}$, $u_0^{Rect}$, $v_0^{Rect}$ are determined.

As step RecL2, with respect to pixel points ( $u_{Rect}^L$, $v_{Rect}^L$ ) of the left image after the rectification, the following is calculated:

RecL2-1)

$$\widetilde{u}_{Rect}^L = \frac{u_{Rect}^L - u_0^L}{\alpha_u^L} \; \text{ and } \; \widetilde{v}_{Rect}^L = \frac{v_{Rect}^L - v_0^L}{\alpha_v^L} \qquad \ldots \; (38)$$

RecL2-2) The normalized pixel values $(\widetilde{u}^L, \widetilde{v}^L)$ are calculated by solving the following:

$$\widetilde{w}^L \begin{bmatrix} \widetilde{u}^L \\ \widetilde{v}^L \\ 1 \end{bmatrix} = {}_LR_{L\,Rect} \begin{bmatrix} \widetilde{u}_{Rect}^L \\ \widetilde{v}_{Rect}^L \\ 1 \end{bmatrix} \qquad \ldots \; (39)$$

RecL2-3) The normalized coordinate value to which the lens distortion is added is calculated:

$$\begin{cases} \widetilde{u}_d^L = f_1(\widetilde{u}^L, \widetilde{v}^L; k_1, g_1, g_2, g_3, g_4) \\ \widetilde{v}_d^L = f_2(\widetilde{u}^L, \widetilde{v}^L; k_1, g_1, g_2, g_3, g_4) \end{cases} \qquad \ldots \; (40),$$

where f$_1$,f$_2$ mean nonlinear functions shown in second term of the above equation (5).

RecL2-4) Coordinate values $u_d^L = a_u^L \widetilde{u}_d^L + u_0^L$, $v_d^L = a_v^L \widetilde{v}_d^L + v_0^L$ on the frame memory imaged by the stereo adaptor and imaging apparatus are calculated. (d means that a distortion element is included.)

RecL2-5) A pixel value of the left image after the rectification process is calculated utilizing a pixel in the vicinity of the pixel vector ( $u_d^L, v_d^L$ ) on the frame memory, and utilizing, for example, a linear interpolation process or the like.

The right image is similarly processed as step RecR1.

The method of the rectification process has been described above, but the rectification method is not limited to this. For example, a method described in Andrea Fusiello, et al., "A compact algorithm for rectification of stereo pairs", Machine Vision and Applications, 2000, 12: 16 to 22 may be used.

The terms required for describing the embodiment and the process method have been described above, and the calibration displacement detection apparatus shown in FIG. 17 will be described hereinafter concretely.

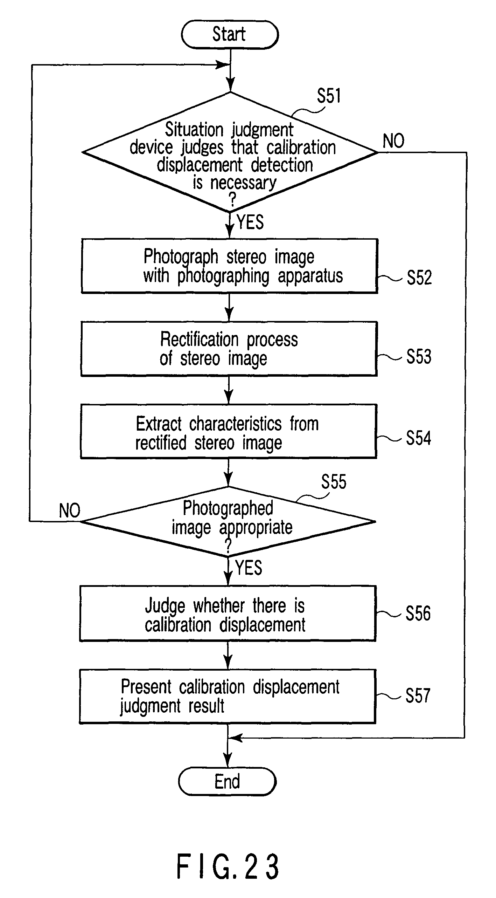

FIG. 23 is a flowchart showing a detailed operation of a calibration displacement detection apparatus in the sixth embodiment. It is to be noted that the present embodiment is operated by the control of the control device 112.

First, in step S51, it is judged by the situation judgment device 114 whether or not to detect the calibration displacement at the present time. The following method judged here is as follows.

This is judged from time, state and the like which are stored in the calibration data storage device 124 and at which the calibration parameter was set in the past. For example, when the calibration displacement is periodically performed, a difference between the past time and the present time is taken. When the difference is larger than a certain threshold value, it is judged whether or not to detect the calibration displacement.

In another attached photographing apparatus of an automobile or the like, the displacement may be judged from the value of an odometer attached to the car.

Moreover, it is also considered that it is judged whether or not the existing weather or time is suitable for detecting the calibration displacement. For example, in the photographing apparatus for monitoring the outside of the automobile, it is judged that calibration displacement detection is avoided in bad weathers such as night and rain.

It is judged whether or not the calibration displacement detection is necessary based on the above-described situation. As a result, when it is judged that the calibration detection is required, this is notified to the control device 112. When the control device 112 receives the notification, the process advances to step S52. On the other hand, when the calibration displacement detection is unnecessary, or impossible, the present routine ends.

In step S52, a stereo image is photographed by the photographing apparatus 128. As to the image photographed by the photographing apparatus 128, as described above, the image photographed by the photographing apparatus 128 may be an analog image or a digital image. As to the analog image, the image is converted into the digital image.

The images photographed by the photographing apparatus 128 are sent as right and left images to the calibration displacement detection apparatus 110.

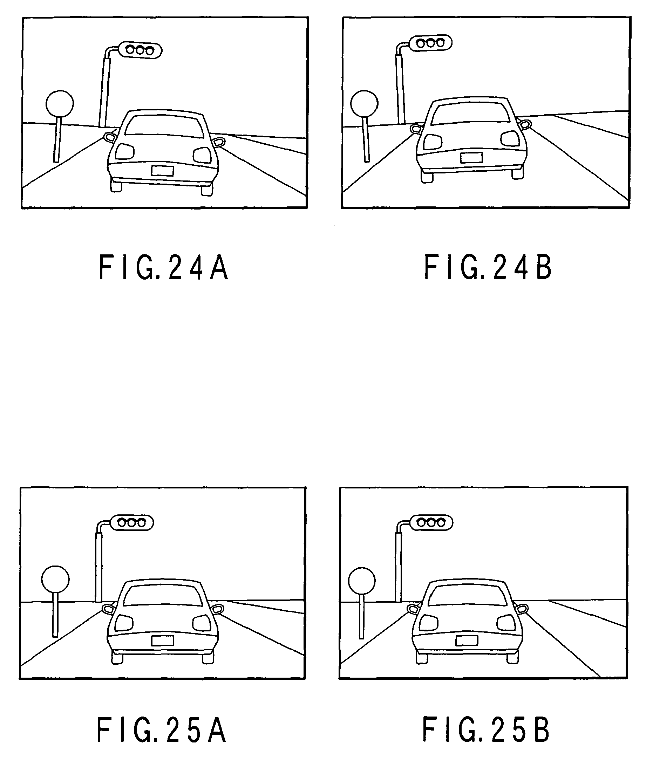

FIGS. 24A and 24B show right/left original image, FIG. 24A shows a left original image photographed by a left camera, and FIG. 24B shows a right original image photographed by a right camera.

Next, in step S53, previously stored calibration data is received from the calibration data storage device 124, and subjected to the rectification process in the rectification process device 110.

It is to be noted that as the calibration data, a set $\mathbf{p}=(\mathbf{c}^L,\mathbf{c}^R,\mathbf{e})$ of inner and outer parameters of right/left cameras of the photographing apparatus 128 are utilized as described above.

When the lens distortions of the right and left cameras constituting the photographing apparatus 128 are remarkable during a rectification process, a process is performed including algorithm of lens distortion correction following the above-described RecL and RecR steps. It is to be noted that when the lens distortion can be ignored, the process may be performed excluding the portion of the distortion correction in RecL and RecR.

The image rectified in this manner is sent to the next characteristic extraction device 5.

FIGS. 25A and 25B show rectified right/left images, FIG. 25A shows a left image, and FIG. 25B shows a right image.

In step S54, characteristics required for the calibration displacement detection are extracted with respect to the stereo image rectified in the step S53. This process is performed by the characteristic extraction device 118.

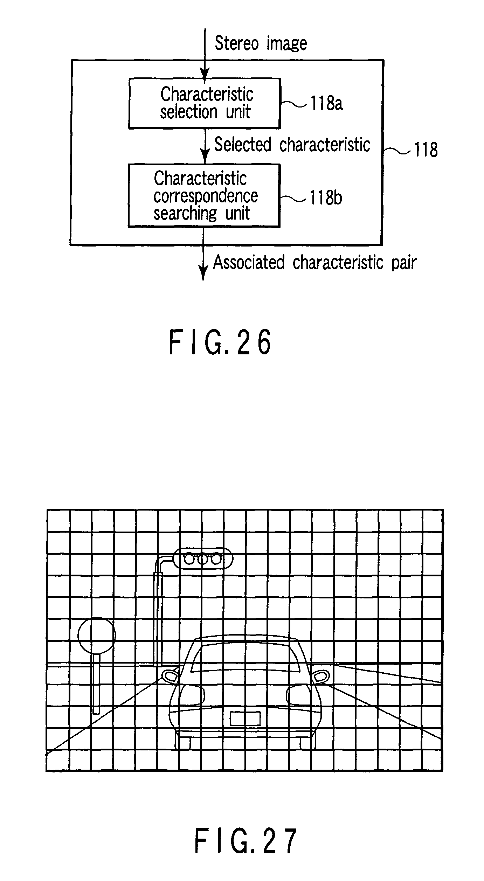

For example, as shown in FIG. 26, the characteristic extraction device 118 comprises a characteristic selection unit 118a and a characteristic correspondence searching unit 118b. In the characteristic selection unit 118a, image characteristics which seem to be effective in detecting the calibration displacement are extracted and selected from one of the rectified stereo images. Moreover, in the characteristic correspondence searching unit 118b, characteristics corresponding to the characteristics selected by the characteristic selection unit 118a are searched in the other image to thereby extract optimum characteristics, and a set of characteristic pairs is produced as data.

The data of the characteristic pairs obtained in this manner is registered as an image coordinate value after the right/left image rectification.

For example, when n characteristic point pairs are obtained in the form of the correspondence of the left and right images, the following can be represented:

$$A = \left\{ \left( \left( u_i^L, v_i^L \right), \left( u_i^R, v_i^R \right) \right): \quad i = 1, 2, \ldots n \right\} \qquad \ldots \ (41).$$

Here, details of the characteristic selection unit 118a and characteristic correspondence searching unit 118b of the characteristic extraction device 118 will be described.

First, in the characteristic selection unit 118a, characteristics which seem to be effective in the calibration displacement detection are selected in one image, for example, the left image. For example, as the characteristics, when the characteristic points are set as candidates, first the rectified left image is divided into small blocks comprising $M \times N$ squares as shown in FIG. 27. Moreover, a characteristic point such as at most one corner point is extracted from the image in each block.

As this method, for example, interest operator, corner point extraction method or the like may be utilized as described in R. Haralick and L. Shapiro, Computer and Robot Vision, Volume II, pp. 332 to 338, Addison-Wesley, 1993. Alternatively, an edge component is extracted in each block, and an edge point whose intensity is not less than a certain threshold value may be the characteristic point.

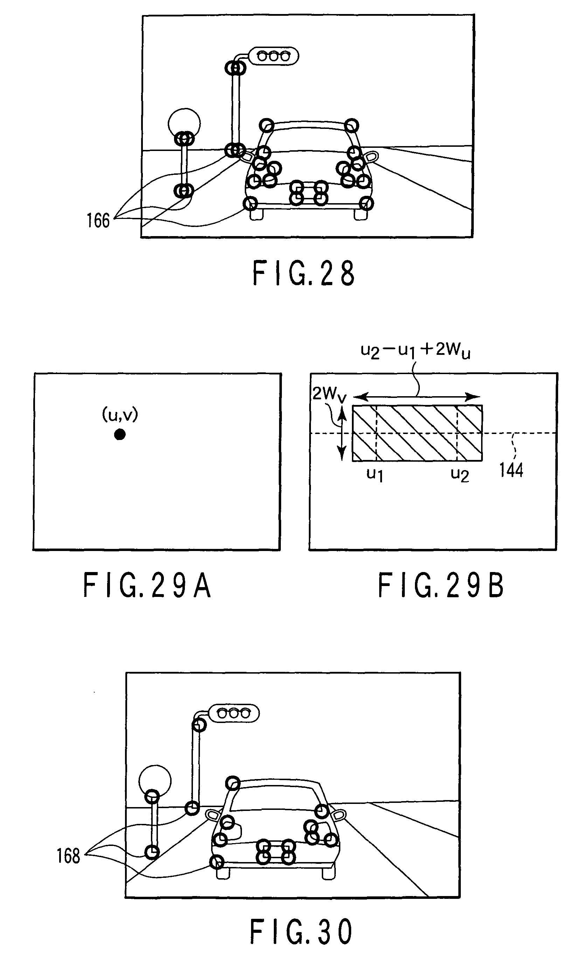

Here, it is important that there is a possibility that the characteristic point is not selected from the region in a case where a certain block comprises a completely uniform region only. An example of the characteristic point selected in this manner is shown in FIG. 28. In FIG. 28, points 166 shown by $\bigcirc$ (white circle) are characteristics selected in this manner.

Next, the characteristic correspondence searching unit 118b will be described. The characteristic correspondence searching unit 118b has a function of extracting, from the other image, the characteristic corresponding to the characteristic selected from one image by the characteristic selection unit 118a. The corresponding characteristic is searched by the following method in the characteristic correspondence searching unit 118b.

Here, setting of a searching range will be described.

In the image after the rectification process, prepared in the step S53, previously stored calibration data from the calibration data storage device 124 is used. Therefore, when there is calibration displacement, the correspondence point does not necessarily exist on the epipolar line. Therefore, as to an associated/searched range, a correspondence searching range adapted to maximum assumed calibration displacement is sometimes set. Actually, regions above/below the epipolar line in the right image corresponding to the characteristic (u, v) in the left image are prepared.

For example, assuming that the epipolar line is in the right image, and a range of $[u_1, u_2]$ on a horizontal line $v=v_e$ is searched, as shown in FIGS. 29A, 29B, the following rectangular region having width $2W_u \times (u_2 - u_1 + 2W_v)$ may be searched:

$$\left[ u_1 - W_u, u_2 + W_u \right] \times \left[ v_e - W_v, v_e + W_v \right] \qquad \ldots \ (42).$$

The searching range is set in this manner.

Next, correspondence searching by area base matching will be described.

Optimum correspondence is searched in the searching region determined by the setting of the searching range. As a method of searching optimum correspondence, for example, there is a method described in J. Weng, et al., Motion and Structure from Image Sequences, Springer-Verlag, pp. 7 to 64, 1993. Another method may be used in which an image region most similar to a pixel value of the region is searched in the correspondence searching region in the right image utilizing the region in the vicinity in the characteristic in the left image.

In this case, assuming that luminance values of a coordinate (u,v) of the rectified right/left images are $I_{Re ct}^L(u, v)$, $I_{Re ct}^R(u, v)$, respectively, similarity or non-similarity in position (u', v') in the right image can be represented, for example, as follows using the coordinate (u,v) of the left image as a reference:

$$\mathrm{SAD}: \sum_{(\alpha, \beta) \in W} \left| I^L(u + \alpha, v + \beta) - I^R(u' + \alpha, v' + \beta) \right| \qquad \ldots \ (43);$$

$$\text{SSD}: \sum_{(\alpha,\beta)\in W} \left( I^L(u+\alpha, v+\beta) - I^R(u'+\alpha, v'+\beta) \right)^2 \qquad \cdots \quad (44);$$

and

$$\text{NCC}: \frac{\dfrac{1}{N_w} \sum_{(\alpha,\beta)\in W} \left( I^L(u+\alpha, v+\beta) - \overline{I_W^L} \right)\left( I^L(u'+\alpha, v'+\beta) - \overline{I_W^R} \right)}{\overline{\overline{I_W^L}} \cdot \overline{\overline{I_W^R}}} \qquad \cdots \quad (45),$$

where $\overline{I_W^L}$ and $\overline{\overline{I_W^L}}$ indicate average value and standard deviation of luminance values in the vicinity of the characteristic (u, v) of the left image. Here, $\overline{I_W^R}$ and $\overline{\overline{I_W^R}}$ indicate average value and standard deviation of luminance values in the vicinity of the characteristic (u', v') of the right image. Moreover, $\alpha$ and $\beta$ are indexes indicating the vicinity of W.

Quality or reliability of the matching can be considered utilizing these similarity or non-similarity values. For example, in a case where SAD is considered, when the value of the SAD obtains a small value having a sharp peak in the vicinity of the correspondence point, it can be said that the reliability of the correspondence point is high. The reliability is considered for each correspondence point judged to be optimum. The correspondence point (u', v') is determined. Needless to say, when the reliability is considered, the following is possible:

Correspondence point to correspondence point (u', v'): reliability is not less than the threshold value; and
No correspondence point: reliability is less than the threshold value.

In a case where the reliability is considered in this manner, needless to say, the pixel having the non-correspondence point exists in the left image or right image.

The correspondence characteristics extracted in this manner, which are (u, v) and (u', v'), may be registered as $(u_i^L, v_i^L), (u_i^R, v_i^R)$ shown in equation (41).

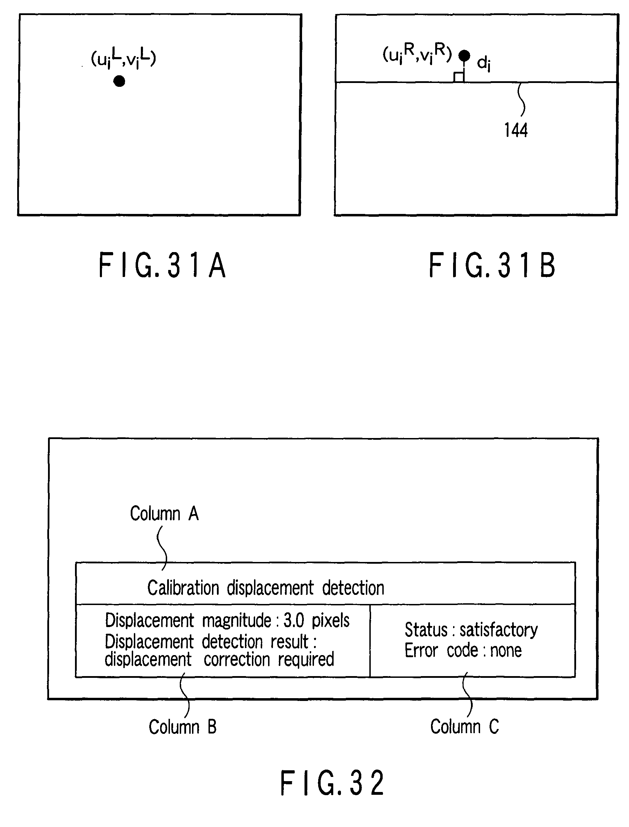

The characteristic in the associated right image is shown in FIG. 30 in this manner. In FIG. 30, points 168 shown by O (white circles) indicate characteristic points in the right image associated in this manner.

Returning to the flowchart of FIG. 23, in step S55, the number of the characteristic pairs and the reliability registered in the step S54 are further checked in the characteristic extraction device 118. Here, when the number of the registered characteristic pairs is smaller than a predetermined number, it is judged that the photographed stereo image is inappropriate. Therefore, the process shifts to the step S51, and a photographing process or the like is repeated again. The photographing process is repeated by a control instruction issued from the control device 112 based on output data of the characteristic extraction device 118. This respect also applies to the constitutions of FIGS. 17, 33, 36, and 40.

On the other hand, when it is judged that the characteristic pair having the reliability is obtained, a set of characteristic pairs is sent to the calibration displacement judgment device 120.

Next, in step S56, the process in the calibration displacement judgment device 120 is performed.

Here, it is judged whether or not the calibration displacement is remarkable utilizing the calibration data stored in the calibration data storage device 8, and the set $A = \{ ( (u_i^L, v_i^L), (u_i^R, v_i^R) ) : i = 1, 2, \ldots n \}$ of the characteristic pair registered in the step S54.

Here, a calibration displacement judgment method will be described.

As calibration displacement judgment method 1, an image coordinate value of the characteristic pair rectified based on the calibration data obtained in advance is utilized concerning n characteristics registered in the step S54. That is, when there is not any calibration data displacement, the registered characteristic pair completely satisfies epipolar line restriction. Conversely, when the calibration displacement occurs, it can be judged that the epipolar line restriction is not satisfied. Therefore, the calibration displacement is judged using a degree by which the epipolar line restriction is not satisfied as an evaluation value as the whole characteristic pair.

That is, assuming that a deviation amount from the epipolar line restriction is di with respect to each characteristic pair i, the following is calculated:

$$d_i = \left| v_i^L - v_i^R \right| \qquad \ldots \ (46)$$

Moreover, an average value of all characteristic pairs is calculated by the following:

$$\overline{d} = \frac{1}{n} \sum_{i=1}^{n} d_i = \frac{1}{n} \sum_{i=1}^{n} \left| v_i^L - v_i^R \right| \qquad \ldots \ (47)$$

Moreover, when an average value $\overline{d}$ is larger than a predetermined threshold value threshold, it is judged that the calibration displacement is remarkable.

FIGS. 31A and 31B show this condition. In FIGS. 31A and 31B, displacement di from the epipolar line corresponds to an in-image distance from the epipolar line of the characteristic point with respect to each characteristic.

Next, calibration displacement judgment method 2 will be described.

In the method described in the judgment method 1, a satisfactory result is obtained in a case where reliability of correspondence searching is high. However, in a case where there is a possibility that a result having low reliability is included in the correspondence searching result, it is considered that there is possibility that many noise components are included in a difference of the respective characteristics calculated by the following equation (48).

$$d_i = \left| v_i^L - v_i^R \right| \qquad \ldots \ (48)$$

In this case, the method in which the calibration displacement is judged is effective by an operation of taking an average after removing an abnormal value supposed as a noise component beforehand.

That is, assuming that a set of characteristic pairs after removing the abnormal value in this form is B, an average value of di in B may be calculated as follows:

$$\overline{d}_B = \frac{1}{m} \sum_{i \in B} d_i = \frac{1}{m} \sum_{i \in B} \left| v_i^L - v_i^R \right| \qquad \ldots \ (49),$$

where m denotes an element number of the set B. When the average value $\overline{d}_B$ is larger than the predetermined threshold value threshold, the calibration displacement is judged to be remarkable.

Returning to the flowchart of FIG. 23, in step S57, the result judged in the step S56 is presented by the displacement result presenting device 122.

FIG. 32 shows an example of the displacement result presenting device 122. In the present example, a display device 220 (described later with reference to FIG. 41) is utilized as the displacement result presenting device 122, and more concretely comprises a display, an LCD monitor or the like. Needless to say, this display may be a display for another purpose, and may display the displacement result utilizing a portion of a screen of the display, or may be of a type to switch a mode of screen display for the displacement result display.

The displacement result display device 122 in the embodiment of the present invention is constituted to be capable of displaying that a process concerning displacement detection is being operated by cooperation with the calibration displacement judgment unit. Moreover, the device is constituted to be capable of displaying information indicating a difference between a parameter obtained as the result of the process concerning the displacement detection and a parameter held beforehand in the calibration displacement holding unit. Furthermore, the device is constituted to be capable of displaying an error code indicating that normal displacement cannot be detected.

The display in FIG. 32 has three columns A, B, C, and results are displayed in the respective columns.

The portion of the column A flashes during the calibration displacement detection. When the result of displacement detection is obtained, a magnitude of displacement amount, judgment result and the like are displayed in the portion of the column B. A status relating to the displacement detection is displayed in the portion of the column C. As the status, an interim result indicated in the step S55, error code concerning the displacement detection and the like are displayed.

When this method is taken, various modes of the displacement detection or processing result can be effectively notified to a user, an operator who maintains the stereo photographing device and the like.

As another method of presenting the displacement detection result, presentation by sound, presentation by warning alarm or sound source and the like are considered.

[Seventh Embodiment]

Next, a method of detecting displacement without performing rectification will be described as a seventh embodiment of the present invention.

In the above-described sixth embodiment, after subjecting the input right and left images to a rectification process, calibration displacement concerning an inner calibration parameter of a photographing apparatus has been detected utilizing an epipolar line restriction and judging a degree by which characteristics satisfy the epipolar line restriction as a judgment material.

On the other hand, in the seventh embodiment, a method of detecting calibration displacement concerning the inner calibration parameter of the photographing apparatus without performing the rectification process will be described.

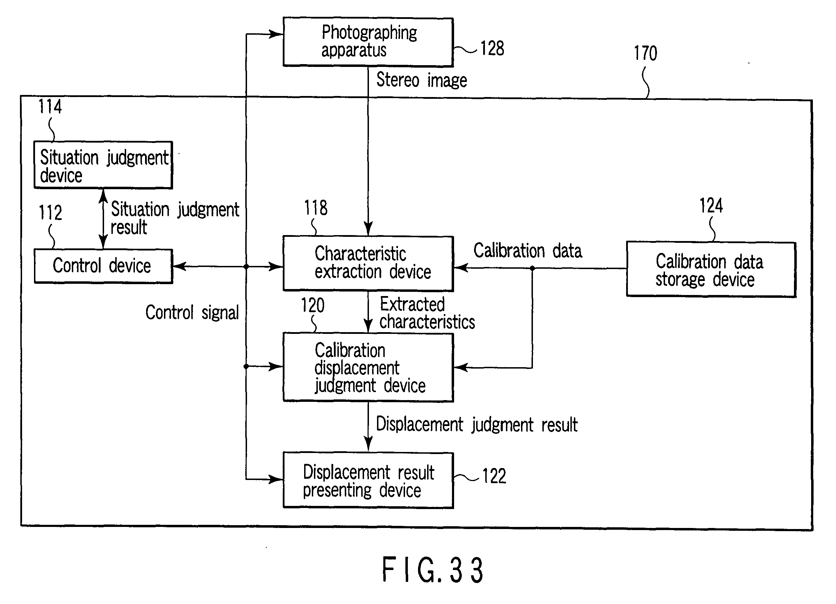

FIG. 33 is a block diagram showing a basic constitution example of the calibration displacement detection apparatus in the seventh embodiment of the present invention.

It is to be noted that in the following embodiment, the same parts as those of the sixth embodiment are denoted with the same reference numeral, and description thereof is omitted.

In FIG. 33, it is detected by a calibration displacement detection apparatus 170 whether or not there is calibration displacement in a photographing apparatus 128 in which a stereo image is photographed to detect the calibration displacement.

The calibration displacement detection apparatus 170 comprises: a control device 112; a situation judgment device 114; a characteristic extraction device 118; a calibration displacement judgment device 120; a displacement result presenting device 122 (already described with reference to FIG. 32); and a calibration data storage device 124. That is, in the constitution, a rectification process device 116 is excluded from the calibration displacement detection apparatus 110 constituted as shown in FIG. 17.

Here, each device in the calibration displacement apparatus 170 may comprise hardware or circuit, or may be processed by software of a computer or a data processing device.

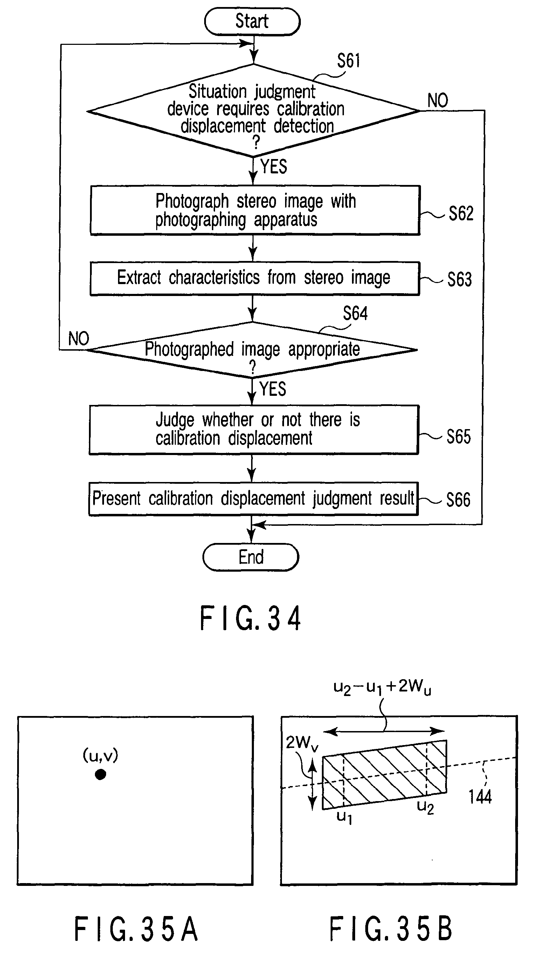

Next, an operation of the calibration displacement detection apparatus in the seventh embodiment will be described with reference to a flowchart of FIG. 34.

In step S61, it is judged whether or not calibration displacement is to be detected at the present time, and in subsequent step S62, a stereo image is photographed by the photographing apparatus 128. Since an operation of the steps S61 and S62 is similar to that of the steps S51 and S52 in the flowchart of FIG. 23, detailed description is omitted.

Next, in step S63, characteristics required for calibration displacement detection are extracted with respect to the stereo image photographed in the step S62. This process is performed by the characteristic extraction device 118.

As shown in FIG. 26, the characteristic extraction device 118 comprises a characteristic selection unit 118a and a characteristic correspondence searching unit 118b in the same manner as in the sixth embodiment. Data of a characteristic pair obtained in this manner is registered as an image coordinate value after right/left image rectification.

For example, in a case where n characteristic point pairs are obtained in the form of correspondence of the left and right images, the following can be represented:

$$A = \left\{ \left( \left( u_i^L, v_i^L \right), \left( u_i^R, v_i^R \right) \right): \quad i = 1, 2, \dots n \right\} \qquad \dots (50)$$

Here, details of the image selection unit 118a and the characteristic correspondence searching unit 118b of the characteristic extraction device 118 in the seventh embodiment will be described.

First, in the characteristic selection unit 118a, an operation to remove a distortion component is performed by a distortion correction process in a case where lens distortion is remarkable with respect to the image photographed by the stereo photographing apparatus 128.

Next, characteristics which seem to be effective in the calibration displacement detection are selected in one image, for example, in the left image. For example, as the characteristics; when the characteristic points are set as candidates, first the rectified left image is divided into small blocks comprising M×N squares as shown in FIG. 27 described above. A characteristic point such as at most one corner point is extracted from the image in each block. This method is similar to that of the sixth embodiment.

Next, the characteristic correspondence searching unit 118b will be described.

The characteristic correspondence searching unit 118b has a function of extracting, from the other image, the characteristic corresponding to the characteristic selected from one image by the characteristic selection unit 118a. The corresponding characteristic is searched by the following method in the characteristic correspondence searching unit 118b.

Setting of a searching range will be described.

In the photographed image, previously stored calibration data from the calibration data storage device 124 is used. Therefore, when there is calibration displacement, the correspondence point does not necessarily exist on the epipolar line. Therefore, in the same manner as in the above-described sixth embodiment, as to an associated/searched range, a correspondence searching range adapted to maximum assumed calibration displacement is sometimes set. Actually, regions above/below the epipolar line in the right image corresponding to the characteristic (u, v) in the left image are prepared.

FIGS. 35A and 35B show this setting. A width $2W_v$ is disposed in a vertical direction of an epipolar line 144, and searching is performed.

Next, correspondence searching by area base matching is performed.

Optimum correspondence is searched in the searching region determined by the setting of the searching range. As a method of searching the optimum correspondence, for example, there is a method described in J. Weng, et al., Motion and Structure from Image Sequences, Springer-Verlag, pp. 7 to 64, 1993 or the like. Alternatively, the method described above in the sixth embodiment may be used.

Returning to the flowchart of FIG. 34, in step S64, the number of characteristic pairs and reliability registered in the step S63 are further checked by the characteristic extraction device 118. When the number of registered characteristic pairs is smaller than a predetermined number, it is judged that the photographed stereo image is inappropriate. In this case, the process shifts to the step S61, and a photographing process and the like are repeated. On the other hand, when it is judged that the characteristic pair having the reliability is obtained, the set of the characteristic pairs is sent to the calibration displacement judgment device 120.

Next, in step S65, the calibration is judged by the calibration displacement judgment device 6.

Here, it is judged whether or not the calibration displacement is remarkable utilizing the calibration displacement stored in the calibration displacement storage device, and the set $A = \{ ((u_i^L, v_i^L), (u_i^R, v_i^R)) : i = 1, 2, \ldots n \}$ of the characteristic pairs registered in the step S63.

Here, the calibration displacement judgment method in the seventh embodiment will be described.

As judgment method 1, an image coordinate value of the characteristic pair rectified based on the calibration data obtained in advance is utilized with respect to n characteristics registered in the step S63. That is, if there is not any displacement of the calibration data, the registered characteristic pair completely satisfies the epipolar line restriction. Conversely, when the calibration displacement occurs, it can be judged that the epipolar line restriction is not satisfied. Therefore, the calibration displacement is judged using the degree by which the epipolar line restriction is not satisfied as the evaluation value as the whole characteristic pair.

That is, a displacement amount di from the epipolar line restriction is calculated with respect to each characteristic pair $(u_i^L, v_i^L), (u_i^R, v_i^R)$. Concretely, assuming that the epipolar line in the right image with respect to $(u_i^L, v_i^L)$ is au'+bv'+c=0, a degree by which the right correspondence point $(u_i^R, v_i^R)$ is displaced is calculated. That is, the following is calculated:

$$d_i = \frac{\left| a u_i^R + b v_i^R + c \right|}{\sqrt{a^2 + b^2}} \qquad \ldots (51).$$

Moreover, an average value with respect to all the characteristic pairs is calculated by the following:

$$\overline{d} = \frac{1}{n}\sum_{i=1}^{n} d_i \qquad \qquad \ldots \quad (52)$$

When the average value $\overline{d}$ is larger than the predetermined threshold value threshold, it is judged that the calibration displacement is remarkable.

Next, calibration displacement judgment method 2 will be described.

In the above-described judgment method 1, a satisfactory result is obtained in a case where the reliability of the correspondence searching is high. However, when there is a possibility that a result having low reliability is included in the correspondence searching result, it is considered that there is a possibility that many noise components are included among differences of characteristics calculated by the following equation (53).

$$d_i = \frac{\left| a\,u_i^R + b\,v_i^R + c \right|}{\sqrt{a^2 + b^2}} \qquad \qquad \ldots \quad (53)$$

In this case, a method of judging the calibration displacement by an operation of taking an average after removing abnormal values which seem to be noise components beforehand is effective.

That is, assuming that a set of characteristic pairs after removing the abnormal value in this form is B, an average value of di in B may be calculated by the following:

$$\overline{d}_B = \frac{1}{m}\sum_{i \in B} d_i \qquad \qquad \ldots \quad (54),$$

where m denotes the number of elements of a set B. When the average value $\overline{d}_B$ is larger than a predetermined threshold value threshold, it is judged that the calibration displacement is remarkable.

Returning to the flowchart of FIG. 34, in step S66, the result judged in the above-described step S65 is presented by the displacement result presenting device 122. Since a display method is similar to that of the sixth embodiment, the method is omitted here.

According to this seventh embodiment, time required for the rectification process can be reduced. The embodiment is effective especially in a case where the number of characteristic points may be small.

[Eighth Embodiment]

Next, calibration displacement between a photographing apparatus and an external apparatus will be described as an eighth embodiment of the present invention.

In this eighth embodiment, an apparatus will be described. The apparatus detects whether or not the calibration displacement occurs, when position/posture shift between the predetermined external apparatus and the photographing apparatus, for use in defining a reference position in calibration, is generated.

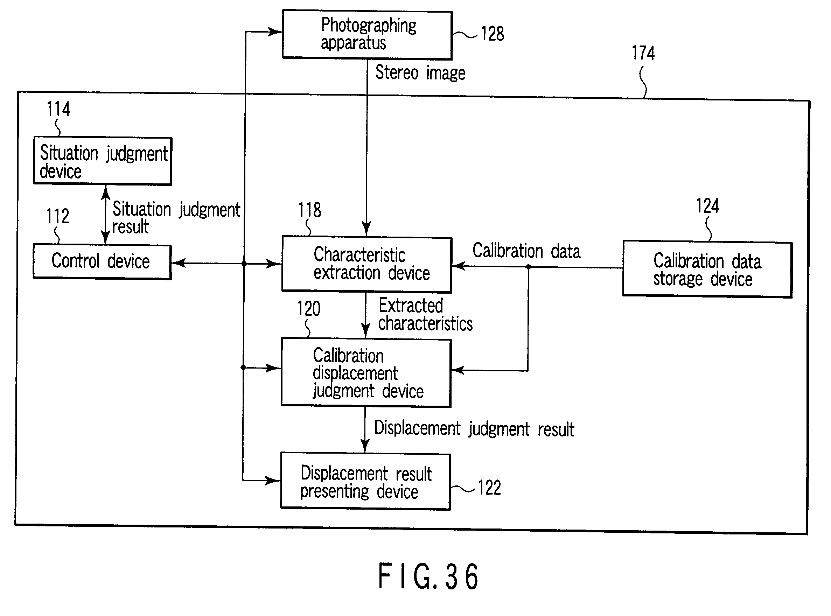

FIG. 36 is a block diagram showing a basic constitution example of a calibration displacement detection apparatus in the eighth embodiment of the present invention.

In FIG. 36, it is detected by a calibration displacement detection apparatus 174 whether or not there is calibration displacement in a photographing apparatus 128 in which a stereo image is photographed to detect the calibration displacement.

The calibration displacement detection apparatus 174 comprises: a control device 112; a situation judgment device 114; a characteristic extraction device 118; a calibration displacement judgment device 120; a displacement result presenting device 122; and a calibration data storage device 124 which holds calibration data. That is, a constitution of the calibration displacement detection apparatus 174 is similar to that of the calibration displacement detection apparatus 170 of the seventh embodiment shown in FIG. 33.

Here, each device in the calibration displacement apparatus 174 may comprise hardware or circuit, or may be processed by software of a computer or a data processing device.

It is to be noted that a known characteristic having a known place is required using a predetermined external apparatus for use in defining a reference position as a basis in order to detect the calibration displacement concerning a position/posture calibration parameter between the photographing apparatus 128 and the external apparatus.

Moreover, in addition to the inner parameter p and outer parameter e' shown in the above equations (17) and (19), information of three-dimensional position (xk, yk, zk) relative to the external apparatus having a plurality of known characteristics k is required, and the data is stored as a part of calibration data in the calibration data storage device 124.

For example, a case will be considered where a stereo photographing apparatus is attached to a vehicle which is an external apparatus, and it is detected whether or not calibration displacement between the vehicle and the stereo photographing apparatus occurs. It is assumed that the stereo photographing apparatus is set in order to photograph a front part of the vehicle, and a part of the vehicle is photographed in the photographing. In this case, the characteristic concerning a shape of a part of the photographed vehicle can be registered as a known characteristic.

For example, FIGS. 37A to 37E show known characteristics having such arrangement. In this case, the stereo photographing apparatus is disposed between a window which is the front part of the vehicle, and a rearview mirror. A hood 180 which is the vehicle front part is photographed in a lower part of an image photographed by the stereo photographing apparatus 128, and a corner, an edge point 182 or the like existing on the hood 180 may be registered. In this case, as to the characteristic in the vehicle, the three-dimensional coordinate can be easily obtained from a vehicle CAD model or the like.

As external apparatuses for obtaining the above-described characteristics, various apparatuses can be applied. In an example in which a specific shape portion of the vehicle comprising an imaging unit, in addition to the corner, edge point 182 and the like on the existing hood 180, for example, a marker whose relative position is known in a part of the windshield is disposed as a known characteristic beforehand, three-dimensional positions are measured beforehand, and all or a part of the positions can be photographed by the stereo photographing apparatus.

FIG. 37A shows an example of the photographed left image, and FIG. 37B shows a characteristic selected as the known characteristic by a black circle 184.

It is to be noted that here three points only are shown as the known characteristics, but the number is at least one or more, and may be plural. The characteristic may be a curved line instead of the characteristic point.

FIG. 37C shows an example of a state in which known markers 188 of black circles are disposed as known characteristics in a part of a windshield 186. In this drawing, a known marker group is disposed in such a manner that all or a part of the group can be photographed in right/left cameras. As shown in FIGS. 37D and 37E, these marker groups are disposed in such a manner as to be reflected in image peripheral portions of the right/left stereo images, and designed in such a manner that the groups are not reflected in a central portion indicating important video.

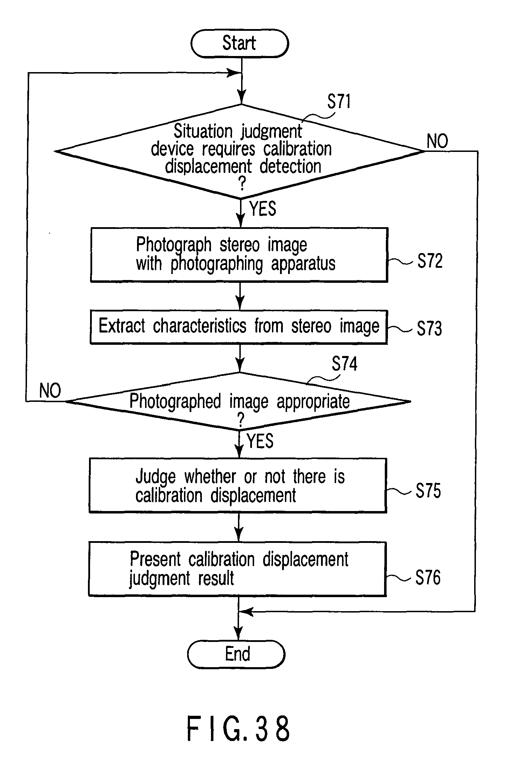

Next, an operation of the calibration displacement detection apparatus in the eighth embodiment will be described with reference to a flowchart of FIG. 38.

In step S71, it is judged whether or not calibration displacement is to be detected at the present time, and in subsequent step S72, a stereo image is photographed by the photographing apparatus 128. Since operations of the steps S71 and S72 are similar to those of the steps S51 and S52 in the flowchart of FIG. 23, and steps S61 and S62 in the flowchart of FIG. 34, detailed description is omitted.

Next, in step S73, known characteristics required for calibration displacement detection are extracted with respect to the stereo image photographed in the step S72. This process is performed by the characteristic extraction device 118. In the characteristic extraction device 118, known characteristics required in detecting the calibration displacement from the photographed stereo image, and corresponding characteristics are extracted from the stereo image.

For example, in a case where m known characteristic pairs are obtained in the form of correspondence of the left and right images, the following can be represented:

$$B = \left\{ \left( \left( u_k'^L, v_k'^L \right), \left( u_k'^R, v_k'^R \right) \right): \quad k = 1, 2, \ldots m \right\} \qquad \ldots \ (55)$$

It is to be noted that as a method of extracting the known characteristics, as described above in the sixth embodiment, a method may be adopted in which a searching range is enlarged around an epipolar line defined by each characteristic to thereby extract the corresponding known characteristics in a case where it is assumed that any calibration displacement does not occur with respect to the image.

Moreover, in a case where the number of the known characteristics is small, additionally characteristics (they will be referred to as natural characteristics) photographed in the image are photographed, and corresponding characteristics are extracted as described above in the sixth or seventh embodiment.

For example, a set of natural characteristics extracted in this manner is represented as a set of n characteristics by the following:

$$A = \left\{ \left( \left( u_i^L, v_i^L \right), \left( u_i^R, v_i^R \right) \right): \quad i = 1,2,...n \right\} \qquad \ldots \ (56).$$

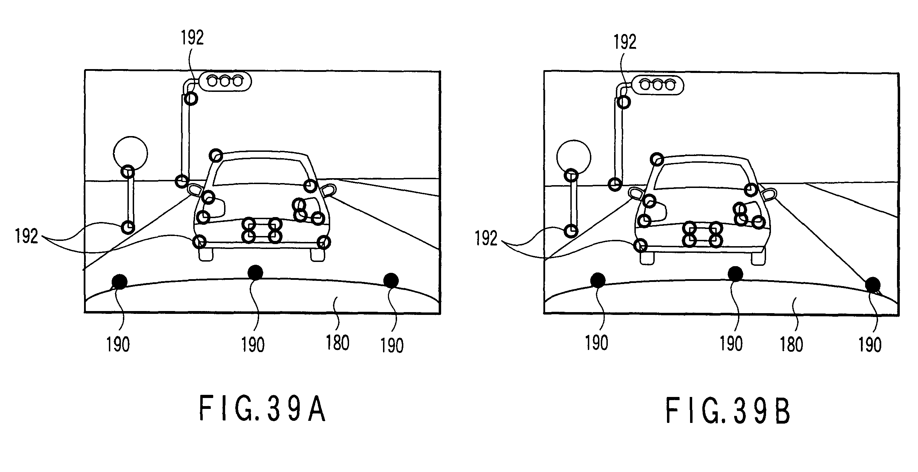

Sets A and B of the characteristics extracted in this manner are shown in FIGS. 39A, 39B. In FIGS. 39A, 39B, black circles 190 show known characteristics, and white circles 192 show natural characteristics.

Next, in step S74, in the characteristic extraction device 118, further the number of the characteristic pairs and the reliability registered in the step S73 are checked. When the number of the registered characteristic pairs is smaller than a predetermined number, it is judged that the photographed stereo image is inappropriate. In this case, the process shifts to the step S71 to repeat the photographing process and the like. On the other hand, when it is judged that the characteristic pairs having reliabilities are obtained, the set of characteristic pairs is sent to the calibration displacement judgment device 120.

In the subsequent step S75, it is estimated whether or not there is a calibration displacement utilizing the following sub-steps SS1 and SS2. That is, the following two types of judgments are performed by the sub-steps SS1 and SS2:

1) it is judged whether or not an inner calibration parameter of a stereo photographing apparatus causes calibration displacement; and
2) it is judged whether or not the calibration displacement accompanying the position/posture shift between the stereo photographing apparatus and the external apparatus occurs in a case where it is judged that 1) does not occur.

First, the sub-step SS1 will be described.

In the stereo image, first the known characteristic is utilized, and it is judged whether or not the known characteristic is in a position which is to be inside the image.

For this purpose, it is judged as follows whether or not three-dimensional position $(x_k^0, y_k^0, z_k^0)$ of known characteristic k recorded in the calibration data recording device 124 is in a position in the image photographed by a stereo camera.

Now assuming that the coordinate system of the external apparatus is O, and the three-dimensional position $(x_k^0, y_k^0, z_k^0)$ of the known characteristic is registered in the coordinate system, positions of three-dimensional position coordinate $(x_k^L, y_k^L, z_k^L)$ in an left camera coordinate system L concerning the point, and three-dimensional position coordinate $(x_k^R, y_k^R, z_k^R)$ in the right camera coordinate system are calculated:

$$\begin{bmatrix} x_k^L \\ y_k^L \\ z_k^L \end{bmatrix} = {}_L R_O \begin{bmatrix} x_k^O \\ y_k^O \\ z_k^O \end{bmatrix} + {}_L T_O = \begin{bmatrix} r'_{11} & r'_{12} & r'_{13} \\ r'_{21} & r'_{22} & r'_{23} \\ r'_{31} & r'_{32} & r'_{33} \end{bmatrix} \begin{bmatrix} x_k^O \\ y_k^O \\ z_k^O \end{bmatrix} + \begin{bmatrix} t'_x \\ t'_y \\ t'_z \end{bmatrix} \qquad \ldots \ (57);$$

and

$$\begin{bmatrix} x_k^R \\ y_k^R \\ z_k^R \end{bmatrix} = {}_R R_L \begin{bmatrix} x_k^L \\ y_k^L \\ z_k^L \end{bmatrix} + {}_R T_L = \begin{bmatrix} r_{11} & r_{12} & r_{13} \\ r_{21} & r_{22} & r_{23} \\ r_{31} & r_{32} & r_{33} \end{bmatrix} \begin{bmatrix} x_k^L \\ y_k^L \\ z_k^L \end{bmatrix} + \begin{bmatrix} t_x \\ t_y \\ t_z \end{bmatrix} \qquad \ldots \ (58).$$

Next, with respect to them, projection positions $(u_k^{nL}, v_k^{nL})$, $(u_k^{nR}, v_k^{nR})$ in the image calculated by the above equations (7) and (8) are calculated.

Needless to say, as to the position in this image, the equation is established in a case where it is assumed that all the calibration data is correct. Therefore, a difference between the position in the image represented by the set B of the above equation (55), and an image position in a case where it is assumed that the calibration data is correct is calculated, and accordingly it can be judged whether or not the calibration displacement occurs.

That is, the following difference in the image is calculated in each image:

$$\begin{cases} f_k^L = \sqrt{\left(u_k'^L - u_k''^L\right)^2 + \left(v_k'^L - v_k''^L\right)^2} \\ f_k^R = \sqrt{\left(u_k'^R - u_k''^R\right)^2 + \left(v_k'^R - v_k''^R\right)^2} \end{cases} \quad \ldots \quad (59),$$

and it is judged whether or not the following is established:

$$f_k^L > threshold \quad \text{or} \quad f_k^R > threshold \quad \ldots \quad (60).$$

Here, when the threshold value threshold is exceeded, it is seen that at least the calibration displacement occurs.

Moreover, a process of removing an abnormal value or the like may be included in the same manner as in the sixth embodiment. That is, when at least s characteristics ($s \leq m$) among m known characteristics satisfy inequality shown by the above equation (60), it is judged that the calibration displacement occurs.

That is, it can be judged by the sub-step SS1 whether or not at least the calibration displacement occurs.

Next, sub-step SS2 will be described.

When the calibration displacement occurs in the above-described sub-step SS1, in sub-step SS2, it is judged whether or not the displacement is attributed to at least an inner calibration displacement of the stereo photographing apparatus, or a calibration displacement concerning a position/posture relation between the stereo photographing apparatus and the external apparatus.

For this purpose, either one of the above equation (55) set B and equation (56) set A, or characteristics of both A and B, and whether or not the epipolar line restriction is established as described above in the first or second embodiment are used as judgment standards, and it is judged whether or not the inner calibration displacement occurs. That is, it may be judged by the above equations (47), (49), or (52), (54).

When it is judged that there is not any calibration displacement concerning the inside of the photographing apparatus, and it is judged in the sub-step SS1 that there is calibration displacement, it can be judged that the calibration displacement is based on the position/posture shift between the stereo photographing apparatus and the external apparatus.

On the other hand, it is securely seen that the calibration displacement is the inner calibration displacement in a case where it is judged even in the sub-step SS2 that there is the calibration displacement.

Returning to the flowchart of FIG. 38, in step S76, the result judged in the step S75 is presented by the displacement result presenting device 122. Since the types of a plurality of calibration displacements can be detected in this eighth embodiment, it is possible to display the results including the information. The display method is similar to that of the sixth embodiment, and is omitted here.

In this manner, according to the eighth embodiment, even the position/posture calibration displacement between the stereo photographing apparatus and the external apparatus can be detected.

[Ninth Embodiment]

Next, a case where a photographing apparatus performs photographing a plurality of times, and images are utilized will be described as a ninth embodiment.

It has been assumed in the above-described sixth to eighth embodiments that the stereo photographing apparatus photographs the image once. In the ninth embodiment, the photographing is performed a plurality of times by the stereo photographing apparatus, and characteristics (natural or known characteristics) obtained from a plurality of times of photographing are utilized in such a manner that the detection of the calibration displacement is reliable.

This method will be described in the ninth embodiment. A basic constitution of a calibration displacement detection apparatus is similar to that described in the sixth to eighth embodiments.

As a method of detecting the calibration displacement accompanying a plurality of times of photographing, either of the following two methods may be used.

As a first method, the stereo photographing apparatus performs the photographing a plurality of times, and the displacement is detected utilizing a plurality of times of photographing. In this method, the natural or known characteristics are extracted from the stereo image photographed a plurality of times, they are handled as sets of characteristics represented by equation (55) set B and equation (56) set A, and then all the processes can be handled in the same manner as in the sixth to eighth embodiments.

As a second method, among a plurality of times of photographing, displacement is detected first time, and verification is performed second and subsequent times. That is, only in a case where the displacement is detected first time, it is re-judged whether or not there is really the displacement. Since the process of first time, second and subsequent times is similar to that of the sixth to eighth embodiments, description of details of the method is omitted.

Next, variation of the method will be described.

A method of detecting the displacement utilizing the known characteristics existing in a place where the photographing can be performed by the stereo photographing apparatus has been described above, and additionally variation in which the known characteristics are arranged can be considered.

That is, a calibration board whose position is known is disposed using the external apparatus as a standard, and the position of the known marker present in the calibration board can be photographed by the stereo photographing apparatus. In this case, as described in the ninth embodiment, for example, an operator who detects the calibration displacement disposes the calibration board facing the external apparatus, and the situation judgment device judges this so that the calibration displacement detection process may be performed.

In this manner, according to the ninth embodiment, the calibration displacement can be detected robustly and with good reliability.

[Tenth Embodiment]

Next, an example applied to car mounting will be described as a tenth embodiment.

In the above-described sixth to ninth embodiments, detailed description of a situation judgment device has been omitted, but in the tenth embodiment, a function of the situation judgment device will be mainly described.

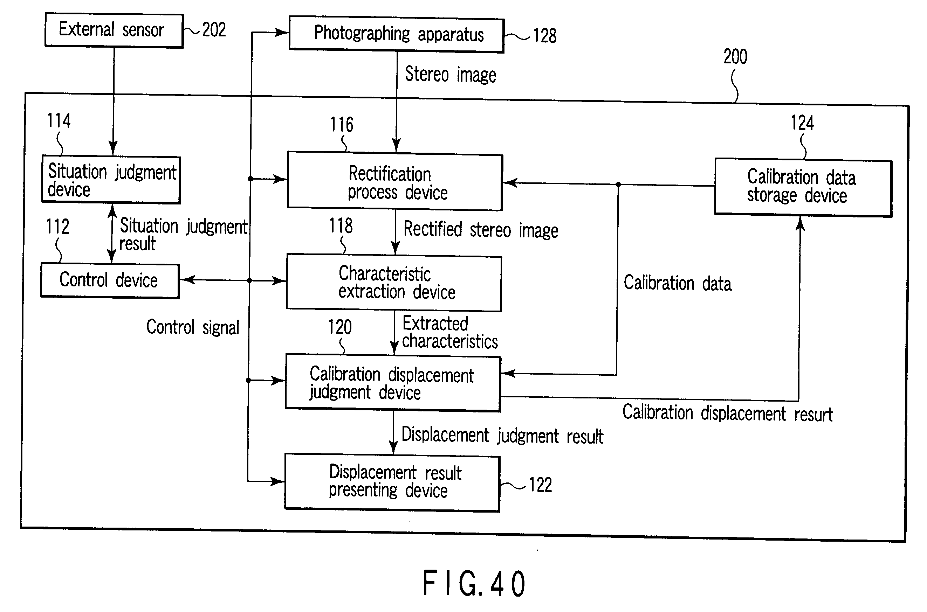

FIG. 40 is a block diagram showing a basic constitution example of the calibration displacement detection apparatus in the tenth embodiment of the present invention.

The tenth embodiment is different from the above-described sixth to ninth embodiments in that signals of various sensor outputs are supplied to a situation judgment device 114 in a calibration displacement detection apparatus 200 from an external sensor 202. The embodiment is different also in that if necessary, information on the calibration displacement detection is sent to a calibration data storage device 124, and the information is written in the calibration data storage device 124. Since process steps concerning another constitution and whole constitution are similar to those of the above-described sixth to eighth embodiments, description thereof is omitted.

As application of the situation judgment device 114, a case where a stereo photographing apparatus is attached to a vehicle will be described. Needless to say, the present system is not limited to a car-mounted stereo photographing apparatus for a vehicle, and it is apparent that the device can be applied to another monitoring camera system or the like.

As the external sensor 202 connected to the situation judgment device 114, the following is considered. That is, they are an odometer, clock or timer, temperature sensor, vehicle tilt measurement sensor or gyro sensor, vehicle speed sensor, engine start sensor, insulation sensor, raindrops sensor and the like.

Moreover, the situation judgment device 114 judges whether or not the detection of the calibration displacement is required at present based on conditions necessary for car-mounted application on the following conditions.

Furthermore, as calibration data stored by the calibration data storage device 8, the following information is written including parameters p, e' in performing calibration in the past, data of the known characteristics and the like. That is, they are inner calibration parameter p of a stereo photographing apparatus performed in the past, position/ posture calibration parameter e' between the stereo photographing apparatus and the external apparatus performed in the past, three-dimensional position of known characteristics performed in the past, vehicle driving distance during the past calibration, date and time of the past calibration, outside temperature during the past calibration, vehicle driving distance during calibration detection in the past, date and time during the calibration detection in the past, outside temperature during the past calibration detection and the like.

Next, a method of the calibration detection, and situation judgment to be performed by the situation judgment device 114 will be described.

In the present apparatus, a case where the detection is performed, when three conditions are established as conditions for performing calibration displacement detection will be described. The detection is performed, when a vehicle stops, at least a certain time T elapses since the displacement was detected before, and in fine weather during the day.

First, to satisfy first condition, it is confirmed by the vehicle speed sensor, gyro sensor or the like that the vehicle does not move. Next, to satisfy the second condition, a time difference between a time when the calibration displacement detection was performed in the past, and the present time calculated from a clock or the like is calculated. Concerning a third condition, an insulation sensor, raindrop sensor or the like is utilized, and it is judged whether or not the conditions are satisfied.

When the calibration displacement detection is executed in this manner, the result is sent to a displacement result presenting device 122. If necessary, the calibration displacement detection result is written in the calibration data storage device 124.

When the above-described method is adopted, the present calibration displacement detection apparatus can be applied to the car mounting or the like.

[Eleventh Embodiment]

Next, an example of a stereo camera to which a calibration displacement detection apparatus has been applied will be described as an eleventh embodiment of the present invention.

FIG. 41 is a block diagram showing a constitution of a stereo camera to which the calibration displacement detection apparatus according to an eleventh embodiment of the present invention is applied. It is to be noted that here an example in which a stereo camera is mounted on a vehicle will be described.

This stereo camera comprises: a distance image input apparatus 210; a control apparatus 212; an object recognition apparatus 214; an operation apparatus 216; a warning apparatus 218; a display apparatus 220; a vehicle speed sensor 222; a distance measurement radar 224; an illuminance sensor 226; an external camera 228; a GPS 230; a VICS 232; and an external communication apparatus 234.

The distance image input apparatus 210 comprises: a stereo adaptor camera 246 comprising an imaging device 242 which photographs a subject 240, and a stereo adaptor 244 attached to a tip of the imaging device 242; and a distance image processing device 248 which measures a distance image of the subject 240.

The display apparatus 220 is functionally connected to the distance image processing device 248 including a calibration device 256, and the control apparatus 212. Required display related to outputs of the calibration device 256 (calibration displacement detection unit disposed inside), a calculation unit (distance calculation device 254), and the imaging unit (imaging device 242) is performed in such a manner that the display can be recognized by a user (driver). The apparatus also functions as the displacement result presenting device or a portion of the device described above with reference to FIG. 32.

In the same manner as in a general video camera, digital still camera and the like, the imaging device 242 comprises an optical imaging system 242a, a photographing diaphragm adjustment device (not shown), a photographing focus adjustment device (not shown), a photographing shutter speed adjustment device (not shown), an imaging element (not shown), and a sensitivity adjustment device (not shown). Furthermore, the stereo adaptor 244 is attached to the imaging device 242.

Thus stereo adaptor 244 has an optical path dividing device 244a. The optical path dividing device 244a is attached to the front of the optical imaging system 242a of the imaging device 242, and images of the subject 240 from different visual points can be formed on an imaging element. The stereo image photographed by the imaging device 242 in this manner is supplied to the distance image processing device 248.

The distance image processing device 248 comprises a frame memory 250, a rectification device 252, a distance calculation device 254, and a calibration device 256.

Moreover, the stereo image supplied from the imaging device 242 is input into the frame memory 250, and further supplied to the rectification device 252. Outputs of left and right images are output to the distance calculation device 254 from the rectification device 252. In the distance calculation device 254, a three-dimensional distance image is output as a distance image output to the object recognition apparatus 214 via the control apparatus 212.

Furthermore, a rectification parameter is output to the rectification device 252 from the calibration device 256, a parameter for distance calculation is output to the distance calculation device 254, and a parameter for object recognition is output to the object recognition apparatus 214.

It is to be noted that a constitution of this stereo camera is substantially similar to the constitution proposed before as Jpn. Pat. Appln. No. 2003-48324 by the present applicant.

Thus, the embodiment can be applied as a stereo camera mounted on the vehicle.

In the above-described sixth to eleventh embodiments, calibration displacement concerning a stereo photographing apparatus comprising two cameras is detected. It is evident that this can be applied to a stereo photographing apparatus (i.e., multi-eye stereo photographing apparatus) comprising two or more cameras. That is, when the method described above in the embodiments is utilized with respect to n cameras constituting the multi-eye stereo photographing apparatus, and pairs of two cameras, it is similarly possible to detect the calibration displacement.

[Twelfth Embodiment]

Next, inner calibration of a photographing apparatus itself will be described as a twelfth embodiment.

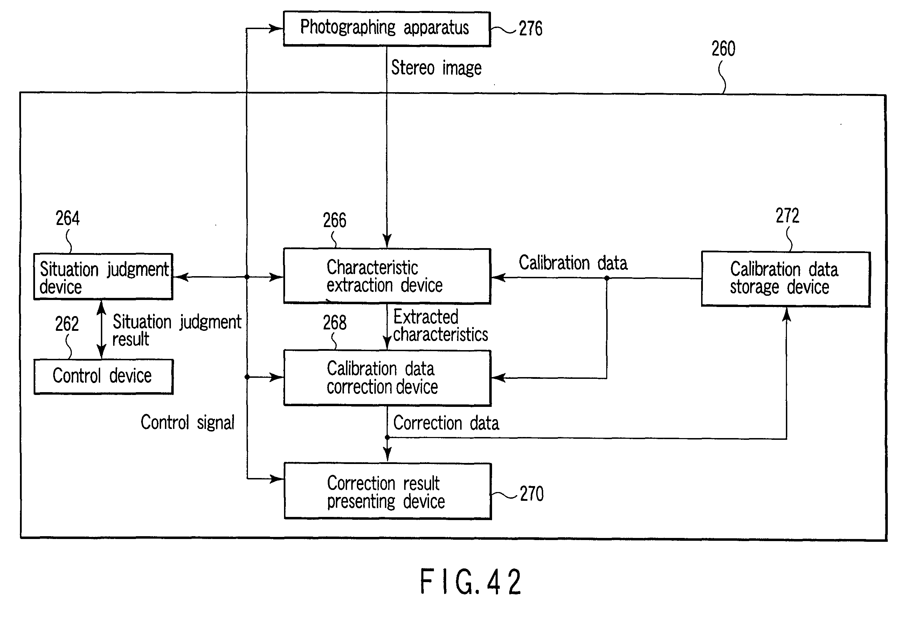

FIG. 42 is a block diagram showing a first basic constitution example of a calibration displacement correction apparatus in the present invention. Concretely, the apparatus solves "displacement correction of an inner calibration parameter of a photographing apparatus which photographs a stereo image" which is a problem of the above-described calibration displacement correction.

In FIG. 42, a calibration displacement correction apparatus 260 comprises: a control device 262 which sends a control signal to a device of each unit or which controls whole sequence; a situation judgment device 264; a characteristic extraction device 266; a calibration data correction device 268; a correction result presenting device 270; and a calibration data storage device 272.

The calibration displacement correction apparatus 260 is an apparatus for correcting calibration displacement with respect to a photographing apparatus 276 which photographs a stereo image and in which the calibration displacement is to be corrected.

The situation judgment device 264 judges whether or not to perform calibration displacement correction. The calibration data storage device 272 stores calibration data of the photographing apparatus 276 beforehand.

Moreover, the characteristic extraction device 266 extracts a corresponding characteristic in the stereo image from the stereo image photographed by the photographing apparatus 276. The calibration data correction device 268 corrects the calibration displacement utilizing the characteristic extracted by the characteristic extraction device 266, and calibration data. The correction result presenting device 270 reports a\this correction result.

The correction result presenting device 270 forms a correction result presenting unit which is a constituting element of the present invention. This correction result presenting unit may adopt a mode to hold a display device described later as a display unit which is its constituting element. In more general, the correction result presenting unit is not limited to the mode to hold even the display unit as its portion, and there can be a case where a mode to produce an output signal or data for presenting the correction result based on a signal indicating a correction result by the calibration displacement correction device 268 is adopted.

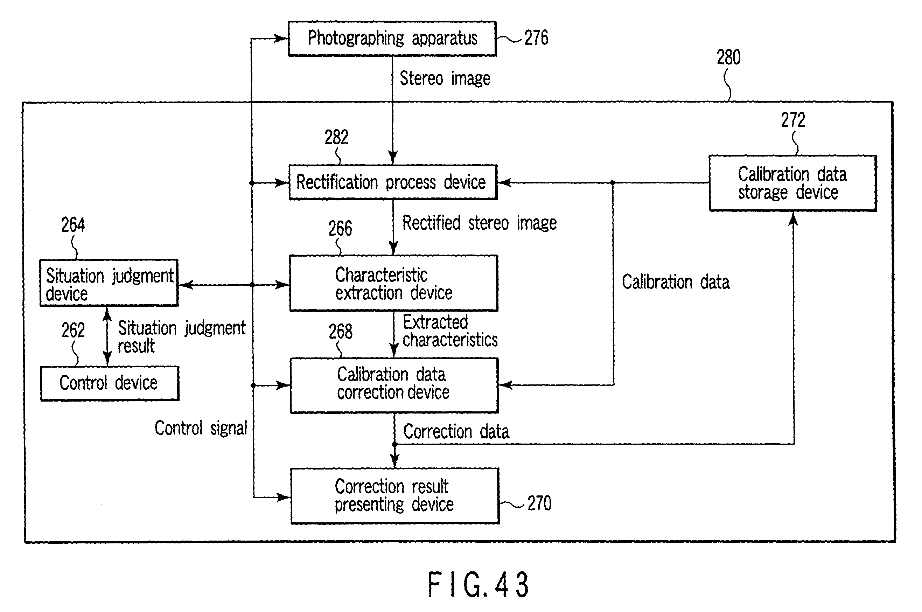

FIG. 43 is a block diagram showing a second basic constitution example of the calibration displacement correction apparatus in the present invention.

In FIG. 43, a calibration displacement correction apparatus 280 comprises: a control device 262; a situation judgment device 264; a characteristic extraction device 266; a calibration data correction device 268; a correction result presenting device 270; a calibration data storage device 272; and a rectification process device 282.

The rectification process device 282 rectifies a stereo image photographed by the photographing apparatus 276. Here, a corresponding characteristic in the stereo image is extracted from the rectified stereo image by the characteristic extraction device 266. Since another constitution is similar to that of the calibration displacement correction apparatus 260 of FIG. 42 described above, description thereof is omitted.

The first basic constitution shown in FIG. 42 is different from the second basic constitution shown in FIG. 43 in that the rectification process device 282 for rectifying the stereo image is included.

It is to be noted that each device in the calibration displacement correction apparatuses 260 and 280 may comprise hardware or circuit, or may be processed by software of a computer or a data processing device.

Here, prior to concrete description of the twelfth embodiment, outlines of technique contents concerning stereo photographing which is important in the present invention will be described.

[Mathematical Preparation and Camera Model]

First, when an image is photographed by an imaging apparatus utilizing a stereo image, the image is formed as an image of an imaging element (e.g., semiconductor elements such as CCD and CMOS) in the imaging apparatus, and also constitutes an image signal. This image signal is an analog or digital signal, and constitutes digital image data in the calibration displacement correction apparatus. The digital data can be represented as a two-dimensional array, but may be, needless to say, a two-dimensional array of a honeycomb structure such as hexagonal close packing.

When the photographing apparatus transmits an analog image, a frame memory is prepared inside or outside the calibration displacement correction apparatus, and the image is converted into a digital image. With respect to an image defined in the calibration displacement correction apparatus, it is assumed that a pixel can be defined in a square or rectangular lattice shape.

Now it is assumed that coordinate of the image is represented by a two-dimensional coordinate such as (u, v).

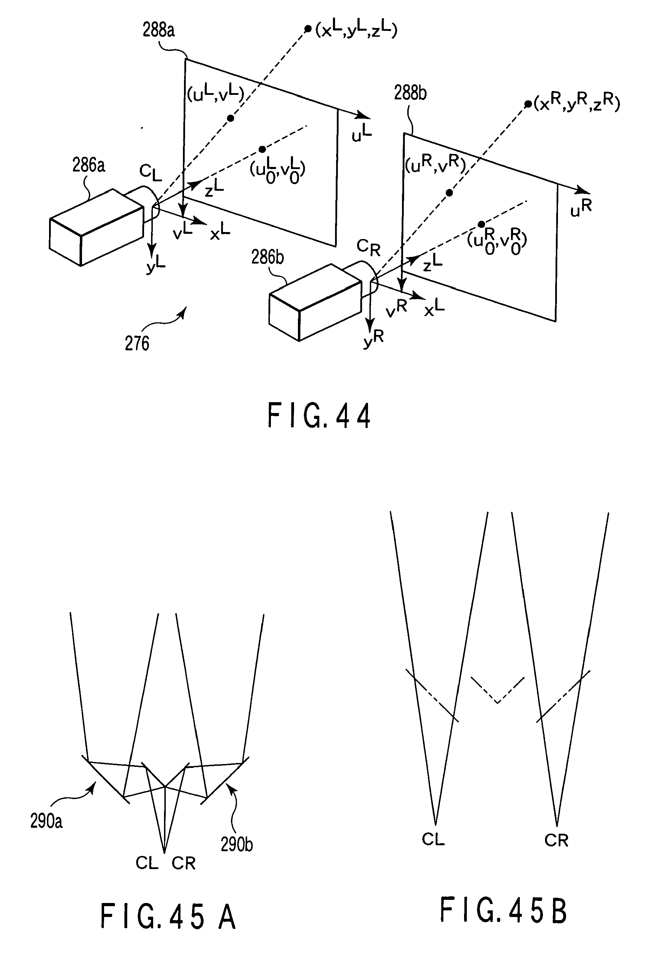

First, as shown in FIG. 44, it is assumed that the photographing apparatus 276 for photographing the stereo image comprises two left/right cameras 286a, 286b. Moreover, a coordinate system which defines the camera 286a for photographing a left image is assumed as a left camera coordinate system L, and a coordinate system for photographing a right image is a right camera coordinate system R. Moreover, it is assumed that an image coordinate in the left camera is represented by $(u^L, v^L)$, and an image coordinate value in the right camera is represented by $(u^R, v^R)$ as the stereo image. It is to be noted that reference numerals 288a, 288b denote a left camera image plane, and a right camera image plane.

Moreover, it is possible to define a reference coordinate system defined by the whole photographing apparatus 276. It is assumed that this reference coordinate system is, for example, W. Needless to say, it is apparent that one camera coordinate system L or R may be adopted as a reference coordinate system.

As a photographing apparatus, an apparatus has heretofore been considered which produces a stereo image by stereo photographing by two cameras, but additionally there is a method of producing the stereo image. For example, in the method, a stereo adaptor is attached before one camera, and right/left images are simultaneously photographed in imaging elements such as one CCD and CMOS (e.g., see Jpn. Pat. Appln. KOKAI Publication No. 8-171151 by the present applicant).

In this stereo adaptor, as shown in FIGS. 45A and 45B, an image photographed by the stereo adaptor having a left mirror group 290a and a right mirror group 290b can be developed in a usual stereo camera by two imaging apparatuses as if two frame memories existed.

In the stereo photographing in the present invention, a stereo image may be photographed by two or more cameras in this manner. Alternatively, a stereo image may be photographed utilizing the stereo adaptor.

Next, modeling of optical properties of the photographing apparatus and the frame memory by a pinhole camera is considered.

That is, it is assumed that a coordinate system of a pinhole camera model related to a left image is a left camera coordinate system L, and a coordinate system of a pinhole camera model related to a right image is a right camera coordinate system R. Assuming that a point in the left camera coordinate system L is $(x^L, y^L, z^L)$, an image correspondence point is $(u^L, v^L)$, a point in the right camera coordinate system R is $(x^R, y^R, z^R)$, and an image correspondence point is $(u^R, v^R)$, the model is obtained as in the following equation while considering camera positions $C_L$, $C_R$ shown in FIG. 44:

$$\begin{cases} u^L = \alpha_u^L \dfrac{x^L}{z^L} + u_0^L \\[2mm] v^L = \alpha_v^L \dfrac{y^L}{z^L} + v_0^L \end{cases}, \qquad \begin{cases} u^R = \alpha_u^R \dfrac{x^R}{z^R} + u_0^R \\[2mm] v^R = \alpha_v^R \dfrac{y^R}{z^R} + v_0^R \end{cases} \qquad \cdots \ (61),$$

where $\left(\alpha_u^L, \alpha_v^L\right)$ denotes image expansion ratios of vertical and transverse directions of the left camera system, $\left(\mu_0^L, v_0^L\right)$ denotes an image center, $\left(\alpha_u^R, \alpha_v^R\right)$ denotes image expansion ratios of vertical and transverse directions of the right camera system, and $\left(\mu_0^R, v_0^R\right)$ denotes an image center. Considering that they are represented by a matrix, the following can be represented using $w^L, w^R$ as intermediate parameters:

$$w^L \begin{bmatrix} u^L \\ u^L \\ 1 \end{bmatrix} = \begin{bmatrix} \alpha_u^L & 0 & u_0^L \\ 0 & \alpha_v^L & v_0^L \\ 0 & 0 & 1 \end{bmatrix} \begin{bmatrix} x^L \\ y^L \\ z^L \end{bmatrix}, \qquad w^R \begin{bmatrix} u^R \\ u^R \\ 1 \end{bmatrix} = \begin{bmatrix} \alpha_u^R & 0 & u_0^R \\ 0 & \alpha_v^R & v_0^R \\ 0 & 0 & 1 \end{bmatrix} \begin{bmatrix} x^R \\ y^R \\ z^R \end{bmatrix}$$

$$\cdots \ (62)$$

Assuming that the position of a point P (x, y, z) defined by a reference coordinate system in the left image is $(u^L, v^L)$, and the position in the right image is $(u^R, v^R)$, a position $C_L$ (origin of the left camera coordinate system) in the reference coordinate system of the left camera 286a corresponding to the imaging apparatus and frame memory assumed by the left image, and a position $C_R$ (origin of the right camera coordinate system) in the reference coordinate system of the right camera 286b corresponding to the imaging apparatus and frame memory assumed by the right image can be considered. At this time, a conversion equation projected to the left $(u^L, v^L)$ from the point P (x, y, z) of the reference coordinate system W, and a conversion equation projected to the right $(u^R, v^R)$ from the same point can be represented as follows:

$$\begin{cases} u^L = \alpha_u^L \dfrac{r_{11}^L x + r_{12}^L y + r_{13}^L z + t_x^L}{r_{31}^L x + r_{32}^L y + r_{33}^L z + t_z^L} + u_0^L \\[3mm] v^L = \alpha_v^L \dfrac{r_{21}^L x + r_{22}^L y + r_{23}^L z + t_y^L}{r_{31}^L x + r_{32}^L y + r_{33}^L z + t_z^L} + v_0^L \end{cases} \qquad \cdots (63);$$

$$\begin{cases} u^R = \alpha_u^R \dfrac{r_{11}^R x + r_{12}^R y + r_{13}^R z + t_x^R}{r_{31}^R x + r_{32}^R y + r_{33}^R z + t_z^R} + u_0^R \\[3mm] v^R = \alpha_v^R \dfrac{r_{21}^R x + r_{22}^R y + r_{23}^R z + t_y^R}{r_{31}^R x + r_{32}^R y + r_{33}^R z + t_z^R} + v_0^R \end{cases} \qquad \cdots (64),$$

where $R^L = (r_{ij}^L), T^L = [t_x^L, t_y^L, t_z^L]'$ are 3×3 rotary matrix and translational vector constituting coordinate conversion from the reference coordinate system to the left camera coordinate system L. Moreover, $R^R = (r_{ij}^R), T^R = [t_x^R, t_y^R, t_z^R]'$ are 3×3 rotary matrix and translational vector constituting coordinate conversion from the reference coordinate system to the right camera coordinate system R.

[Distortion Correction]

On the other hand, when lens distortion of an optical lens or the like of an imaging apparatus cannot be ignored with respect to precision required in three-dimensional measurement, an optical system including the lens distortion needs to be considered. In this case, the above equations (63), (64) can be represented by the following equations (66), (67). In this equation, radial distortion and tangential distortion are represented in order to represent the lens distortion, and, needless to say, another distortion representation may be used.

Here, assuming the following parameter concerning the lens distortions of the right/left cameras,

$$\begin{cases} \mathbf{d}^L = \left( k_1^L, g_1^L, g_2^L, g_3^L, g_4^L \right) \\[2mm] \mathbf{d}^R = \left( k_1^R, g_1^R, g_2^R, g_3^R, g_4^R \right) \end{cases} \qquad \cdots (65),$$

the following results:

$$\text{(Left)} \begin{cases} \begin{cases} \widetilde{u}_p^L = \dfrac{x^L}{z^L} = \dfrac{r_{11}^L x + r_{12}^L y + r_{13}^L z + t_x^L}{r_{31}^L x + r_{32}^L y + r_{33}^L z + t_z^L} \\[4mm] \widetilde{v}_p^L = \dfrac{y^L}{z^L} = \dfrac{r_{21}^L x + r_{22}^L y + r_{23}^L z + t_y^L}{r_{31}^L x + r_{32}^L y + r_{33}^L z + t_z^L} \end{cases} \\[12mm] \begin{cases} \widetilde{u}_d^L = \widetilde{u}_p^L + \left(g_1^L + g_3^L\right)\left(\widetilde{u}_p^L\right)^2 + g_4^L \widetilde{u}_p^L \widetilde{v}_p^L + g_1^L \left(\widetilde{v}_p^L\right)^2 + k_1^L \widetilde{u}_p^L \left(\left(\widetilde{u}_p^L\right)^2 + \left(\widetilde{v}_p^L\right)^2\right) \\[3mm] \widetilde{v}_d^L = \widetilde{v}_p^L + g_2^L \left(\widetilde{u}_p^L\right)^2 + g_3^L \widetilde{u}_p^L \widetilde{v}_p^L + \left(g_2^L + g_4^L\right)\left(\widetilde{v}_p^L\right)^2 + k_1^L \widetilde{v}_p^L \left(\left(\widetilde{u}_p^L\right)^2 + \left(\widetilde{v}_p^L\right)^2\right) \end{cases} \\[12mm] \begin{cases} u^L = \alpha_u^L \widetilde{u}_d^L + u_0^L \\[2mm] v^L = \alpha_v^L \widetilde{v}_d^L + v_0^L \end{cases} \end{cases}$$

$$\dots \ (66); \ \text{and}$$

$$\text{(Right)} \begin{cases} \begin{cases} \widetilde{u}_p^R = \dfrac{x^R}{z^R} = \dfrac{r_{11}^R x + r_{12}^R y + r_{13}^R z + t_x^R}{r_{31}^R x + r_{32}^R y + r_{33}^R z + t_z^R} \\[4mm] \widetilde{v}_p^R = \dfrac{y^R}{z^R} = \dfrac{r_{21}^R x + r_{22}^R y + r_{23}^R z + t_y^R}{r_{31}^R x + r_{32}^R y + r_{33}^R z + t_z^R} \end{cases} \\[12mm] \begin{cases} \widetilde{u}_d^R = \widetilde{u}_p^R + \left(g_1^R + g_3^R\right)\left(\widetilde{u}_p^R\right)^2 + g_4^R \widetilde{u}_p^R v_p^R + g_1^R \left(\widetilde{v}_p^R\right)^2 + k_1^R \widetilde{u}_p^R \left(\left(\widetilde{u}_p^R\right)^2 + \left(\widetilde{v}_p^R\right)^2\right) \\[3mm] \widetilde{v}_d^R = \widetilde{v}_p^R + g_2^R \left(\widetilde{u}_p^R\right)^2 + g_3^R \widetilde{u}_p^R \widetilde{v}_p^R + \left(g_2^R + g_4^R\right)\left(\widetilde{v}_p^R\right)^2 + k_1^R \widetilde{v}_p^R \left(\left(\widetilde{u}_p^R\right)^2 + \left(\widetilde{v}_p^R\right)^2\right) \end{cases} \\[12mm] \begin{cases} u^R = \alpha_u^R \widetilde{u}_d^R + u_0^R \\[2mm] v^R = \alpha_v^R \widetilde{v}_d^R + v_0^R \end{cases} \end{cases}$$

$$\dots \ (67),$$

where $(\widetilde{u}_p^L, \widetilde{v}_p^L)$, $(\widetilde{u}_d^L, \widetilde{v}_d^L)$ and $(\widetilde{u}_p^R, \widetilde{v}_p^R)$, $(\widetilde{u}_d^R, \widetilde{v}_d^R)$ denote intermediate parameters for representing the lens distortion, and coordinates normalized in the right and left camera image coordinates, p denotes a suffix indicating the normalized image coordinate after removing the distortion, and d denotes a suffix indicating a normalized image coordinate before removing the distortion (including a distortion element).

Moreover, a step of removing the distortion or correcting the distortion means the following production of an image.

(Distortion Correction of Left Image)

1) The normalized image coordinate is calculated with respect to each image array $(u_p^L, v_p^L)$ after the distortion correction.

$$\widetilde{u}_p^L = \frac{u_p^L - u_0^L}{\alpha_u^L}, \quad \widetilde{v}_p^L = \frac{v_p^L - v_0^L}{\alpha_v^L} \qquad \dots \ (68)$$

2)

$$\begin{cases} \widetilde{u}_d^L = \widetilde{u}_p^L + \left(g_1^L + g_3^L\right)\left(\widetilde{u}_p^L\right)^2 + g_4^L\,\widetilde{u}_p^L\,\widetilde{v}_p^L + g_1^L\left(\widetilde{v}_p^L\right)^2 + k_1^L\,\widetilde{u}_p^L\left(\left(\widetilde{u}_p^L\right)^2 + \left(\widetilde{v}_p^L\right)^2\right) \\ \widetilde{v}_d^L = \widetilde{v}_p^L + g_2^L\left(\widetilde{u}_p^L\right)^2 + g_3^L\,\widetilde{u}_p^L\,\widetilde{v}_p^L + \left(g_2^L + g_4^L\right)\left(\widetilde{v}_p^L\right)^2 + k_1^L\,\widetilde{v}_p^L\left(\left(\widetilde{u}_p^L\right)^2 + \left(\widetilde{v}_p^L\right)^2\right) \end{cases}$$

$$\cdots \quad (69)$$

By the above equation, the normalized image coordinate before the distortion correction is calculated.

3) By $u^L = a_u^L \widetilde{u}_d^L + u_0^L$, $\quad v^L = a_v^L \widetilde{v}_d^L + v_0^L$, an image coordinate corresponding to a left original image before the distortion correction is calculated, and a pixel value with respect to $(u_p^L, v_p^L)$ is calculated utilizing a pixel value of a pixel in the vicinity or the like.

(Distortion Correction of Right Image)

1) The normalized image coordinate is calculated with respect to each image array $(u_p^R, v_p^R)$ after the distortion correction.

$$\widetilde{u}_p^R = \frac{u_p^R - u_0^R}{\alpha_u^R}, \quad \widetilde{v}_p^R = \frac{v_p^R - v_0^R}{\alpha_v^R} \qquad\qquad \cdots \quad (70)$$

2)

$$\begin{cases} \widetilde{u}_d^R = \widetilde{u}_p^R + \left(g_1^R + g_3^R\right)\left(\widetilde{u}_p^R\right)^2 + g_4^R\,\widetilde{u}_p^R\,v_p^R + g_1^R\left(\widetilde{v}_p^R\right)^2 + k_1^R\,\widetilde{u}_p^R\left(\left(\widetilde{u}_p^R\right)^2 + \left(\widetilde{v}_p^R\right)^2\right) \\ \widetilde{v}_d^R = \widetilde{v}_p^R + g_2^R\left(\widetilde{u}_p^R\right)^2 + g_3^R\,\widetilde{u}_p^R\,\widetilde{v}_p^R + \left(g_2^R + g_4^R\right)\left(\widetilde{v}_p^R\right)^2 + k_1^R\,\widetilde{v}_p^R\left(\left(\widetilde{u}_p^R\right)^2 + \left(\widetilde{v}_p^R\right)^2\right) \end{cases}$$

$$\cdots \quad (71)$$

By the above equation, the normalized image coordinate before the distortion correction is calculated.

3) By $u^R = a_u^R \widetilde{u}_d^R + u_0^R$, $\quad v^R = a_v^R \widetilde{v}_d^R + v_0^R$, an image coordinate corresponding to a left original image before the distortion correction is calculated, and a pixel value with respect to $(u_p^R, v_p^R)$ is calculated utilizing a pixel value of a pixel in the vicinity or the like.

[Definition of Inner Calibration Parameter and Calibration Displacement Problem]

Assuming that a coordinate system of a left camera of a photographing apparatus comprising two cameras to photograph a stereo image is L, and a coordinate system of a right camera is R, a positional relation of the cameras is considered. A relation of coordinate values between the coordinate systems L and R can be represented as follows utilizing coordinate conversion (rotary matrix and translational vector).

$$\begin{bmatrix} x^L \\ y^L \\ z^L \end{bmatrix} = {}_L R_R \begin{bmatrix} x^R \\ y^R \\ z^R \end{bmatrix} + {}_L T_R \qquad \qquad \cdots \quad (72),$$

where the following can be represented:

$${}_L R_R = Rot(\phi_z) Rot(\phi_y) Rot(\phi_x)$$
$$= \begin{bmatrix} \cos\phi_z & -\sin\phi_z & 0 \\ \sin\phi_z & \cos\phi_z & 0 \\ 0 & 0 & 1 \end{bmatrix} \begin{bmatrix} \cos\phi_y & 0 & \sin\phi_y \\ 0 & 1 & 0 \\ -\sin\phi_y & 0 & \cos\phi_y \end{bmatrix} \begin{bmatrix} 1 & 0 & 0 \\ 0 & \cos\phi_x & -\sin\phi_x \\ 0 & \sin\phi_x & \cos\phi_x \end{bmatrix}$$
$$\cdots \quad (73);$$

and

$${}_L T_R = \begin{bmatrix} t_x, t_y, t_z \end{bmatrix} \qquad \qquad \cdots \quad (74),$$

and six parameters $e = (\phi_x, \phi_y, \phi_z, t_x, t_y, t_z)$ can be represented as outer parameters.

Moreover, as described above, inner parameters individually representing right/left cameras, respectively, are represented as follows:

$$\begin{cases} \mathbf{c}^L = \left( \alpha_u^L, \alpha_v^L, u_0^L, v_0^L, \mathbf{d}^L \right) \\ \mathbf{c}^R = \left( \alpha_u^R, \alpha_v^R, u_0^R, v_0^R, \mathbf{d}^R \right) \end{cases} \qquad \cdots \quad (75).$$

In general, as to camera parameters in the photographing apparatus comprising two cameras, the following can be utilized as an inner calibration parameter of the photographing apparatus:

$$\mathbf{p} = \left( \mathbf{c}^L, \mathbf{c}^R, \mathbf{e} \right) \qquad \qquad \cdots \quad (76).$$

In the present invention, an inner calibration parameter p or the like of the photographing apparatus is stored as a calibration parameter in a calibration data storage device. It is assumed that at least a camera calibration parameter p is included as calibration data. Additionally, in a case where the lens distortion of the photographing apparatus can be ignored, a portion ($\mathbf{d}^L$,$\mathbf{d}^R$) of a distortion parameter may be ignored or zeroed.

Moreover, the inner calibration of the photographing apparatus can be defined as a problem to estimate **p**= (**c**$^L$,**c**$^R$,**e**) which is a set of inner and outer parameters of the above-described photographing apparatus. Correction of the calibration displacement indicates that a value of the calibration parameter set in this manner is corrected.

In this case, a calibration correction problem results in:

(Problem 1-1) **p=e** problem to correct position/posture parameters between cameras; and

(Problem 1-2) problem **p**=(**c**$^L$,**c**$^R$,**e**) to correct all inner parameters of a stereo photographing apparatus, and a calibration parameter to be corrected differs with each problem. Here, a correction problem of a combination **p**=(**c**$^L$, **c**$^R$) can also be considered. However, in actual, in a case where there is a fluctuation in an expansion ratio described by the camera parameter in (**c**$^L$,**c**$^R$), focal distance, image center, or distortion parameter, it is appropriate to consider that there is also a fluctuation with respect to e. Therefore, it is presumed that parameter estimation concerning this case is handled in (1-2).

[Definition of Outer Calibration Parameter and Calibration Displacement Problem]

As described above, calibration between a photographing apparatus and an external apparatus needs to be considered.

In this case, for example, the left camera coordinate system L is taken as a reference coordinate system of the photographing apparatus, and to define a position/posture relation between the left camera coordinate system and the external apparatus corresponds to calibration. For example, assuming that the coordinate system of the external apparatus is O, a coordinate conversion parameter from an external apparatus coordinate system O to the left camera coordinate system L is set as in equation (77), and the position/posture relation can be described by six parameters represented by equation (78):

$$_L R_O = \begin{bmatrix} r'_{11} & r'_{12} & r'_{13} \\ r'_{21} & r'_{22} & r'_{23} \\ r'_{31} & r'_{32} & r'_{33} \end{bmatrix}, \quad _L T_O = \begin{bmatrix} t'_x \\ t'_y \\ t'_z \end{bmatrix} \qquad \cdots \quad (77),$$

then, by six parameters:

$$\mathbf{p} = \mathbf{e}' = \left( \phi'_x, \phi'_y, \phi'_z, t'_x, t'_y, t'_z \right) \qquad \cdots \quad (78),$$

the position/posture relation can be described.

Here, $\phi'_x, \phi'_y, \phi'$ are three rotation component parameters concerning $_L R_0$. This is regarded as problem 2.

[Definition of Inner and Outer Calibration Parameters and Calibration Displacement Problem]

A problem in which problems (1-2) and (2) are combined, that is, the following is defined as problem 3:

$$\mathbf{p} = ( \mathbf{c}^L, \mathbf{c}^R, \mathbf{e}, \mathbf{e}' ) \qquad \cdots \quad (79),$$

This problem is a problem to correct all calibration parameters described above.

[Epipolar Line Restriction in Stereo Image]

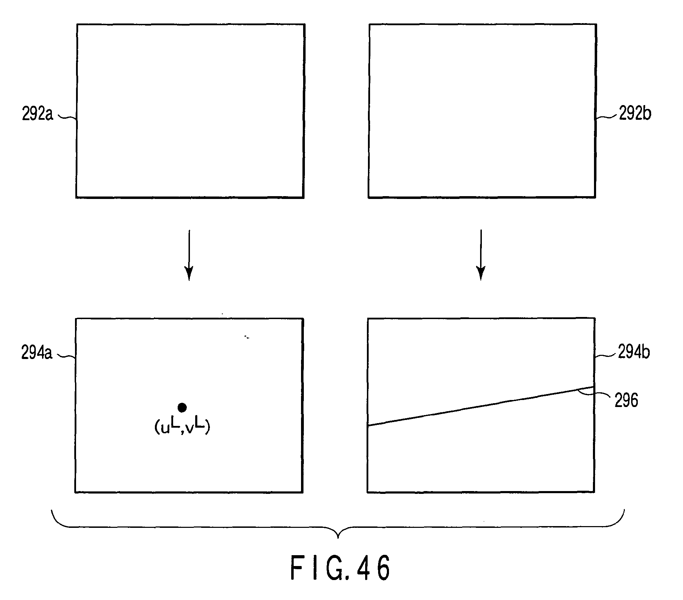

When image measurement is performed using a stereo image, as described later, it is important to search for a correspondence point in right/left images. A concept of so-called epipolar line restriction is important concerning the searching of the correspondence point. This will be described with reference to FIG. 46.

That is, when an exact calibration parameter $\mathbf{p} = (\mathbf{c}^L, \mathbf{c}^R, \mathbf{e})$ is given concerning left and right images 294a, 294b subjected to distortion correction with respect to left and right original images 292a, 292b, a characteristic point $(u^R, v^R)$ in the right image corresponding to a characteristic point $(u^L, v^L)$ in the left image has to be present on a certain straight line shown by 296, and this is a restriction condition. This straight line is referred to as an epipolar line.

It is important here that distortion correction or removal has to be performed beforehand, when the distortion is remarkable in the image. The epipolar line restriction is similarly established even in a normalized image subjected to the distortion correction. Therefore, an epipolar line considered in the present invention will be defined hereinafter in an image plane first subjected to the distortion correction and normalization.

It is assumed that a position of a characteristic point subjected to the distortion correction in a normalized image appearing in the middle of the above equations (66), (67) with respect to the characteristic point $(u^L, v^L)$ obtained in the left original image is $(\widetilde{u}^L, \widetilde{v}^L)$. Assuming that a three-dimensional point (x, y, z) defined in the left camera coordinate system is projected in (u$^L$,v$^L$) in the left camera image, and converted into the above-described $(\widetilde{u}^{L}, \widetilde{v}^{L})$, the following is established:

$$\widetilde{u}^{L} = \frac{x}{z}, \quad \widetilde{v}^{L} = \frac{y}{z} \qquad \ldots \ (80).$$

On the other hand, assuming that (x, y, z) is projected in (u$^R$,v$^R$) in the right camera image, and an image coordinate subjected to distortion correction in a normalized camera image is $(\widetilde{u}^{R}, \widetilde{v}^{R})$, the following is established:

$$\widetilde{u}^{R} = \frac{r_{11}x + r_{12}y + r_{13}z + t_{x}}{r_{31}x + r_{32}y + r_{33}z + t_{z}}, \quad \widetilde{v}^{R} = \frac{r_{21}x + r_{22}y + r_{23}z + t_{y}}{r_{31}x + r_{32}y + r_{33}z + t_{z}} \ \ldots \ (81),$$

where rij and tx, ty, tz are elements of a rotary matrix and a translational vector indicating coordinate conversion from a right camera coordinate system R to a left camera coordinate system L, and are represented by the following:

$$_{L}R_{R} = \left(r_{ij}\right)_{3\times3}, \quad _{L}T_{R} = \left[t_{x}, t_{y}, t_{z}\right]^{t} \qquad \ldots \ (82).$$

When equation (80) is substituted into equation (81), and z is deleted, the following equation is established:

$$\widetilde{u}^{R}\left\{\left(r_{31}\widetilde{u}^{L} + r_{32}\widetilde{v}^{L} + r_{33}\right)t_{y} - \left(r_{21}\widetilde{u}^{L} + r_{22}\widetilde{v}^{L} + r_{23}\right)t_{z}\right\}$$
$$+ \widetilde{v}^{R}\left\{\left(r_{11}\widetilde{u}^{L} + r_{12}\widetilde{v}^{L} + r_{13}\right)t_{z} - \left(r_{31}\widetilde{u}^{L} + r_{32}\widetilde{v}^{L} + r_{33}\right)t_{x}\right\} \qquad \ldots \ (83),$$
$$+ \left(r_{21}\widetilde{u}^{L} + r_{22}\widetilde{v}^{L} + r_{23}\right)t_{x} - \left(r_{11}\widetilde{u}^{L} + r_{12}\widetilde{v}^{L} + r_{13}\right)t_{y} = 0$$

where assuming the following:

$$\begin{cases} \widetilde{a} = \left(r_{31}\widetilde{u}^{L} + r_{32}\widetilde{v}^{L} + r_{33}\right)t_{y} - \left(r_{21}\widetilde{u}^{L} + r_{22}\widetilde{v}^{L} + r_{23}\right)t_{z} \\ \widetilde{b} = \left(r_{11}\widetilde{u}^{L} + r_{12}\widetilde{v}^{L} + r_{13}\right)t_{z} - \left(r_{31}\widetilde{u}^{L} + r_{32}\widetilde{v}^{L} + r_{33}\right)t_{x} \qquad \ldots \ (84), \\ \widetilde{c} = \left(r_{21}\widetilde{u}^{L} + r_{22}\widetilde{v}^{L} + r_{23}\right)t_{x} - \left(r_{11}\widetilde{u}^{L} + r_{12}\widetilde{v}^{L} + r_{13}\right)t_{y} \end{cases}$$

the following straight line is obtained:

$$\widetilde{a} \, \widetilde{u}^{R} + \widetilde{b} \, \widetilde{v}^{R} + \widetilde{c} = 0 \qquad \ldots \ (85).$$

 This indicates an epipolar line in the normalized image plane.

The normalized image plane has heretofore been considered, and an equation of an epipolar line can be similarly derived even in the image plane subjected to the distortion correction.

Concretely, the followings are solved with respect to coordinate values $(u_{p}^{L}, v_{p}^{L})$, $(u_{p}^{R}, v_{p}^{R})$ of correspondence points of left and right images subjected to the distortion correction:

$$u_p^L = \alpha_u^L \frac{x}{z} + u_0^L, \quad v_p^L = \alpha_v^L \frac{y}{z} + v_0^L \qquad \ldots (86);$$

and

$$u_p^L = \alpha_u^R \frac{r_{11}x + r_{12}y + r_{13}z + t_x}{r_{31}x + r_{32}y + r_{33}z + t_z} + u_0^L, \quad v_p^R = \alpha_v^R \frac{r_{21}x + r_{22}y + r_{23}z + t_y}{r_{31}x + r_{32}y + r_{33}z + t_z} + v_0^R$$
$$\ldots (87).$$

Then, the following equation of the epipolar line can be derived in the same manner as in the above equation (85):

$$a\, u_p^R + b\, v_p^R + c = 0 \qquad \ldots (88).$$

[Rectification Process]

The epipolar line restriction has heretofore been considered as the characteristic points in the right/left images, and as another method, a rectification process is often used in stereo image processing.

Rectification in the present invention will be described hereinafter.

When the rectification process is performed, it is possible to derive restriction that the corresponding characteristic points in the right/left images are on the same horizontal straight line. In other words, in the image after the rectification process, as a characteristic point group on the same straight line of the left image, the same straight line on the right image can be defined as the epipolar line.

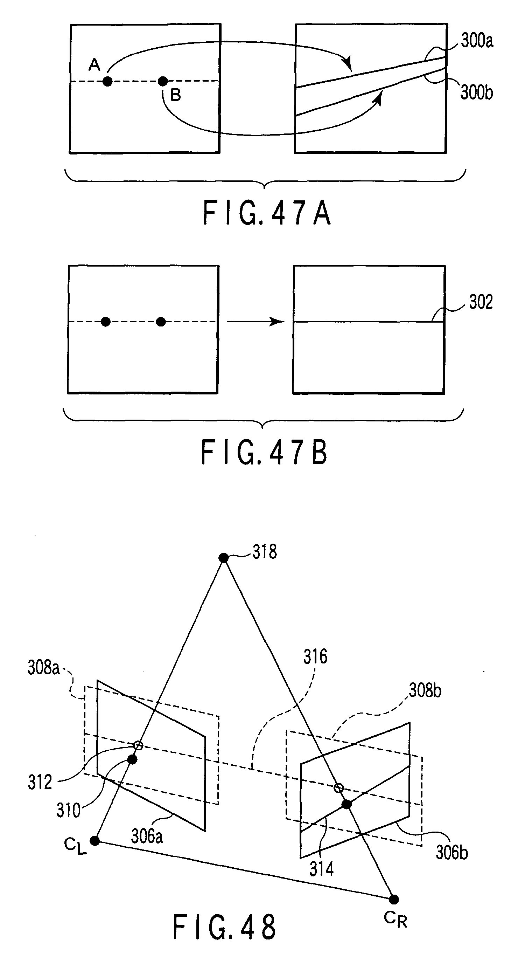

FIGS. 47A and 47B show this condition. FIG. 47A shows an image before the rectification, and FIG. 47B shows an image after the rectification. In the drawings, 300a, 300b denote straight lines on which correspondence points of points A and B exist, and 302 denotes an epipolar line on which the correspondence points are disposed on the same straight line.

To realize the rectification, as shown in FIG. 48, right/left camera original images are converted in such a manner as to be horizontal with each other. In this case, an axis only of a camera coordinate system is changed without moving origins $C_L$, $C_R$ of a left camera coordinate system L and a right camera coordinate system R, and accordingly new right/left image planes are produced.

It is to be noted that in FIG. 48, 306a denotes a left image plane before the rectification, 306b denotes a right image plane before the rectification, 308a denotes a left image plane after the rectification, 308b denotes a right image plane before the rectification, 310 denotes an image coordinate $(u^R, v^R)$ before the rectification, 312 denotes an image coordinate $(u^R, v^R)$ after the rectification, 314 denotes an epipolar line before the rectification, 316 denotes the epipolar line after the rectification, and 318 denotes a three-dimensional point.

The coordinate systems after the rectification of the left camera coordinate system L and right camera coordinate system R are LRect, RRect. As described above, origins of L and LRect, R and RRect agree with each other.

Coordinate conversion between two coordinate systems will be described hereinafter, and a reference coordinate system is assumed as the left camera coordinate system L. (This also applies to another reference coordinate system.)

At this time, the left camera coordinate system LRect and right camera coordinate system RRect after the rectification are defined as follows.

First, a vector from the origin of the left camera coordinate system L to that of the right camera coordinate system R will be considered. Needless to say, this is measured on the basis of the reference coordinate system.

At this time, the vector is assumed as follows:

$$T = [tx, \ ty, \ tz] \qquad \ldots (89).$$

A magnitude is $\parallel T \parallel = \sqrt{t_x^2 + t_y^2 + t_z^2}$ . At this time, the following three direction vectors $\{\mathbf{e}_1, \mathbf{e}_2, \mathbf{e}_3\}$ are defined:

$$\mathbf{e}_1 = \frac{T}{\parallel T \parallel}, \quad \mathbf{e}_2 = \frac{\left[-t_y, t_x, 0\right]}{\sqrt{t_x^2 + t_y^2}}, \quad \mathbf{e}_3 = \mathbf{e}_1 \times \mathbf{e}_2 \qquad \ldots \ (90)$$

At this time, $\mathbf{e}_1, \mathbf{e}_2, \mathbf{e}_3$ are taken as direction vectors of x, y, z axes of the left camera coordinate system LRect and right camera coordinate system RRect after left and right rectification processes. That is, the following results:

$$_L R_{L\mathrm{Rect}} = {_L}R_{R\mathrm{Rect}} = \left[\mathbf{e}_1, \mathbf{e}_2, \mathbf{e}_3\right] \qquad \ldots \ (91).$$

Further from a way to take the respective origins, the following is established:

$$_L T_{L\mathrm{Rect}} = \mathbf{0}, \quad {_R}T_{R\mathrm{Rect}} = \mathbf{0} \qquad \ldots \ (92).$$

When this is set, as shown in FIG. 47A, 47B, or 48, it is apparent that right/left correspondence points are disposed on one straight line (epipolar line) in a normalized image space.

Next, correspondence between a point $(\widetilde{u}^L, \widetilde{v}^L)$ in the normalized camera image of the camera, and a conversion point $(\widetilde{u}^{L\mathrm{Rect}}, \widetilde{v}^{L\mathrm{Rect}})$ in the normalized camera image after the rectification will be considered. Therefore, it is assumed that the same three-dimensional point is represented by $(x^L, y^L, z^L)$ in the left camera coordinate system L, and represented by $(x^{L\mathrm{Rect}}, y^{L\mathrm{Rect}}, z^{L\mathrm{Rect}})$ in the left camera coordinate system after the rectification. Moreover, considering the position $(\widetilde{u}^{L\mathrm{Rect}}, \widetilde{v}^{L\mathrm{Rect}})$ in the normalized image plane of $(x^L, y^L, z^L)$ and position $(\widetilde{u}^{L\mathrm{Rect}}, \widetilde{v}^{L\mathrm{Rect}})$ in the normalized image plane of $(x^{L\mathrm{Rect}}, y^{L\mathrm{Rect}}, z^{L\mathrm{Rect}})$, the following equation is established utilizing parameters $\widetilde{w}^L$ , $\widetilde{w}^{L\mathrm{Rect}}$ :

$$\widetilde{w}^L \begin{bmatrix} \widetilde{u}^L \\ \widetilde{v}^L \\ 1 \end{bmatrix} = \begin{bmatrix} x^L \\ y^L \\ z^L \end{bmatrix}, \quad \widetilde{w}^{L\mathrm{Rect}} \begin{bmatrix} \widetilde{u}^{L\mathrm{Rect}} \\ \widetilde{v}^{L\mathrm{Rect}} \\ 1 \end{bmatrix} = \begin{bmatrix} x^{L\mathrm{Rect}} \\ y^{L\mathrm{Rect}} \\ z^{L\mathrm{Rect}} \end{bmatrix} \qquad \ldots \ (93).$$

At this time, since the following is established:

$$\widetilde{w}^L \begin{bmatrix} \widetilde{u}^L \\ \widetilde{v}^L \\ 1 \end{bmatrix} = \begin{bmatrix} x^L \\ y^L \\ z^L \end{bmatrix} = {_L}R_{L\mathrm{Rect}} \begin{bmatrix} x^{L\mathrm{Rect}} \\ y^{L\mathrm{Rect}} \\ z^{L\mathrm{Rect}} \end{bmatrix} = {_L}R_{L\mathrm{Rect}} \, \widetilde{w}^{L\mathrm{Rect}} \begin{bmatrix} \widetilde{u}^{L\mathrm{Rect}} \\ \widetilde{v}^{L\mathrm{Rect}} \\ 1 \end{bmatrix} \qquad \ldots \ (94),$$

the following equation is established:

$$\widetilde{w}_{*}^{L}\begin{bmatrix}\widetilde{u}^{L}\\\widetilde{v}^{L}\\1\end{bmatrix}={}_{L}R_{L\,Rect}\begin{bmatrix}\widetilde{u}^{L\,Rect}\\\widetilde{v}^{L\,Rect}\\1\end{bmatrix} \qquad\qquad \ldots\ (95).$$

Similarly, with respect to the right camera image, between a point $(\widetilde{u}^{R},\widetilde{v}^{R})$ in the normalized camera image, and a conversion point $(\widetilde{u}^{R\,Rect},\widetilde{v}^{R\,Rect})$ in the normalized camera image after the rectification, the following equation is established:

$$\widetilde{w}_{*}^{R}\begin{bmatrix}\widetilde{u}^{R}\\\widetilde{v}^{R}\\1\end{bmatrix}={}_{R}R_{L}\ {}_{L}R_{R\,Rect}\begin{bmatrix}\widetilde{u}^{R\,Rect}\\\widetilde{v}^{R\,Rect}\\1\end{bmatrix}={}_{R}R_{R\,Rect}\begin{bmatrix}\widetilde{u}^{R\,Rect}\\\widetilde{v}^{R\,Rect}\\1\end{bmatrix} \qquad \ldots\ (96).$$

Therefore, assuming that an element of $_{L}R_{LRect}$ is $(r_{ij})$, in the left camera system, a normalized in-image position $(\widetilde{u}^{L},\widetilde{v}^{L})$ before the rectification corresponding to $(\widetilde{u}^{L\,Rect},\widetilde{v}^{L\,Rect})$ in the normalized image plane after the rectification is as follows:

$$\begin{cases}\widetilde{u}^{L}=\dfrac{r_{11}\widetilde{u}^{L\,Rect}+r_{12}\widetilde{v}^{L\,Rect}+r_{13}}{r_{31}\widetilde{u}^{L\,Rect}+r_{32}\widetilde{v}^{L\,Rect}+r_{33}}\\[2ex]\widetilde{v}^{L}=\dfrac{r_{21}\widetilde{u}^{L\,Rect}+r_{22}\widetilde{v}^{L\,Rect}+r_{23}}{r_{31}\widetilde{u}^{L\,Rect}+r_{32}\widetilde{v}^{L\,Rect}+r_{33}}\end{cases} \qquad \ldots\ (97).$$

This also applies to the right camera system. A camera system which does not include distortion correction has heretofore been described, and the following method may be used in an actual case including the distortion correction.

It is to be noted that u and v-direction expansion ratios $a_{u}^{Rect}$, $a_{v}^{Rect}$ and image centers $u_{0}^{Rect}$, $v_{0}^{Rect}$ of the image after the rectification in the following step may be appropriately set based on a magnitude of the rectified image.

[Rectification Steps (RecL and RecR Steps) including Distortion Removal]

First, as step RecL1, parameters such as $a_{u}^{Rect}$, $a_{v}^{Rect}$, $u_{0}^{Rect}$, $v_{0}^{Rect}$ are determined.

As step RecL2, with respect to pixel points $(u_{Rect}^{L}, v_{Rect}^{L})$ of the left image after the rectification, the following is calculated:

RecL2-1)

$$\widetilde{u}_{Rect}^{L}=\frac{u_{Rect}^{L}-u_{0}^{L}}{\alpha_{u}^{L}} \quad\text{and}\quad \widetilde{v}_{Rect}^{L}=\frac{v_{Rect}^{L}-v_{0}^{L}}{\alpha_{v}^{L}} \qquad \ldots\ (98)$$

RecL2-2) The normalized pixel values $(\widetilde{u}^L, \widetilde{v}^L)$ are calculated by solving the following:

$$\widetilde{w}^L \begin{bmatrix} \widetilde{u}^L \\ \widetilde{v}^L \\ 1 \end{bmatrix} = {}_L R_{L\,Rect} \begin{bmatrix} \widetilde{u}^L_{Rect} \\ \widetilde{v}^L_{Rect} \\ 1 \end{bmatrix} \qquad \ldots \quad (99)$$

RecL2-3) The normalized coordinate value to which the lens distortion is added is calculated:

$$\begin{cases} \widetilde{u}^L_d = f_1(\widetilde{u}^L, \widetilde{v}^L; k_1, g_1, g_2, g_3, g_4) \\ \widetilde{v}^L_d = f_2(\widetilde{u}^L, \widetilde{v}^L; k_1, g_1, g_2, g_3, g_4) \end{cases} \qquad \ldots \quad (100),$$

where $f_1, f_2$ mean nonlinear functions shown in second term of the above equation (65).

RecL2-4) Coordinate values $u^L_d = a^L_u \widetilde{u}^L_d + u^L_0$, $v^L_d = a^L_v \widetilde{v}^L_d + v^L_0$ on the frame memory imaged by the stereo adaptor and imaging apparatus are calculated. (d means that a distortion element is included.)

RecL2-5) A pixel value of the left image after the rectification process is calculated utilizing a pixel in the vicinity of the pixel vector ($u^L_d, v^L_d$) on the frame memory, and utilizing, for example, a linear interpolation process or the like.

The right image is similarly processed as step RecR1.

The method of the rectification process has been described above, but the rectification method is not limited to this. For example, a method described in Andrea Fusiello, et al., "A compact algorithm for rectification of stereo pairs", Machine Vision and Applications, 2000, 12: 16 to 22 may be used.

The terms required for describing the embodiment and the process method have been described above, and the calibration displacement correction apparatus shown in FIG. 43 will be described hereinafter concretely.

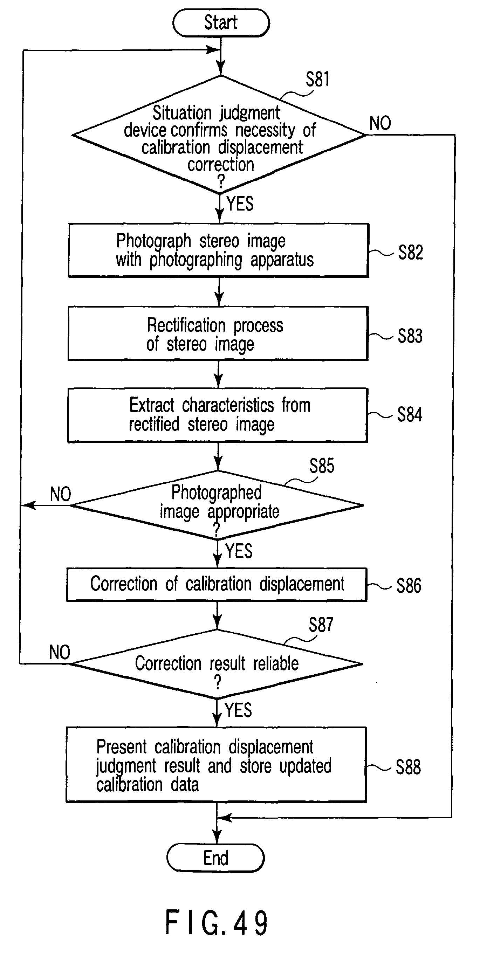

FIG. 49 is a flowchart showing a detailed operation of the calibration displacement correction apparatus in the twelfth embodiment. It is to be noted that the present embodiment is operated by control of the control device 262.

Moreover, in the present embodiment, a concrete operation of solving the problem to correct the inner calibration parameter of the stereo photographing apparatus, that is, the above-described problem 1-1 or 1-2 will be described.

Furthermore, here a system of the calibration displacement correction apparatus having a constitution of FIG. 43, that is, a process including a rectification process will be described. A method of the process is similar even in a system of the constitution of FIG. 42, that is, the calibration displacement correction apparatus which does not perform the rectification process.

It is to be noted that in the present embodiment, the following two types of characteristics are adopted as characteristics necessary for a calibration displacement correction process.

a) Known characteristics

A relative position in a certain coordinate system is specified in characteristics. For example, if there are known characteristics i and j, a distance dij between the characteristics is known beforehand, or another mechanical restriction is clear.

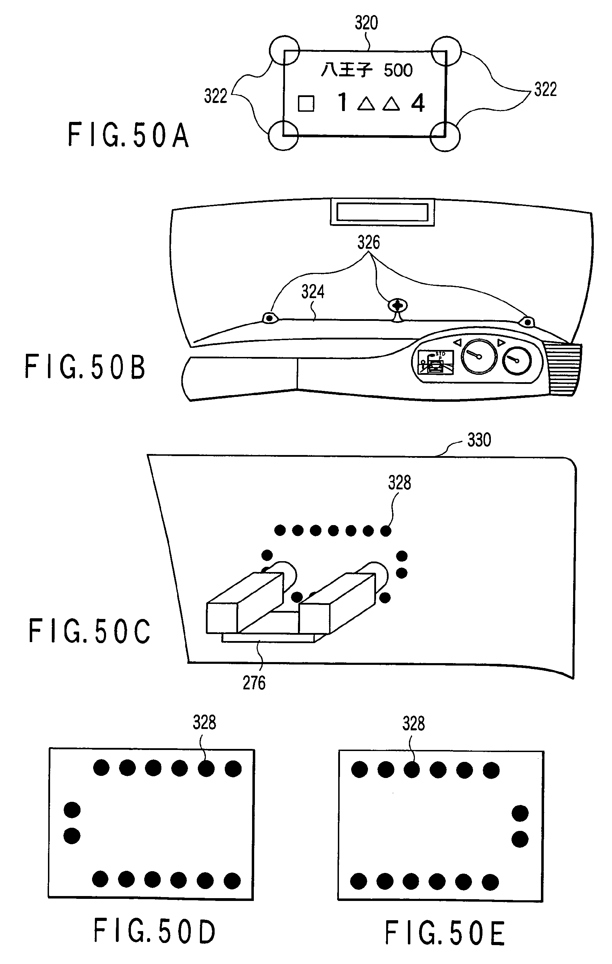

As the example, as shown in FIG. 50A, in a vehicle, four corners or the like of a number plate 320 are examples of the characteristics (known characteristic group 322 in FIG. 50A). As shown in FIG. 50B, a shape on a hood 324 of the vehicle changes in another example (known characteristic group 326 in FIG. 50B).

In this case, a design value is given to a distance between characteristics i and j by a CAD model or the like of the vehicle on the hood 324. A plurality of circular markers and the like may be used as described in Jpn. Pat. Appln. KOKAI Publication No. 2000-227309 by the present applicant.

As external apparatuses for obtaining the above-described known characteristics, various apparatuses can be applied, and the following may be applied as an example in which a specific shape portion of a vehicle comprising an imaging unit is applied. That is, in addition to the respect in which the shape changes on the existing number plate or hood, for example, a marker whose relative position is known is attached as the known characteristic to a part of a windshield, and the three-dimensional position is measured beforehand. Moreover, all or a part of them may be photographed by the stereo photographing apparatus in the example.

A known characteristic group 328 shown in FIG. 50C shows an example of a state in which black-circle known markers are disposed as known characteristics in a part of a windshield 330. In FIG. 50C, the known marker group is disposed in the right/left cameras in such a manner that all or a part of the group can be photographed. As shown in FIGS. 50D and 50E, the marker group is disposed in such a manner as to be reflected in image peripheral portions of right/left stereo images, and designed in such a manner that the group is not reflected in a central portion constituting an important video.

b) Natural Characteristics

Unlike known characteristics, natural characteristics are characteristics extracted from an image photographed by a stereo photographing apparatus. In general, they are sometimes represented as natural features (natural markers). In this natural characteristic, a characteristic in which a property such as a geometric distance between the natural characteristics is not known beforehand is included.

In the present invention, a method of correcting calibration displacement utilizing these two types of characteristics will be described.

Furthermore, a difference between a problem of calibration displacement correction, and general calibration parameter estimation problem will be described. In general calibration parameter estimation problem, it is considered that an initial estimate value of the parameter concerning the calibration is not known. Since all parameters need to be calculated, many calibration amounts are required in many cases. However, in the problem of the calibration displacement correction, the initial estimate value is given beforehand. A main point is placed on correcting of the displacement from the initial estimate value with a small calculation amount, or a small characteristic number.

In the flowchart of FIG. 49, first in step S81, it is judged by the situation judgment device 264 whether or not to correct the calibration displacement at the present time. As a method of judgment, there is the following method.

That is, time, state or the like by which the calibration parameter stored in the calibration data storage device was set in the past is judged. For example, in a case where the calibration displacement correction is periodically performed, a difference between the past time and the present time is taken. When the difference is larger than a certain threshold value, it is judged whether or not to correct the calibration displacement.

Moreover, in another attached photographing apparatus of an automobile or the like, the correction may be judged from the value of an odometer or the like attached to the car.

Furthermore, it is also considered that it is judged whether or not the existing weather or time is suitable for correcting the calibration displacement. For example, in the photographing apparatus for monitoring the outside of the automobile, it is judged that calibration displacement correction is avoided in bad weathers such as night and rain.

In a case where it is judged that the calibration displacement correction is required in view of the above-described situations, this is notified to the control device 262. When the control device 262 receives the notification, the process shifts to step S82. On the other hand, when the calibration displacement correction is unnecessary, or impossible, the present routine ends.

In step S82, a stereo image is photographed by the photographing apparatus 276. As to the image photographed by the photographing apparatus 276, as described above, the image photographed by the photographing apparatus 276 may be an analog image or a digital image. As to the analog image, the image is converted into the digital image.

The images photographed by the photographing apparatus 276 are sent as right and left images to the calibration displacement correction apparatus 268.

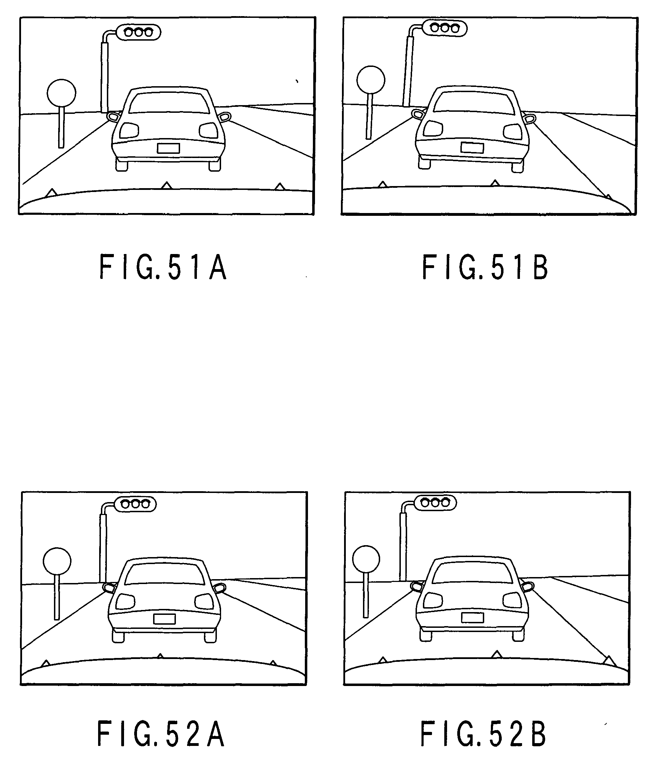

FIGS. 51A and 51B show right/left original image, FIG. 51A shows a left original image photographed by a left camera, and FIG. 51B shows a right original image photographed by a right camera.

Next, in step S83, previously stored calibration data is received from the calibration data storage device 272, and subjected to the rectification process in the rectification process device 282.

It is to be noted that as the calibration data, a set $\mathbf{p}=(\mathbf{c}^L,\mathbf{c}^R,\mathbf{e})$ of inner and outer parameters of right/left cameras of the photographing apparatus are utilized as described above.

When the lens distortions of the right and left cameras constituting the photographing apparatus 276 are remarkable during a rectification process, a process is performed including algorithm of lens distortion correction following the above-described RecL and RecR steps. It is to be noted that when the lens distortion can be ignored, the process may be performed excluding the portion of the distortion correction in RecL and RecR.

The image rectified in this manner is sent to the next characteristic extraction device 266.

FIGS. 52A and 52B show rectified right/left images, FIG. 52A shows a left image, and FIG. 52B shows a right image.

Next, in step S84, characteristics required for the calibration displacement correction are extracted with respect to the stereo image rectified in the step S83. This process is performed by the characteristic extraction device 266.

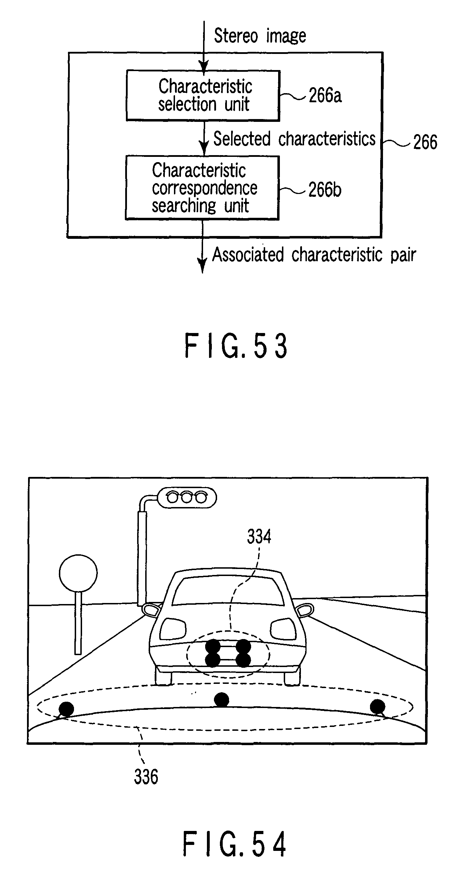

For example, as shown in FIG. 53, the characteristic extraction device 266 comprises a characteristic selection unit 266a and a characteristic correspondence searching unit 266b. In the characteristic selection unit 266a, image characteristics which seem to be effective in correcting the calibration displacement are extracted and selected from one of the rectified stereo images. Moreover, in the characteristic correspondence searching unit 266b, characteristics corresponding to the characteristics selected by the characteristic selection unit 266a are searched in the other image to thereby extract optimum characteristics, and a set of characteristic pairs is produced as data.

Here, details of a characteristic selection unit 266a and a characteristic correspondence searching unit 266b of the characteristic extraction device 266 will be described.

First, in the characteristic selection unit 266a, known characteristics necessary for calibration displacement correction are extracted. In the characteristic selection unit 266a, known characteristics required for detecting the calibration displacement is extracted from one image (e.g., left image) from the rectified stereo image, and the corresponding characteristic is extracted from the right image.

For example, in a case where m known characteristic pairs are obtained in the form of correspondence of the left and right images, the following results:

$$B = \left\{ \left( \left( u_k'^L, v_k'^L \right), \left( u_k'^R, v_k'^R \right) \right): \quad k = 1, 2, \ldots m \right\} \qquad \ldots (101).$$

Moreover, in a case where characteristics i and j are characteristics whose positional relation is known, a three-dimensional distance between the characteristics is registered in set D. Here, D is registered as a set including three-dimensional distance data among the respective characteristics and index in the following form:

$$D = \left\{ d_{ij} : \text{distance\_of\_} pair(i, j) \text{\_is\_known.} \right\} \qquad \ldots (102).$$

Next, the natural characteristics are similarly extracted. That is, natural characteristics required for the calibration displacement correction are extracted with respect to the rectified stereo image. The data of the characteristic pairs obtained in this manner is registered as an image coordinate value after right/left image rectification.

For example, in a case where n characteristic point pairs are obtained in the form of correspondence of the left and right images, the following can be represented:

$$A = \left\{ \left( \left( u_i^L, v_i^L \right), \left( u_i^R, v_i^R \right) \right): \quad i = 1, 2, \ldots n \right\} \qquad \ldots (103).$$

Here, an extraction method in the characteristic selection unit 5a will be described.

First, the extraction method of the known characteristics will be described.

The extraction method of the known characteristics is equivalent to a so-called object recognition problem of image processing. The method is introduced in various documents. In the known characteristics in the present invention, characteristics in which features or geometric properties are known beforehand are extracted from the image. This method is also described, for example, in W.E.L. Grimson, Object Recognition by Computer, MIT Press, 1990 or A. Kosaka and A. C. Kak, "Stereo Vision for Industrial Applications," Handbook of Industrial Robotics, Second Edition, Edited by S. Y. Nof, John Wiley & Sons, Inc., 1999, pp. 269 to 294 and the like.

For example, a case where an object existing outside a vehicle is characteristic in a stereo photographing apparatus attached to a vehicle as shown in FIGS. 50A to 50E. In this case, as the known characteristics, four corners of the number plate 320 of the vehicle in front, characteristics in the shape of the hood 324 of the self vehicle, marker attached onto the windshield 330 and the like are extracted.

As one realizing means of a concrete method of extracting the known characteristics, there is a method, for example, by a Spedge-and-Medge process of Rahardja and Kosaka (document: K. Rahardja and A. Kosaka, "Vision-based bin-picking: Recognition and localization of multiple complex objects using simple visual cues", Proceeding of 1996 IEEE/RSJ International Conference on Intelligent Robots and Systems, Osaka, Japan, November, 1996.) In the method, an image is divided into small regions, a region that seems to be a concerned region is selected from the regions, the concerned region is matched with the known characteristics registered beforehand, and accordingly correct known characteristics are extracted.

Moreover, as described in document of Grimson (W. E. L. Grimson, Object Recognition by Computer, MIT Press, 1990) or document of Kosaka and Kak (A. Kosaka and A. C. Kak, "Stereo vision for industrial applications",

Handbook of Industrial Robotics, Second Edition, Edited by S. Y. Nof, John Wiley & Sons, Inc., 1999, pp. 269 to 294), there is a method in which edge components are extracted, thereafter edge shape, curvature or the like is calculated, and known characteristics are extracted. In the present invention, any method described here may be used.

FIG. 54 is a diagram showing one example of the extraction results. In FIG. 54, as the known characteristics, a known characteristic point group 334 and known characteristic point group 336 comprising characteristic points, whose three-dimensional positional relation is known, are extracted, and selected in the example.

Next, a method of extracting natural characteristics will be described.

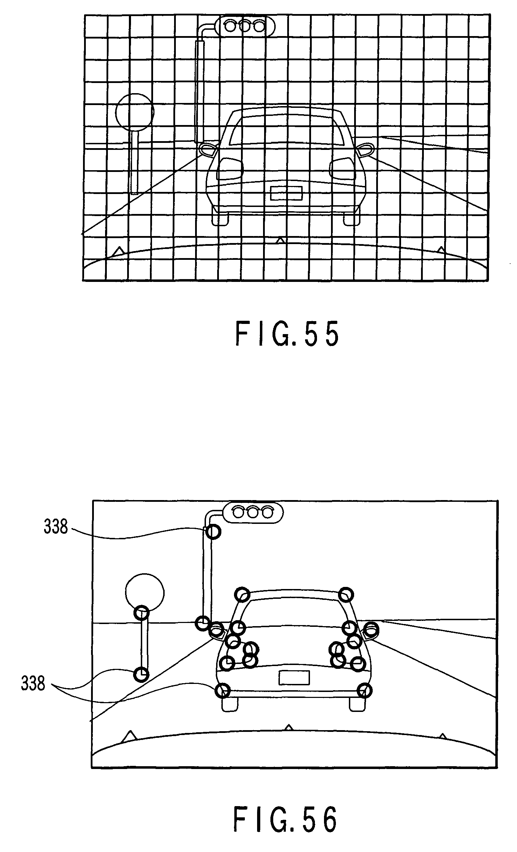

First, in the characteristic selection unit 266a, characteristics which seem to be effective in the calibration displacement correction are selected in one image, for example, the left image. For example, as the characteristics, when the characteristic points are set as candidates, first the rectified left image is divided into small blocks comprising M×N squares as shown in FIG. 55. Moreover, a characteristic point such as at most one corner point is extracted from the image in each block.

As this method, for example, interest operator, corner point extraction method or the like may be utilized as described in reference document: R. Haralick and L. Shapiro, Computer and Robot Vision, Volume II, pp. 332 to 338, Addison-Wesley, 1993. Alternatively, an edge component is extracted in each block, and an edge point whose intensity is not less than a certain threshold value may be used as the characteristic point.

Here, it is important that there is a possibility that the characteristic point is not selected from the region in a case where a certain block comprises a completely uniform region only. An example of the characteristic point selected in this manner is shown in FIG. 56. In FIG. 56, points 338 shown by ○ are characteristics selected in this manner.

Next, the characteristic correspondence searching unit 266b will be described. The characteristic correspondence searching unit 266b has a function of extracting, from the other image, the characteristic corresponding to the characteristic selected from one image by the characteristic selection unit 266a. The corresponding characteristic is searched by the following method in the characteristic correspondence searching unit 266b.

Here, setting of a searching range will be described.

In the image after the rectification process, prepared in the step S83, previously stored calibration data from the calibration data storage device 272 is used. Therefore, when there is calibration displacement, the correspondence point does not necessarily exist on the epipolar line. Therefore, as to an associated/searched range, a correspondence searching range adapted to maximum assumed calibration displacement is sometimes set. Actually, regions above/below the epipolar line in the right image corresponding to the characteristic (u, v) in the left image are prepared.

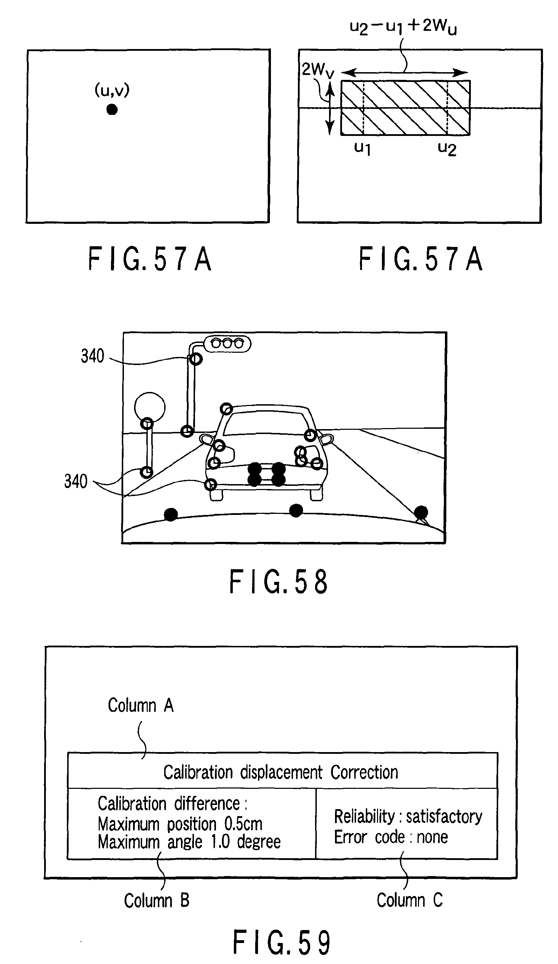

For example, assuming that the epipolar line is in the right image, and a range of $[u_1, u_2]$ on a horizontal line $v=v_e$ is searched, as shown in FIGS. 57A, 57B, the following rectangular region having width $2W_u \times (u_2-u_1+2W_v)$ may be searched:

$$\left[u_1 - W_u, u_2 + W_u\right] \times \left[v_e - W_v, v_e + W_v\right] \qquad \ldots (104).$$

The searching range is set in this manner.

Next, correspondence searching by area base matching will be described.

Optimum correspondence is searched in the searching region determined by the setting of the searching range. As a method of searching optimum correspondence, for example, there is a method described in document J. Weng, et al., Motion and Structure from Image Sequences, Springer-Verlag, pp. 7 to 64, 1993. Another method may be used in which an image region most similar to a pixel value of the region is searched in the correspondence searching region in the right image utilizing the region in the vicinity in the characteristic in the left image.

In this case, assuming that luminance values of a coordinate (u,v) of the rectified right/left images are $I^L_{\mathrm{Re}ct}(u,v)$, $I^R_{\mathrm{Re}ct}(u,v)$, respectively, similarity or non-similarity in position (u', v') in the right image can be represented, for example, as follows using the coordinate (u,v) of the left image as a reference:

$$\mathrm{SAD}: \sum_{(\alpha,\beta)\in W}\left|I^L(u+\alpha, v+\beta) - I^R(u'+\alpha, v'+\beta)\right| \qquad \ldots (105);$$

$$\text{SSD:} \quad \sum_{(\alpha,\beta)\in W}\left(I^L(u+\alpha,v+\beta)-I^R(u'+\alpha,v'+\beta)\right)^2 \qquad \ldots (106);$$

and

$$\text{NCC:} \quad \frac{\dfrac{1}{N_w}\sum_{(\alpha,\beta)\in W}\left(I^L(u+\alpha,v+\beta)-\overline{I_W^L}\right)\left(I^L(u'+\alpha,v'+\beta)-\overline{I_W^R}\right)}{\overline{\overline{I_W^L}}\cdot\overline{\overline{I_W^R}}} \qquad \ldots (107),$$

where $\overline{I_W^L}$ and $\overline{\overline{I_W^L}}$ indicate average value and standard deviation of luminance values in the vicinity of the characteristic (u, v) of the left image. Here, $\overline{I_W^R}$ and $\overline{\overline{I_W^R}}$ indicate average value and standard deviation of luminance values in the vicinity of the characteristic (u', v') of the right image. Moreover, $\alpha$ and $\beta$ are indexes indicating the vicinity of W.

Quality or reliability of the matching can be considered utilizing these similarity or non-similarity values. For example, in a case where SAD is considered, when the value of the SAD obtains a small value having a sharp peak in the vicinity of the correspondence point, it can be said that the reliability of the correspondence point is high. The reliability is considered for each correspondence point judged to be optimum. The correspondence point (u', v') is determined. Needless to say, when the reliability is considered, the following is possible:

Correspondence point to correspondence point (u', v'): reliability is not less than the threshold value; and
No correspondence point: reliability is less than the threshold value.

In a case where the reliability is considered in this manner, needless to say, the pixel having the non-correspondence point exists in the left image or right image.

The correspondence characteristics extracted in this manner, which are (u, v) and (u', v'), may be registered as $(u_i^L,v_i^L),(u_i^R,v_i^R)$ shown in equation (99).

The characteristic in the associated right image is shown in FIG. 58 in this manner. In FIG. 58, points 340 shown by ○ indicate characteristic points in the right image associated in this manner.

Returning to the flowchart of FIG. 49, in step S85, the number of the characteristic pairs or reliability registered in the step S84 is checked further by the characteristic extraction device 266. Conditions excluded in this step are as follows.

That is, in a first condition, in a case where there is not any set whose relative distance is known among the registered characteristics, it is judged that the calibration displacement correction cannot be performed, and the process shifts to the step S81 again to repeat a photographing process and the like. In a second condition, in a case where the number of the registered characteristic pairs is smaller than a certain predetermined number, it can be judged that the photographed stereo image is inappropriate, and the process shifts to the step S81 again to repeat the photographing process and the like

The repetition of this photographing process is performed by a control instruction issued from the control device 262 based on output data of the characteristic extraction device 266. This also applies to the respective constitutions of FIGS. 42, 43, 62, 64, 66, and 69.

On the other hand, when the condition does not correspond to the above-described exclusion conditions, and it is judged that the characteristic pairs having reliabilities are obtained, the set of the characteristic pairs is sent to the calibration data correction device 268.

In the subsequent step S86, the characteristics extracted in the step S84 are utilized, and the calibration data is corrected. This is performed in the calibration data correction device 268. Here, first mathematical description required for correcting the calibration data is performed. It is to be noted that here, restriction conditions in a case where correspondence of the natural characteristics or the known characteristics is given will be first described.

[Restriction Conditions concerning Natural Characteristics]

Now a left camera coordinate system L is used as a reference, and a three-dimensional point $(x^L, y^L, z^L)$ defined in the coordinate system is considered.

Then, assuming that the same three-dimensional point is described by $(x^R, y^R, z^R)$ in a right camera coordinate system R, the following is established between the both using $\mathbf{e}=(\phi_x, \phi_y, \phi_z, t_x, t_y, t_z)$ as a variable:

$$\begin{bmatrix} x^R \\ y^R \\ z^R \end{bmatrix} = {}_R R_L \begin{bmatrix} x^L \\ y^L \\ z^L \end{bmatrix} + {}_R T_L = \begin{bmatrix} r_{11} & r_{12} & r_{13} \\ r_{21} & r_{22} & r_{23} \\ r_{31} & r_{32} & r_{33} \end{bmatrix} \begin{bmatrix} x^L \\ y^L \\ z^L \end{bmatrix} + \begin{bmatrix} t_x \\ t_y \\ t_z \end{bmatrix} \quad \cdots \quad (108).$$

Now, a projection point of this three-dimensional point onto the left camera and that onto the right camera are considered. It is assumed that a coordinate value of a left camera image subjected to projection and thereafter distortion correction is $(u_p^L, v_p^L)$, and a coordinate value of the corresponding right camera image is $(u_p^R, v_p^R)$. At this time, normalized coordinate values can be represented by the following:

$$\widetilde{u}^L \equiv \frac{u_p^L - u_0^L}{\alpha_u^L} = \frac{x^L}{z^L}, \quad \widetilde{v}^L \equiv \frac{v_p^L - v_0^L}{\alpha_v^L} = \frac{y^L}{z^L}$$

$$\widetilde{u}^R \equiv \frac{u_p^R - u_0^R}{\alpha_u^R} = \frac{x^R}{z^R}, \quad \widetilde{v}^R \equiv \frac{v_p^R - v_0^R}{\alpha_v^R} = \frac{y^R}{z^R} \qquad \cdots \quad (109).$$

When the above equation (48) is substituted, the following results:

$$\begin{cases} \widetilde{u}^R = \dfrac{r_{11}x^L + r_{12}y^L + r_{13}z^L + t_x}{r_{31}x^L + r_{32}y^L + r_{33}z^L + t_z} = \dfrac{\left(r_{11}\widetilde{u}^L + r_{12}\widetilde{v}^L + r_{13}\right)z^L + t_x}{\left(r_{31}\widetilde{u}^L + r_{32}\widetilde{v}^L + r_{33}\right)z^L + t_z} \\[3mm] \widetilde{v}^R = \dfrac{r_{21}x^L + r_{22}y^L + r_{23}z^L + t_y}{r_{31}x^L + r_{32}y^L + r_{33}z^L + t_z} = \dfrac{\left(r_{21}\widetilde{u}^L + r_{22}\widetilde{v}^L + r_{23}\right)z^L + t_y}{\left(r_{31}\widetilde{u}^L + r_{32}\widetilde{v}^L + r_{33}\right)z^L + t_z} \end{cases} \quad \cdots \quad (110).$$

Therefore, with respect to the corresponding left/right natural characteristic points $(u_i^L, v_i^L)$ and $(u_i^R, v_i^R)$ (i = 1, 2, ..., n), the following restriction condition (constraint equation) has to be established:

$$f \equiv \widetilde{u}_i^R \left[ \left( r_{31}\widetilde{u}_i^L + r_{32}\widetilde{v}_i^L + r_{33} \right) t_y - \left( r_{21}\widetilde{u}_i^L + r_{22}\widetilde{v}_i^L + r_{23} \right) t_z \right]$$
$$+ \widetilde{v}_i^R \left[ - \left( r_{31}\widetilde{u}_i^L + r_{32}\widetilde{v}_i^L + r_{33} \right) t_x + \left( r_{11}\widetilde{u}_i^L + r_{12}\widetilde{v}_i^L + r_{13} \right) t_z \right]$$
$$+ \left( r_{21}\widetilde{u}_i^L + r_{22}\widetilde{v}_i^L + r_{23} \right) t_x - \left( r_{11}\widetilde{u}_i^L + r_{12}\widetilde{v}_i^L + r_{13} \right) t_y = 0$$

or

$$f \equiv \frac{\left(r_{31}\widetilde{u}_i^L + r_{32}\widetilde{v}_i^L + r_{33}\right)t_y - \left(r_{21}\widetilde{u}_i^L + r_{22}\widetilde{v}_i^L + r_{23}\right)t_z}{\left(r_{31}\widetilde{u}_i^L + r_{32}\widetilde{v}_i^L + r_{33}\right)t_x - \left(r_{11}\widetilde{u}_i^L + r_{12}\widetilde{v}_i^L + r_{13}\right)t_z}\widetilde{u}_i^R$$
$$+ \frac{\left(r_{21}\widetilde{u}_i^L + r_{22}\widetilde{v}_i^L + r_{23}\right)t_x - \left(r_{11}\widetilde{u}_i^L + r_{12}\widetilde{v}_i^L + r_{13}\right)t_y}{\left(r_{31}\widetilde{u}_i^L + r_{32}\widetilde{v}_i^L + r_{33}\right)t_x - \left(r_{11}\widetilde{u}_i^L + r_{12}\widetilde{v}_i^L + r_{13}\right)t_z} = 0 \qquad \cdots (111).$$

Moreover, with respect to $z_i^L$ at this time, the following results:

$$z_i^L = \frac{t_x - \widetilde{u}_i^R t_z}{\widetilde{u}_i^R\left(r_{31}\widetilde{u}_i^L + r_{32}\widetilde{v}_i^L + r_{33}\right) - \left(r_{11}\widetilde{u}_i^L + r_{12}\widetilde{v}_i^L + r_{13}\right)}$$
$$= \frac{t_y - \widetilde{v}_i^R t_z}{\widetilde{v}_i^R\left(r_{31}\widetilde{u}_i^L + r_{32}\widetilde{v}_i^L + r_{33}\right) - \left(r_{21}\widetilde{u}_i^L + r_{22}\widetilde{v}_i^L + r_{23}\right)} \qquad \cdots (112).$$

Therefore, when the correspondence points of the left original image and right original image are given by image points $(u_i^L, v_i^L)$ and $(u_i^R, v_i^R)$ including distortions, constraint equations concerning all are given as follows:

$$\begin{cases} \widetilde{u}_d^L = \widetilde{u}_i^L + \left(g_1^L + g_3^L\right)\left(\widetilde{u}_i^L\right)^2 + g_4^L\,\widetilde{u}_i^L\,\widetilde{v}_i^L + g_1^L\left(\widetilde{v}_i^L\right)^2 + k_1^L\,\widetilde{u}_i^L\left(\left(\widetilde{u}_i^L\right)^2 + \left(\widetilde{v}_i^L\right)^2\right) \\ \widetilde{v}_d^L = \widetilde{v}_p^L + g_2^L\left(\widetilde{u}_i^L\right)^2 + g_3^L\,\widetilde{u}_i^L\,\widetilde{v}_i^L + \left(g_2^L + g_4^L\right)\left(\widetilde{v}_i^L\right)^2 + k_1^L\,\widetilde{v}^L\left(\left(\widetilde{u}_i^L\right)^2 + \left(\widetilde{v}_i^L\right)^2\right) \end{cases}$$
$$\begin{cases} u_i^L = \alpha_u^L\,\widetilde{u}_d^L + u_0^L \\ v_i^L = \alpha_v^L\,\widetilde{v}_d^L + v_0^L \end{cases} \qquad \cdots (113);$$

$$\begin{cases} \widetilde{u}_d^R = \widetilde{u}_i^R + \left(g_1^R + g_3^R\right)\left(\widetilde{u}_i^R\right)^2 + g_4^R\,\widetilde{u}_i^R\,v_i^R + g_1^R\left(\widetilde{v}_i^R\right)^2 + k_1^R\,\widetilde{u}_i^R\left(\left(\widetilde{u}_i^R\right)^2 + \left(\widetilde{v}_i^R\right)^2\right) \\ \widetilde{v}_d^R = \widetilde{v}_i^R + g_2^R\left(\widetilde{u}_i^R\right)^2 + g_3^R\,\widetilde{u}_i^R\,\widetilde{v}_i^R + \left(g_2^R + g_4^R\right)\left(\widetilde{v}_i^R\right)^2 + k_1^R\,\widetilde{v}_i^R\left(\left(\widetilde{u}_i^R\right)^2 + \left(\widetilde{v}_i^R\right)^2\right) \end{cases}$$
$$\begin{cases} u_i^R = \alpha_u^R\,\widetilde{u}_d^R + u_0^R \\ v_i^R = \alpha_v^R\,\widetilde{v}_d^R + v_0^R \end{cases} \qquad \cdots (114);$$

$$f \equiv \widetilde{u}_i^R\left[\left(r_{31}\widetilde{u}_i^L + r_{32}\widetilde{v}_i^L + r_{33}\right)t_y - \left(r_{21}\widetilde{u}_i^L + r_{22}\widetilde{v}_i^L + r_{23}\right)t_z\right]$$
$$+ \widetilde{v}_i^R\left[-\left(r_{31}\widetilde{u}_i^L + r_{32}\widetilde{v}_i^L + r_{33}\right)t_x + \left(r_{11}\widetilde{u}_i^L + r_{12}\widetilde{v}_i^L + r_{13}\right)t_z\right]$$
$$+ \left(r_{21}\widetilde{u}_i^L + r_{22}\widetilde{v}_i^L + r_{23}\right)t_x - \left(r_{11}\widetilde{u}_i^L + r_{12}\widetilde{v}_i^L + r_{13}\right)t_y = 0$$

or

$$f \equiv \frac{\left(r_{31}\tilde{u}_i^L + r_{32}\tilde{v}_i^L + r_{33}\right)t_y - \left(r_{21}\tilde{u}_i^L + r_{22}\tilde{v}_i^L + r_{23}\right)t_z}{\left(r_{31}\tilde{u}_i^L + r_{32}\tilde{v}_i^L + r_{33}\right)t_x - \left(r_{11}\tilde{u}_i^L + r_{12}\tilde{v}_i^L + r_{13}\right)t_z}\tilde{u}_i^R$$
$$+ \frac{\left(r_{21}\tilde{u}_i^L + r_{22}\tilde{v}_i^L + r_{23}\right)t_x - \left(r_{11}\tilde{u}_i^L + r_{12}\tilde{v}_i^L + r_{13}\right)t_y}{\left(r_{31}\tilde{u}_i^L + r_{32}\tilde{v}_i^L + r_{33}\right)t_x - \left(r_{11}\tilde{u}_i^L + r_{12}\tilde{v}_i^L + r_{13}\right)t_z} = 0$$

$$\ldots (115).$$

[Restriction Conditions between Known Characteristics]

In a case where at least two known characteristic points i, j are observed, assuming that coordinate values in a left camera coordinate system in the three-dimensional space are $(x_i^L, y_i^L, z_i^L), (x_j^L, y_j^L, z_j^L)$, three-dimensional distance dij between the known characteristic points is known from the definition, and therefore the following results:

$$d_{ij}^{\ 2} = \left(x_i^L - x_j^L\right)^2 + \left(y_i^L - y_j^L\right)^2 + \left(z_i^L - z_j^L\right)^2$$
$$= \left(\tilde{u}_i^L z_i^L - \tilde{u}_j^L z_j^L\right)^2 + \left(\tilde{v}_i^L z_i^L - \tilde{v}_j^L z_j^L\right)^2 + \left(z_i^L - z_j^L\right)^2 \quad \ldots \quad (116).$$

Therefore, the following restriction condition has to be established:

$$g_{ij} \equiv \left(\tilde{u}_i^L z_i^L - \tilde{u}_j^L z_j^L\right)^2 + \left(\tilde{v}_i^L z_i^L - \tilde{v}_j^L z_j^L\right)^2 + \left(z_i^L - z_j^L\right)^2 - d_{ij}^{\ 2} = 0 \ldots \quad (117),$$

where $z_i^L, z_j^L$ is obtained from equation (118).

Therefore, in the known characteristic points, in addition to the natural characteristic points, the following results:

$$\begin{cases} z_i^L = \dfrac{t_x - \tilde{u}_i^R t_z}{\tilde{u}_i^R\left(r_{31}\tilde{u}_i^L + r_{32}\tilde{v}_i^L + r_{33}\right) - \left(r_{11}\tilde{u}_i^L + r_{12}\tilde{v}_i^L + r_{13}\right)} \\[4mm] z_j^L = \dfrac{t_x - \tilde{u}_j^R t_z}{\tilde{u}_j^R\left(r_{31}\tilde{u}_j^L + r_{32}\tilde{v}_j^L + r_{33}\right) - \left(r_{11}\tilde{u}_j^L + r_{12}\tilde{v}_j^L + r_{13}\right)} \end{cases} \quad \ldots \quad (118);$$

and

$$g_{ij} \equiv \left(\tilde{u}_i^L z_i^L - \tilde{u}_j^L z_j^L\right)^2 + \left(\tilde{v}_i^L z_i^L - \tilde{v}_j^L z_j^L\right)^2 + \left(z_i^L - z_j^L\right)^2 - d_{ij}^{\ 2} = 0 \ldots \quad (119).$$

A constraint equation (equation (115): 1 constraint equation of freedom restriction) concerning an absolute distance is added.

While the restriction conditions described above are utilized, the calibration data is corrected in the calibration data correction apparatus 6.

The correction method will be described in a case where calibration displacement is assumed, and a parameter to be corrected or updated is p.

Concretely, an expansion Kalman filter is utilized. Since details are described, for example, in document A. Kosaka and A. C. Kak, "Fast vision-guided mobile robot navigation using model-based reasoning and prediction of uncertainties," Computer Vision, Graphics and Image Processing - Image Understanding, Vol. 56, No. 3, November, pp. 271 to 329, the outline only will be described here.

A statistic amount concerning the displacement obtained from a maximum value of the displacement, an average value of the displacement or the like is first prepared in the calibration parameter. That is, an estimate error average value $\overline{p}$ concerning a parameter p, and an estimate error covariance matrix $\Sigma$ are prepared. It is assumed that an actual measurement value concerning a measurement value r measured from the image is r $\hat{r}$ , , a measurement error covariance matrix is $\Lambda$. At this time, each constraint equation indicates a function concerning the parameter p and each measurement value r, and is given by the following as described above:

$$\mathbf{f}(\mathbf{p},\mathbf{r}) = \mathbf{0} \qquad\qquad\qquad \ldots (120).$$

Correction of p will be described using these constraint equations.

Concretely, the following steps are taken.

[Expansion Kalman Filter Step]

(K-1) The estimate average value p and estimate error covariance matrix $\Sigma$ of the parameter to be corrected are prepared.

(K-2) With respect to a constraint equation f restricted by each characteristic or characteristic set, the statistic values (estimate average value $\overline{p}$ and estimate error covariance matrix $\Sigma$) are repeatedly updated in the following steps.

K-2-1) $M = \dfrac{\partial f}{\partial p}$ is calculated. Additionally, M is evaluated by $\mathbf{p} = \overline{p}$ , $\mathbf{r} = \hat{r}$ .

K-2-2) $G = \dfrac{\partial f}{\partial r} \Lambda \left[ \dfrac{\partial f}{\partial r} \right]^{t}$ is calculated utilizing the measurement error covariance matrix $\Lambda$ concerning the measurement value r. Additionally, G is evaluated by $\mathbf{p} = \overline{p}$ , $\mathbf{r} = \hat{r}$ .

K-2-3) Kalman gain which is K is calculated. $K = \Sigma M^{t} (G + M\Sigma M^{t})^{-1}$

K-2-4) A constraint equation f is evaluated by $\mathbf{p} = \overline{p}$ , $\mathbf{r} = \hat{r}$ .

K-2-5) Update values ( $\overline{p}_{new}, \Sigma_{new}$) of the statistic values (estimate average value $\overline{p}$ and estimate error covariance matrix $\Sigma$) of p are calculated.

(I is a unit matrix.)

$$\overline{p}_{new} = \overline{p} - Kf$$

$$\Sigma_{new} = (I - KM)\Sigma$$

K-2-6) $\overline{p} = \overline{p}_{new}$, $\Sigma = \Sigma_{new}$ is set for update by the next constraint equation.

When this update is repeatedly performed with respect to all the constraint equations, the parameter p is gradually updated, a variance value of each parameter indicated by the estimate error covariance matrix concerning p decreases, and p can be robustly updated.

When this expansion Kalman filter system is concretely applied to the method of the calibration displacement correction, the following results:

Sub-step S-1:

(S-1-1) Selection of parameter to be corrected by calibration displacement
First, a calibration parameter to be corrected is selected. This is determined by p = (c1, c12, e) or p = e following the above-described (Problem 1-1) or (Problem 1-2).
(S-1-2) Setting of initial estimate parameter

The estimate error average value $\overline{p}$ and the estimate error covariance matrix $\Sigma$ to be taken by the parameter p are set in accordance with the assumed maximum displacement value of the calibration parameter p to be corrected. This can be easily determined from an empirical law, experiment or the like concerning the calibration displacement.

Sub-step S-2:
With respect to sets B, D of the known characteristics shown by the above equations (101), (102), the calibration parameter p is successively updated and corrected utilizing the constraint equations of the above equations (115) and (117).
Sub-step S-3:
With respect to the natural characteristics included in the set A, the calibration parameter p is corrected utilizing the restriction condition of the equation (115).

By the use of this system, it is possible to easily correct the calibration parameter.

Moreover, in the above-described method, it has been assumed that there is not any abnormal value in the measurement value in the image or any mis-correspondence in the correspondence point searching, and it is also actually important to perform the abnormal value removal or mis-correspondence removal. The method is described in detail, for example, in document A. Kosaka and A. C. Kak, "Fast vision-guided mobile robot navigation using model-based reasoning and prediction of uncertainties," Computer Vision, Graphics and Image Processing - Image Understanding, Vol. 56, No. 3, November, pp. 271 to 329, or A. Kosaka and A. C. Kak, "Stereo vision for industrial applications," Handbook of Industrial Robotics, Second Edition, Edited by S. Y. Nof, John Wiley & Sons, Inc., 1999, pp. 269 to 294 and the like. Therefore, details are omitted here. Needless to say, such method may be utilized.

It is to be noted that the correction parameter p of the calibration displacement is calculated as described above. However, when the value of the constraint equation f calculated in the above step K-2-4 is judged as a subsidiary effect of the expansion Kalman filter, it is possible to judge the degree of reliability placed by the correction parameter p. In the calibration displacement correction apparatus, the reliability is calculated with the value of the constraint equation f.

Returning to the flowchart of FIG. 49, in step S87, it is judged based on the reliability calculated by the calibration displacement correction apparatus 280 whether or not the correction parameter calculated by the calibration displacement correction apparatus is reliable data. When the data is reliable, the process shifts to step S88. When the data is not reliable, the process shifts to the step S81 to repeat the step of the calibration displacement correction.

In the step S88, the result judged in the step S87 is presented by the correction result presenting device 87. Additionally, the updated calibration data is stored in the calibration data storage device 272.

FIG. 59 is a diagram showing one example of the correction result presenting device 270. In the present embodiment, a display device is utilized as the correction result presenting device 270, and more concretely the device comprises a display, an LCD monitor or the like. Needless to say, the display may be a display for another application. The correction result may be displayed utilizing a part of screen of the display, or the device may be of a type to switch a mode of screen display for the correction result display.

The correction result presenting device 270 in the embodiment of the present invention is constituted to be capable of displaying that the process relating to calibration displacement correction is being operated by cooperation with the control device 262 or the calibration data correction device 268 (i.e., the device functions as an indicator which displays this effect). Alternatively, the device is constituted to be capable of displaying information indicating a difference between the parameter obtained as a result of the process relating to the displacement correction and the parameter held beforehand in the calibration data holding unit. Furthermore, the device is constituted to be capable of displaying a status indicating reliability concerning the displacement correction. Additionally, when regular displacement correction cannot be performed, an error code indicating the effect can be displayed.

The display of FIG. 59 has three columns A, B, C, and the result is displayed in each column.

The portion of the column A flashes during the calibration displacement correction. When the result of the correction is obtained, a result concerning a displacement amount or correction amount and the like are displayed in the portion of the column B. The reliability concerning the displacement correction is displayed in the portion of the column C. In addition to the reliability (status), interim results indicated in the above-described steps S85, S86, error code concerning the correction process and the like are displayed.

When this method is taken, various modes of the correction or processing results can be effectively displayed for a user, an operator who maintains the stereo photographing device and the like.

As another method of presenting the displacement correction result, presentation by sound, presentation by warning alarm or sound source and the like can be considered.

It is to be noted that the above-described display device is functionally connected to the displacement image processing system comprising the calibration correction apparatus, and the control device. The device performs required display related to the calibration correction apparatus (the calibration displacement correction unit disposed inside), calculation unit (function unit for calculating the distance), and the output of the imaging unit (imaging apparatus) in such a manner that the display can be recognized by a user (driver). As described above, the device also functions as the correction result presenting device or a portion of the device.

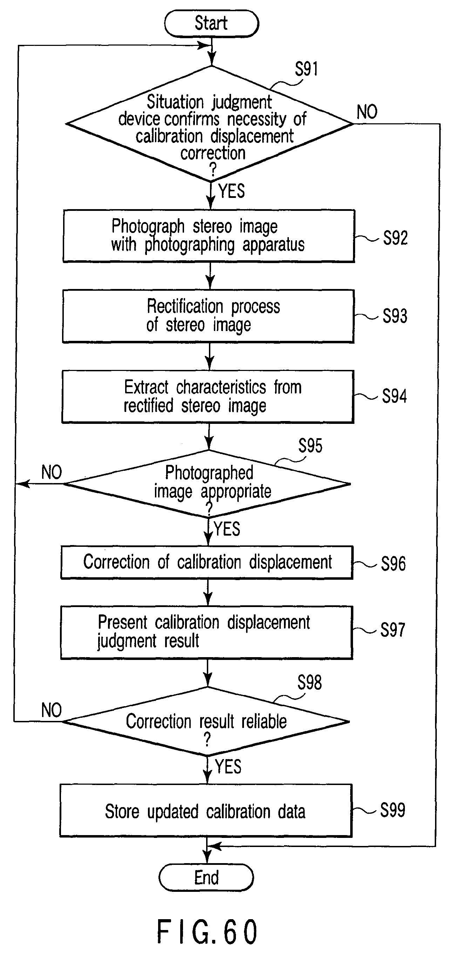

FIG. 60 is an operation flowchart constituted by modifying the above-described flowchart of FIG. 49.

The flowchart of FIG. 60 is different from that of FIG. 49 in steps S97, S98, and S99. Since other steps S91 to S96 are similar to the steps S81 to S86 in the flowchart of FIG. 49, the description is omitted here.

In step S97, first, results such as correction parameters of calibration displacements are presented to a user, an operator or the like. Thereafter, it is judged in step S98 by the user or operator whether or not the correction result is sufficiently reliable. In accordance with the result, the process shifts to step S99 to store the result in the calibration data storage device 272, or the process shifts to the step S91 to repeat the process.

By the above-described method, the calibration displacement correction having higher reliability can be realized.

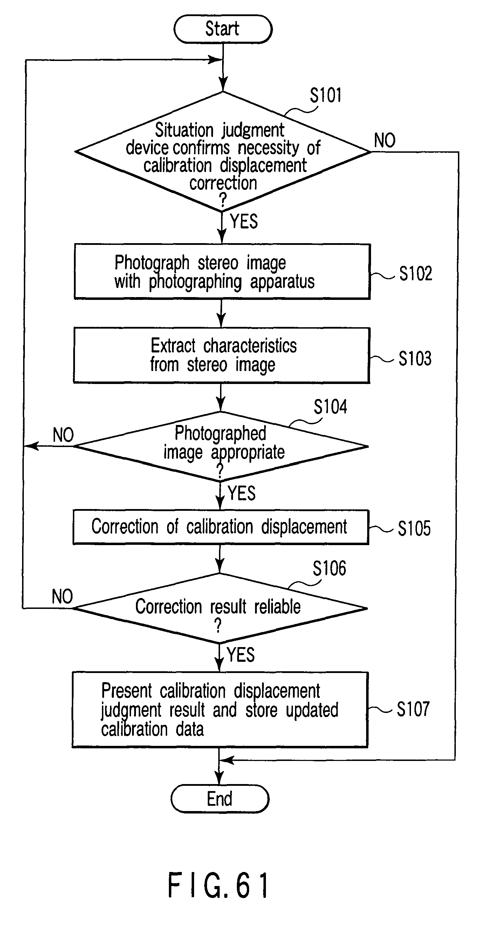

It is to be noted that the method has been described above on the assumption that the rectification process is performed in step S93. However, as shown in the flowchart of FIG. 61, needless to say, the rectification process may be omitted, and the whole process can be performed. In this case, the epipolar line restriction is not necessarily a horizontal line, and a process amount increases in the correspondence searching of the characteristic points, but it is evident that a similar effect is obtained in the basic constitution.

Steps S101 and S102, S104 to 107 in the flowchart of FIG. 20 are similar to the steps S81 and S82, S85 to S88 in the flowchart of FIG. 49, and different only in the operation by which the characteristics are extracted from the stereo image in the step S103. Therefore, description of an operation of each step is omitted here.

[Thirteenth Embodiment]

Next, a thirteenth embodiment of the present invention will be described.

As the thirteenth embodiment, calibration correction of position/posture shift between a stereo photographing apparatus and an external apparatus will be described.

In the above-described twelfth embodiment, the correction of the calibration parameter (problem 1-1, problem 1-2) inside the stereo photographing apparatus has been described. In the thirteenth embodiment, a method of correcting the calibration of the position/posture shift (problem 2) between the stereo photographing apparatus and the external apparatus will be described.

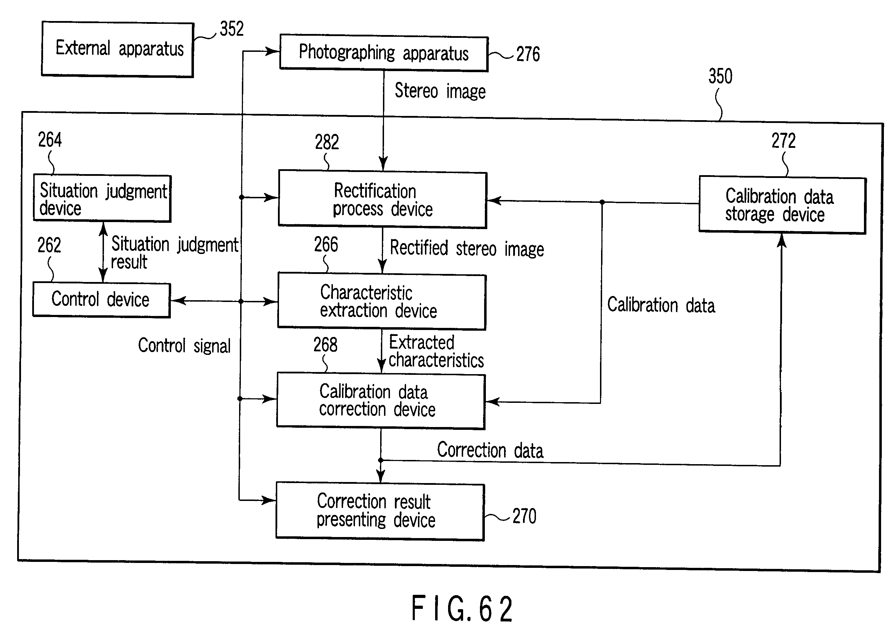

FIG. 62 is a block diagram showing a basic constitution of the calibration displacement correction apparatus in the thirteenth embodiment of the present invention.

In FIG. 62, a photographing apparatus 276 which photographs a stereo image and which is to correct calibration displacement is subjected to calibration displacement correction by a calibration displacement correction apparatus 350.

The calibration displacement correction apparatus 350 comprises: a control device 262; a situation judgment device 264; a rectification process device 282; a characteristic extraction device 266; a calibration data correction device 268; a correction result presenting device 270; and a calibration data storage device 272 in the same manner as in the calibration displacement correction apparatus 280 shown in FIG. 43. Furthermore, an external apparatus 352 which defines a reference position is added to this calibration displacement correction apparatus 350. That is, a method is shown which corrects measured calibration data of the position/posture of the stereo photographing apparatus based on the coordinate system defined by the external apparatus.

Therefore, a parameter which is to correct the calibration displacement corresponds to $p = e'$ of the equation (88).

It is to be noted that each device in the calibration displacement correction apparatus 350 may comprise hardware or circuit, or may be processed by software of a computer or a data processing apparatus.

Here, characteristics utilized in the present thirteenth embodiment will be briefly described.

Concretely, only known characteristics are handled. Additionally, the characteristics are based on the external apparatus, and the only characteristics in which the position is defined are utilized. For example, as shown in FIGS. 50A to 50E, when a vehicle is assumed as the external apparatus, the known characteristics in the vehicle front are utilized.

In this case, it is assumed that the known characteristics are characteristics ($x_i^0, y_i^0, z_i^0$) (i-1, 2, ..., n) in a coordinate system defined by the external apparatus, and are stored in the calibration data storage device.

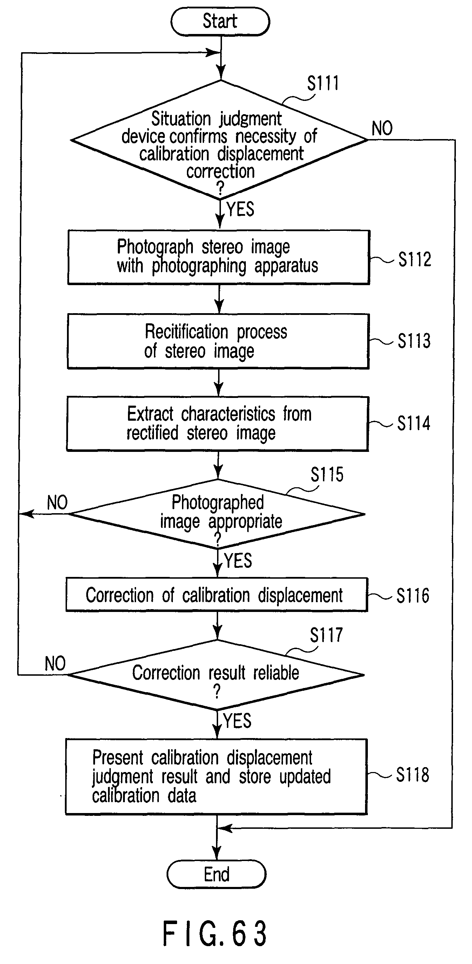

FIG. 63 is a flowchart showing a detailed operation of the calibration displacement correction apparatus in the present thirteenth embodiment. It is to be noted that the present embodiment is operated by the control of the control device 262.

Basic steps are similar to those of the flowchart of the twelfth embodiment shown in FIG. 49. That is, steps S111 to S113, S115, S117 and S118 are similar to the steps S81 to S83, S85, S87 and S88 in the flowchart of FIG. 49, and steps S114 and S116 are different. Therefore, in the following description, the only different steps will be described.

In the step S114, the characteristics extracted from a rectified image are only known characteristics as described above. Since the characteristic extraction method has been described above in detail in the twelfth embodiment, the description thereof is omitted here.

Additionally, the characteristics of the left image and the right image corresponding to the known characteristics ($x_i^0, y_i^0, z_i^0$) (i-1, 2, ..., n) are extracted in the form of $(u_i^L, v_i^L), (u_i^R, v_i^R)$ .

Moreover, in the step S116, the calibration displacement is corrected.

That is, the calibration data p = e' is corrected. Prior to the description of the correction, restriction conditions to be satisfied by a position/posture parameter p = e' which is the calibration data will be described.

[Restriction Conditions concerning Position/Posture Parameter between Stereo Photographing Apparatus and External Apparatus]

Assuming that a reference coordinate system of a stereo photographing apparatus is a left camera coordinate system L, image characteristics $(u_i^L, v_i^L), (u_i^R, v_i^R)$ observed in the left camera coordinate system L and a right camera coordinate system R are given. At this time, assuming that positions of the image characteristics in a normalized camera image plane after a lens distortion process and rectification process are $(\widetilde{u}_i^L, \widetilde{v}_i^L)$ , $(\widetilde{u}_i^R, \widetilde{v}_i^R)$ , three-dimensional positions $(x_i^L, y_i^L, z_i^L)$ of the characteristics with respect to the left camera coordinate system L can be given by the following:

$$\begin{cases} z_i^L = \dfrac{b}{\widetilde{u}_i^R - \widetilde{u}_i^L} \\ x_i^L = \widetilde{u}_i^L z_i^L \\ y_i^L = \widetilde{v}_i^L z_i^L \end{cases} \qquad \cdots \ (121),$$

where b denotes a basic line length between cameras, and can be represented as a distance between the origin of the left camera coordinate system and that of the right camera coordinate system.

Now, assuming that the same characteristic point is given by $(x_i^0, y_i^0, z_i^0)$ in the coordinate system defined by the external apparatus, the following is established:

$$\begin{bmatrix} x_i^L \\ y_i^L \\ z_i^L \end{bmatrix} =_L R_O \begin{bmatrix} x_i^O \\ y_i^O \\ z_i^O \end{bmatrix} +_L T_O = \begin{bmatrix} r'_{11} & r'_{12} & r'_{13} \\ r'_{21} & r'_{22} & r'_{23} \\ r'_{31} & r'_{32} & r'_{33} \end{bmatrix} \begin{bmatrix} x_i^O \\ y_i^O \\ z_i^O \end{bmatrix} + \begin{bmatrix} t'_x \\ t'_y \\ t'_z \end{bmatrix} \qquad \ldots \ (122),$$

where six-dimensional parameter $(\theta_x, \theta_y, \theta_z, t'_x t'_y, t'_z)$ is a parameter included in a coordinate conversion parameter $(_L R_0,_L T_0)$. With respect to them, the following constraint equation has to be established:

$$\mathbf{h}_i =_L R_O \begin{bmatrix} x_i^O \\ y_i^O \\ z_i^O \end{bmatrix} +_L T_O - \begin{bmatrix} x_i^L \\ y_i^L \\ z_i^L \end{bmatrix} = \mathbf{0} \qquad \ldots \ (123).$$

To correct the calibration displacement concerning the position/posture parameter between the external apparatus and the photographing apparatus, $(x_i^L, y_i^L, z_i^L)$ calculated from $(u_i^L, v_i^L), (u_i^R, v_i^R)$ extracted by the characteristic extraction unit by the equation (121)is used, a process similar to that described above in the twelfth embodiment, that is, an expansion Kalman filter is utilized, and accordingly p = e' which is a parameter can be corrected.

When the process operation of the above-described step is performed, the calibration correction of the position/posture shift between the stereo photographing apparatus and the external apparatus can be performed.

It is to be noted that the method has been described above on the assumption that the rectification process is performed in the step S113, needless to say, the rectification process may be omitted, and the whole process can be performed. In this case, the epipolar line restriction is not necessarily a horizontal line, and a process amount increases in the correspondence searching of the characteristic points, but it is evident that a similar effect is obtained in the basic constitution.

[Fourteenth Embodiment]

Next, as a fourteenth embodiment, calibration between an external apparatus and a photographing apparatus, and calibration of the photographing apparatus itself will be described.

In the fourteenth embodiment, a method will be described which corrects calibration displacement concerning an inner calibration parameter of a stereo photographing apparatus, and calibration of position/posture shift between the external apparatus and stereo photographing apparatus.

Characteristics for use in the fourteenth embodiment include natural characteristics included in the twelfth embodiment, and known characteristics included in the thirteenth embodiment.

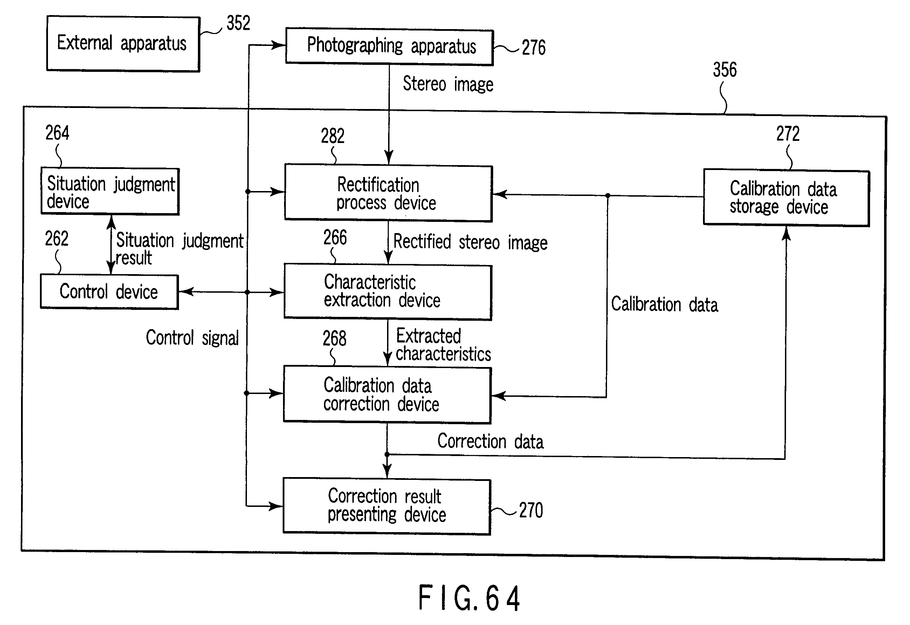

FIG. 64 is a block diagram showing a basic constitution example of the calibration displacement correction apparatus in the fourteenth embodiment of the present invention.

In FIG. 64, a photographing apparatus 276 which photographs a stereo image and which is to correct calibration displacement is subjected to calibration displacement correction by a calibration displacement correction apparatus 356.

The calibration displacement correction apparatus 356 comprises: a control device 262; a situation judgment device 264; a rectification process device 282; a characteristic extraction device 266; a calibration data correction device 268; a correction result presenting device 270; and a calibration data storage device 272. That is, the constitution is the same as that of the calibration displacement correction apparatus 350 of the thirteenth embodiment shown in FIG. 62.

Here, each device in the calibration displacement correction apparatus 356 may comprise hardware or circuit, or may be processed by software of a computer or a data processing apparatus.

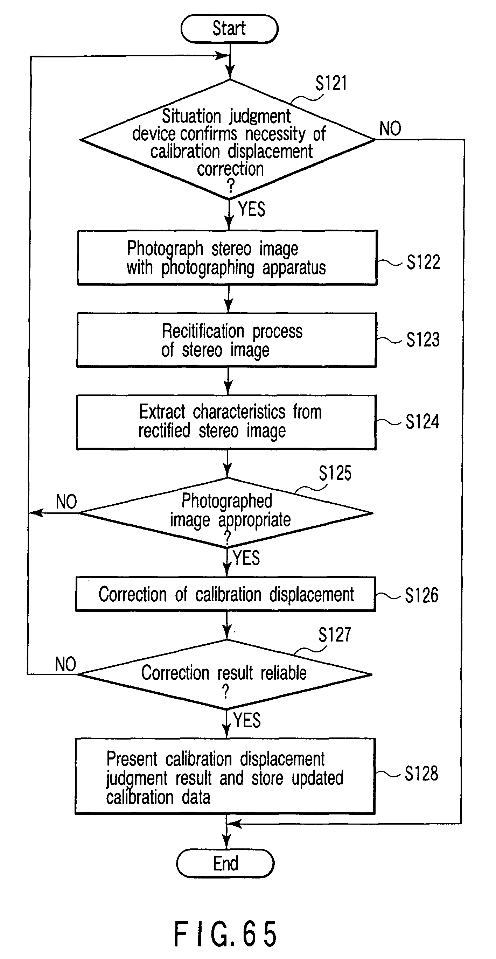

Moreover, FIG. 65 is a flowchart showing an operation of the calibration displacement correction apparatus in the fourteenth embodiment of the present invention.

Basic steps are similar to those of the flowchart of the thirteenth embodiment shown in FIG. 63. That is, steps S121 to S123, S125, S127 and S128 are similar to the steps S111 to S113, S115, S117 and S118 in the flowchart of FIG. 63, and steps S124 and S126 are different. Therefore, in the following description, the only different steps will be described.

In the step S124, both known characteristics and natural characteristics are extracted.

Moreover, in the step S126, both the known characteristics and natural characteristics are utilized, while the calibration parameter is corrected by the following two sub-steps.

More concretely, in the calibration data correction device, as a sub-step C1, the calibration displacement of the inner calibration parameter of the stereo photographing apparatus is performed in the above-described method of the twelfth embodiment. As a sub-step C2, a stereo inner calibration parameter obtained in the sub-step C1 is used as a correct value, and next, calibration correction of the position/posture shift between the external apparatus and the stereo photographing apparatus is performed by the method described in the thirteenth embodiment.

By the above-described constitution and processing procedure, it is possible to perform the calibration correction of the calibration displacement concerning the inner calibration parameter of the stereo photographing apparatus, and the position/posture shift between the external apparatus and the stereo photographing apparatus.

[Fifteenth Embodiment]

Next, as a fifteenth embodiment, addition of a calibration displacement detection function will be described.

In the present fifteenth embodiment, a calibration displacement detection apparatus is further introduced, and accordingly a correction process is more efficiently performed.

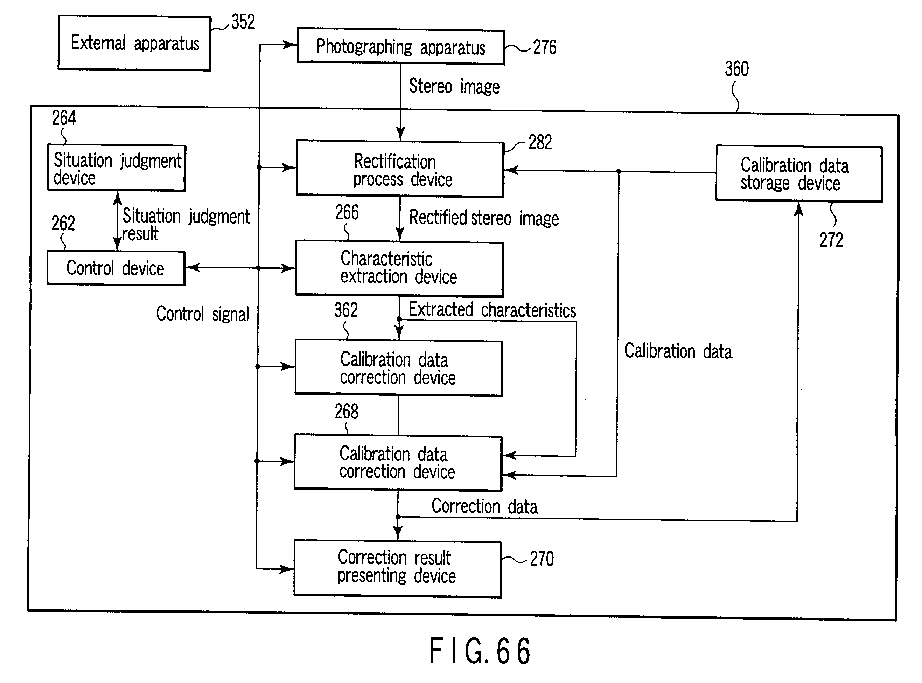

FIG. 66 is a block diagram showing a basic constitution example of a calibration displacement correction apparatus in a fourth embodiment of the present invention.

In FIG. 66, a photographing apparatus 276 which photographs a stereo image and which is to correct calibration displacement is subjected to calibration displacement correction by a calibration displacement correction apparatus 360.

The calibration displacement correction apparatus 360 comprises: a control device 262; a situation judgment device 264; a rectification process device 282; a characteristic extraction device 266; a calibration data correction device 268; a correction result presenting device 270; a calibration data storage device 272; and further a calibration displacement judgment device 362.

That is, in addition to the apparatus having the constitution of FIG. 64 described above in the fourteenth embodiment, the embodiment comprises the calibration displacement judgment device 362 which judges presence of the calibration displacement and determines a displacement type based on characteristics extracted by the characteristic extraction device 266. Moreover, in a case where it is judged by the calibration displacement judgment device 362 that there is a displacement, the calibration displacement concerning the calibration data stored by the calibration data recording device 272 based on the displacement type is corrected by the calibration data correction device 268.

When the calibration displacement judgment device 362 is added in this manner, it is possible to judge the calibration displacement and specify the displacement type. Therefore, it is possible to perform the correction of the calibration displacement specialized in the displacement, and a useless calculation process can be omitted.

Here, each device in the calibration displacement correction apparatus 360 may comprise hardware or circuit, or may be processed by software of a computer or a data processing apparatus.

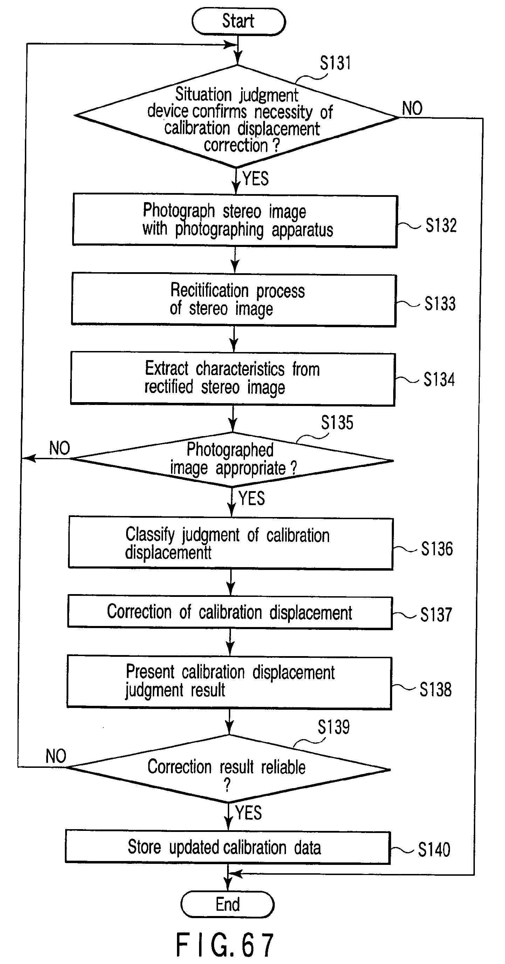

FIG. 67 is a flowchart showing an operation of the calibration displacement correction apparatus in the fifteenth embodiment of the present invention.

Basic steps are similar to those of the flowchart shown in FIG. 60. That is, steps S131 to S135, S138 to S140 are similar to the steps S91 to S95, S97 to S99 in the flowchart of FIG. 60, and steps S136 and S137 are different. Therefore, in the following description, the only different steps will be described.

First, a process operation of the step S136 will be described.

In calibration displacement detection, there are the following three judgments.

(Judgment 1) It is judged whether or not there is a displacement from epipolar line restriction of natural characteristics or known characteristics.

(Judgment 2) It is judged whether or not a distance between the known characteristics registered in the calibration data storage device is equal to that measured by the known characteristics photographed by the stereo image.

(Judgment 3) When it is assumed that there is not any displacement in the calibration data with respect to the known characteristics whose three-dimensional positions are registered in the calibration data storage device using the external apparatus defining a reference position as a reference, it is judged whether or not the known characteristics exist in predetermined positions of right/left images photographed by the stereo photographing apparatus.

Moreover, assuming ○, when the judgment result is correct, and ×, when the result is wrong, it is seen that there are possibilities of the following three cases.

Case 1: (Judgment 1: ×)
Displacement in $p=(c_1, c_2, e)$ or $p=(c_1, c_2, e')$
Case 2: (Judgment 1: ○) (Judgment 2: ×)
Displacement in $p=e$ or $p=(e, e')$
Case 3: (Judgment 1: ○) (Judgment 2: ○) (Judgment 3: ×)
Displacement in $p=e'$

Case 3: (Judgment 1: ○) (Judgment 2: ○) (Judgment 3: ○)

No displacement in calibration

Needless to say, it is important to judge these judgments assuming that there is some measurement errors concerning displacement judgment, and considering a measurement error allowable range.

Next, a method of the judgment 1 will be described.

An image coordinate value of a characteristic pair rectified based on calibration data obtained in advance is utilized concerning n natural characteristics or known characteristics extracted and associated by the characteristic extraction device 266. That is, assuming that there is not any displacement of the calibration data, the registered characteristic pair completely satisfies the epipolar line restriction. Conversely, when the calibration displacement occurs, it can be judged that the epipolar line restriction is not satisfied.

Therefore, the calibration displacement is judged using the degree by which the epipolar line restriction is not satisfied as an evaluation value as the whole characteristic pair.

That is, assuming that a situation amount from the epipolar line restriction is di with respect to each characteristic pair i, the following is calculated:

$$d_i = \left| v_i^L - v_i^R \right| \qquad \dots (124).$$

Moreover, an average value with respect to all the characteristic pairs is calculated by the following.

$$\overline{d} = \frac{1}{n}\sum_{i=1}^{n} d_i = \frac{1}{n}\sum_{i=1}^{n} \left| v_i^L - v_i^R \right| \qquad \dots (125).$$

When an average value $\overline{d}$ is larger than a predetermined threshold value threshold, it is judged that the calibration displacement is remarkable.

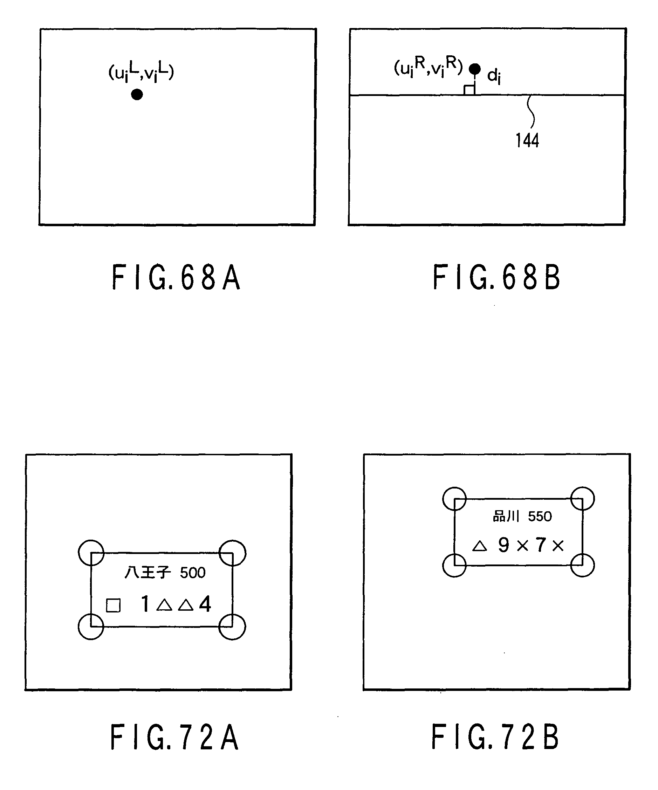

FIGS. 68A and 68B show this state. In FIG. 68B, a displacement di from an epipolar line with respect to each characteristic corresponds to an in-image distance from the epipolar line of a characteristic point.

Moreover, when reliability of correspondence searching is high in the method described above in the judgment method 1, a satisfactory result is obtained.

However, when there is a possibility that a result having low reliability is included in the correspondence searching result, it is considered that there is a possibility that many noise components are included among differences of characteristics calculated by the following as No. 2 of the method of Judgment 1.

$$d_i = \left| v_i^L - v_i^R \right| \qquad \dots (126)$$

In this case, a method of judging the calibration displacement by an operation of taking an average after removing abnormal values which seem to be noise components beforehand is effective.

That is, assuming that a set of characteristic pairs after removing the abnormal value in this form is B, an average value of di in B may be calculated by the following:

$$\overline{d}_B = \frac{1}{m}\sum_{i \in B} d_i = \frac{1}{m}\sum_{i \in B} \left| v_i^L - v_i^R \right| \qquad \dots (127),$$

where m denotes the number of elements of a set B. When the average value $\overline{d_B}$ is larger than a predetermined threshold value threshold, it is judged that the calibration displacement is remarkable.

Next, a method of Judgment 2 will be described.

Correspondence points of the known characteristics in the right/left images photographed by the stereo photographing apparatus are assumed as $(u_i^L, v_i^L), (u_i^R, v_i^R)$, and a three-dimensional coordinate value defined by a left camera coordinate system is calculated.

Needless to say, in this calculation, the value is calculated assuming that there is not any calibration displacement, and utilizing the calibration parameter stored by the calibration data storage device 272. A distance between the known characteristics obtained in this manner is calculated, and a degree of a difference between the distance, and the distance between the known characteristic points registered in the calibration data storage device 272 beforehand is calculated based on the above equation (119). When the difference is smaller than a predetermined threshold value, it is judged that there is not any displacement. When it is large, it is judged that there is a displacement.

Furthermore, a method of Judgment 3 will be described.

First, the known characteristics are utilized in the stereo image, and it is judged whether or not the known characteristics are present in appropriate positions in the image.

For this purpose, it is judged as follows whether or not three-dimensional position $(x_k^0, y_k^0, z_k^0)$ of known characteristic k recorded in the calibration data recording device is in a position in the image photographed by a stereo camera.

Now assuming that the coordinate system of the external apparatus is O, and the three-dimensional position $(x_k^0, y_k^0, z_k^0)$ of the known characteristic is registered in the coordinate system, positions of three-dimensional position coordinate $(x_k^L, y_k^L, z_k^L)$ in an left camera coordinate system L concerning the point, and three-dimensional position coordinate $(x_k^R, y_k^R, z_k^R)$ in the right camera coordinate system are calculated:

$$\begin{bmatrix} x_k^L \\ y_k^L \\ z_k^L \end{bmatrix} = {}_L R_O \begin{bmatrix} x_k^O \\ y_k^O \\ z_k^O \end{bmatrix} + {}_L T_O = \begin{bmatrix} r'_{11} & r'_{12} & r'_{13} \\ r'_{21} & r'_{22} & r'_{23} \\ r'_{31} & r'_{32} & r'_{33} \end{bmatrix} \begin{bmatrix} x_k^O \\ y_k^O \\ z_k^O \end{bmatrix} + \begin{bmatrix} t'_x \\ t'_y \\ t'_z \end{bmatrix} \qquad \cdots \quad (128);$$

and

$$\begin{bmatrix} x_k^R \\ y_k^R \\ z_k^R \end{bmatrix} = {}_R R_L \begin{bmatrix} x_k^L \\ y_k^L \\ z_k^L \end{bmatrix} + {}_R T_L = \begin{bmatrix} r_{11} & r_{12} & r_{13} \\ r_{21} & r_{22} & r_{23} \\ r_{31} & r_{32} & r_{33} \end{bmatrix} \begin{bmatrix} x_k^L \\ y_k^L \\ z_k^L \end{bmatrix} + \begin{bmatrix} t_x \\ t_y \\ t_z \end{bmatrix} \qquad \cdots \quad (129).$$

Next, with respect to them, projection positions $(u_k^{nL}, v_k^{nL})$, $(u_k^{nR}, v_k^{nR})$ in the image calculated by the above equations (66) and (67) are calculated.

Needless to say, as to the position in this image, the equation is established in a case where it is assumed that all the calibration data is correct. Therefore, a difference between the position in the image represented by the set B of the above equation (101), and an image position in a case where it is assumed that the calibration data is correct is calculated, and accordingly it is judged whether or not the calibration displacement occurs.

That is, the following difference in the image is calculated in each image:

$$\begin{cases} f_k^L = \sqrt{\left(u_k'^L - u_k''^L\right)^2 + \left(v_k'^L - v_k''^L\right)^2} \\ f_k^R = \sqrt{\left(u_k'^R - u_k''^R\right)^2 + \left(v_k'^R - v_k''^R\right)^2} \end{cases} \qquad \cdots \quad (130),$$

and it is judged whether or not the following is established:

$$f_k^L > threshold \ \ \texttt{or} \ \ f_k^R > threshold \qquad\qquad \texttt{... (131).}$$

Here, when the threshold value threshold is exceeded, it is seen that at least the calibration displacement occurs. A process of removing an abnormal value or the like may be included in the same manner as in the twelfth embodiment.

That is, when at least s characteristics (s≤m) among m known characteristics satisfy inequality shown by the above equation (131), it is judged that the calibration displacement occurs.

That is, it can be judged by the sub-step C1 whether or not at least the calibration displacement occurs.

Next, a process operation of the step S137 will be described.

The calibration displacement is corrected in the calibration data correction device 268 based on the presence of the displacement judged by the calibration displacement judgment device 362, and a result of displacement classification. That is, in a case where there is a calibration displacement, the calibration displacement may be corrected by the following three methods.

(i) In a case where the calibration displacement is p = e or p = (c1, c2, e), the calibration displacement is corrected by the method described above in the first embodiment.
(ii) In a case where the calibration displacement is p = e', the calibration displacement is corrected by the method described above in the second embodiment.
(iii) In a case where the calibration displacement is p = (c1, c2, e), the calibration displacement is corrected by the method described above in the third embodiment.

As described above, when the calibration displacement detection apparatus is further introduced, it is possible to classify or determine the parameter to be corrected concerning the correction process, and therefore it is possible to perform an efficient correction process with higher reliability. Needless to say, it is evident that the calibration displacement detection apparatus described in the present fifteenth embodiment can be applied to the above-described eleventh to fourteenth embodiments, and can be utilized in a sixteenth or seventeenth embodiment described later.

[Sixteenth Embodiment]

Next, an example specified in car mounting will be described as a sixteenth embodiment of the present invention.

In the above-described twelfth to fifteenth embodiments, a situation judgment device has not been described in detail, but in the sixteenth embodiment, a function of the situation judgment device will be mainly described.

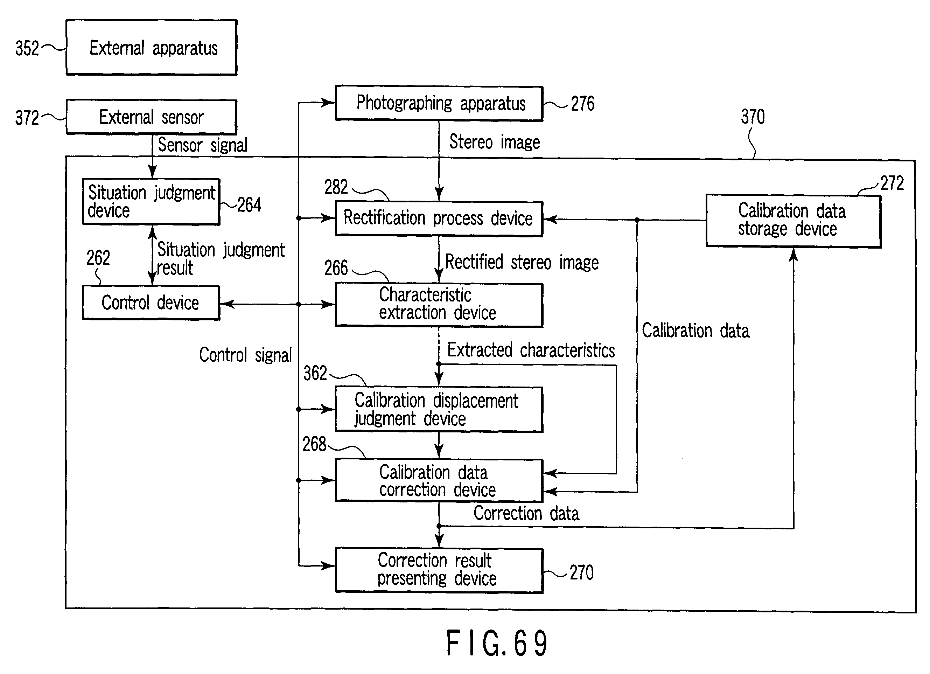

FIG. 69 is a block diagram showing a basic constitution example of the calibration displacement detection apparatus in the sixteenth embodiment of the present invention.

The constitution of the calibration displacement correction apparatus of the sixteenth embodiment is different from the above-described twelfth to fifteenth embodiments in that an external sensor 372 supplies signals of various sensor outputs to a situation judgment device 264 in a calibration displacement correction apparatus 370. The embodiment is different also in that if necessary, information on the calibration displacement detection is sent to a calibration data storage device 272, and the information is written in the calibration data storage device 272.

It is to be noted that a process operation concerning the calibration displacement correction apparatus 370 in the sixteenth embodiment constituted as shown in FIG. 69 is similar to that described above in the twelfth to fourteenth embodiments. Therefore, as an operation flowchart, the flowcharts of FIGS. 49, 60, 63, and 65 will be referred to, and drawing and description are omitted here.

In the following description, as application of the situation judgment device 264, a case where a stereo photographing apparatus is attached to a vehicle will be described. Needless to say, the present system is not limited to a car-mounted stereo photographing apparatus for a vehicle, and it is apparent that the device can be applied to another monitoring camera system or the like.

As external sensors connected to the situation judgment device, there are an odometer, clock or timer, temperature sensor, vehicle tilt measurement sensor or gyro sensor, vehicle speed sensor, engine start sensor, insulation sensor, raindrops sensor and the like. Moreover, in the situation judgment device 264, on the following conditions, it is judged whether or not the detection of the calibration displacement is necessary at present based on conditions required for car-mounted application.

Moreover, as calibration data stored by the calibration data storage device, the following information is written including a calibration parameter p at a time when calibration was performed in the past, or data of known characteristics.

That is, there are:

(a) inner calibration parameter (c1, c2, e) of a stereo photographing apparatus performed in the past;

(b) position/posture calibration parameter e' between the stereo photographing apparatus and the external apparatus performed in the past;

(c) three-dimensional positions of known characteristics performed in the past;

(d) vehicle driving distance during the past calibration;

(e) date and time of the past calibration;

(f) outside temperature during the past calibration;

(g) vehicle driving distance during calibration correction or detection in the past;

(h) date and time during the calibration correction or detection in the past; and

(i) outside temperature during the past calibration correction or detection.

Next, a method of the calibration detection, and situation judgment to be performed by the situation judgment device 264 will be described.

In the present apparatus, a case where calibration displacement detection is performed at a time when the following conditions are established will be described. The detection is performed, when a vehicle stops, after at least a certain time T elapses since the displacement was detected before, and in fine weather during the day.

First, to satisfy first condition, it is confirmed by the vehicle speed sensor, gyro sensor or the like that the vehicle does not move. Next, to satisfy the second condition, a time difference between a time when the calibration displacement detection was performed in the past, and the present time calculated from a clock or the like is calculated. Concerning a third condition, an insulation sensor, raindrop sensor or the like is utilized, and it is judged whether or not the conditions are satisfied.

When the calibration displacement correction is executed in this manner, the result is sent to a correction result presenting device 270. Moreover, the correction result is written in the calibration data storage device 272.

Moreover, further various variations can be considered as known characteristics in car-mounted application. That is, when standards of sizes or positions are determined by various road traffic laws, or standards are determined by another ordinances and the like, shapes based on the standards can be utilized as the known characteristics for the present calibration displacement correction apparatus. As examples in which the standards are determined, a number plate, pedestrian crosswalk, distance interval of white line and the like can be considered.

Furthermore, in a case where a part of a vehicle enters a part of a view field in accordance with the vehicle, the part of the vehicle is registered beforehand as a known characteristic, and calibration correction is performed also utilizing a relative distance between the characteristics. Since this example has been described above in the twelfth embodiment, the description is omitted.

Moreover, it is also considered that a user or a maintenance operator positively performs calibration displacement correction. That is, the user or the like presents a calibration pattern whose size or shape is known before the photographing apparatus, and photographs the calibration pattern with a stereo photographing apparatus, so that calibration correction can be performed.

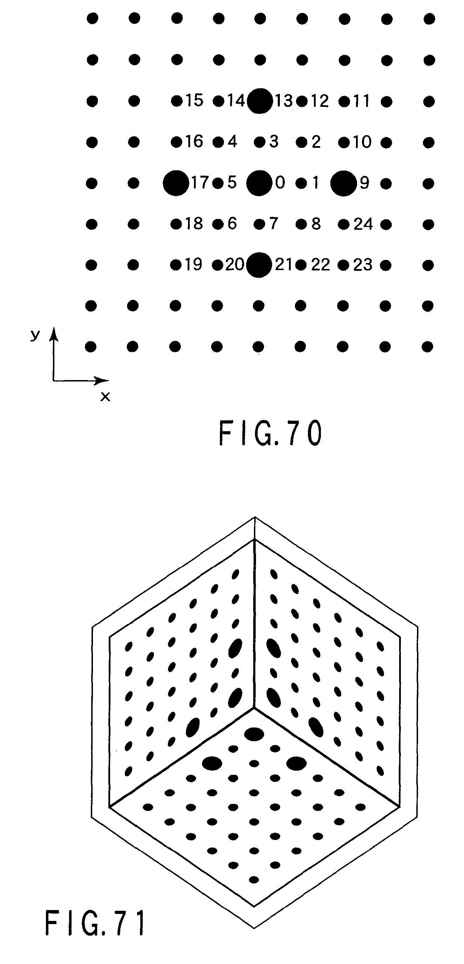

As this calibration pattern, as shown in FIG. 70, a calibration board may be used in which calibration patterns are arranged in a lattice form of a flat surface. Alternatively, as shown in FIG. 71, a calibration jig may be used in which calibration patterns are arranged in lattice forms of three flat surfaces of a corner cube.

When the above-described method is used, the present calibration displacement correction apparatus can be applied to the car-mounting or the like.

[Seventeenth Embodiment]

Next, as a seventeenth embodiment of the present invention, an example will be described in which a photographing apparatus performs photographing a plurality of times, and images are utilized.

In the above-described embodiments, the number of times concerning the photographing of a stereo image is not especially specified. In the present seventeenth embodiment, an example will be described in which for a purpose of providing a more robust calibration displacement correction apparatus having reliability, more associated characteristics are extracted from stereo images photographed a plurality of times, and accordingly a calibration displacement correction apparatus is constituted.

It is to be noted that the calibration displacement correction apparatus of the present seventeenth embodiment is different from the above-described embodiments only in that the photographing apparatus performs the photographing a plurality of times, a basic constitution is similar, and therefore the description is omitted.

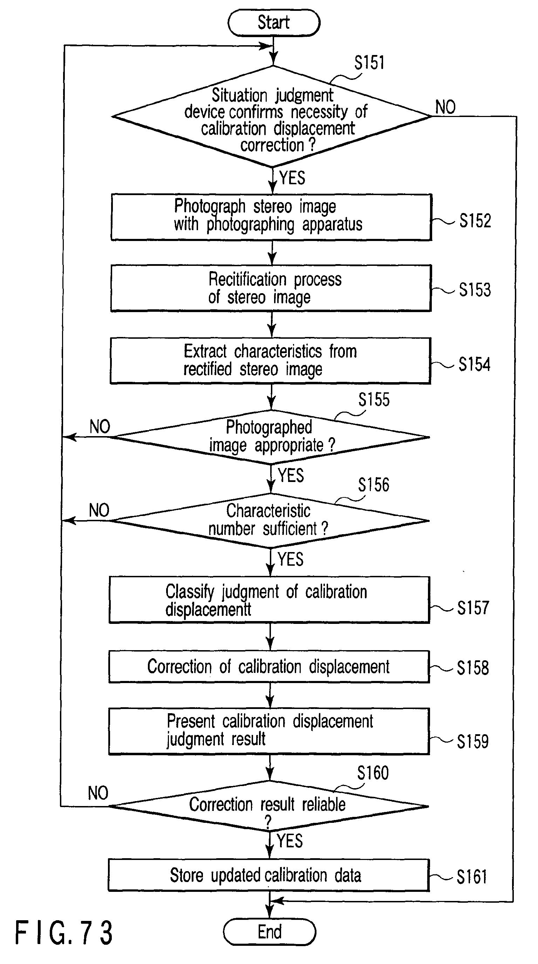

FIGS. 72A and 72B show states of stereo images by the calibration displacement correction apparatus of the seventeenth embodiment, FIG. 72A is a diagram showing an example of the left image at time 1, and FIG. 72B is a diagram showing an example of the left image at time 2 different from the time 1. It is to be noted that here there is shown a case where a plurality of known characteristics are photographed with two sets of stereo images (only left image is shown in the drawing) photographed at different times 1 and 2.

FIG. 73 is a flowchart showing a process operation of the calibration displacement correction apparatus in the present seventeenth embodiment of the present invention.

It is to be noted that a process operation of steps S151 to S155 is similar to that of the steps S81 to S85 in the flowchart of FIG. 499 of the twelfth embodiment.

Moreover, it is judged in the step S156 whether or not, for example, the number of known characteristics that have been extracted up to now reaches a predetermined or more number. Here, when the number is not less than the predetermined number, the process shifts to the step S157 to judge and classify the calibration displacement. Next, after performing a correction process of the calibration displacement in the step S158, the judgment result is presented in the step S159.

On the other hand, when the number does not reach the predetermined number in the step S156, the process shifts to the step 151, and the stereo image is photographed again. Needless to say, here, a place to photograph or visual points may be changed.

It is judged in step S160 based on calculated reliability whether or not correction parameters calculated by the calibration displacement correction apparatus are reliable data. When the data is reliable, the process shifts to step S161. When the data is not reliable, the process shifts to the step S151 to repeat a step of calibration displacement correction. On the other hand, in step S161, the updated calibration data is stored in the calibration data storage device 272.

It is to be noted that they are controlled by the situation judgment device or the control device. Here, known characteristics extracted by one set of stereo images are registered as separate characteristic groups, and a process is performed in accordance with the group concerning a process of calibration displacement correction.

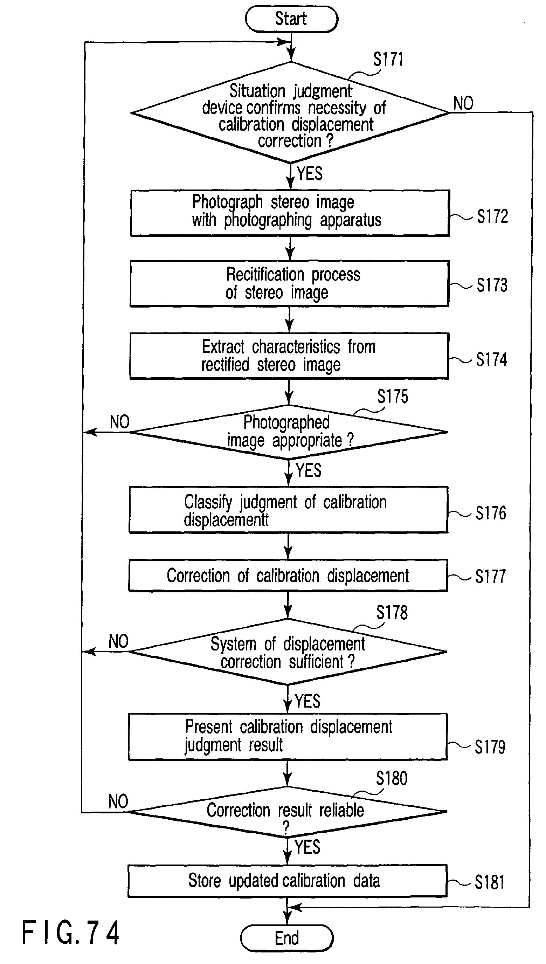

FIG. 74 is a flowchart showing another process operation of the calibration displacement correction apparatus in the present seventeenth embodiment.

In the flowchart shown in FIG. 74, process operations of steps S171 to S175, S176 and S177, S179 to S181 are similar to those of the steps S151 to S155, S157 and S158, S159 to S161 in the flowchart of FIG. 73. Therefore, only different process operation steps will be described.

In step S177, newly obtained characteristics are utilized in the calibration data correction device, while precision of correction result of calibration data is constantly calculated. Moreover, it is judged in the subsequent step S178 whether or not the precision is sufficient.

Here, when the precision of displacement correction is judged to be sufficient, the process shifts to steps S179 to S181, and the process in the calibration data correction device ends. On the other hand, when it is judged that the precision is not sufficient, the process shifts to the step S171, the stereo image is photographed again, more characteristics are extracted, and this is repeated.

In this system, calculation of the precision of the correction process of the calibration data may be judged by a decrease degree of a variance value of each parameter element obtained from a covariance matrix $\Sigma$ of the correction parameter calculated in a process step K-2-6 of the above-described expansion Kalman filter. Since this is described in detail, for example, in A. Kosaka and A. C. Kak, "Fast vision-guided mobile robot navigation using model-based reasoning and prediction of uncertainties," Computer Vision, Graphics and Image Processing - Image Understanding, Vol. 56, No. 3, November, pp. 271 to 329, 1992, it is not described here in detail.

According to the above-described embodiment, since the calibration displacement correction process can be performed using more characteristics, it is possible to provide a more robust calibration displacement correction apparatus having reliability.

It is to be noted that the present invention is not limited to the above-described embodiments as such, constituting elements may be modified without departing from the scope in an implementing stage, and accordingly the present invention can be embodied. Various inventions can be formed by appropriate combinations of a plurality of constituting elements described above in the embodiments. For example, several constituting elements may be deleted from all constituting elements described in the embodiment. Control means (control calculation function unit of a support control apparatus, etc.) is constituted in such a manner as to perform a control operation using detection outputs of detection means for detecting the posture or position of the vehicle as state variables in the control without depending on video by the stereo camera. Furthermore, constituting elements over different embodiments may be appropriately combined.

Industrial Applicability

According to the present invention, there are obtained a stereo camera supporting apparatus, a stereo camera supporting method, and a stereo camera system in which information focused on a subject, such as distance of the subject itself, can be efficiently acquired irrespective of peripheral portions such as background.

Moreover, according to the present invention, there are obtained a calibration displacement detection apparatus, a stereo camera comprising this apparatus, and a stereo camera system, which are capable of easily and quantitatively detecting calibration displacement, when analyzing a stereo image even by mechanical displacements such as a change with an elapse of time and impact vibration in the calibration of a photographing apparatus for photographing the stereo image to perform three-dimensional measurement or the like.

Furthermore, according to the present invention, there are obtained a calibration displacement correction apparatus, a stereo camera comprising this apparatus, and a stereo camera system, capable of simply and quantitatively correcting calibration displacement as an absolute value, when analyzing a stereo image even by mechanical displacements such as a change with an elapse of time and impact vibration in the calibration of a photographing apparatus for photographing the stereo image to perform three-dimensional measurement or the like.

**Claims**

1. A stereo camera supporting apparatus which supports a stereo camera constituted in such a manner as to obtain a plurality of images having parallax errors by a plurality of visual points detached from one another, the apparatus **characterized by** comprising:

   a joining member constituted by joining a support member disposed on a vehicle side on which the stereo camera is provided, to a member to be supported disposed in a predetermined portion of the stereo camera in such a manner that a relation between both the members is variable in a predetermined range to thereby support the stereo camera on the vehicle; and
   a control unit which controls posture or position of the stereo camera supported on the vehicle by the joining member,
   the control unit being constituted to be capable of controlling the posture or position of the stereo camera with respect to video obtained by the stereo camera in such a manner that a contour portion present in the highest level position in a contour of a noted subject in the video is positioned in a frame upper end of the video or its vicinity irrespective of a change of the posture or position of the vehicle.

2. The stereo camera supporting apparatus according to claim 1, **characterized in that** the control unit is constituted in such a manner as to perform a control operation based on a detection output of a detection unit which detects the posture or position of the vehicle.

3. The stereo camera supporting apparatus according to claim 1, **characterized in that** the control unit is constituted in such a manner as to perform a control operation depending on an output of a video recognition unit which evaluates and recognizes a characteristic of the video obtained by the stereo camera.

4. The stereo camera supporting apparatus according to claim 1, **characterized in that** the control unit is constituted in such a manner as to perform a control operation depending on a detection output of detection means for detecting the posture or position of the vehicle, and an output of a video recognition unit which evaluates and recognizes a characteristic of the video obtained by the stereo camera.

5. The stereo camera supporting apparatus according to claim 2 or 4, **characterized in that** the detection unit comprises at least one of a tilt detection unit which detects tilt of the vehicle, and a height detection unit which detects a level position of a predetermined portion of the vehicle.

6. The stereo camera supporting apparatus according to claim 5, **characterized in that** the tilt detection unit detects a relative angle with respect to a vertical direction or a horizontal direction.

7. The stereo camera supporting apparatus according to claim 5, **characterized in that** the height detection unit detects a relative position with respect to a ground contact face of the vehicle.

8. The stereo camera supporting apparatus according to any one of claims 1 to 3, **characterized in that** the control unit performs a feedback control.

9. The stereo camera supporting apparatus according to any one of claims 1 to 3, **characterized in that** the control unit performs a feedforward control.

10. A stereo camera supporting apparatus which supports a stereo camera constituted in such a manner as to obtain a plurality of images having parallax errors by a plurality of visual points detached from one another, the apparatus **characterized by** comprising:

a joining member constituted by joining a support member disposed on an object side on which the stereo camera is provided, to a member to be supported disposed in a predetermined portion of the stereo camera in such a manner that a relation between both the members is variable in a predetermined range to thereby support the stereo camera on the object; and
a control unit which controls posture or position of the stereo camera supported on the object by the joining member,
the control unit being constituted to be capable of controlling the posture or position of the stereo camera in such a manner that a contour portion present in the highest level position in a contour of a noted subject in video obtained by the stereo camera is positioned in a frame upper end of the video or its vicinity irrespective of a change of the relative posture or position between the object and the noted subject in an imaging view field.

11. A stereo camera supporting method which supports a stereo camera constituted in such a manner as to obtain a plurality of images having parallax errors by a plurality of visual points detached from one another, the method **characterized by** comprising:

joining a support member disposed on a vehicle side on which the stereo camera is provided, to a member to be supported disposed in a predetermined portion of the stereo camera in such a manner that a relation between both the members is variable in a predetermined range; and
controlling posture or position of the stereo camera supported on the vehicle by the joining in such a manner that a contour portion present in the highest level position in a contour of a noted subject in video obtained by the stereo camera is positioned in a frame upper end of the video or its vicinity irrespective of a change of the posture or position of the vehicle.

12. A stereo camera supporting method which supports a stereo camera constituted in such a manner as to obtain a plurality of images having parallax errors by a plurality of visual points detached from one another, the method **characterized by** comprising:

joining a support member disposed on an object side on which the stereo camera is provided, to a member to be supported disposed in a predetermined portion of the stereo camera in such a manner that a relation between both the members is variable in a predetermined range; and
controlling posture or position of the stereo camera supported on the object by the joining in such a manner that a contour portion present in the highest level position in a contour of a noted subject in video obtained by the stereo camera is positioned in a frame upper end of the video or its vicinity irrespective of a change of the relative posture or position between the object and the noted subject in an imaging view field.

13. The stereo camera supporting apparatus according to claim 1, **characterized in that** the control unit is constituted in such a manner as to perform a control operation using a detection output of a detection unit which detects the posture or position of the vehicle as a state variable without depending on the video by the stereo camera.

14. A stereo camera system comprising a stereo camera constituted in such a manner as to obtain a plurality of images having parallax errors by a plurality of visual points detached from one another, the system **characterized by** comprising:

a joining member constituted by joining a support member disposed on a vehicle side on which the stereo camera is provided, to a member to be supported disposed in a predetermined portion of the stereo camera in such a manner that a relative position between both the members is variable in a predetermined range to thereby support the stereo camera on the vehicle; and
a control unit which controls posture or position of the stereo camera supported on the vehicle by the joining member,
the control unit being constituted in such a manner as to be capable of controlling the posture or position of the stereo camera with respect to video obtained by photographing in view of an imaging view field of the stereo camera from a visual point set in an optical imaging system of the stereo camera or its vicinity in such a manner that a contour portion present in the highest level position in a contour of a noted subject in the video is positioned in a frame upper end of the video or its vicinity irrespective of a change of the posture or position of the vehicle.

15. The stereo camera system according to claim 14, **characterized by** further comprising: an information processing unit which calculates a distance of the noted subject based on video information obtained by the photographing by the stereo camera.

**16.** The stereo camera system according to claim 15, **characterized in that** the information processing unit is constituted in such a manner as to produce data to reflect the video indicating a situation of a road in a display unit applied to the vehicle based on video information obtained by the photographing by the stereo camera.

**17.** The stereo camera system according to claim 15, **characterized in that** the information processing unit is constituted in such a manner as to produce data to superimpose, display, and reflect an index indicating a point group on a road present at an equal distance from the vehicle in the video indicating a situation of a road in a display stage applied to the vehicle based on the video information obtained by the photographing by the stereo camera.

**18.** The stereo camera system according to claim 15, **characterized in that** the information processing unit is constituted in such a manner as to produce date to allow a warning unit applied to the vehicle to issue a warning based on the video information obtained by the photographing by the stereo camera.

**19.** A stereo camera system comprising a stereo camera constituted in such a manner as to obtain a plurality of images having parallax errors by a plurality of visual points detached from one another, the system **characterized by** comprising:

a joining member constituted by joining a support member disposed on an object side on which the stereo camera is provided, to a member to be supported disposed in a predetermined portion of the stereo camera in such a manner that a relative position between both the members is variable in a predetermined range to thereby support the stereo camera on the vehicle; and
a control unit which controls posture or position of the stereo camera supported on the object by the joining member,
the control unit being constituted in such a manner as to be capable of controlling the posture or position of the stereo camera with respect to video obtained by photographing in view of an imaging view field of the stereo camera from a visual point set in an optical imaging system of the stereo camera or its vicinity in such a manner that a contour portion present in the highest level position in a contour of a noted subject in the video is positioned in a frame upper end of the video or its vicinity irrespective of a change of the relative posture or position between the object and the noted subject in an imaging view field.

**20.** The stereo camera system according to claim 14, **characterized in that** the control unit is constituted in such a manner as to control, at a starting time, the stereo camera into such a posture that a center line of a view field at a photographing time in view of an imaging view field of the stereo camera from a visual point set in the optical imaging system or its vicinity is substantially in a horizontal direction.

**21.** The stereo camera system according to claim 14, **characterized in that** the control unit is constituted in such a manner as to control, at a starting time, the stereo camera into such a posture that a center line of a view field at a photographing time in view of an imaging view field of the stereo camera from a visual point set in the optical imaging system or its vicinity substantially maintains a last state set in the previous control.

**22.** The stereo camera system according to claim 14, **characterized in that** the control unit is constituted in such a manner as to control, at a starting time, the stereo camera into such a posture that a center line of a view field at a photographing time in view of an imaging view field of the stereo camera from a visual point set in the optical imaging system or its vicinity is substantially below a horizontal direction.

**23.** The stereo camera system according to claim 14, **characterized in that** the control unit is constituted in such a manner as to control, at a high-speed driving time of the vehicle, the stereo camera into such a posture that a center line of a view field at a photographing time in view of an imaging view field of the stereo camera from a visual point set in the optical imaging system or its vicinity is relatively downward, and to control, at a low-speed driving time, the stereo camera into such a posture that the center line is relatively upward.

**24.** The stereo camera system according to claim 14, **characterized in that** the control unit is constituted in such a manner as to control the posture of the stereo camera to be upward, when it is recognized that the highest level portion of the contour of the noted subject meets a high subject departing further upward from the upper end of the frame of the video.

**25.** A stereo camera supporting apparatus which supports a stereo camera constituted in such a manner as to obtain a plurality of images having parallax errors by a plurality of visual points detached from one another, the apparatus **characterized by** comprising:

a joining member constituted by joining a support member disposed on a vehicle side on which the stereo camera is provided, to a member to be supported disposed in a predetermined portion of the stereo camera in such a manner that a relation between both the members is variable in a predetermined range to thereby support the stereo camera on the vehicle; and

control means for controlling posture or position of the stereo camera supported on the vehicle by the joining member,

the control means being constituted to be capable of controlling the posture or position of the stereo camera with respect to video obtained by the stereo camera in such a manner that a contour portion present in the highest level position in a contour of a noted subject in the video is positioned in a frame upper end of the video or its vicinity irrespective of a change of the posture or position of the vehicle.

26. A stereo camera supporting apparatus which supports a stereo camera constituted in such a manner as to obtain a plurality of images having parallax errors by a plurality of visual points detached from one another, the apparatus **characterized by** comprising:

a joining member constituted by joining a support member disposed on an object side on which the stereo camera is provided, to a member to be supported disposed in a predetermined portion of the stereo camera in such a manner that a relation between both the members is variable in a predetermined range to thereby support the stereo camera on the object; and

control means for controlling posture or position of the stereo camera supported on the object by the joining member,

the control means being constituted to be capable of controlling the posture or position of the stereo camera in such a manner that a contour portion present in the highest level position in a contour of a noted subject in video obtained by the stereo camera is positioned in a frame upper end of the video or its vicinity irrespective of a change of the relative posture or position between the object and the noted subject in an imaging view field.

27. A stereo camera system comprising a stereo camera constituted in such a manner as to obtain a plurality of images having parallax errors by a plurality of visual points detached from one another, the system **characterized by** comprising:

a joining member constituted by joining a support member disposed on a vehicle side on which the stereo camera is provided, to a member to be supported disposed in a predetermined portion of the stereo camera in such a manner that a relative position between both the members is variable in a predetermined range to thereby support the stereo camera on the vehicle; and

control means for controlling posture or position of the stereo camera supported on the vehicle by the joining member,

the control means being constituted in such a manner as to be capable of controlling the posture or position of the stereo camera with respect to video obtained by photographing in view of an imaging view field of the stereo camera from a visual point set in an optical imaging system of the stereo camera or its vicinity in such a manner that a contour portion present in the highest level position in a contour of a noted subject in the video is positioned in a frame upper end of the video or its vicinity irrespective of a change of the posture or position of the vehicle.

28. A stereo camera system comprising a stereo camera constituted in such a manner as to obtain a plurality of images having parallax errors by a plurality of visual points detached from one another, the system **characterized by** comprising:

a joining member constituted by joining a support member disposed on an object side on which the stereo camera is provided, to a member to be supported disposed in a predetermined portion of the stereo camera in such a manner that a relative position between both the members is variable in a predetermined range to thereby support the stereo camera on the vehicle; and

control means for controlling posture or position of the stereo camera supported on the object by the joining member,

the control means being constituted in such a manner as to be capable of controlling the posture or position of the stereo camera with respect to video obtained by photographing in view of an imaging view field of the stereo camera from a visual point set in an optical imaging system of the stereo camera or its vicinity in such a manner that a contour portion present in the highest level position in a contour of a noted subject in the video is positioned in a frame upper end of the video or its vicinity irrespective of a change of the relative posture or position between the object and the noted subject in an imaging view field.

**29.** A calibration displacement detection apparatus **characterized by** comprising:

a calibration data holding unit which holds calibration data relating to a photographing apparatus photographing a stereo image;

a characteristic extraction unit which extracts a characteristic from the stereo image photographed by the photographing apparatus; and

a calibration displacement judgment unit which judges calibration displacement concerning the calibration data held by the calibration data holding unit based on information indicating the characteristic extracted by the characteristic extraction unit.

**30.** A calibration displacement detection apparatus **characterized by** comprising:

a calibration data holding unit which holds calibration data relating to a photographing apparatus photographing a stereo image;

a rectification process unit which subjects the stereo image photographed by the photographing apparatus to a rectification process based on the calibration data held by the calibration data holding unit;

a characteristic extraction unit which extracts a characteristic from the stereo image rectified by the rectification process unit; and

a calibration displacement judgment unit which judges calibration displacement concerning the calibration data held by the calibration data holding unit based on information indicating the characteristic extracted by the characteristic extraction unit.

**31.** A calibration displacement detection apparatus **characterized by** comprising:

a calibration data holding unit which holds calibration data relating to calibration between a predetermined external apparatus for use in defining a reference position and a photographing apparatus;

a characteristic extraction unit which extracts a characteristic from the stereo image photographed by the photographing apparatus; and

a calibration displacement judgment unit which judges calibration displacement concerning the calibration data held by the calibration data holding unit based on information indicating the characteristic extracted by the characteristic extraction unit.

**32.** A calibration displacement detection apparatus **characterized by** comprising:

a calibration data holding unit which holds calibration data relating to calibration between a predetermined external apparatus for use in defining a reference position and a photographing apparatus photographing a stereo image;

a rectification process unit which subjects the stereo image photographed by the photographing apparatus to a rectification process based on the calibration data held by the calibration data holding unit;

a characteristic extraction unit which extracts a characteristic from the stereo image rectified by the rectification process unit; and

a calibration displacement judgment unit which judges calibration displacement concerning the calibration data held by the calibration data holding unit based on information indicating the characteristic extracted by the characteristic extraction unit.

**33.** A calibration displacement detection apparatus **characterized by** comprising:

a calibration data holding unit which holds calibration data relating to a photographing apparatus photographing a stereo image;

a characteristic extraction unit which extracts a characteristic from the stereo image photographed by the photographing apparatus;

a calibration displacement judgment unit which judges calibration displacement concerning the calibration data held by the calibration data holding unit based on information indicating the characteristic extracted by the characteristic extraction unit; and

a displacement result presenting unit which presents a judgment result such as presence of the calibration displacement judged by the calibration displacement judgment unit.

**34.** A calibration displacement detection apparatus **characterized by** comprising:

a calibration data holding unit which holds calibration data relating to a photographing apparatus photographing a stereo image;

a rectification process unit which subjects the stereo image photographed by the photographing apparatus to a rectification process based on the calibration data held by the calibration data holding unit;

a characteristic extraction unit which extracts a characteristic from the stereo image rectified by the rectification process unit;

a calibration displacement judgment unit which judges calibration displacement concerning the calibration data held by the calibration data holding unit based on information indicating the characteristic extracted by the characteristic extraction unit; and

a displacement result presenting unit which presents a judgment result such as presence of the calibration displacement judged by the calibration displacement judgment unit.

**35.** A calibration displacement detection apparatus **characterized by** comprising:

a calibration data holding unit which holds calibration data relating to calibration between a predetermined external apparatus for use in defining a reference position and a photographing apparatus photographing a stereo image;

a characteristic extraction unit which extracts a characteristic from the stereo image photographed by the photographing apparatus;

a calibration displacement judgment unit which judges calibration displacement concerning the calibration data held by the calibration data holding unit based on information indicating the characteristic extracted by the characteristic extraction unit; and

a displacement result presenting unit which presents a judgment result such as presence of the calibration displacement judged by the calibration displacement judgment unit.

**36.** A calibration displacement detection apparatus **characterized by** comprising:

a calibration data holding unit which holds calibration data relating to calibration between a predetermined external apparatus for use in defining a reference position and a photographing apparatus photographing a stereo image;

a rectification process unit which subjects the stereo image photographed by the photographing apparatus to a rectification process based on the calibration data held by the calibration data holding unit;

a characteristic extraction unit which extracts a characteristic from the stereo image rectified by the rectification process unit;

a calibration displacement judgment unit which judges calibration displacement concerning the calibration data held by the calibration data holding unit based on information indicating the characteristic extracted by the characteristic extraction unit; and

a displacement result presenting unit which presents a judgment result such as presence of the calibration displacement judged by the calibration displacement judgment unit.

**37.** A calibration displacement detection apparatus **characterized by** comprising:

a calibration data holding unit which holds calibration data relating to a photographing apparatus photographing a stereo image;

a characteristic extraction unit which extracts a characteristic from the stereo image photographed by the photographing apparatus;

a calibration displacement judgment unit which judges calibration displacement concerning the calibration data held by the calibration data holding unit based on information indicating the characteristic extracted by the characteristic extraction unit; and

a situation judgment unit which judges whether or not to perform calibration displacement detection in accordance with information having predetermined correlation with calibration relating to the photographing apparatus or a predetermined operation.

**38.** A calibration displacement detection apparatus **characterized by** comprising:

a calibration data holding unit which holds calibration data relating to a photographing apparatus photographing a stereo image;

a rectification process unit which subjects the stereo image photographed by the photographing apparatus to a rectification process based on the calibration data held by the calibration data holding unit;

a characteristic extraction unit which extracts a characteristic from the stereo image rectified by the rectification process unit;

a calibration displacement judgment unit which judges calibration displacement concerning the calibration data held by the calibration data holding unit based on information indicating the characteristic extracted by the characteristic extraction unit; and

a situation judgment unit which judges whether or not to perform calibration displacement detection in accordance with information having predetermined correlation with calibration relating to the photographing apparatus or a predetermined operation.

39. A calibration displacement detection apparatus **characterized by** comprising:

a calibration data holding unit which holds calibration data relating to calibration between a predetermined external apparatus for use in defining a reference position and a photographing apparatus photographing a stereo image;

a characteristic extraction unit which extracts a characteristic from the stereo image photographed by the photographing apparatus;

a calibration displacement judgment unit which judges calibration displacement concerning the calibration data held by the calibration data holding unit based on information indicating the characteristic extracted by the characteristic extraction unit; and

a situation judgment unit which judges whether or not to perform calibration displacement detection in accordance with information having predetermined correlation with calibration relating to the photographing apparatus or a predetermined operation.

40. A calibration displacement detection apparatus **characterized by** comprising:

a calibration data holding unit which holds calibration data relating to calibration between a predetermined external apparatus for use in defining a reference position and a photographing apparatus photographing a stereo image;

a rectification process unit which subjects the stereo image photographed by the photographing apparatus to a rectification process based on the calibration data held by the calibration data holding unit;

a characteristic extraction unit which extracts a characteristic from the stereo image rectified by the rectification process unit;

a calibration displacement judgment unit which judges calibration displacement concerning the calibration data held by the calibration data holding unit based on information indicating the characteristic extracted by the characteristic extraction unit; and

a situation judgment unit which judges whether or not to perform calibration displacement detection in accordance with information having predetermined correlation with calibration relating to the photographing apparatus or a predetermined operation.

41. A calibration displacement detection apparatus **characterized by** comprising:

a calibration data holding unit which holds calibration data relating to a photographing apparatus photographing a stereo image;

a characteristic extraction unit which extracts a characteristic from the stereo image photographed by the photographing apparatus;

a calibration displacement judgment unit which judges calibration displacement concerning the calibration data held by the calibration data holding unit based on information indicating the characteristic extracted by the characteristic extraction unit;

a displacement result presenting unit which presents a judgment result such as presence of the calibration displacement judged by the calibration displacement judgment unit; and

a situation judgment unit which judges whether or not to perform calibration displacement detection in accordance with information having predetermined correlation with calibration relating to the photographing apparatus or a predetermined operation.

42. A calibration displacement detection apparatus **characterized by** comprising:

a calibration data holding unit which holds calibration data relating to a photographing apparatus photographing a stereo image;

a rectification process unit which subjects the stereo image photographed by the photographing apparatus to a rectification process based on calibration data held by the calibration data holding unit;

a characteristic extraction unit which extracts a characteristic from the stereo image rectified by the rectification process unit;

a calibration displacement judgment unit which judges calibration displacement concerning the calibration data held by the calibration data holding unit based on information indicating the characteristic extracted by the characteristic extraction unit;

a displacement result presenting unit which presents a judgment result such as presence of the calibration displacement judged by the calibration displacement judgment unit; and

a situation judgment unit which judges whether or not to perform calibration displacement detection in accordance with information having predetermined correlation with calibration relating to the photographing apparatus or a predetermined operation.

43. A calibration displacement detection apparatus **characterized by** comprising:

a calibration data holding unit which holds calibration data relating to calibration between a predetermined external apparatus for use in defining a reference position and a photographing apparatus photographing a stereo image;

a characteristic extraction unit which extracts a characteristic from the stereo image photographed by the photographing apparatus;

a calibration displacement judgment unit which judges calibration displacement concerning the calibration data held by the calibration data holding unit based on information indicating the characteristic extracted by the characteristic extraction unit;

a displacement result presenting unit which presents a judgment result such as presence of the calibration displacement judged by the calibration displacement judgment unit; and

a situation judgment unit which judges whether or not to perform calibration displacement detection in accordance with information having predetermined correlation with calibration relating to the photographing apparatus or a predetermined operation.

44. A calibration displacement detection apparatus **characterized by** comprising:

a calibration data holding unit which holds calibration data relating to calibration between a predetermined external apparatus for use in defining a reference position and a photographing apparatus photographing a stereo image;

a rectification process unit which subjects the stereo image photographed by the photographing apparatus to a rectification process based on calibration data held by the calibration data holding unit;

a characteristic extraction unit which extracts a characteristic from the stereo image rectified by the rectification process unit;

a calibration displacement judgment unit which judges calibration displacement concerning the calibration data held by the calibration data holding unit based on the characteristic extracted by the characteristic extraction unit;

a displacement result presenting unit which presents a judgment result such as presence of the calibration displacement judged by the calibration displacement judgment unit; and

a situation judgment unit which judges whether or not to perform calibration displacement detection in accordance with information having predetermined correlation with calibration relating to the photographing apparatus or a predetermined operation.

45. The calibration displacement detection apparatus according to any one of claims 29 to 44, **characterized by** further comprising: a distortion correction process unit which subjects a stereo image obtained by the photographing apparatus to a distortion process to correct distortion based on calibration data held by the calibration data holding unit.

46. The calibration displacement detection apparatus according to any one of claims 29 to 44, **characterized in that** the characteristic extraction unit is constituted in such a manner as to extract a plurality of characteristic present in correspondence of the stereo image.

**47.** The calibration displacement detection apparatus according to any one of claims 29 to 44, **characterized in that** the characteristic extraction unit extracts a plurality of characteristic in correspondence of the stereo image obtained by the photographing apparatus, excludes characteristic capable of being judged to be abnormal among the plurality of extracted and associated characteristic, and uses the characteristic in the calibration displacement judgment unit.

**48.** The calibration displacement detection apparatus according to any one of claims 29 to 44, **characterized in that** the calibration displacement judgment unit is constituted in such a manner as to judge calibration displacement utilizing epipolar line restriction based on calibration data held by the calibration data holding unit with respect to characteristic present in correspondence of the stereo image obtained by the photographing apparatus.

**49.** The calibration displacement detection apparatus according to any one of claims 29 to 44, **characterized in that** the characteristic extraction unit comprises: a characteristic election unit which selects a characteristic effective in calibration displacement detection in one image of stereo images obtained by the photographing apparatus; and a characteristic correspondence searching unit which extracts or searches a characteristic corresponding to the selected characteristic from the other image.

**50.** The calibration displacement detection apparatus according to any one of claims 29 to 44, **characterized in that** the calibration data holding unit holds data of a plurality of characteristics whose relative positional relation is known, and the calibration displacement judgment unit performs calibration displacement judgment utilizing data indicating the positional relation held by the calibration data holding unit in information indicating the characteristic extracted by the characteristic extraction unit.

**51.** The calibration displacement detection apparatus according to any one of claims 29 to 44, constituted in such a manner as to calibration displacement detection with respect to the photographing apparatus of a stereo adaptor system, **characterized by** comprising: an optical system which obtains a plurality of images causing parallax errors by a plurality of visual points; and a single camera unit.

**52.** The calibration displacement detection apparatus according to any one of claims 29 to 44, constituted in such a manner as to perform calibration displacement detection using an imaging system **characterized by** comprising a plurality of cameras as an object which is the photographing apparatus.

**53.** The calibration displacement detection apparatus according to any one of claims 29 to 44, constituted in such a manner as to detect calibration displacement relating to the photographing apparatus of a car-mounted type.

**54.** The calibration displacement detection apparatus according to any one of claims 37 to 44, **characterized in that** the situation judgment unit performs situation judgment based on an output of an external sensor.

**55.** The calibration displacement detection apparatus according to any one of claims 33, 34, 35, 36, 41, 42, 43, and 44, **characterized in that** the displacement result presenting unit is constituted in such a manner as to be capable of displaying that a process operation relating to displacement detection is being performed by cooperation with the calibration displacement judgment unit.

**56.** The calibration displacement detection apparatus according to any one of claims 33, 34, 35, 36, 41, 42, 43, and 44, **characterized in that** the displacement result presenting unit is constituted in such a manner as to be capable of displaying information indicating a difference between a parameter obtained as a result of a process relating to displacement detection and a parameter held beforehand in the calibration data holding unit by cooperation with the calibration displacement judgment unit.

**57.** The calibration displacement detection apparatus according to any one of claims 33, 34, 35, 36, 41, 42, 43, and 44, **characterized in that** the displacement result presenting unit is constituted in such a manner as to be capable of displaying an error code indicating that regular displacement detection is incapable of being performed by cooperation with the calibration displacement judgment unit.

**58.** The calibration displacement detection apparatus according to any one of claims 33, 34, 35, 36, 41, 42, 43, and 44, **characterized in that** the displacement result presenting unit is constituted in such a manner as to be capable of displaying a status indicating reliability concerning displacement detection by cooperation with the calibration displacement judgment unit.

**59.** The calibration displacement detection apparatus according to any one of claims 29 to 44, **characterized in that** the characteristic extraction unit is constituted in such a manner as to judge reliability concerning the stereo image obtained by the photographing apparatus, and control is further disposed in such a manner as to repeat a photographing process by the photographing apparatus, when the characteristic extraction unit judges that reliability concerning the stereo image obtained by the photographing apparatus is insufficient.

**60.** A stereo camera **characterized by** comprising:

an imaging unit constituted in such a manner as to obtain a video signal output indicating a plurality of images having parallax errors by a plurality of visual points detached from one another;
a calibration displacement detection unit which detects calibration displacement of the imaging unit; and
a calculation unit which calculates data such as a distance of a subject depending on the video signal output obtained by the imaging unit in consideration of detection output data of the calibration displacement detection unit,
the calibration displacement detection unit comprising:

a calibration data holding unit which holds calibration data relating to the imaging unit;
a characteristic extraction unit to extract a characteristic from a stereo image which is the video signal output obtained by the imaging unit; and
a calibration displacement judgment unit which judges calibration displacement concerning the calibration data stored in the calibration data storage unit based on information indicating the characteristic extracted by the characteristic extraction unit.

**61.** A stereo camera **characterized by** comprising:

an imaging unit constituted in such a manner as to obtain a video signal output indicating a plurality of images having parallax errors by a plurality of visual points detached from one another;
a calibration displacement detection unit which detects calibration displacement of the imaging unit; and
a calculation unit which calculates data such as a distance of a subject depending on the video signal output obtained by the imaging unit in consideration of detection output data of the calibration displacement detection unit,
the calibration displacement detection unit comprising:

a calibration data holding unit which holds calibration data relating to the imaging unit;
a rectification process unit which rectifies a stereo image taken by the imaging unit based on the calibration data held by the calibration data holding unit;
a characteristic extraction unit which extracts a characteristic from the stereo image rectified by the rectification process unit; and
a calibration displacement judgment unit which judges calibration displacement concerning the calibration data stored in the calibration data storage unit based on information indicating the characteristic extracted by the characteristic extraction unit.

**62.** A stereo camera **characterized by** comprising:

an imaging unit constituted in such a manner as to obtain a video signal output indicating a plurality of images having parallax errors by a plurality of visual points detached from one another;
a calibration displacement detection unit which detects calibration displacement between the imaging unit and an external apparatus defining a predetermined reference position; and
a calculation unit which calculates data such as a distance of a subject depending on the video signal output obtained by the imaging unit in consideration of a detection output of the calibration displacement detection unit,
the calibration displacement detection unit comprising:

a calibration data storage unit which stores calibration data relating to calibration displacement between a predetermined external apparatus for use in defining the reference position and the imaging unit;
a characteristic extraction unit to extract a characteristic from a stereo image which is the video signal output obtained by the imaging unit; and
a calibration displacement judgment unit which judges calibration displacement concerning the calibration data held by the calibration data holding unit based on the characteristic extracted by the characteristic extraction unit.

**63.** A stereo camera **characterized by** comprising:

an imaging unit constituted in such a manner as to obtain a video signal output indicating a plurality of images having parallax errors by a plurality of visual points detached from one another;
a calibration displacement detection unit which detects calibration displacement between the imaging unit and an external apparatus defining a predetermined reference position; and
a calculation unit which calculates data such as a distance of a subject depending on the video signal output obtained by the imaging unit in consideration of a detection output of the calibration displacement detection unit, the calibration displacement detection unit comprising:

a calibration data holding unit which holds calibration data relating to the imaging unit;
a rectification process unit which rectifies a stereo image taken by the imaging unit based on the calibration data held by the calibration data holding unit;
a characteristic extraction unit which extracts a characteristic from the stereo image rectified by the rectification process unit; and
a calibration displacement judgment unit which judges calibration displacement concerning the calibration data held by the calibration data holding unit based on information indicating the characteristic extracted by the characteristic extraction unit.

**64.** A stereo camera system **characterized by** comprising:

an imaging unit constituted in such a manner as to obtain a video signal output indicating a plurality of images having parallax errors by a plurality of visual points detached from one another;
a calibration displacement detection unit which detects calibration displacement of the imaging unit;
a calculation unit which calculates data such as a distance of a subject depending on the video signal output obtained by the imaging unit in consideration of detection output data of the calibration displacement detection unit; and
a display unit which performs required display associated with outputs of the calibration displacement detection unit, the calculation unit, and the imaging unit,
the calibration displacement detection unit comprising:

a calibration data holding unit which holds calibration data relating to the imaging unit;
a characteristic extraction unit to extract a characteristic from a stereo image which is the video signal output obtained by the imaging unit; and
a calibration displacement judgment unit which judges calibration displacement concerning the calibration data held by the calibration data holding unit based on information indicating the characteristic extracted by the characteristic extraction unit,
the display unit being constituted in such a manner as to be capable of displaying a judgment result of the calibration displacement judgment unit in a display face thereof.

**65.** A stereo camera system **characterized by** comprising:

an imaging unit constituted in such a manner as to obtain a video signal output indicating a plurality of images having parallax errors by a plurality of visual points detached from one another;
a calibration displacement detection unit which detects calibration displacement of the imaging unit;
a calculation unit which calculates data such as a distance of a subject depending on the video signal output obtained by the imaging unit in consideration of detection output data of the calibration displacement detection unit; and
a display unit which performs required display associated with outputs of the calibration displacement detection unit, the calculation unit, and the imaging unit,
the calibration displacement detection unit comprising:

a calibration data holding unit which holds calibration data relating to the imaging unit;
a rectification process unit to subject a stereo image which is the video signal output obtained by the imaging unit to a rectification process based on the calibration data held by the calibration data holding unit;
a characteristic extraction unit which extracts a characteristic from the stereo image rectified by the rectification process unit; and

a calibration displacement judgment unit which judges calibration displacement concerning the calibration data held by the calibration data holding unit based on information indicating the characteristic extracted by the characteristic extraction unit,

the display unit being constituted in such a manner as to be capable of displaying a judgment result of the calibration displacement judgment unit in a display face thereof.

**66.** A stereo camera system **characterized by** comprising:

an imaging unit constituted in such a manner as to obtain a video signal output indicating a plurality of images having parallax errors by a plurality of visual points detached from one another;

a calibration displacement detection unit which detects calibration displacement between the imaging unit and an external apparatus defining a predetermined reference position;

a calculation unit which calculates data such as a distance of a subject depending on the video signal output obtained by the imaging unit in consideration of detection output data of the calibration displacement detection unit; and

a display unit which performs required display associated with outputs of the calibration displacement detection unit, the calculation unit, and the imaging unit,

the calibration displacement detection unit comprising:

a calibration data holding unit which holds calibration data relating to calibration between a predetermined external apparatus for use in defining the reference position and the imaging unit;

a characteristic extraction unit to extract a characteristic from a stereo image which is the video signal output obtained by the imaging unit; and

a calibration displacement judgment unit which judges calibration displacement concerning the calibration data held by the calibration data holding unit based on information indicating the characteristic extracted by the characteristic extraction unit,

the display unit being constituted in such a manner as to be capable of displaying a judgment result of the calibration displacement judgment unit in a display face thereof.

**67.** A stereo camera system **characterized by** comprising:

an imaging unit constituted in such a manner as to obtain a video signal output indicating a plurality of images having parallax errors by a plurality of visual points detached from one another;

a calibration displacement detection unit which detects calibration displacement between the imaging unit and an external apparatus defining a predetermined reference position;

a calculation unit which calculates data such as a distance of a subject depending on the video signal output obtained by the imaging unit in consideration of detection output data of the calibration displacement detection unit; and

a display unit which performs required display associated with outputs of the calibration displacement detection unit, the calculation unit, and the imaging unit,

the calibration displacement detection unit comprising:

a calibration data holding unit which holds calibration data relating to calibration between a predetermined external apparatus for use in defining the reference position and the imaging unit;

a rectification process unit to subject a stereo image which is the video signal output obtained by the imaging unit to a rectification process based on the calibration data held by the calibration data holding unit;

a characteristic extraction unit which extracts a characteristic from the stereo image rectified by the rectification process unit; and

a calibration displacement judgment unit which judges calibration displacement concerning the calibration data held by the calibration data holding unit based on information indicating the characteristic extracted by the characteristic extraction unit,

the display unit being constituted in such a manner as to be capable of displaying a judgment result of the calibration displacement judgment unit in a display face thereof.

**68.** The stereo camera system according to any one of claims 64, 65, 66, and 67, **characterized in that** the display unit is constituted in such a manner as to be capable of displaying that a process operation relating to displacement detection is being performed by cooperation with the calibration displacement judgment unit.

**69.** The stereo camera system according to any one of claims 64, 65, 66, and 67, **characterized in that** the displacement result presenting unit is constituted in such a manner as to be capable of displaying information indicating a difference between a parameter obtained as a result of a process relating to displacement detection and a parameter held beforehand in the calibration data holding unit by cooperation with the calibration displacement judgment unit.

**70.** The stereo camera system according to any one of claims 64, 65, 66, and 67, **characterized in that** the displacement result presenting unit is constituted in such a manner as to be capable of displaying an error code indicating that regular displacement detection is incapable of being performed by cooperation with the calibration displacement judgment unit.

**71.** The stereo camera system according to any one of claims 64, 65, 66, and 67, **characterized in that** the calibration displacement detection unit is constituted in such a manner that the characteristic extraction unit judges reliability concerning the stereo image obtained by the imaging unit, and the calibration displacement detection unit further comprises a control unit performing a control in such a manner as to repeat a photographing process by the imaging unit, when the characteristic extraction unit judges that reliability concerning the stereo image obtained by the imaging unit is insufficient.

**72.** The stereo camera system according to claim 65 or 66, **characterized in that** the calibration displacement detection unit applies a specific shape portion of a vehicle on which the imaging unit is mounted as the external apparatus.

**73.** A calibration displacement detection apparatus **characterized by** comprising:

calibration data holding means for holding calibration data relating to a photographing apparatus which photographs a stereo image;
characteristic extraction means for extracting a characteristic from the stereo image photographed by the photographing apparatus; and
calibration displacement judgment means for judging calibration displacement concerning the calibration data held by the calibration data holding means based on information indicating the characteristic extracted by the characteristic extraction means.

**74.** A calibration displacement detection apparatus **characterized by** comprising:

calibration data holding means for holding calibration data relating to a photographing apparatus which photographs a stereo image;
rectification process means for subjecting the stereo image photographed by the photographing apparatus to a rectification process based on the calibration data held by the calibration data holding means;
characteristic extraction means for extracting a characteristic from the stereo image rectified by the rectification process means; and
calibration displacement judgment means for judging calibration displacement concerning the calibration data held by the calibration data holding means based on information indicating the characteristic extracted by the characteristic extraction means.

**75.** A calibration displacement detection apparatus **characterized by** comprising:

calibration data holding means for holding calibration data relating to calibration between a predetermined external apparatus for use in defining a reference position and a photographing apparatus;
characteristic extraction means for extracting a characteristic from the stereo image photographed by the photographing apparatus; and
calibration displacement judgment means for judging calibration displacement concerning the calibration data held by the calibration data holding means based on information indicating the characteristic extracted by the characteristic extraction means.

**76.** A calibration displacement detection apparatus **characterized by** comprising:

calibration data holding means for holding calibration data relating to calibration between a predetermined external apparatus for use in defining a reference position and a photographing apparatus which photographs a stereo image;
rectification process means for subjecting the stereo image photographed by the photographing apparatus to a rectification process based on the calibration data held by the calibration data holding means;
characteristic extraction means for extracting a characteristic from the stereo image rectified by the rectification process means; and
calibration displacement judgment means for judging calibration displacement concerning the calibration data held by the calibration data holding means based on information indicating the characteristic extracted by the characteristic extraction means.

77. A calibration displacement detection apparatus **characterized by** comprising:

calibration data holding means for holding calibration data relating to a photographing apparatus which photographs a stereo image;
characteristic extraction means for extracting a characteristic from the stereo image photographed by the photographing apparatus;
calibration displacement judgment means for judging calibration displacement concerning the calibration data held by the calibration data holding means based on information indicating the characteristic extracted by the characteristic extraction means; and
displacement result presenting means for presenting a judgment result such as presence of the calibration displacement judged by the calibration displacement judgment means.

78. A calibration displacement detection apparatus **characterized by** comprising:

calibration data holding means for holding calibration data relating to a photographing apparatus which photographs a stereo image;
a rectification process device which subjects the stereo image photographed by the photographing apparatus to a rectification process based on the calibration data held by the calibration data holding means;
characteristic extraction means for extracting a characteristic from the stereo image rectified by the rectification process means;
calibration displacement judgment unit for judging calibration displacement concerning the calibration data held by the calibration data holding means based on information indicating the characteristic extracted by the characteristic extraction means; and
displacement result presenting means for presenting a judgment result such as presence of the calibration displacement judged by the calibration displacement judgment means.

79. A calibration displacement detection apparatus **characterized by** comprising:

calibration data holding means for holding calibration data relating to calibration between a predetermined external apparatus for use in defining a reference position and a photographing apparatus which photographs a stereo image;
characteristic extraction means for extracting a characteristic from the stereo image photographed by the photographing apparatus;
calibration displacement judgment means for judging calibration displacement concerning the calibration data held by the calibration data holding means based on information indicating the characteristic extracted by the characteristic extraction means; and
displacement result presenting means for presenting a judgment result such as presence of the calibration displacement judged by the calibration displacement judgment means.

80. A calibration displacement detection apparatus **characterized by** comprising:

calibration data holding means for holding calibration data relating to calibration between a predetermined external apparatus for use in defining a reference position and a photographing apparatus which photographs a stereo image;
rectification process means for subjecting the stereo image photographed by the photographing apparatus to a rectification process based on the calibration data held by the calibration data holding means;
characteristic extraction means for extracting a characteristic from the stereo image rectified by the rectification process means;
calibration displacement judgment means for judging calibration displacement concerning the calibration data held by the calibration data holding means based on information indicating the characteristic extracted by the characteristic extraction means; and

displacement result presenting means for presenting a judgment result such as presence of the calibration displacement judged by the calibration displacement judgment means.

**81.** A calibration displacement detection apparatus **characterized by** comprising:

calibration data holding means for holding calibration data relating to a photographing apparatus which photographs a stereo image;
characteristic extraction means for extracting a characteristic from the stereo image photographed by the photographing apparatus;
calibration displacement judgment means for judging calibration displacement concerning the calibration data held by the calibration data holding means based on information indicating the characteristic extracted by the characteristic extraction means; and
situation judgment means for judging whether or not to perform calibration displacement detection in accordance with information having predetermined correlation with calibration relating to the photographing apparatus or a predetermined operation.

**82.** A calibration displacement detection apparatus **characterized by** comprising:

calibration data holding means for holding calibration data relating to a photographing apparatus which photographs a stereo image;
a rectification process device which subjects the stereo image photographed by the photographing apparatus to a rectification process based on the calibration data held by the calibration data holding means;
characteristic extraction means for extracting a characteristic from the stereo image rectified by the rectification process means;
calibration displacement judgment means for judging calibration displacement concerning the calibration data held by the calibration data holding means based on information indicating the characteristic extracted by the characteristic extraction means; and
situation judgment means for judging whether or not to perform calibration displacement detection in accordance with information having predetermined correlation with calibration relating to the photographing apparatus or a predetermined operation.

**83.** A calibration displacement detection apparatus **characterized by** comprising:

calibration data holding means for holding calibration data relating to calibration between a predetermined external apparatus for use in defining a reference position and a photographing apparatus which photographs a stereo image;
characteristic extraction unit for extracting a characteristic from the stereo image photographed by the photographing apparatus;
calibration displacement judgment means for judging calibration displacement concerning the calibration data held by the calibration data holding means based on information indicating the characteristic extracted by the characteristic extraction means; and
situation judgment means for judging whether or not to perform calibration displacement detection in accordance with information having predetermined correlation with calibration relating to the photographing apparatus or a predetermined operation.

**84.** A calibration displacement detection apparatus **characterized by** comprising:

calibration data holding means for holding calibration data relating to calibration between a predetermined external apparatus for use in defining a reference position and a photographing apparatus which photographs a stereo image;
rectification process means for subjecting the stereo image photographed by the photographing apparatus to a rectification process based on the calibration data held by the calibration data holding means;
characteristic extraction means for extracting a characteristic from the stereo image rectified by the rectification process means;
calibration displacement judgment means for judging calibration displacement concerning the calibration data held by the calibration data holding means based on information indicating the characteristic extracted by the characteristic extraction means; and
situation judgment means for judging whether or not to perform calibration displacement detection in accordance with information having predetermined correlation with calibration relating to the photographing apparatus or a predetermined operation.

**85.** A calibration displacement detection apparatus **characterized by** comprising:

calibration data holding means for holding calibration data relating to a photographing apparatus which photographs a stereo image;

characteristic extraction means for extracting a characteristic from the stereo image photographed by the photographing apparatus;

calibration displacement judgment means for judging calibration displacement concerning the calibration data held by the calibration data holding means based on information indicating the characteristic extracted by the characteristic extraction means;

displacement result presenting means for presenting a judgment result such as presence of the calibration displacement judged by the calibration displacement judgment means; and

situation judgment means for judging whether or not to perform calibration displacement detection in accordance with information having predetermined correlation with calibration relating to the photographing apparatus or a predetermined operation.

**86.** A calibration displacement detection apparatus **characterized by** comprising:

calibration data holding means for holding calibration data relating to a photographing apparatus which photographs a stereo image;

rectification process means for subjecting the stereo image photographed by the photographing apparatus to a rectification process based on calibration data held by the calibration data holding means;

characteristic extraction means for extracting a characteristic from the stereo image rectified by the rectification process means;

calibration displacement judgment means for judging calibration displacement concerning the calibration data held by the calibration data holding means based on information indicating the characteristic extracted by the characteristic extraction means;

displacement result presenting means for presenting a judgment result such as presence of the calibration displacement judged by the calibration displacement judgment means; and

situation judgment means for judging whether or not to perform calibration displacement detection in accordance with information having predetermined correlation with calibration relating to the photographing apparatus or a predetermined operation.

**87.** A calibration displacement detection apparatus **characterized by** comprising:

calibration data holding means for holding calibration data relating to calibration between a predetermined external apparatus for use in defining a reference position and a photographing apparatus which photographs a stereo image;

characteristic extraction means for extracting a characteristic from the stereo image photographed by the photographing apparatus;

calibration displacement judgment means for judging calibration displacement concerning the calibration data held by the calibration data holding means based on information indicating the characteristic extracted by the characteristic extraction means;

displacement result presenting means for presenting a judgment result such as presence of the calibration displacement judged by the calibration displacement judgment means; and

situation judgment means for judging whether or not to perform calibration displacement detection in accordance with information having predetermined correlation with calibration relating to the photographing apparatus or a predetermined operation.

**88.** A calibration displacement detection apparatus **characterized by** comprising:

calibration data holding means for holding calibration data relating to calibration between a predetermined external apparatus for use in defining a reference position and a photographing apparatus which photographs a stereo image;

rectification process means for subjecting the stereo image photographed by the photographing apparatus to a rectification process based on calibration data held by the calibration data holding means;

characteristic extraction means for extracting a characteristic from the stereo image rectified by the rectification process means;

calibration displacement judgment means for judging calibration displacement concerning the calibration data held by the calibration data holding means based on the characteristic extracted by the characteristic extraction means;

displacement result presenting means for presenting a judgment result such as presence of the calibration displacement judged by the calibration displacement judgment unit; and

situation judgment means for judging whether or not to perform calibration displacement detection in accordance with information having predetermined correlation with calibration relating to the photographing apparatus or a predetermined operation.

**89.** A stereo camera **characterized by** comprising:

imaging means constituted in such a manner as to obtain a video signal output indicating a plurality of images having parallax errors by a plurality of visual points detached from one another;

calibration displacement detection means for detecting calibration displacement of the imaging means; and

calculation means for calculating data such as a distance of a subject depending on the video signal output obtained by the imaging means in consideration of detection output data of the calibration displacement detection means,

the calibration displacement detection means comprising:

calibration data holding means for holding calibration data relating to the imaging means;

characteristic extraction means for extracting a characteristic from a stereo image which is the video signal output obtained by the imaging means; and

calibration displacement judgment means for judging calibration displacement concerning the calibration data stored in the calibration data storage means based on information indicating the characteristic extracted by the characteristic extraction means.

**90.** A stereo camera **characterized by** comprising:

imaging means constituted in such a manner as to obtain a video signal output indicating a plurality of images having parallax errors by a plurality of visual points detached from one another;

calibration displacement detection means for detecting calibration displacement of the imaging means; and

calculation means for calculating data such as a distance of a subject depending on the video signal output obtained by the imaging means in consideration of detection output data of the calibration displacement detection means,

the calibration displacement detection means comprising:

calibration data holding means for holding calibration data relating to the imaging means;

rectification process means for rectifying a stereo image taken by the imaging means based on the calibration data held by the calibration data holding means;

characteristic extraction means for extracting a characteristic from the stereo image rectified by the rectification process means; and

calibration displacement judgment unit which judges calibration displacement concerning the calibration data stored in the calibration data storage means based on information indicating the characteristic extracted by the characteristic extraction means.

**91.** A stereo camera **characterized by** comprising:

imaging means constituted in such a manner as to obtain a video signal output indicating a plurality of images having parallax errors by a plurality of visual points detached from one another;

calibration displacement detection means for detecting calibration displacement between the imaging means and an external apparatus which defines a predetermined reference position; and

calculation means for calculating data such as a distance of a subject depending on the video signal output obtained by the imaging means in consideration of a detection output of the calibration displacement detection means,

the calibration displacement detection means comprising:

calibration data storage means for storing calibration data relating to calibration displacement between a predetermined external apparatus for use in defining the reference position and the imaging means; characteristic extraction means for extracting a characteristic from a stereo image which is the video signal output obtained by the imaging means; and calibration displacement judgment means for judging calibration displacement concerning the calibration data held by the calibration data holding means based on the characteristic extracted by the characteristic extraction means.

**92.** A stereo camera **characterized by** comprising:

imaging means constituted in such a manner as to obtain a video signal output indicating a plurality of images having parallax errors by a plurality of visual points detached from one another; calibration displacement detection means for detecting calibration displacement between the imaging means and an external apparatus which defines a predetermined reference position; and calculation means for calculating data such as a distance of a subject depending on the video signal output obtained by the imaging means in consideration of a detection output of the calibration displacement detection means,

the calibration displacement detection means comprising:

calibration data holding means for holding calibration data relating to the imaging means; rectification process means for rectifying a stereo image taken by the imaging means based on the calibration data held by the calibration data holding means; characteristic extraction means for extracting a characteristic from the stereo image rectified by the rectification process means; and calibration displacement judgment means for judging calibration displacement concerning the calibration data held by the calibration data holding means based on information indicating the characteristic extracted by the characteristic extraction means.

**93.** A stereo camera system **characterized by** comprising:

imaging means constituted in such a manner as to obtain a video signal output indicating a plurality of images having parallax errors by a plurality of visual points detached from one another; calibration displacement detection means for detecting calibration displacement of the imaging means; calculation means for calculating data such as a distance of a subject depending on the video signal output obtained by the imaging means in consideration of detection output data of the calibration displacement detection means; and display means for performing required display associated with outputs of the calibration displacement detection means, the calculation means, and the imaging means,

the calibration displacement detection means comprising:

calibration data holding means for holding calibration data relating to the imaging means; characteristic extraction means for extracting a characteristic from a stereo image which is the video signal output obtained by the imaging means; and calibration displacement judgment means for judging calibration displacement concerning the calibration data held by the calibration data holding means based on information indicating the characteristic extracted by the characteristic extraction means, the display means being constituted in such a manner as to be capable of displaying a judgment result of the calibration displacement judgment means in a display face thereof.

**94.** A stereo camera system **characterized by** comprising:

imaging means constituted in such a manner as to obtain a video signal output indicating a plurality of images having parallax errors by a plurality of visual points detached from one another; calibration displacement detection means for detecting calibration displacement of the imaging means; calculation means for calculating data such as a distance of a subject depending on the video signal output obtained by the imaging means in consideration of detection output data of the calibration displacement detection means; and display means for performing required display associated with outputs of the calibration displacement detection means, the calculation means, and the imaging means,
the calibration displacement detection means comprising:

calibration data holding means for holding calibration data relating to the imaging means;
rectification process means for rectifying a stereo image which is the video signal output obtained by the imaging means based on the calibration data held by the calibration data holding means;
characteristic extraction means for extracting a characteristic from the stereo image rectified by the rectification process means; and
calibration displacement judgment means for judging calibration displacement concerning the calibration data held by the calibration data holding means based on information indicating the characteristic extracted by the characteristic extraction means,
the display means being constituted in such a manner as to be capable of displaying a judgment result of the calibration displacement judgment means in a display face thereof.

**95.** A stereo camera system **characterized by** comprising:

imaging means constituted in such a manner as to obtain a video signal output indicating a plurality of images having parallax errors by a plurality of visual points detached from one another;
calibration displacement detection means for detecting calibration displacement between the imaging means and an external apparatus which defines a predetermined reference position;
calculation means for calculating data such as a distance of a subject depending on the video signal output obtained by the imaging means in consideration of detection output data of the calibration displacement detection means; and
display means which performs required display associated with outputs of the calibration displacement detection means, the calculation means, and the imaging means,
the calibration displacement detection means comprising:

calibration data holding means for holding calibration data relating to calibration between a predetermined external apparatus for use in defining the reference position and the imaging means;
characteristic extraction means for extracting a characteristic from a stereo image which is the video signal output obtained by the imaging means; and
calibration displacement judgment means for judging calibration displacement concerning the calibration data held by the calibration data holding means based on information indicating the characteristic extracted by the characteristic extraction means,
the display means being constituted in such a manner as to be capable of displaying a judgment result of the calibration displacement judgment means in a display face thereof.

**96.** A stereo camera system **characterized by** comprising:

imaging means constituted in such a manner as to obtain a video signal output indicating a plurality of images having parallax errors by a plurality of visual points detached from one another;
calibration displacement detection means for detecting calibration displacement between the imaging means and an external apparatus which defines a predetermined reference position;
calculation means for calculating data such as a distance of a subject depending on the video signal output obtained by the imaging means in consideration of detection output data of the calibration displacement detection means; and
a display unit which performs required display associated with outputs of the calibration displacement detection means, the calculation means, and the imaging means,
the calibration displacement detection means comprising:

calibration data holding means for holding calibration data relating to calibration between a predetermined external apparatus for use in defining the reference position and the imaging means;
rectification process means for rectifying a stereo image which is the video signal output obtained by the imaging means based on the calibration data held by the calibration data holding means;
characteristic extraction means for extracting a characteristic from the stereo image rectified by the rectification process means; and
calibration displacement judgment means for judging calibration displacement concerning the calibration data held by the calibration data holding means based on information indicating the characteristic extracted by the characteristic extraction means,
the display means being constituted in such a manner as to be capable of displaying a judgment result of the calibration displacement judgment means in a display face thereof.

**97.** A calibration displacement correction apparatus **characterized by** comprising:

a calibration data holding unit which holds calibration data relating to a photographing apparatus photographing a stereo image;
a characteristic extraction unit which extracts a characteristic from the stereo image photographed by the photographing apparatus; and
a calibration data correction unit which corrects calibration displacement concerning the calibration data held by the calibration data holding unit based on information indicating the characteristic extracted by the characteristic extraction unit.

**98.** A calibration displacement correction apparatus **characterized by** comprising:

a calibration data holding unit which holds calibration data relating to a photographing apparatus photographing a stereo image;
a rectification process unit which subjects the stereo image photographed by the photographing apparatus to a rectification process based on the calibration data held by the calibration data holding unit;
a characteristic extraction unit which extracts a characteristic from the stereo image rectified by the rectification process unit; and
a calibration data correction unit which corrects calibration displacement concerning the calibration data held by the calibration data holding unit based on information indicating the characteristic extracted by the characteristic extraction unit.

**99.** A calibration displacement correction apparatus **characterized by** comprising:

a calibration data holding unit which holds calibration data relating to calibration between a predetermined external apparatus for use in defining a reference position and a photographing apparatus;
a characteristic extraction unit which extracts a characteristic from the stereo image photographed by the photographing apparatus; and
a calibration data correction unit which corrects calibration displacement concerning the calibration data held by the calibration data holding unit based on information indicating the characteristic extracted by the characteristic extraction unit.

**100.** A calibration displacement correction apparatus **characterized by** comprising:

a calibration data holding unit to hold calibration data which corrects calibration displacement between a predetermined external apparatus for use in defining a reference position and a photographing apparatus photographing a stereo image;
a rectification process unit which subjects the stereo image photographed by the photographing apparatus to a rectification process based on the calibration data held by the calibration data holding unit;
a characteristic extraction unit which extracts a characteristic from the stereo image rectified by the rectification process unit; and
a calibration data correction unit which corrects calibration displacement concerning the calibration data held by the calibration data holding unit based on information indicating the characteristic extracted by the characteristic extraction unit.

**101.** A calibration displacement correction apparatus **characterized by** comprising:

a calibration data holding unit which holds calibration data related to calibration between a predetermined external apparatus for use in defining a reference position and a photographing apparatus photographing a stereo image and calibration of a main body of the photographing apparatus;
a characteristic extraction unit which extracts a characteristic from the stereo image photographed by the photographing apparatus; and
a calibration data correction unit which corrects calibration displacement concerning the calibration data held by the calibration data holding unit based on information indicating the characteristic extracted by the characteristic extraction unit.

**102.** A calibration displacement correction apparatus **characterized by** comprising:

a calibration data holding unit which holds calibration data relating to calibration between a predetermined external apparatus for use in defining a reference position and a photographing apparatus photographing a stereo image and calibration of a main body of the photographing apparatus;

a rectification process unit which subjects the stereo image photographed by the photographing apparatus to a rectification process based on the calibration data held by the calibration data holding unit;

a characteristic extraction unit which extracts a characteristic from the stereo image rectified by the rectification process unit; and

a calibration data correction unit which corrects calibration displacement concerning the calibration data held by the calibration data holding unit based on information indicating the characteristic extracted by the characteristic extraction unit.

**103.** A calibration displacement correction apparatus **characterized by** comprising:

a calibration data holding unit which holds calibration data of calibration related to a photographing apparatus photographing a stereo image;

a characteristic extraction unit which extracts a characteristic from the stereo image photographed by the photographing apparatus;

a calibration displacement judgment unit which judges presence of calibration displacement based on information indicating the characteristic extracted by the characteristic extraction unit; and

a calibration data correction unit which corrects calibration displacement concerning the calibration data held by the calibration data holding unit in a case where the calibration displacement judgment unit judges that there is the displacement.

**104.** A calibration displacement correction apparatus **characterized by** comprising:

a calibration data holding unit which holds calibration data relating to calibration of a photographing apparatus photographing a stereo image;

a rectification process unit which subjects the stereo image photographed by the photographing apparatus to a rectification process based on the calibration data held by the calibration data holding unit;

a characteristic extraction unit which extracts a characteristic from the stereo image rectified by the rectification process unit;

a calibration displacement judgment unit which judges presence of calibration displacement based on information indicating the characteristic extracted by the characteristic extraction unit; and

a calibration data correction unit which corrects calibration displacement concerning the calibration data held by the calibration data holding unit based on information indicating the characteristic extracted by the characteristic extraction unit in a case where the calibration displacement judgment unit judges that there is the displacement.

**105.** A calibration displacement correction apparatus **characterized by** comprising:

a calibration data holding unit which holds calibration data of calibration relating to a photographing apparatus photographing a stereo image;

a characteristic extraction unit which extracts a characteristic from the stereo image photographed by the photographing apparatus;

a calibration displacement judgment unit which judges presence of calibration displacement and which determines a type of the displacement based on information indicating the characteristic extracted by the characteristic extraction unit; and

a calibration data correction unit which corrects calibration displacement concerning the calibration data held by the calibration data holding unit in accordance with the type of the displacement in a case where the calibration displacement judgment unit judges that there is the displacement.

**106.** A calibration displacement correction apparatus **characterized by** comprising:

a calibration data holding unit which holds calibration data of calibration relating to a photographing apparatus photographing a stereo image;

a rectification process unit which subjects the stereo image photographed by the photographing apparatus to a rectification process based on the calibration data held by the calibration data holding unit;

a characteristic extraction unit which extracts a characteristic from the stereo image rectified by the rectification process unit;

a calibration displacement judgment unit which judges presence of calibration displacement and which determines a type of the displacement based on information indicating the characteristic extracted by the characteristic extraction unit; and

a calibration data correction unit which corrects calibration displacement concerning the calibration data held by the calibration data holding unit in accordance with the type of the displacement in a case where the calibration displacement judgment unit judges that there is the displacement.

107. The calibration displacement correction apparatus according to any one of claims 97 to 106, **characterized by** further comprising: a correction result presenting unit which presents a calibration displacement correction result judged by the calibration data correction unit.

108. The calibration displacement correction apparatus according to any one of claims 97 to 106, **characterized by** further comprising: a situation judgment unit which judges whether or not to perform calibration displacement correction in accordance with information having predetermined correlation with calibration relating to the photographing apparatus or a predetermined operation.

109. The calibration displacement correction apparatus according to any one of claims 97 to 106, **characterized in that** the calibration data holding unit is constituted in such a manner as to hold the calibration data corrected by the calibration data correction unit.

110. The calibration displacement correction apparatus according to any one of claims 97 to 106, **characterized by** further comprising: a distortion correction process unit which subjects the stereo image obtained by the photographing apparatus to a distortion correction process based on the calibration data held in the calibration data holding unit.

111. The calibration displacement correction apparatus according to any one of claims 97 to 106, **characterized by** further comprising: a control unit which controls repetition of the photographing of the stereo image by the photographing apparatus based on precision of the data corrected by the calibration data correction unit.

112. The calibration displacement correction apparatus according to any one of claims 97 to 106, **characterized by** further comprising: a control unit which controls repetition of the photographing of the stereo image by the photographing apparatus in accordance with the number of characteristics for use in a correction process by the calibration data correction unit.

113. The calibration displacement correction apparatus according to any one of claims 97 to 106, **characterized in that** the characteristic extraction unit extracts a plurality of characteristics present in correlation of the stereo image obtained by the photographing apparatus, excludes characteristics which can be judged to be abnormal among the plurality of extracted and associated characteristics.

114. The calibration displacement correction apparatus according to any one of claims 97 to 106, **characterized in that** the characteristic extraction unit extracts characteristics capable of being associated in the in the vicinity of an epipolar line based on the calibration data held by the calibration data holding unit during extracting characteristics present in correspondence of the stereo image obtained by the photographing apparatus.

115. The calibration displacement correction apparatus according to any one of claims 97 to 106, **characterized in that** the characteristic extraction unit comprises: a characteristic selection unit which selects a characteristic effective for calibration displacement detection in one image in the stereo images obtained by the photographing apparatus; and a characteristic pair correspondence searching unit which extracts or searches a characteristic corresponding to the selected characteristic from the other image.

116. The calibration displacement correction apparatus according to any one of claims 97 to 106, **characterized in that** the calibration data holding unit holds data of a plurality of characteristics whose relative positional relation is known, and the calibration data correction unit corrects the calibration data depending on information of the positional relation indicated by the data in a case where the characteristic extraction unit uses the data relating to the characteristic held by the calibration data holding unit.

117. The calibration displacement correction apparatus according to any one of claims 97 to 106, which performs the calibration displacement correction with respect to an object which is the photographing apparatus of a stereo adaptor system comprising an optical system to obtain a plurality of images causing parallax errors by a plurality of visual points and a single camera unit.

118. The calibration displacement correction apparatus according to any one of claims 97 to 106, which performs the calibration displacement correction with respect to an object which is the photographing apparatus comprising a photographing system comprising a plurality of cameras.

119. The calibration displacement correction apparatus according to any one of claims 97 to 106, constituted in such a manner as to correct the calibration displacement relating to the photographing apparatus of a car mounted type.

120. The calibration displacement correction apparatus according to claim 108, **characterized in that** the situation judgment unit judges a situation based on an output of an external sensor.

121. The calibration displacement correction apparatus according to any one of claims 99 to 102, **characterized in that** a specific shape portion of the vehicle on which the photographing apparatus is mounted is applied as the external apparatus.

122. The calibration displacement correction apparatus according to any one of claims 99 to 102, **characterized in that** a known shaped object outside the vehicle, photographed by the photographing apparatus mounted on the vehicle, is applied as the external apparatus.

123. The calibration displacement correction apparatus according to claim 107, **characterized in that** the correction result presenting unit is constituted in such a manner as to be capable of functioning as an indicator indicating that the calibration displacement is being corrected.

124. The calibration displacement correction apparatus according to claim 107, **characterized in that** the correction result presenting unit is constituted in such a manner as to be capable of displaying a difference between a parameter obtained by calibration displacement correction and a calibration parameter stored beforehand.

125. The calibration displacement correction apparatus according to claim 107, **characterized in that** the correction result presenting unit is constituted in such a manner as to be capable of displaying a status indicating reliability related to the calibration displacement correction.

126. The calibration displacement correction apparatus according to claim 107, **characterized in that** the correction result presenting unit is constituted in such a manner as to be capable of presenting an error code based on an error in a case where a calibration displacement correction process results in the error.

127. A stereo camera system **characterized by** comprising:

an imaging unit constituted in such a manner as to obtain a video signal output indicating a plurality of images having parallax errors by a plurality of visual points detached from one another;
a calibration displacement correction unit which corrects calibration displacement of the photographing unit;
a calculation unit which calculates data such as a distance of a subject depending on the video signal output obtained by the imaging unit in consideration of correction output data of the calibration displacement correction unit; and
a display unit which performs required display associated with outputs of the calibration displacement correction unit, the calculation unit, and the imaging unit,
the calibration displacement correction unit comprising:

a calibration data holding unit which holds calibration data relating to the imaging unit;
a characteristic extraction unit to extract a characteristic from a stereo image which is the video signal output obtained by the photographing unit; and
a calibration data correction unit which corrects calibration displacement concerning the calibration data held by the calibration data holding unit based on information indicating the characteristic extracted by the characteristic extraction unit,

the display unit being constituted in such a manner as to be capable of displaying a correction result of the calibration displacement correction unit in a display face thereof.

128. A stereo camera system **characterized by** comprising:

an imaging unit constituted in such a manner as to obtain a video signal output indicating a plurality of images having parallax errors by a plurality of visual points detached from one another;

a calibration displacement correction unit which corrects calibration displacement of the photographing unit;

a calculation unit which calculates data such as a distance of a subject depending on the video signal output obtained by the imaging unit in consideration of correction output data of the calibration displacement correction unit; and

a display unit which performs required display associated with outputs of the calibration displacement correction unit, the calculation unit, and the imaging unit,

the calibration displacement correction unit comprising:

a calibration data holding unit which holds calibration data relating to the imaging unit;

a rectification process unit to subject a stereo image which is the video signal output obtained by the photographing unit to a rectification process based on the calibration data held by the calibration data holding unit;

a characteristic extraction unit which extracts a characteristic from the stereo image rectified by the rectification process unit; and

a calibration displacement correction unit which corrects calibration displacement concerning the calibration data held by the calibration data holding unit based on information indicating the characteristic extracted by the characteristic extraction unit,

the display unit being constituted in such a manner as to be capable of displaying a correction result of the calibration displacement correction unit in a display face thereof.

129. A stereo camera system **characterized by** comprising:

an imaging unit constituted in such a manner as to obtain a video signal output indicating a plurality of images having parallax errors by a plurality of visual points detached from one another;

a calibration displacement correction unit which corrects calibration displacement between the photographing unit and an external apparatus defining a predetermined reference position;

a calculation unit which calculates data such as a distance of a subject depending on the video signal output obtained by the imaging unit in consideration of correction output data of the calibration displacement correction unit; and

a display unit which performs required display associated with outputs of the calibration displacement correction unit, the calculation unit, and the imaging unit,

the calibration displacement correction unit comprising:

a calibration data holding unit which holds calibration data relating to calibration between a predetermined external apparatus for use in defining the reference position and the imaging unit;

a characteristic extraction unit to extract a characteristic from a stereo image which is the video signal output obtained by the photographing unit; and

a calibration displacement correction unit which corrects calibration displacement concerning the calibration data held by the calibration data holding unit based on information indicating the characteristic extracted by the characteristic extraction unit,

the display unit being constituted in such a manner as to be capable of displaying a correction result of the calibration displacement correction unit in a display face thereof.

130. A stereo camera system **characterized by** comprising:

an imaging unit constituted in such a manner as to obtain a video signal output indicating a plurality of images having parallax errors by a plurality of visual points detached from one another;

a calibration displacement correction unit which corrects calibration displacement between the photographing unit and an external apparatus defining a predetermined reference position;

a calculation unit which calculates data such as a distance of a subject depending on the video signal output obtained by the imaging unit in consideration of correction output data of the calibration displacement correction unit; and

a display unit which performs required display associated with outputs of the calibration displacement correction unit, the calculation unit, and the imaging unit,

the calibration displacement correction unit comprising:

a calibration data holding unit which holds calibration data relating to calibration between a predetermined external apparatus for use in defining the reference position and the imaging unit;

a rectification process unit to subject a stereo image which is the video signal output obtained by the photographing unit to a rectification process based on the calibration data held by the calibration data holding unit;

a characteristic extraction unit which extracts a characteristic from the stereo image rectified by the rectification process unit; and

a calibration displacement correction unit which corrects calibration displacement concerning the calibration data held by the calibration data holding unit based on information indicating the characteristic extracted by the characteristic extraction unit,

the display unit being constituted in such a manner as to be capable of displaying a correction result of the calibration displacement correction unit in a display face thereof.

131. The stereo camera system according to any one of claims 127 to 130, **characterized in that** the display unit is constituted in such a manner as to be capable of displaying that a process operation relating to calibration displacement correction is being performed by cooperation with the calibration data correction unit.

132. The stereo camera system according to any one of claims 127 to 130, **characterized in that** the display unit is constituted in such a manner as to be capable of displaying information indicating a difference between a parameter obtained as a result of a process relating to calibration displacement correction and a parameter held beforehand in the calibration data holding unit by cooperation with the calibration data correction unit.

133. The stereo camera system according to any one of claims 127 to 130, **characterized in that** the display unit is constituted in such a manner as to be capable of displaying an error code indicating that regular calibration displacement correction is incapable of being performed by cooperation with the calibration data correction unit.

134. The stereo camera system according to any one of claims 127 to 130, **characterized in that** the calibration displacement correction unit is constituted in such a manner that the characteristic extraction unit judges reliability concerning the stereo image obtained by the imaging device, and the calibration displacement correction unit further comprises a control unit performing a control in such a manner as to repeat a photographing process by the imaging unit, when the characteristic extraction unit judges that reliability concerning the stereo image obtained by the imaging unit is insufficient.

135. A calibration displacement correction apparatus **characterized by** comprising:

calibration data holding means for holding calibration data relating to a photographing apparatus which photographs a stereo image;

characteristic extraction means for extracting a characteristic from the stereo image photographed by the photographing apparatus; and

calibration data correction means for correcting calibration displacement concerning the calibration data held by the calibration data holding means based on information indicating the characteristic extracted by the characteristic extraction means.

136. A calibration displacement correction apparatus **characterized by** comprising:

calibration data holding means for holding calibration data relating to a photographing apparatus which photographs a stereo image;

rectification process means for subjecting the stereo image photographed by the photographing apparatus to a rectification process based on the calibration data held by the calibration data holding means;

characteristic extraction means for extracting a characteristic from the stereo image rectified by the rectification process means; and

calibration data correction means for correcting calibration displacement concerning the calibration data held by the calibration data holding means based on information indicating the characteristic extracted by the characteristic extraction means.

137. A calibration displacement correction apparatus **characterized by** comprising:

calibration data holding means for holding calibration data relating to calibration between a predetermined external apparatus for use in defining a reference position and a photographing apparatus;
characteristic extraction means for extracting a characteristic from the stereo image photographed by the photographing apparatus; and
calibration data correction means for correcting calibration displacement concerning the calibration data held by the calibration data holding means based on information indicating the characteristic extracted by the characteristic extraction means.

138. A calibration displacement correction apparatus **characterized by** comprising:

calibration data holding means for holding calibration data which corrects calibration displacement between a predetermined external apparatus for use in defining a reference position and a photographing apparatus photographing a stereo image;
rectification process means for subjecting the stereo image photographed by the photographing apparatus to a rectification process based on the calibration data held by the calibration data holding means;
characteristic extraction means for extracting a characteristic from the stereo image rectified by the rectification process means; and
calibration data correction means for correcting calibration displacement concerning the calibration data held by the calibration data holding means based on information indicating the characteristic extracted by the characteristic extraction means.

139. A calibration displacement correction apparatus **characterized by** comprising:

calibration data holding means for holding calibration data related to calibration between a predetermined external apparatus for use in defining a reference position and a photographing apparatus photographing a stereo image and calibration of a main body of the photographing apparatus;
characteristic extraction means for extracting a characteristic from the stereo image photographed by the photographing apparatus; and
calibration data correction means for correcting calibration displacement concerning the calibration data held by the calibration data holding means based on information indicating the characteristic extracted by the characteristic extraction means.

140. A calibration displacement correction apparatus **characterized by** comprising:

calibration data holding means for holding calibration data relating to calibration between a predetermined external apparatus for use in defining a reference position and a photographing apparatus photographing a stereo image and calibration of a main body of the photographing apparatus;
rectification process means for subjecting the stereo image photographed by the photographing apparatus to a rectification process based on the calibration data held by the calibration data holding means;
characteristic extraction means for extracting a characteristic from the stereo image rectified by the rectification process means; and
calibration data correction means for correcting calibration displacement concerning the calibration data held by the calibration data holding means based on information indicating the characteristic extracted by the characteristic extraction means.

141. A calibration displacement correction apparatus **characterized by** comprising:

calibration data holding means for holding calibration data of calibration related to a photographing apparatus which photographs a stereo image;
characteristic extraction means for extracting a characteristic from the stereo image photographed by the photographing apparatus;
calibration displacement judgment means for judging presence of calibration displacement based on information indicating the characteristic extracted by the characteristic extraction means; and

calibration data correction means for correcting calibration displacement concerning the calibration data held by the calibration data holding means in a case where the calibration displacement judgment means judges that there is the displacement.

142. A calibration displacement correction apparatus **characterized by** comprising:

calibration data holding means for holding calibration data relating to calibration of a photographing apparatus which photographs a stereo image;
rectification process means for subjecting the stereo image photographed by the photographing apparatus to a rectification process based on the calibration data held by the calibration data holding means;
characteristic extraction means for extracting a characteristic from the stereo image rectified by the rectification process means;
calibration displacement judgment means for judging presence of calibration displacement based on information indicating the characteristic extracted by the characteristic extraction device; and
calibration data correction means for correcting calibration displacement concerning the calibration data held by the calibration data holding means based on information indicating the characteristic extracted by the characteristic extraction means in a case where the calibration displacement judgment means judges that there is the displacement.

143. A calibration displacement correction apparatus **characterized by** comprising:

calibration data holding means for holding calibration data of calibration relating to a photographing apparatus which photographs a stereo image;
characteristic extraction means for extracting a characteristic from the stereo image photographed by the photographing apparatus;
calibration displacement judgment means for judging presence of calibration displacement and determining a type of the displacement based on information indicating the characteristic extracted by the characteristic extraction means; and
calibration data correction means for correcting calibration displacement concerning the calibration data held by the calibration data holding means in accordance with the type of the displacement in a case where the calibration displacement judgment means judges that there is the displacement.

144. A calibration displacement correction apparatus **characterized by** comprising:

calibration data holding means for holding calibration data of calibration relating to a photographing apparatus which photographs a stereo image;
rectification process means for subjecting the stereo image photographed by the photographing apparatus to a rectification process based on the calibration data held by the calibration data holding means;
characteristic extraction means for extracting a characteristic from the stereo image rectified by the rectification process means;
calibration displacement judgment means for judging presence of calibration displacement and determining a type of the displacement based on information indicating the characteristic extracted by the characteristic extraction means; and
calibration data correction means for correcting calibration displacement concerning the calibration data held by the calibration data holding means in accordance with the type of the displacement in a case where the calibration displacement judgment means judges that there is the displacement.

145. A stereo camera system **characterized by** comprising:

imaging means constituted in such a manner as to obtain a video signal output indicating a plurality of images having parallax errors by a plurality of visual points detached from one another;
calibration displacement correction means for correcting calibration displacement of the photographing means;
calculation means for calculating data such as a distance of a subject depending on the video signal output obtained by the imaging means in consideration of correction output data of the calibration displacement correction means; and
display means for performing required display associated with outputs of the calibration displacement correction means, the calculation means, and the imaging means,
the calibration displacement correction means comprising:

calibration data holding means for holding calibration data relating to the imaging means;
characteristic extraction means for extracting a characteristic from a stereo image which is the video signal output obtained by the photographing means; and
calibration data correction means for correcting calibration displacement concerning the calibration data held by the calibration data holding means based on information indicating the characteristic extracted by the characteristic extraction means,
the display means being constituted in such a manner as to be capable of displaying a correction result of the calibration displacement correction means in a display face thereof.

**146.** A stereo camera system **characterized by** comprising:

imaging means constituted in such a manner as to obtain a video signal output indicating a plurality of images having parallax errors by a plurality of visual points detached from one another;
calibration displacement correction means for correcting calibration displacement of the photographing means;
calculation means for calculating data such as a distance of a subject depending on the video signal output obtained by the imaging means in consideration of correction output data of the calibration displacement correction means; and
display means for performing required display associated with outputs of the calibration displacement correction means, the calculation means, and the imaging means,
the calibration displacement correction means comprising:

calibration data holding means for holding calibration data relating to the imaging means;
rectification process means for subjecting a stereo image which is the video signal output obtained by the photographing means to a rectification process based on the calibration data held by the calibration data holding means;
characteristic extraction means for extracting a characteristic from the stereo image rectified by the rectification process means; and
calibration displacement correction means for correcting calibration displacement concerning the calibration data held by the calibration data holding means based on information indicating the characteristic extracted by the characteristic extraction means,
the display means being constituted in such a manner as to be capable of displaying a correction result of the calibration displacement correction means in a display face thereof.

**147.** A stereo camera system **characterized by** comprising:

imaging means constituted in such a manner as to obtain a video signal output indicating a plurality of images having parallax errors by a plurality of visual points detached from one another;
calibration displacement correction means for correcting calibration displacement between the photographing means and an external apparatus defining a predetermined reference position;
calculation means for calculating data such as a distance of a subject depending on the video signal output obtained by the imaging means in consideration of correction output data of the calibration displacement correction means; and
display means for performing required display associated with outputs of the calibration displacement correction means, the calculation means, and the imaging means,
the calibration displacement correction means comprising:

calibration data holding means for holding calibration data relating to calibration between a predetermined external apparatus for use in defining the reference position and the imaging means;
characteristic extraction means for extracting a characteristic from a stereo image which is the video signal output obtained by the photographing means; and
calibration displacement correction means which corrects calibration displacement concerning the calibration data held by the calibration data holding means based on information indicating the characteristic extracted by the characteristic extraction means,
the display unit being constituted in such a manner as to be capable of displaying a correction result of the calibration displacement correction means in a display face thereof.

**148.** A stereo camera system **characterized by** comprising:

EP 1 637 836 A1

imaging means constituted in such a manner as to obtain a video signal output indicating a plurality of images having parallax errors by a plurality of visual points detached from one another;

calibration displacement correction means for correcting calibration displacement between the photographing unit and an external apparatus which defines a predetermined reference position;

calculation means for calculating data such as a distance of a subject depending on the video signal output obtained by the imaging means in consideration of correction output data of the calibration displacement correction means; and

display means for performing required display associated with outputs of the calibration displacement correction means, the calculation means, and the imaging means,

the calibration displacement correction means comprising:

calibration data holding means for holding calibration data relating to calibration between a predetermined external apparatus for use in defining the reference position and the imaging means;

rectification process means for subjecting a stereo image which is the video signal output obtained by the photographing means to a rectification process based on the calibration data held by the calibration data holding means;

characteristic extraction unit for extracting a characteristic from the stereo image rectified by the rectification process means; and

calibration displacement correction means for correcting calibration displacement concerning the calibration data held by the calibration data holding means based on information indicating the characteristic extracted by the characteristic extraction means,

the display means being constituted in such a manner as to be capable of displaying a correction result of the calibration displacement correction means in a display face thereof.

FIG.1

F I G. 2

FIG.3A

FIG.3B

FIG.3C

FIG.3D

F I G. 4A

F I G. 4B

FIG.5

FIG.6

FIG.7A

100 94 96

16 80

50

98

FIG.7B

100 94 96

16 80

50

98

103

EP 1 637 836 A1

```
                        ┌──────────┐
                        │  Start   │
                        └────┬─────┘
                             │
                             ▼
          ╔═══════════════════════════════════╗
          ║  Object recognition process       ║ ~S1
          ╚═══════════════════════════════════╝
                             │
                             ▼
          ┌───────────────────────────────────┐
          │  Obtain highest level position    │ ~S2
          │  of contour of subject            │
          └───────────────────────────────────┘
                             │
                             ▼
                                    S3
                      ╱──────────────╲
         YES         ╱ Position above  ╲        NO
        ◄───────────╱ upper end portion ╲───────────►
                    ╲    of view field   ╱
                     ╲       ?          ╱
                      ╲────────────────╱
    S5                                              S4
    ┌─────────────────────────┐      ┌─────────────────────────────┐
    │ Calculate upward        │      │ Calculate downward          │
    │ correction indication   │      │ correction indication value │
    │ value                   │      │                             │
    └────────────┬────────────┘      └──────────────┬──────────────┘
                 │                                   │
                 └─────────────┬─────────────────────┘
                               ▼
               ┌───────────────────────────────────┐
               │  Drive attachment angle           │ ~S6
               │  adjustment mechanism             │
               └───────────────────────────────────┘
                               │
                               ▼
                        ┌──────────┐
                        │   End    │
                        └──────────┘
```

FIG.8

FIG.9A

FIG.9B

```
                    ( Start )
                        |
                        v
    +-----------------------------------------+
    |     Read suspension stroke sensor       |~ S11
    +-----------------------------------------+
                        |
                        v
    +-----------------------------------------+
    |     Calculate backward / forward tilts  |~ S12
    +-----------------------------------------+
                        |
                        v                       S13
              /---------------------\
      YES    /  Vehicle tilts forwards \    NO
    <-------<            ?              >------->
             \                         /
              \---------------------/
```

S15 — Calculate upward correction indication value

S14 — Calculate downward correction indication value

Drive attachment angle adjustment mechanism ~ S16

( End )

# F I G. 10

FIG.11A

FIG.11B

Start

Read vehicle tilt sensor — S21

Calculate right / left tilts — S22

S23

Vehicle tilts right ?

YES          NO

S25
Calculate left tilt correction indication value

S24
Calculate right tilt correction indication value

Drive attachment angle adjustment mechanism — S26

End

F I G. 1 2

FIG.13A

FIG.13B

Start

Road surface recognition process ~S31

Obtain specific position of road surface ~S32

S33
Elevation angle of corresponding position smaller than predetermined angle?

YES          NO

S35
Calculate upward correction indication value

S34
Calculate downward correction indication value

Drive attachment angle adjustment mechanism ~S36

End

FIG.14

Start

GPS map information process — S41

Predict tilt of road surface in front — S42

S43

YES ← Predicted front tilt ascending ? → NO

S45

Calculate upward correction indication value

S44

Calculate downward correction indication value

Drive attachment angle adjustment mechanism — S46

End

F I G. 1 5

94a

94b

104a

104b

# FIG.16B

# FIG.16C

16

80

# FIG.16A

EP 1 637 836 A1

Photographing apparatus ~128

Stereo image

110

114

Situation judgment device

116

Rectification process device

124

Calibration data storage device

112

Situation judgment result

118

Rectification stereo image

Control device

Characteristic extraction device

Control signal

120

Extracted characteristics

Calibration data

Calibration displacement judgment device

Displacement judgment result

Displacement result presenting device ~122

FIG.17

**FIG.18**

**FIG.19A**

**FIG.19B**

140a

140b

142a

$(u^L, v^L)$

142b

144

# FIG.20

F I G. 2 1 A

F I G. 2 1 B

F I G. 2 2

Start

S51

Situation judgment
device judges that calibration
displacement detection
is necessary
?

NO

YES

Photograph stereo image
with photographing apparatus — S52

Rectification process
of stereo image — S53

Extract characteristics from
rectified stereo image — S54

S55

Photographed
image appropriate
?

NO

YES

Judge whether there is
calibration displacement — S56

Present calibration displacement
judgment result — S57

End

F I G. 2 3

FIG. 24A

FIG. 24B

FIG. 25A

FIG. 25B

Stereo image

↓

```
┌─────────────────────────────────────────┐
│   ┌─────────────────────┐                │
│   │   Characteristic    │ ～118a         │
│   │   selection unit    │                │
│   └─────────────────────┘                │
│            ↓ Selected characteristic  ～118
│   ┌─────────────────────┐                │
│   │   Characteristic    │                │
│   │   correspondence    │ ～118b         │
│   │   searching unit    │                │
│   └─────────────────────┘                │
└─────────────────────────────────────────┘
```

↓ Associated characteristic pair

# FIG.26

# FIG.27

FIG.28

FIG.29A

$$u_2 - u_1 + 2W_u$$

$$2W_v$$

$$u_1 \qquad u_2 \qquad 144$$

FIG.29B

FIG.30

$(u_i{}^L, v_i{}^L)$

## FIG.31A

$(u_i{}^R, v_i{}^R)$ $d_i$

144

## FIG.31B

Column A

Calibration displacement detection

| Displacement magnitude : 3.0 pixels<br>Displacement detection result :<br>displacement correction required | Status : satisfactory<br>Error code : none |
|---|---|

Column B

Column C

## FIG.32

F I G. 3 3

EP 1 637 836 A1

Start

S61

Situation judgment
device requires calibration
displacement detection
?

NO

YES

Photograph stereo image with
photographing apparatus ⎯ S62

Extract characteristics from stereo image ⎯ S63

S64

Photographed image appropriate
?

NO

YES

Judge whether or not there is
calibration displacement ⎯ S65

Present calibration displacement judgment result ⎯ S66

End

FIG. 34

(u,v)

FIG. 35A

$u_2 - u_1 + 2W_u$

$2W_v$

$u_1$   $u_2$

144

FIG. 35B

FIG.36

EP 1 637 836 A1

FIG.37A

FIG.37B

FIG.37C

FIG.37D

FIG.37E

```
                    ┌──────────┐
                    │  Start   │
                    └────┬─────┘
                         │
        ┌────────────────┤
        │                ▼                    S71
        │         ╱─────────────────╲
        │        ╱  Situation judgment ╲        NO
        │       ╱ device requires calibration ╲─────────┐
        │       ╲ displacement detection      ╱          │
        │        ╲        ?        ╱                      │
        │         ╲───────┬───────╱                       │
        │                 │ YES                           │
        │                 ▼                               │
        │      ┌──────────────────────┐                   │
        │      │ Photograph stereo image │                │
        │      │ with photographing apparatus │  S72       │
        │      └──────────┬───────────┘                   │
        │                 │                               │
        │                 ▼                               │
        │      ┌──────────────────────┐                   │
        │      │ Extract characteristics from stereo image │ S73 │
        │      └──────────┬───────────┘                   │
        │                 │              S74               │
        │   NO            ▼                                │
        └─────╱─────────────────╲                         │
             ╱ Photographed image appropriate ╲            │
             ╲        ?         ╱                          │
              ╲───────┬────────╱                           │
                      │ YES                                │
                      ▼                                    │
           ┌──────────────────────┐                       │
           │ Judge whether or not there is │  S75           │
           │ calibration displacement      │               │
           └──────────┬───────────┘                        │
                      │                                    │
                      ▼                                    │
           ┌──────────────────────┐                       │
           │ Present calibration displacement │  S76        │
           │ judgment result                  │            │
           └──────────┬───────────┘                        │
                      │◄───────────────────────────────────┘
                      ▼
                 ┌──────────┐
                 │   End    │
                 └──────────┘
```

# FIG. 38

FIG.39B

FIG.39A

F I G. 4 0

F I G. 4 1

EP 1 637 836 A1

Photographing apparatus ⌒276

Stereo image

260

264

Situation judgment device

266

Characteristic extraction device

Calibration data

272

Calibration data storage device

262 ↕ Situation judgment result

Control device

Extracted characteristics

268

Calibration data correction device

Control signal

Correction data

Correction result presenting device ⌒270

F I G. 42

EP 1 637 836 A1

Photographing apparatus ~276

Stereo image

280

282

Rectification process device

272

Calibration data storage device

264

Rectified stereo image

Situation judgment device

266

Characteristic extraction device

Calibration data

262

Situation judgment result

Control device

268

Extracted characteristics

Calibration data correction device

Control signal

Correction data

Correction result presenting device ~270

FIG. 43

FIG. 44

FIG. 45 A

FIG. 45 B

292a

292b

294a

294b

296

$(u^L, v^L)$

FIG. 46

FIG. 47A

FIG. 47B

FIG. 48

```
                        ┌─────────┐
                        │  Start  │
                        └─────────┘
                             │
                             ▼
                    ╱◇╲              S81
                 ╱        ╲
              ╱   Situation judgment  ╲        NO
           ◇   device confirms necessity of  ◇ ────────┐
              ╲  calibration displacement  ╱           │
                 ╲  correction  ╱                       │
                    ╲    ?   ╱                          │
                        │ YES                           │
                        ▼                               │
        ┌──────────────────────────────┐               │
        │    Photograph stereo image   │  ∼ S82        │
        │  with photographing apparatus│               │
        └──────────────────────────────┘               │
                        │                               │
                        ▼                               │
        ┌──────────────────────────────┐               │
        │     Rectification process    │  ∼ S83        │
        │       of stereo image        │               │
        └──────────────────────────────┘               │
                        │                               │
                        ▼                               │
        ┌──────────────────────────────┐               │
        │   Extract characteristics from│  ∼ S84       │
        │      rectified stereo image   │              │
        └──────────────────────────────┘               │
                        │                               │
                        ▼           S85                 │
      NO          ╱           ╲                         │
   ◄──────────◇   Photographed   ◇                      │
               ╲ image appropriate ╱                    │
                  ╲     ?      ╱                         │
                        │ YES                           │
                        ▼                               │
        ┌──────────────────────────────┐               │
        │ Correction of calibration displacement │ ∼ S86 │
        └──────────────────────────────┘               │
                        │           S87                 │
                        ▼                               │
   NO           ╱           ╲                           │
 ◄──────────◇  Correction result reliable  ◇            │
               ╲       ?        ╱                        │
                        │ YES                           │
                        ▼                               │
        ┌──────────────────────────────┐               │
        │ Present calibration displacement │           │
        │ judgment result and store updated│ ∼ S88     │
        │      calibration data         │              │
        └──────────────────────────────┘               │
                        │◄──────────────────────────────┘
                        ▼
                   ┌─────────┐
                   │   End   │
                   └─────────┘
```

# FIG.49

320

八王子 500

□ 1 △△ 4

322    322

FIG.50A

326

324

FIG.50B

330

328

276

FIG.50C

328

328

FIG.50D    FIG.50E

FIG.51A

FIG.51B

FIG.52A

FIG.52B

Stereo image

```
┌─────────────────────────────────────────┐
│         ┌──────────────────┐             │
│         │   Characteristic │             │
│         │  selection unit  │──266a       │
│         └──────────────────┘             │
│                                          │  266
│         Selected characteristics         │
│         ┌──────────────────┐             │
│         │   Characteristic │             │
│         │  correspondence  │──266b       │
│         │  searching unit  │             │
│         └──────────────────┘             │
└─────────────────────────────────────────┘
```

Associated characteristic pair

## FIG.53

334

336

## FIG.54

F I G. 5 5

F I G. 5 6

FIG.57A

$$u_2 - u_1 + 2W_u$$

$2W_V$

$u_1$  $u_2$

FIG.57A

340

340

FIG.58

Column A

Calibration displacement Correction

Calibration difference :
Maximum position 0.5cm
Maximum angle 1.0 degree

Reliability : satisfactory
Error code : none

Column B

Column C

FIG.59

Start

S91
Situation judgment
device confirms necessity of
calibration displacement
correction
? —— NO

YES

Photograph stereo image
with photographing apparatus —— S92

Rectification process
of stereo image —— S93

Extract characteristics from
rectified stereo image —— S94

S95
NO ← Photographed
image appropriate
?

YES

Correction of calibration displacement —— S96

Present calibration displacement
judgment result —— S97

S98
NO ← Correction result reliable
?

YES

Store updated calibration data —— S99

End

F I G. 6 0

Start

S101

Situation judgment
device confirms necessity of
calibration displacement
correction
?

NO

YES

Photograph stereo image
with photographing apparatus — S102

Extract characteristics
from stereo image — S103

S104

Photographed
image appropriate
?

NO

YES

Correction of calibration displacement — S105

S106

Correction result reliable
?

NO

YES

Present calibration displacement
judgment result and store updated
calibration data — S107

End

FIG.61

EP 1 637 836 A1

External apparatus ⌒352

Photographing apparatus ⌒276

Stereo image

350

264

Situation judgment device

282

Rectification process device

272

Calibration data storage device

262

Situation judgment result

266

Rectified stereo image

Control device

Characteristic extraction device

Calibration data

Control signal

268

Extracted characteristics

Calibration data correction device

Correction data

Correction result presenting device ⌒270

FIG.62

Start

Situation judgment device confirms necessity of calibration displacement correction ? — S111

NO

YES

Photograph stereo image with photographing apparatus — S112

Recitification process of stereo image — S113

Extract characteristics from rectified stereo image — S114

Photographed image appropriate ? — S115

NO

YES

Correction of calibration displacement — S116

Correction result reliable ? — S117

NO

YES

Present calibration displacement judgment result and store updated calibration data — S118

End

FIG.63

F I G. 6 4

```
                          ┌─────────┐
                          │  Start  │
                          └────┬────┘
                               │
                               ▼
              ╱──────────────────────────────────╲          S121
             ╱   Situation judgment                ╲ ── NO
            ╱  device confirms necessity of         ╲──────────┐
            ╲     calibration displacement          ╱          │
             ╲          correction                 ╱           │
              ╲             ?                     ╱            │
               ╲──────────────────────────────╱               │
                          │ YES                                │
                          ▼                                    │
          ┌──────────────────────────────────┐                │
          │   Photograph stereo image          │ ── S122       │
          │  with photographing apparatus      │               │
          └──────────────┬───────────────────┘                │
                          ▼                                    │
          ┌──────────────────────────────────┐                │
          │   Recitification process           │ ── S123       │
          │      of stereo image               │               │
          └──────────────┬───────────────────┘                │
                          ▼                                    │
          ┌──────────────────────────────────┐                │
          │   Extract characteristics from     │ ── S124       │
          │     rectified stereo image         │               │
          └──────────────┬───────────────────┘                │
                          ▼                               S125 │
              ╱──────────────────────────────╲                │
      NO ◄───╱      Photographed               ╲               │
             ╲    image appropriate            ╱               │
              ╲           ?                   ╱                │
               ╲──────────────────────────╱                   │
                          │ YES                                │
                          ▼                                    │
          ┌──────────────────────────────────┐                │
          │  Correction of calibration displacement │ ── S126  │
          └──────────────┬───────────────────┘                │
                          ▼                               S127 │
              ╱──────────────────────────────╲                │
      NO ◄───╱   Correction result reliable    ╲               │
             ╲            ?                    ╱                │
               ╲──────────────────────────╱                   │
                          │ YES                                │
                          ▼                                    │
          ┌──────────────────────────────────┐                │
          │  Present calibration displacement  │ ── S128       │
          │  judgment result and store updated │               │
          │       calibration data             │               │
          └──────────────┬───────────────────┘                │
                          ▼◄───────────────────────────────────┘
                     ┌─────────┐
                     │   End   │
                     └─────────┘
```

# F I G. 6 5

F I G. 6 6

Start

S131

Situation judgment
device confirms necessity of
calibration displacement
correction ?

NO

YES

Photograph stereo image
with photographing apparatus

S132

Recitification process
of stereo image

S133

Extract characteristics from
rectified stereo image

S134

S135

NO

Photographed
image appropriate ?

YES

Classify judgment of calibration
displacementt

S136

Correction of calibration displacement

S137

Present calibration displacement
judgment result

S138

S139

NO

Correction result reliable
?

YES

Store updated calibration data

S140

End

F I G. 6 7

$(u_i{}^L, v_i{}^L)$

FIG.68A

$(u_i{}^R, v_i{}^R)$ $d_i$

144

FIG.68B

八王子 500

□ 1 △ △ 4

FIG.72A

品川 550

△ 9 × 7 ×

FIG.72B

EP 1 637 836 A1

FIG.69

FIG.70

FIG.71

Start

S151

Situation judgment
device confirms necessity of
calibration displacement
correction ?  →  NO

↓ YES

Photograph stereo image
with photographing apparatus  — S152

↓

Recitification process
of stereo image  — S153

↓

Extract characteristics from
rectified stereo image  — S154

S155

NO ←  Photographed
image appropriate ?

↓ YES

S156

NO ←  Characteristic
number sufficient ?

↓ YES

Classify judgment of calibration
displacementt  — S157

↓

Correction of calibration displacement  — S158

↓

Present calibration displacement
judgment result  — S159

S160

NO ←  Correction result reliable
?

↓ YES

Store updated calibration data  — S161

FIG.73

End

Start

S171

Situation judgment
device confirms necessity of
calibration displacement
correction ?

NO

YES

Photograph stereo image
with photographing apparatus — S172

Recitification process
of stereo image — S173

Extract characteristics from
rectified stereo image — S174

S175

NO ◄— Photographed
image appropriate ?

YES

Classify judgment of calibration
displacementt — S176

Correction of calibration displacement — S177

S178

NO ◄— System of displacement
correction sufficient ?

YES

Present calibration displacement
judgment result — S179

S180

NO — Correction result reliable
?

YES

Store updated calibration data — S181

FIG.74

End

## INTERNATIONAL SEARCH REPORT

International application No.

PCT/JP2004/007557

A. CLASSIFICATION OF SUBJECT MATTER
Int.Cl$^7$ G01C3/06, G01B11/00, G06T1/00, B60R21/00

According to International Patent Classification (IPC) or to both national classification and IPC

B. FIELDS SEARCHED

Minimum documentation searched (classification system followed by classification symbols)
Int.Cl$^7$ G01C, G01B, G06T, B60R, H04N, G03B

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2004 |
| Kokai Jitsuyo Shinan Koho | 1971–2004 | Toroku Jitsuyo Shinan Koho | 1994–2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2000-194983 A (Nichireki Kabushiki Kaisha), 14 July, 2000 (14.07.00), Full text; all drawings (Family: none) | 1–28 |
| A | JP 7-46460 A (Mitsubishi Electric Corp.), 14 February, 1995 (14.02.95), Full text; all drawings (Family: none) | 1–28 |
| A | JP 3-215708 A (Mitsubishi Electric Corp.), 20 September, 1991 (20.09.91), Full text; all drawings (Family: none) | 1–28 |

☐ Further documents are listed in the continuation of Box C.    ☐ See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 22 September, 2004 (22.09.04) | 19 October, 2004 (19.10.04) |

| Name and mailing address of the ISA/<br>   Japanese Patent Office | Authorized officer |
|---|---|
| Facsimile No. | Telephone No. |

Form PCT/ISA/210 (second sheet) (January 2004)

<table>
<tr><td>**INTERNATIONAL SEARCH REPORT**</td><td>International application No.<br><br>PCT/JP2004/007557</td></tr>
</table>

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

```
   There is no technical relationship including the same or corresponding
"special technical features" between the inventions described in claims 1-28
and those in claims 29-148.
```

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:

```
   Claims 1-28
```

**Remark on Protest**      ☐ The additional search fees were accompanied by the applicant's protest.

                                         ☐ No protest accompanied the payment of additional search fees.

Form PCT/ISA/210 (continuation of first sheet (2)) (January 2004)